# EUROPEAN PATENT APPLICATION

(11) **EP 4 790 994 A1**
(43) Date of publication of application: **12.08.2026**
(21) Application number: 24874998.8
(22) Date of filing: 04.10.2024
(51) Int. Cl.: H04N 19/186, H04N 19/593, H04N 19/513, H04N 19/105, H04N 19/132, H04N 19/196

(54) **IMAGE ENCODING/DECODING METHOD, APPARATUS, AND RECORDING MEDIUM**

(30) Priority: 06.10.2023 KR 20230133740; 06.10.2023 KR 20230133808; 02.10.2024 KR 20240133858
(71) Applicant: Electronics and Telecommunications Research Institute, Daejeon 34129 (KR)
(72) Inventor: KIM, Jong Ho, Daejeon 34129 (KR); KIM, Dong Hyun, Daejeon 34129 (KR); LIM, Sung Chang, Daejeon 34129 (KR); LIM, Woong, Daejeon 34129 (KR); CHOI, Jin Soo, Daejeon 34129 (KR); KANG, Jung Won, Daejeon 34129 (KR)
(74) Representative: Betten & Resch
(86) International application number: PCT/KR2024/015115
(87) International publication number: WO 2025/075443

(57) **Abstract**

An image encoding/decoding method, apparatus, and recording medium of the present disclosure may include the steps of: determining an inter-component prediction model of a current block; and generating a chrominance prediction signal by using the determined inter-component prediction model.

## Description

### [Technical Field]

The present disclosure relates to an image encoding/decoding method and device, and a recording medium storing a bitstream, and more particularly, relates to a method and a device for encoding/decoding an image by using an efficient prediction method in a chroma signal, and a recording medium storing a bitstream.

The present disclosure relates to an image encoding/decoding method and device, and a recording medium storing a bitstream, and more particularly, relates to a method and a device for encoding/decoding an image based on intra prediction, and a recording medium storing a bitstream.

### [Background Art]

Recently, demands for high-resolution and high-quality images such as HD(High Definition) images and UHD(Ultra High Definition) images have increased in a variety of application fields. As image data becomes high-resolution and high-quality, the volume of data relatively increases compared to the existing image data, so when image data is transmitted by using media such as the existing wire and wireless broadband circuit or is stored by using the existing storage medium, expenses for transmission and expenses for storage increase. High efficiency image encoding/decoding technologies for images with higher resolution and image quality are required to resolve these problems which are generated as image data becomes high-resolution and high-quality.

There are various technologies such as an inter prediction technology which predicts a pixel value included in a current picture from a previous or subsequent picture of a current picture with an image impression technology, an intra prediction technology which predicts a pixel value included in a current picture by using pixel information in a current picture, a transform and quantization technology for compressing the energy of residual signals, an entropy encoding technology which assigns a short sign to a value with high appearance frequency and assigns a long sign to a value with low appearance frequency and so on, and image data may be effectively compressed and transmitted or stored by using these image compression technologies.

### [Disclosure]

### [Technical Problem]

An image encoding/decoding method and device using a prediction method in the chroma signal of the conventional technology have a limit in encoding/decoding because they cannot consider information in a luma signal in various ways. In addition, an image encoding/decoding method and device using a prediction method in a chroma signal may have a limit in efficient encoding/decoding because they only use information in a limited chroma signal.

Since intra prediction that the use of a reference region is limited is used in the conventional image encoding/decoding, there is a limit in improving encoding efficiency.

The present disclosure may provide an encoding/decoding method and device by utilizing information in a luma block in order to improve signaling and encoding efficiency in a chroma block.

The present disclosure may provide an image encoding/decoding method and device for performing chroma prediction by using a cross-component linear model (CCLM), a gradient linear model (GLM), a filter based linear model (FLM), a convolutional cross-component model (CCCM) and another inter-component prediction model derived from a convolutional cross-component model which are one of the inter-component prediction method types, in order to reduce the amount of bits required for encoding/decoding in a prediction method in a chroma block.

The present disclosure may provide a method and a device for performing at least one of expansion of a reference region and reduction of the number of reference samples in a reference region in intra prediction, and a recording medium storing a bitstream, in order to improve encoding efficiency.

### [Technical Solution]

The present disclosure may be an image encoding/decoding method and device for performing a step of determining a chroma signal prediction method, a step of determining a representative value and a reference region for deriving an inter-component prediction model and a step of generating a chroma prediction signal using an inter-component prediction model, in determining intra prediction in a chroma block.

The present disclosure may be an image encoding/decoding method and device for performing at least one of expansion of a reference region and reduction of the number of reference samples in a reference region in intra prediction, and a recording medium storing a bitstream.

### [Technical Effect]

The present disclosure may improve signaling and encoding efficiency in a chroma block by providing an encoding/decoding method and device utilizing information in a luma block.

The present disclosure may reduce the amount of bits required for encoding/decoding in a prediction method in a chroma block by providing an image encoding/decoding method and device based on an inter-component method.

The present disclosure may provide an image encoding/decoding method and device for efficient compression in a chroma intra prediction method.

The present disclosure may improve encoding efficiency by providing a method and a device for performing at least one of expansion of a reference region and reduction of the number of reference samples in a reference region in intra prediction and a recording medium storing a bitstream.

### [Brief Description of Drawings]

FIG. 1 is a block diagram illustrating the configuration of an embodiment of an encoding apparatus to which the present disclosure is applied.
FIG. 2 is a block diagram illustrating the configuration of an embodiment of a decoding apparatus to which the present disclosure is applied.
FIG. 3 is a diagram schematically illustrating the partition structure of an image when the image is encoded and decoded.
FIG. 4 is a diagram illustrating the form of a Prediction Unit (PU) that a Coding Unit (CU) can include.
FIG. 5 is a diagram illustrating the form of a Transform Unit (TU) that can be included in a CU.
FIG. 6 illustrates splitting of a block according to an example.
FIG. 7 is a diagram for explaining an embodiment of an intra-prediction procedure.
FIG. 8 is a diagram illustrating reference samples used in an intra-prediction procedure.
FIG. 9 is a diagram for explaining an embodiment of an inter-prediction procedure.
FIG. 10 illustrates spatial candidates according to an embodiment.
FIG. 11 illustrates the order of addition of motion information of spatial candidates to a merge list according to an embodiment.
FIG. 12 illustrates a transform and quantization process according to an example.
FIG. 13 illustrates diagonal scanning according to an example.
FIG. 14 illustrates horizontal scanning according to an example.
FIG. 15 illustrates vertical scanning according to an example.
FIG. 16 is a configuration diagram of an encoding apparatus according to an embodiment.
FIG. 17 is a configuration diagram of a decoding apparatus according to an embodiment.
FIG. 18 may show a template configuration method for template matching according to intra/inter prediction.
FIG. 19 may show a template configuration method for bilateral matching.
FIG. 20 may show a method for configuring a template by emptying at least one pixel or line in template matching and bilateral matching.
FIG. 21 may show a method for configuring a template by considering at least one of a prediction mode of a current block or a neighboring block.
FIG. 22 may show a flowchart of an image encoding/decoding method for generating a chroma prediction signal using an inter-component prediction model of this invention.
FIG. 23 may show an example of a downsampling filter coefficient and an example of DNN-based downsampling.
FIG. 24 is an example in which a sample within a sample value range between the minimum sample value and the maximum sample value is divided in a unit of a group.
FIG. 25 is an example in which a new group is generated by using an average value of samples calculated for each group.
FIG. 26 shows an example of a chroma prediction block and a luma block directly corresponding to a chroma block.
FIG. 27 shows an example of a chroma prediction block.
FIG. 28 shows an example of a region used to derive a model among the reference regions and a region required to calculate an error cost between a chroma prediction signal and a chroma signal.
FIG. 29 shows an example of calculating an error cost between a chroma template and a chroma prediction template generated for each model.
FIG. 30 shows an example of reconfiguring a model-based chroma prediction mode table.
FIG. 31 shows an example of a gradient detection filter or a gradient detection pattern.
FIG. 32 shows a gradient block derived through four gradient detection filters.
FIG. 33 shows a reference region for deriving a model of a gradient block derived through four gradient detection filters and a reference region required for calculating an error cost.
FIG. 34 shows an example of calculating an error cost of a chroma prediction template derived through four gradient-based linear models and a chroma template.
FIG. 35 shows an example of a gradient detection filter (pattern).
FIG. 36 and FIG. 37 show an example of reconfiguring a model-based chroma prediction mode table.
FIG. 38 shows a form in which a luma sample corresponding to a chroma sample and a filter are applied.
FIG. 39 shows a form of a cross-shaped filter and a position of a sample to which a corresponding filter is applied.
FIG. 40 shows various examples of a form of a filter and a position of a sample to which a filter is applied.
FIG. 41 shows an example of a filter or a filter set configuration according to a block size.
FIG. 42 shows an example of a filter set configuration according to the direction of an intra prediction mode.
FIG. 43 shows an example of varying a filter according to the prediction direction of an intra prediction mode or the position of samples used to create a prediction mode.
FIG. 44 shows an example of a neighboring sample and a downsampled luma sample L'(i,j) corresponding to the position of a chroma sample C(i,j).
FIG. 45 shows an example of a form in which a luma sample corresponding to a chroma sample and a filter are applied.
FIG. 46 shows an example of using a plurality of downsampling filters to generate a luma sample corresponding to a chroma sample.
FIG. 47 shows a model for generating a chroma prediction signal and information used by a corresponding model.
FIG. 48 shows a position of a chroma sample corresponding to a down-sampled luma sample.
FIG. 49 shows an example of varying the number of reference lines and the number of reference samples according to a block partition form.
FIG. 50 shows an example of varying the number of reference lines and the number of reference samples according to a prediction mode of a neighboring block.
FIG. 51 shows an example of varying the number of reference lines and the number of reference samples according to an intra prediction mode.
FIG. 52 shows an example of adjusting a reference region so that a position found by intra template matching (Intra TMP)/IBC is included in a reference region.
FIG. 53 shows an example of determining a reference region for deriving a model parameter by referring to a block vector of a collocated block.
FIG. 54 shows an example of deriving a block vector from a block at a specific position within a collocated block.
FIG. 55 shows a neighboring reference region of a current block.
FIG. 56 shows a neighboring reference block at an arbitrary position around a current block.
FIG. 57 shows an example of combining a reference region based on a neighboring reference region of a current block.
FIG. 58 shows a position of a non-adjacent block for determining a reference region.
FIG. 59 shows a size and a form of a block which is actually encoded/decoded at a position of a non-adjacent block.
FIG. 60 shows an example of a position of a non-adjacent block.
FIG. 61 shows an example of a range for selecting a reference block.
FIG. 62 shows an example of a neighboring block at a position moved by using a block vector from a neighboring block within a reference image for configuring a reference region among the non-adjacent blocks.
FIG. 63 shows an example of a position of a block vector used when there is a collocated block.
FIG. 64 shows an example of a gaussian filter or a low pass filter used for modifying a reference sample or a prediction sample.
FIG. 65 shows an example of an adjacent neighboring reconstructed sample for filtering a prediction sample within a prediction block.
FIG. 66 shows an example of blending a chroma prediction block generated by using a plurality of models.
FIG. 67 shows an example of applying filtering in blending a chroma prediction block generated by using a plurality of models.
FIG. 68 shows an example of obtaining a chroma block that is finally predicted by using a plurality of models.
FIG. 69 shows an example of applying filtering in obtaining a chroma block that is finally predicted by using a plurality of models.
FIG. 70 shows classifying a candidate list of an inter-component prediction model by group.
FIG. 71 shows an example of a neighboring adjacent/non-adjacent block which will bring model information and encoding information.
FIG. 72 shows a neighboring adjacent/non-adjacent block which will bring model information and encoding information within a reference picture.
FIG. 73 shows an example of arranging candidates in a candidate list based on a template cost.
FIG. 74 shows an example of arranging candidates in a candidate list based on a chroma prediction cost.
FIG. 75 shows a model and template matching cost according to an inter-component prediction model type in a candidate list.
FIG. 76 shows an example of generating a new model by interpolating/extrapolating a model parameter between at least two or more candidates in a candidate list.
FIG. 77 shows an example of removing a candidate in a candidate list.
FIG. 78 shows an example of configuring a list based on a candidate derivation method.
FIG. 79 shows an example of configuring a list based on an inter-component prediction method.
FIG. 80 shows an example of configuring a merge list (a candidate list) based on candidate derivation method-based classification.
FIG. 81 shows an example of performing a weighted sum on chroma prediction signals/blocks/samples generated by using a plurality of models.
FIG. 82 shows an example of using a different model for each part to obtain a predicted chroma block.
FIG. 83 shows an example of a prediction signal corrected by using an inter-component prediction model between chroma signals (U/V).
FIG. 84 shows an example of chroma signal prediction based on an inter-component residual model in inter prediction.
FIG. 85 shows an example of an inter-color linear model mode.
FIG. 86 shows an example of deriving two linear models.
FIG. 87 shows an example of a linear model before/after gradient adjustment.
FIG. 88 shows an example of a 5-tap spatial filter.
FIG. 89 shows an example of a reference region used for deriving a filter coefficient.
FIG. 90 shows four gradient patterns.
FIG. 91 shows a template region of a method for deriving a template-based intra prediction mode.
FIG. 92 shows a process of deriving an intra prediction mode in a method for deriving a decoder-side intra prediction mode.
FIG. 93 shows an example of neighboring reconstructed samples.
FIG. 94 shows an example of a candidate for a spatial geometric partition mode.
FIG. 95 shows an example of a template region of a spatial geometric partition mode.
FIG. 96 shows an example of a blending width in a spatial geometric partition mode.
FIG. 97 shows neighboring blocks used in deriving a MPM list.

### [Mode for Invention]

The present invention may be variously changed, and may have various embodiments, and specific embodiments will be described in detail below with reference to the attached drawings. However, it should be understood that those embodiments are not intended to limit the present invention to specific disclosure forms, and that they include all changes, equivalents or modifications included in the spirit and scope of the present invention.

Detailed descriptions of the following exemplary embodiments will be made with reference to the attached drawings illustrating specific embodiments. These embodiments are described so that those having ordinary knowledge in the technical field to which the present disclosure pertains can easily practice the embodiments. It should be noted that the various embodiments are different from each other, but do not need to be mutually exclusive of each other. For example, specific shapes, structures, and characteristics described here may be implemented as other embodiments without departing from the spirit and scope of the embodiments in relation to an embodiment. Further, it should be understood that the locations or arrangement of individual components in each disclosed embodiment can be changed without departing from the spirit and scope of the embodiments. Therefore, the accompanying detailed description is not intended to restrict the scope of the disclosure, and the scope of the exemplary embodiments is limited only by the accompanying claims, along with equivalents thereof, as long as they are appropriately described.

In the drawings, similar reference numerals are used to designate the same or similar functions in various aspects. The shapes, sizes, etc. of components in the drawings may be exaggerated to make the description clear.

Terms such as "first" and "second" may be used to describe various components, but the components are not restricted by the terms. The terms are used only to distinguish one component from another component. For example, a first component may be named a second component without departing from the scope of the present specification. Likewise, a second component may be named a first component. The terms "and/or" may include combinations of a plurality of related described items or any of a plurality of related described items.

It will be understood that when a component is referred to as being "connected" or "coupled" to another component, the two components may be directly connected or coupled to each other, or intervening components may be present between the two components. On the other hand, it will be understood that when a component is referred to as being "directly connected or coupled", no intervening components are present between the two components.

Also, components described in the embodiments are independently shown in order to indicate different characteristic functions, but this does not mean that each of the components is formed of a separate piece of hardware or software. That is, the components are arranged and included separately for convenience of description. For example, at least two of the components may be integrated into a single component. Conversely, one component may be divided into multiple components. An embodiment into which the components are integrated or an embodiment in which some components are separated is included in the scope of the present specification as long as it does not depart from the essence of the present specification.

The terms used in the embodiment are merely used to describe specific embodiments and are not intended to limit the present invention. A singular expression includes a plural expression unless a description to the contrary is specifically pointed out in context. In the embodiments, it should be understood that the terms such as "include" or "have" are merely intended to indicate that features, numbers, steps, operations, components, parts, or combinations thereof are present, and are not intended to exclude the possibility that one or more other features, numbers, steps, operations, components, parts, or combinations thereof will be present or added. That is, in the embodiments, an expression describing that a component "comprises" a specific component means that additional components may be included within the scope of the practice of the present invention or the technical spirit of the present invention, but does not preclude the presence of components other than the specific component.

In the embodiments, a term "at least one" may mean one of one or more numbers, such as 1, 2, 3, and 4. In the embodiments, a term "a plurality of" may mean one of two or more numbers, such as 2, 3 and 4.

Some components of the embodiments are not essential components for performing essential functions, but may be optional components for improving only performance. The embodiments may be implemented using only essential components for implementing the essence of the embodiments. For example, a structure including only essential components, excluding optional components used only to improve performance, is also included in the scope of the embodiments.

Embodiments will be described in detail below with reference to the accompanying drawings so that those having ordinary knowledge in the technical field to which the embodiments pertain can easily practice the embodiments. In the following description of the embodiments, detailed descriptions of known functions or configurations which are deemed to make the gist of the present specification obscure will be omitted. Further, the same reference numerals are used to designate the same components throughout the drawings, and repeated descriptions of the same components will be omitted.

Hereinafter, "image" may mean a single picture constituting a video, or may mean the video itself. For example, "encoding and/or decoding of an image" may mean "encoding and/or decoding of a video", and may also mean "encoding and/or decoding of any one of images constituting the video".

Hereinafter, the terms "video" and "motion picture" may be used to have the same meaning, and may be used interchangeably with each other.

Hereinafter, a target image may be an encoding target image, which is the target to be encoded, and/or a decoding target image, which is the target to be decoded. Further, the target image may be an input image that is input to an encoding apparatus or an input image that is input to a decoding apparatus. And, a target image may be a current image, that is, the target to be currently encoded and/or decoded. For example, the terms "target image" and "current image" may be used to have the same meaning, and may be used interchangeably with each other.

Hereinafter, the terms "image", "picture", "frame", and "screen" may be used to have the same meaning and may be used interchangeably with each other.

Hereinafter, a target block may be an encoding target block, i.e. the target to be encoded and/or a decoding target block, i.e. the target to be decoded. Further, the target block may be a current block, i.e. the target to be currently encoded and/or decoded. Here, the terms "target block" and "current block" may be used to have the same meaning, and may be used interchangeably with each other. A current block may denote an encoding target block, which is the target of encoding, during encoding and/or a decoding target block, which is the target of decoding, during decoding. Also, the current block may be at least one of a coding block, a prediction block, a residual block, and a transform block.

Hereinafter, the terms "block" and "unit" may be used to have the same meaning, and may be used interchangeably with each other. Alternatively, "block" may denote a specific unit.

Hereinafter, the terms "region" and "segment" may be used interchangeably with each other.

In the following embodiments, specific information, data, a flag, an index, an element, and an attribute may have their respective values. A value of "0" corresponding to each of the information, data, flag, index, element, and attribute may indicate a false, a logical false or a first predefined value. In other words, the value of "0", a false, logical false, and a first predefined value may be used interchangeably with each other. A value of "1" corresponding to each of the information, data, flag, index, element, and attribute may indicate a true, a logical true or a second predefined value. In other words, the value of "1", true, logical true, and a second predefined value may be used interchangeably with each other.

When a variable such as i or j is used to indicate a row, a column, or an index, the value of i may be an integer of 0 or more or an integer of 1 or more. In other words, in the embodiments, each of a row, a column, and an index may be counted from 0 or may be counted from 1.

In embodiments, the term "one or more" or the term "at least one" may mean the term "plural". The term "one or more" or the term "at least one" may be used interchangeably with "plural".

Below, the terms to be used in embodiments will be described.

Encoder: An encoder denotes a device for performing encoding. That is, an encoder may mean an encoding apparatus.

Decoder: A decoder denotes a device for performing decoding. That is, a decoder may mean a decoding apparatus.

Unit: A unit may denote the unit of image encoding and decoding. The terms "unit" and "block" may be used to have the same meaning, and may be used interchangeably with each other.
- A unit may be an MxN array of samples. Each of M and N may be a positive integer. A unit may typically mean an array of samples in the form of two-dimensions.
- In the encoding and decoding of an image, "unit" may be an area generated by the partitioning of one image. In other words, "unit" may be a region specified in one image. A single image may be partitioned into multiple units. Alternatively, one image may be partitioned into sub-parts, and the unit may denote each partitioned sub-part when encoding or decoding is performed on the partitioned sub-part.
- In the encoding and decoding of an image, predefined processing may be performed on each unit depending on the type of the unit.
- Depending on functions, the unit types may be classified into a macro unit, a Coding Unit (CU), a Prediction Unit (PU), a residual unit, a Transform Unit (TU), etc. Alternatively, depending on functions, the unit may denote a block, a macroblock, a coding tree unit, a coding tree block, a coding unit, a coding block, a prediction unit, a prediction block, a residual unit, a residual block, a transform unit, a transform block, etc. For example, a target unit, which is the target of encoding and/or decoding, may be at least one of a CU, a PU, a residual unit, and a TU.
- The term "unit" may mean information including a luminance (luma) component block, a chrominance (chroma) component block corresponding thereto, and syntax elements for respective blocks so that the unit is designated to be distinguished from a block.
- The size and shape of a unit may be variously implemented. Further, a unit may have any of various sizes and shapes. In particular, the shapes of the unit may include not only a square, but also a geometric figure that can be represented in two dimensions (2D), such as a rectangle, a trapezoid, a triangle, and a pentagon.
- Further, unit information may include one or more of the type of a unit, the size of a unit, the depth of a unit, the order of encoding of a unit and the order of decoding of a unit, etc. For example, the type of a unit may indicate one of a CU, a PU, a residual unit and a TU.
- One unit may be partitioned into sub-units, each having a smaller size than that of the relevant unit.

Depth: A depth may mean an extent to which the unit is partitioned. Further, the depth of the unit may indicate the level at which the corresponding unit is present when unit(s) are represented by a tree structure.
- Unit partition information may include a depth indicating the depth of a unit. A depth may indicate the number of times the unit is partitioned and/or the degree to which the unit is partitioned.
- In a tree structure, it may be considered that the depth of a root node is the smallest, and the depth of a leaf node is the largest. The root node may be the highest (top) node. The leaf node may be a lowest node.
- A single unit may be hierarchically partitioned into multiple sub-units while having depth information based on a tree structure. In other words, the unit and sub-units, generated by partitioning the unit, may correspond to a node and child nodes of the node, respectively. Each of the partitioned sub-units may have a unit depth. Since the depth indicates the number of times the unit is partitioned and/or the degree to which the unit is partitioned, the partition information of the sub-units may include information about the sizes of the sub-units.
- In a tree structure, the top node may correspond to the initial node before partitioning. The top node may be referred to as a "root node". Further, the root node may have a minimum depth value. Here, the top node may have a depth of level '0'.
- A node having a depth of level '1' may denote a unit generated when the initial unit is partitioned once. A node having a depth of level '2' may denote a unit generated when the initial unit is partitioned twice.
- A leaf node having a depth of level 'n' may denote a unit generated when the initial unit has been partitioned n times.
- The leaf node may be a bottom node, which cannot be partitioned any further. The depth of the leaf node may be the maximum level. For example, a predefined value for the maximum level may be 3.
- A QT depth may denote a depth for a quad-partitioning. A BT depth may denote a depth for a binary-partitioning. A TT depth may denote a depth for a ternary-partitioning.

Sample: A sample may be a base unit constituting a block. A sample may be represented by values from 0 to 2Bd-1 depending on the bit depth (Bd).
- A sample may be a pixel or a pixel value.
- Hereinafter, the terms "pixel" and "sample" may be used to have the same meaning, and may be used interchangeably with each other.

A Coding Tree Unit (CTU): A CTU may be composed of a single luma component (Y) coding tree block and two chroma component (Cb, Cr) coding tree blocks related to the luma component coding tree block. Further, a CTU may mean information including the above blocks and a syntax element for each of the blocks.
- Each coding tree unit (CTU) may be partitioned using one or more partitioning methods, such as a quad tree (QT), a binary tree (BT), and a ternary tree (TT) so as to configure sub-units, such as a coding unit, a prediction unit, and a transform unit. A quad tree may mean a quarternary tree. Further, each coding tree unit may be partitioned using a multitype tree (MTT) using one or more partitioning methods.
- "CTU" may be used as a term designating a pixel block, which is a processing unit in an image-decoding and encoding process, as in the case of partitioning of an input image.

Coding Tree Block (CTB): "CTB" may be used as a term designating any one of a Y coding tree block, a Cb coding tree block, and a Cr coding tree block.

Neighbor block: A neighbor block (or neighboring block) may mean a block adjacent to a target block. A neighbor block may mean a reconstructed neighbor block.
- Hereinafter, the terms "neighbor block" and "adjacent block" may be used to have the same meaning and may be used interchangeably with each other.
- A neighbor block may mean a reconstructed neighbor block.

Spatial neighbor block; A spatial neighbor block may a block spatially adjacent to a target block. A neighbor block may include a spatial neighbor block.
- The target block and the spatial neighbor block may be included in a target picture.
- The spatial neighbor block may mean a block, the boundary of which is in contact with the target block, or a block located within a predetermined distance from the target block.
- The spatial neighbor block may mean a block adjacent to the vertex of the target block. Here, the block adjacent to the vertex of the target block may mean a block vertically adjacent to a neighbor block which is horizontally adjacent to the target block or a block horizontally adjacent to a neighbor block which is vertically adjacent to the target block.

Temporal neighbor block: A temporal neighbor block may be a block temporally adjacent to a target block. A neighbor block may include a temporal neighbor block.
- The temporal neighbor block may include a co-located block (col block).
- The col block may be a block in a previously reconstructed co-located picture (col picture). The location of the col block in the col-picture may correspond to the location of the target block in a target picture. Alternatively, the location of the col block in the col-picture may be equal to the location of the target block in the target picture. The col picture may be a picture included in a reference picture list.
- The temporal neighbor block may be a block temporally adjacent to a spatial neighbor block of a target block.

Prediction mode: The prediction mode may be information indicating the mode used for intra prediction, or the mode used for inter prediction.

Prediction unit: A prediction unit may be a base unit for prediction, such as inter prediction, intra prediction, inter compensation, intra compensation, and motion compensation.
- A single prediction unit may be divided into multiple partitions having smaller sizes or sub-prediction units. The multiple partitions may also be base units in the performance of prediction or compensation. The partitions generated by dividing the prediction unit may also be prediction units.

Prediction unit partition: A prediction unit partition may be the shape into which a prediction unit is divided.

Reconstructed neighbor unit: A reconstructed neighbor unit may be a unit which has already been decoded and reconstructed neighboring a target unit.
- A reconstructed neighbor unit may be a unit that is spatially adjacent to the target unit or that is temporally adjacent to the target unit.
- A reconstructed spatial neighbor unit may be a unit which is included in a target picture and which has already been reconstructed through encoding and/or decoding.
- A reconstructed temporal neighbor unit may be a unit which is included in a reference image and which has already been reconstructed through encoding and/or decoding. The location of the reconstructed temporal neighbor unit in the reference image may be identical to that of the target unit in the target picture, or may correspond to the location of the target unit in the target picture. Also, a reconstructed temporal neighbor unit may be a block neighboring the corresponding block in a reference image. Here, the location of the corresponding block in the reference image may correspond to the location of the target block in the target image. Here, the fact that the locations of blocks correspond to each other may mean that the locations of the blocks are identical to each other, may mean that one block is included in another block, or may mean that one block occupies a specific location in another block.

Sub-picture: A picture may be divided into one or more sub-pictures. A sub-picture may be composed of one or more tile rows and one or more tile columns.
- A sub-picture may be a region having a square shape or a rectangular(i.e., a non-square rectangular) shape in a picture. Further, a sub-picture may include one or more CTUs.
- A sub-picture may be a rectangular region of one or more slices in a picture.
- One sub-picture may include one or more tiles, one or more bricks, and/or one or more slices.

Tile: A tile may be a region having a square shape or rectangular (i.e., a non-square rectangular) shape in a picture.
- A tile may include one or more CTUs.
- A tile may be partitioned into one or more bricks.

Brick: A brick may denote one or more CTU rows in a tile.
- A tile may be partitioned into one or more bricks. Each brick may include one or more CTU rows.
- A tile that is not partitioned into two parts may also denote a brick.

Slice: A slice may include one or more tiles in a picture. Alternatively, a slice may include one or more bricks in a tile.
- A sub-picture may contain one or more slices that collectively cover a rectangular region of a picture. Consequently, each sub-picture boundary is also always a slice boundary, and each vertical sub-picture boundary is always also a vertical tile boundary.

Parameter set: A parameter set may correspond to header information in the internal structure of a bitstream.
- A parameter set may include at least one of a video parameter set (VPS), a sequence parameter set (SPS), a picture parameter set (PPS), an adaptation parameter set (APS), a decoding parameter set (DPS), etc.

Information signaled through each parameter set may be applied to pictures which refer to the corresponding parameter set. For example, information in a VPS may be applied to pictures which refer to the VPS. Information in an SPS may be applied to pictures which refer to the SPS. Information in a PPS may be applied to pictures which refer to the PPS.

Each parameter set may refer to a higher parameter set. For example, a PPS may refer to an SPS. An SPS may refer to a VPS.
- Further, a parameter set may include a tile group, slice header information, and tile header information. The tile group may be a group including multiple tiles. Also, the meaning of "tile group" may be identical to that of "slice".

Rate-distortion optimization: An encoding apparatus may use rate-distortion optimization so as to provide high coding efficiency by utilizing combinations of the size of a coding unit (CU), a prediction mode, the size of a prediction unit (PU), motion information, and the size of a transform unit (TU).
- A rate-distortion optimization scheme may calculate rate-distortion costs of respective combinations so as to select an optimal combination from among the combinations. The rate-distortion costs may be calculated using the equation "D + λ * R". Generally, a combination enabling the rate-distortion cost to be minimized may be selected as the optimal combination in the rate-distortion optimization scheme.
- D may denote distortion. D may be the mean of squares of differences (i.e. mean square error) between original transform coefficients and reconstructed transform coefficients in a transform unit.
- R may denote the rate, which may denote a bit rate using related-context information.
- λ denotes a Lagrangian multiplier. R may include not only coding parameter information, such as a prediction mode, motion information, and a coded block flag, but also bits generated due to the encoding of transform coefficients.
- An encoding apparatus may perform procedures, such as inter prediction and/or intra prediction, transform, quantization, entropy encoding, inverse quantization (dequantization), and/or inverse transform so as to calculate precise D and R. These procedures may greatly increase the complexity of the encoding apparatus.

Bitstream: A bitstream may denote a stream of bits including encoded image information.

Parsing: Parsing may be the decision on the value of a syntax element, made by performing entropy decoding on a bitstream. Alternatively, the term "parsing" may mean such entropy decoding itself.

Symbol: A symbol may be at least one of the syntax element, the coding parameter, and the transform coefficient of an encoding target unit and/or a decoding target unit. Further, a symbol may be the target of entropy encoding or the result of entropy decoding.

Reference picture: A reference picture may be an image referred to by a unit so as to perform inter prediction or motion compensation. Alternatively, a reference picture may be an image including a reference unit referred to by a target unit so as to perform inter prediction or motion compensation.

Hereinafter, the terms "reference picture" and "reference image" may be used to have the same meaning, and may be used interchangeably with each other.

Reference picture list: A reference picture list may be a list including one or more reference images used for inter prediction or motion compensation.
- The types of a reference picture list may include List Combined (LC), List 0 (L0), List 1 (L1), List 2 (L2), List 3 (L3), etc.
- For inter prediction, one or more reference picture lists may be used.

Inter-prediction indicator: An inter-prediction indicator may indicate the inter-prediction direction for a target unit. Inter prediction may be one of unidirectional prediction and bidirectional prediction. Alternatively, the inter-prediction indicator may denote the number of reference pictures used to generate a prediction unit of a target unit. Alternatively, the inter-prediction indicator may denote the number of prediction blocks used for inter prediction or motion compensation of a target unit.

Prediction list utilization flag: A prediction list utilization flag may indicate whether a prediction unit is generated using at least one reference picture in a specific reference picture list.
- An inter-prediction indicator may be derived using the prediction list utilization flag. In contrast, the prediction list utilization flag may be derived using the inter-prediction indicator. For example, the case where the prediction list utilization flag indicates "0", which is a first value, may indicate that, for a target unit, a prediction block is not generated using a reference picture in a reference picture list. The case where the prediction list utilization flag indicates "1", which is a second value, may indicate that, for a target unit, a prediction unit is generated using the reference picture list.

Reference picture index: A reference picture index may be an index indicating a specific reference picture in a reference picture list.

Picture Order Count (POC): A POC value for a picture may denote an order in which the corresponding picture is displayed.

Motion vector (MV): A motion vector may be a 2D vector used for inter prediction or motion compensation. A motion vector may mean an offset between a target image and a reference image.
- For example, a MV may be represented in a form such as (mvx, mvy). mvx may indicate a horizontal component, and mvy may indicate a vertical component.

Search range: A search range may be a 2D area in which a search for a MV is performed during inter prediction. For example, the size of the search range may be MxN. M and N may be respective positive integers.

Motion vector candidate: A motion vector candidate may be a block that is a prediction candidate or the motion vector of the block that is a prediction candidate when a motion vector is predicted.
- A motion vector candidate may be included in a motion vector candidate list.

Motion vector candidate list: A motion vector candidate list may be a list configured using one or more motion vector candidates.

Motion vector candidate index: A motion vector candidate index may be an indicator for indicating a motion vector candidate in the motion vector candidate list. Alternatively, a motion vector candidate index may be the index of a motion vector predictor.

Motion information: Motion information may be information including at least one of a reference picture list, a reference image, a motion vector candidate, a motion vector candidate index, a merge candidate, and a merge index, as well as a motion vector, a reference picture index, and an inter-prediction indicator.

Merge candidate list: A merge candidate list may be a list configured using one or more merge candidates.

Merge candidate: A merge candidate may be a spatial merge candidate, a temporal merge candidate, a combined merge candidate, a combined bi-prediction merge candidate, a candidate based on a history, a candidate based on an average of two candidates, a zero-merge candidate, etc. A merge candidate may include an inter-prediction indicator, and may include motion information such as prediction type information, a reference picture index for each list, a motion vector, a prediction list utilization flag, and an inter-prediction indicator.

Merge index: A merge index may be an indicator for indicating a merge candidate in a merge candidate list.
- A merge index may indicate a reconstructed unit used to derive a merge candidate between a reconstructed unit spatially adjacent to a target unit and a reconstructed unit temporally adjacent to the target unit.
- A merge index may indicate at least one of pieces of motion information of a merge candidate.

Transform unit: A transform unit may be the base unit of residual signal encoding and/or residual signal decoding, such as transform, inverse transform, quantization, dequantization, transform coefficient encoding, and transform coefficient decoding. A single transform unit may be partitioned into multiple sub-transform units having a smaller size. Here, a transform may include one or more of a primary transform and a secondary transform, and an inverse transform may include one or more of a primary inverse transform and a secondary inverse transform.

Scaling: Scaling may denote a procedure for multiplying a factor by a transform coefficient level.
- As a result of scaling of the transform coefficient level, a transform coefficient may be generated. Scaling may also be referred to as "dequantization".

Quantization Parameter (QP): A quantization parameter may be a value used to generate a transform coefficient level for a transform coefficient in quantization. Alternatively, a quantization parameter may also be a value used to generate a transform coefficient by scaling the transform coefficient level in dequantization. Alternatively, a quantization parameter may be a value mapped to a quantization step size.

Delta quantization parameter: A delta quantization parameter may mean a difference value between a predicted quantization parameter and the quantization parameter of a target unit.

Scan: Scan may denote a method for aligning the order of coefficients in a unit, a block or a matrix. For example, a method for aligning a 2D array in the form of a one-dimensional (1D) array may be referred to as a "scan". Alternatively, a method for aligning a 1D array in the form of a 2D array may also be referred to as a "scan" or an "inverse scan".

Transform coefficient: A transform coefficient may be a coefficient value generated as an encoding apparatus performs a transform. Alternatively, the transform coefficient may be a coefficient value generated as a decoding apparatus performs at least one of entropy decoding and dequantization.
- A quantized level or a quantized transform coefficient level generated by applying quantization to a transform coefficient or a residual signal may also be included in the meaning of the term "transform coefficient".

Quantized level: A quantized level may be a value generated as the encoding apparatus performs quantization on a transform coefficient or a residual signal. Alternatively, the quantized level may be a value that is the target of dequantization as the decoding apparatus performs dequantization.
- A quantized transform coefficient level, which is the result of transform and quantization, may also be included in the meaning of a quantized level.

Non-zero transform coefficient: A non-zero transform coefficient may be a transform coefficient having a value other than 0 or a transform coefficient level having a value other than 0. Alternatively, a non-zero transform coefficient may be a transform coefficient, the magnitude of the value of which is not 0, or a transform coefficient level, the magnitude of the value of which is not 0.

Quantization matrix: A quantization matrix may be a matrix used in a quantization procedure or a dequantization procedure so as to improve the subjective image quality or objective image quality of an image. A quantization matrix may also be referred to as a "scaling list".

Quantization matrix coefficient: A quantization matrix coefficient may be each element in a quantization matrix. A quantization matrix coefficient may also be referred to as a "matrix coefficient".

Default matrix: A default matrix may be a quantization matrix predefined by the encoding apparatus and the decoding apparatus.

Non-default matrix: A non-default matrix may be a quantization matrix that is not predefined by the encoding apparatus and the decoding apparatus. The non-default matrix may mean a quantization matrix to be signaled from the encoding apparatus to the decoding apparatus by a user.

Most Probable Mode (MPM): An MPM may denote an intra-prediction mode having a high probability of being used for intra prediction for a target block.
- An encoding apparatus and a decoding apparatus may determine one or more MPMs based on coding parameters related to the target block and the attributes of entities related to the target block.
- The encoding apparatus and the decoding apparatus may determine one or more MPMs based on the intra-prediction mode of a reference block. The reference block may include multiple reference blocks. The multiple reference blocks may include spatial neighbor blocks adjacent to the left of the target block and spatial neighbor blocks adjacent to the top of the target block. In other words, depending on which intra-prediction modes have been used for the reference blocks, one or more different MPMs may be determined.
- The one or more MPMs may be determined in the same manner both in the encoding apparatus and in the decoding apparatus. That is, the encoding apparatus and the decoding apparatus may share the same MPM list including one or more MPMs.

MPM list: An MPM list may be a list including one or more MPMs. The number of the one or more MPMs in the MPM list may be defined in advance.

MPM indicator: An MPM indicator may indicate an MPM to be used for intra prediction for a target block among one or more MPMs in the MPM list. For example, the MPM indicator may be an index for the MPM list.
- Since the MPM list is determined in the same manner both in the encoding apparatus and in the decoding apparatus, there may be no need to transmit the MPM list itself from the encoding apparatus to the decoding apparatus.
- The MPM indicator may be signaled from the encoding apparatus to the decoding apparatus. As the MPM indicator is signaled, the decoding apparatus may determine the MPM to be used for intra prediction for the target block among the MPMs in the MPM list.

MPM use indicator: An MPM use indicator may indicate whether an MPM usage mode is to be used for prediction for a target block. The MPM usage mode may be a mode in which the MPM to be used for intra prediction for the target block is determined using the MPM list.
- The MPM use indicator may be signaled from the encoding apparatus to the decoding apparatus.

Signaling: "signaling" may denote that information is transferred from an encoding apparatus to a decoding apparatus. Alternatively, "signaling" may mean information is included in in a bitstream or a recoding medium by an encoding apparatus. Information signaled by an encoding apparatus may be used by a decoding apparatus.
- The encoding apparatus may generate encoded information by performing encoding on information to be signaled. The encoded information may be transmitted from the encoding apparatus to the decoding apparatus. The decoding apparatus may obtain information by decoding the transmitted encoded information. Here, the encoding may be entropy encoding, and the decoding may be entropy decoding.

Selective Signaling: Information may be signaled selectively. A selective signaling FOR information may mean that an encoding apparatus selectively includes information (according to a specific condition) in a bitstream or a recording medium. Selective signaling for information may mean that a decoding apparatus selectively extracts information from a bitstream (according to a specific condition).

Omission of signaling: Signaling for information may be omitted. Omission of signaling for information on information may mean that an encoding apparatus does not include information (according to a specific condition) in a bitstream or a recording medium. Omission of signaling for information may mean that a decoding apparatus does not extract information from a bitstream (according to a specific condition).

Statistic value: A variable, a coding parameter, a constant, etc. may have values that can be calculated. The statistic value may be a value generated by performing calculations (operations) on the values of specified targets. For example, the statistic value may indicate one or more of the average, weighted average, weighted sum, minimum value, maximum value, mode, median value, and interpolated value of the values of a specific variable, a specific coding parameter, a specific constant, or the like.

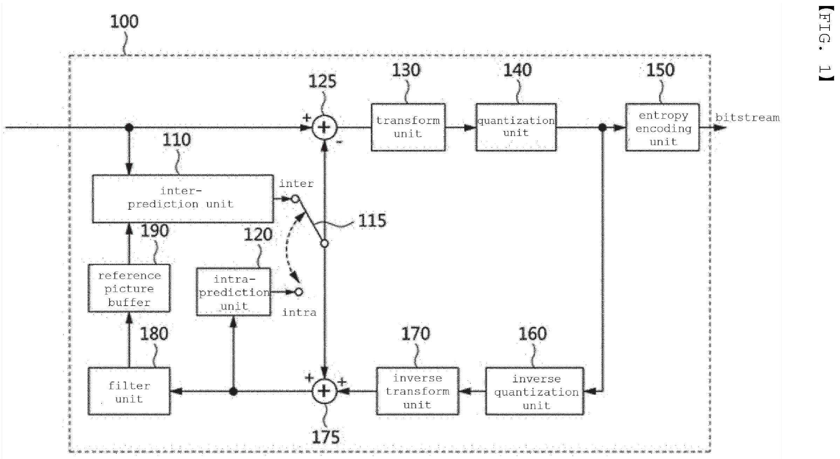

FIG. 1 is a block diagram illustrating the configuration of an embodiment of an encoding apparatus to which the present disclosure is applied.

An encoding apparatus 100 may be an encoder, a video encoding apparatus or an image encoding apparatus. A video may include one or more images (pictures). The encoding apparatus 100 may sequentially encode one or more images of the video.

Referring to FIG. 1, the encoding apparatus 100 includes an inter-prediction unit 110, an intra-prediction unit 120, a switch 115, a subtractor 125, a transform unit 130, a quantization unit 140, an entropy encoding unit 150, a dequantization (inverse quantization) unit 160, an inverse transform unit 170, an adder 175, a filter unit 180, and a reference picture buffer 190.

The encoding apparatus 100 may perform encoding on a target image using an intra mode and/or an inter mode. In other words, a prediction mode for a target block may be one of an intra mode and an inter mode.

Hereinafter, the terms "intra mode", "intra-prediction mode", "intra-picture mode" and "intra-picture prediction mode" may be used to have the same meaning, and may be used interchangeably with each other.

Hereinafter, the terms "inter mode", "inter-prediction mode", "inter-picture mode" and "inter-picture prediction mode" may be used to have the same meaning, and may be used interchangeably with each other.

Hereinafter, the term "image" may indicate only part of an image, or may indicate a block. Also, the processing of an "image" may indicate sequential processing of multiple blocks.

Further, the encoding apparatus 100 may generate a bitstream, including encoded information, via encoding on the target image, and may output and store the generated bitstream. The generated bitstream may be stored in a computer-readable storage medium and may be streamed through a wired and/or wireless transmission medium.

When the intra mode is used as a prediction mode, the switch 115 may switch to the intra mode. When the inter mode is used as a prediction mode, the switch 115 may switch to the inter mode.

The encoding apparatus 100 may generate a prediction block of a target block. Further, after the prediction block has been generated, the encoding apparatus 100 may encode a residual block for the target block using a residual between the target block and the prediction block.

When the prediction mode is the intra mode, the intra-prediction unit 120 may use pixels of previously encoded/decoded neighbor blocks adjacent to the target block as reference samples. The intra-prediction unit 120 may perform spatial prediction on the target block using the reference samples, and may generate prediction samples for the target block via spatial prediction. the prediction samples may mean samples in the prediction block.

The inter-prediction unit 110 may include a motion prediction unit and a motion compensation unit.

When the prediction mode is an inter mode, the motion prediction unit may search a reference image for the area most closely matching the target block in a motion prediction procedure, and may derive a motion vector for the target block and the found area based on the found area. Here, the motion-prediction unit may use a search range as a target area for searching.

The reference image may be stored in the reference picture buffer 190. More specifically, an encoded and/or decoded reference image may be stored in the reference picture buffer 190 when the encoding and/or decoding of the reference image have been processed.

Since a decoded picture is stored, the reference picture buffer 190 may be a Decoded Picture Buffer (DPB).

The motion compensation unit may generate a prediction block for the target block by performing motion compensation using a motion vector. Here, the motion vector may be a two-dimensional (2D) vector used for inter-prediction. Further, the motion vector may indicate an offset between the target image and the reference image.

The motion prediction unit and the motion compensation unit may generate a prediction block by applying an interpolation filter to a partial area of a reference image when the motion vector has a value other than an integer. In order to perform inter prediction or motion compensation, it may be determined which one of a skip mode, a merge mode, an advanced motion vector prediction (AMVP) mode, and a current picture reference mode corresponds to a method for predicting the motion of a PU included in a CU, based on the CU, and compensating for the motion, and inter prediction or motion compensation may be performed depending on the mode.

The subtractor 125 may generate a residual block, which is the differential between the target block and the prediction block. A residual block may also be referred to as a "residual signal".

The residual signal may be the difference between an original signal and a prediction signal. Alternatively, the residual signal may be a signal generated by transforming or quantizing the difference between an original signal and a prediction signal or by transforming and quantizing the difference. A residual block may be a residual signal for a block unit.

The transform unit 130 may generate a transform coefficient by transforming the residual block, and may output the generated transform coefficient. Here, the transform coefficient may be a coefficient value generated by transforming the residual block.

The transform unit 130 may use one of multiple predefined transform methods when performing a transform.

The multiple predefined transform methods may include a Discrete Cosine Transform (DCT), a Discrete Sine Transform (DST), a Karhunen-Loeve Transform (KLT), etc.

The transform method used to transform a residual block may be determined depending on at least one of coding parameters for a target block and/or a neighbor block. For example, the transform method may be determined based on at least one of an inter-prediction mode for a PU, an intra-prediction mode for a PU, the size of a TU, and the shape of a TU. Alternatively, transformation information indicating the transform method may be signaled from the encoding apparatus 100 to the decoding apparatus 200.

When a transform skip mode is used, the transform unit 130 may omit transforming the residual block.

By applying quantization to the transform coefficient, a quantized transform coefficient level or a quantized level may be generated. Hereinafter, in the embodiments, each of the quantized transform coefficient level and the quantized level may also be referred to as a 'transform coefficient'.

The quantization unit 140 may generate a quantized transform coefficient level (i.e., a quantized level or a quantized coefficient) by quantizing the transform coefficient depending on quantization parameters. The quantization unit 140 may output the quantized transform coefficient level that is generated. In this case, the quantization unit 140 may quantize the transform coefficient using a quantization matrix.

The entropy encoding unit 150 may generate a bitstream by performing probability distribution-based entropy encoding based on values, calculated by the quantization unit 140, and/or coding parameter values, calculated in the encoding procedure. The entropy encoding unit 150 may output the generated bitstream.

The entropy encoding unit 150 may perform entropy encoding on information about the pixels of the image and information required to decode the image. For example, the information required to decode the image may include syntax elements or the like.

When entropy encoding is applied, fewer bits may be assigned to more frequently occurring symbols, and more bits may be assigned to rarely occurring symbols. As symbols are represented by means of this assignment, the size of a bit string for target symbols to be encoded may be reduced. Therefore, the compression performance of video encoding may be improved through entropy encoding.

Further, for entropy encoding, the entropy encoding unit 150 may use a coding method such as exponential Golomb, Context-Adaptive Variable Length Coding (CAVLC), or Context-Adaptive Binary Arithmetic Coding (CABAC). For example, the entropy encoding unit 150 may perform entropy encoding using a Variable Length Coding/Code (VLC) table. For example, the entropy encoding unit 150 may derive a binarization method for a target symbol. Further, the entropy encoding unit 150 may derive a probability model for a target symbol/bin. The entropy encoding unit 150 may perform arithmetic coding using the derived binarization method, a probability model, and a context model.

The entropy encoding unit 150 may transform the coefficient of the form of a 2D block into the form of a 1D vector through a transform coefficient scanning method so as to encode a quantized transform coefficient level.

The coding parameters may be information required for encoding and/or decoding. The coding parameters may include information encoded by the encoding apparatus 100 and transferred from the encoding apparatus 100 to a decoding apparatus, and may also include information that may be derived in the encoding or decoding procedure. For example, information transferred to the decoding apparatus may include syntax elements.

The coding parameters may include not only information (or a flag or an index), such as a syntax element, which is encoded by the encoding apparatus and is signaled by the encoding apparatus to the decoding apparatus, but also information derived in an encoding or decoding process. Further, the coding parameters may include information required so as to encode or decode images. For example, the coding parameters may include at least one value, combinations or statistics of a size of a unit/block, a shape/form of a unit/block, a depth of a unit/block, partition information of a unit/block, a partition structure of a unit/block, information indicating whether a unit/block is partitioned in a quad-tree structure, information indicating whether a unit/block is partitioned in a binary tree structure, a partitioning direction of a binary tree structure (horizontal direction or vertical direction), a partitioning form of a binary tree structure (symmetrical partitioning or asymmetrical partitioning), information indicating whether a unit/block is partitioned in a ternary tree structure, a partitioning direction of a ternary tree structure (horizontal direction or vertical direction), a partitioning form of a ternary tree structure (symmetrical partitioning or asymmetrical partitioning, etc.), information indicating whether a unit/block is partitioned in a multi-type tree structure, a combination and a direction (horizontal direction or vertical direction, etc.) of a partitioning of the multi-type tree structure, a partitioning form of a multi-type tree structure (symmetrical partitioning or asymmetrical partitioning, etc.), a partitioning tree (a binary tree or a ternary tree) of the multi-type tree form, a type of a prediction (intra prediction or inter prediction), an intra-prediction mode/direction, an intra luma prediction mode/direction, an intra chroma prediction mode/direction, an intra partitioning information, an inter partitioning information, a coding block partitioning flag, a prediction block partitioning flag, a transform block partitioning flag, a reference sample filtering method, a reference sample filter tap, a reference sample filter coefficient, a prediction block filtering method, a prediction block filter tap, a prediction block filter coefficient, a prediction block boundary filtering method, a prediction block boundary filter tap, a prediction block boundary filter coefficient, an inter-prediction mode, motion information, a motion vector, a motion vector difference, a reference picture index, an inter-prediction direction, an inter-prediction indicator, a prediction list utilization flag, a reference picture list, a reference image, a POC, a motion vector predictor, a motion vector prediction index, a motion vector prediction candidate, a motion vector candidate list, information indicating whether a merge mode is used, a merge index, a merge candidate, a merge candidate list, information indicating whether a skip mode is used, a type of an interpolation filter, a tap of an interpolation filter, a filter coefficient of an interpolation filter, a magnitude of a motion vector, accuracy of motion vector representation, a transform type, a transform size, information indicating whether a first transform is used, information indicating whether an additional (secondary) transform is used, first transform selection information (or a first transform index), secondary transform selection information (or a secondary transform index), information indicating a presence or absence of a residual signal, a coded block pattern, a coded block flag, a quantization parameter, a residual quantization parameter, a quantization matrix, information about an intra-loop filter, information indicating whether an intra-loop filter is applied, a coefficient of an intra-loop filter, a tap of an intra-loop filter, a shape/form of an intra-loop filter, information indicating whether a deblocking filter is applied, a coefficient of a deblocking filter, a tap of a deblocking filter, deblocking filter strength, a shape/form of a deblocking filter, information indicating whether an adaptive sample offset is applied, a value of an adaptive sample offset, a category of an adaptive sample offset, a type of an adaptive sample offset, information indicating whether an adaptive in-loop filter is applied, a coefficient of an adaptive in-loop filter, a tap of an adaptive in-loop filter, a shape/form of an adaptive in-loop filter, a binarization/inverse binarization method, a context model, a context model decision method, a context model update method, information indicating whether a regular mode is performed, information whether a bypass mode is performed, a significant coefficient flag, a last significant coefficient flag, a coding flag for a coefficient group, a position of a last significant coefficient, information indicating whether a value of a coefficient is greater than 1, information indicating whether a value of a coefficient is greater than 2, information indicating whether a value of a coefficient is greater than 3, a remaining coefficient value information, a sign information, a reconstructed luma sample, a reconstructed chroma sample, a context bin, a bypass bin, a residual luma sample, a residual chroma sample, a transform coefficient, a luma transform coefficient, a chroma transform coefficient, a quantized level, a luma quantized level, a chroma quantized level, a transform coefficient level, a transform coefficient level scanning method, a size of a motion vector search region on a side of a decoding apparatus, a shape/form of a motion vector search region on a side of a decoding apparatus, the number of a motion vector search on a side of a decoding apparatus, a size of a CTU, a minimum block size, a maximum block size, a maximum block depth, a minimum block depth, an image display/output order, slice identification information, a slice type, slice partition information, tile group identification information, a tile group type, a tile group partitioning information, tile identification information, a tile type, tile partitioning information, a picture type, bit depth, input sample bit depth, reconstructed sample bit depth, residual sample bit depth, transform coefficient bit depth, quantized level bit depth, information about a luma signal, information about a chroma signal, a color space of a target block and a color space of a residual block. Further, the above-described coding parameter-related information may also be included in the coding parameter. Information used to calculate and/or derive the above-described coding parameter may also be included in the coding parameter. Information calculated or derived using the above-described coding parameter may also be included in the coding parameter.

The first transform selection information may indicate a first transform which is applied to a target block.

The second transform selection information may indicate a second transform which is applied to a target block.

The residual signal may denote the difference between the original signal and a prediction signal. Alternatively, the residual signal may be a signal generated by transforming the difference between the original signal and the prediction signal. Alternatively, the residual signal may be a signal generated by transforming and quantizing the difference between the original signal and the prediction signal. A residual block may be the residual signal for a block.

Here, signaling information may mean that the encoding apparatus 100 includes an entropy-encoded information, generated by performing entropy encoding a flag or an index, in a bitstream, and that the decoding apparatus 200 acquires information by performing entropy decoding on the entropy-encoded information, extracted from the bitstream. Here, the information may comprise a flag, an index, etc.

A signal may mean information to be signaled. Hereinafter, information for an image and a block may be referred to as a signal. Further, hereinafter, the terms "information" and "signal" may be used to have the same meaning and may be used interchangeably with each other. For example, a specific signal may be a signal representing a specific block. An original signal may be a signal representing a target block. A prediction signal may be a signal representing a prediction block. A residual signal may be a signal representing a residual block.

A bitstream may include information based on a specific syntax. The encoding apparatus 100 may generate a bitstream including information depending on a specific syntax. The decoding apparatus 200 may acquire information from the bitstream depending on a specific syntax.

Since the encoding apparatus 100 performs encoding via inter prediction, the encoded target image may be used as a reference image for additional image(s) to be subsequently processed. Therefore, the encoding apparatus 100 may reconstruct or decode the encoded target image and store the reconstructed or decoded image as a reference image in the reference picture buffer 190. For decoding, dequantization and inverse transform on the encoded target image may be processed.

The quantized level may be inversely quantized by the dequantization unit 160, and may be inversely transformed by the inverse transform unit 170. The dequantization unit 160 may generate an inversely quantized coefficient by performing inverse transform for the quantized level. The inverse transform unit 170 may generate a inversely quantized and inversely transformed coefficient by performing inverse transform for the inversely quantized coefficient.

The inversely quantized and inversely transformed coefficient may be added to the prediction block by the adder 175. The inversely quantized and inversely transformed coefficient and the prediction block are added, and then a reconstructed block may be generated. Here, the inversely quantized and/or inversely transformed coefficient may denote a coefficient on which one or more of dequantization and inverse transform are performed, and may also denote a reconstructed residual block. Here, the reconstructed block may mean a recovered block or a decoded block.

The reconstructed block may be subjected to filtering through the filter unit 180. The filter unit 180 may apply one or more of a deblocking filter, a Sample Adaptive Offset (SAO) filter, an Adaptive Loop Filter (ALF), and a Non Local Filter (NLF) to a reconstructed sample, the reconstructed block or a reconstructed picture. The filter unit 180 may also be referred to as an "in-loop filter".

The deblocking filter may eliminate block distortion occurring at the boundaries between blocks in a reconstructed picture. In order to determine whether to apply the deblocking filter, the number of columns or rows which are included in a block and which include pixel(s) based on which it is determined whether to apply the deblocking filter to a target block may be decided on.

When the deblocking filter is applied to the target block, the applied filter may differ depending on the strength of the required deblocking filtering. In other words, among different filters, a filter decided on in consideration of the strength of deblocking filtering may be applied to the target block. When a deblocking filter is applied to a target block, one or more filters of a long-tap filter, a strong filter, a weak filter and Gaussian filter may be applied to the target block depending on the strength of required deblocking filtering.

Also, when vertical filtering and horizontal filtering are performed on the target block, the horizontal filtering and the vertical filtering may be processed in parallel.

The SAO may add a suitable offset to the values of pixels to compensate for coding error. The SAO may perform, for the image to which deblocking is applied, correction that uses an offset in the difference between an original image and the image to which deblocking is applied, on a pixel basis. To perform an offset correction for an image, a method for dividing the pixels included in the image into a certain number of regions, determining a region to which an offset is to be applied, among the divided regions, and applying an offset to the determined region may be used, and a method for applying an offset in consideration of edge information of each pixel may also be used.

The ALF may perform filtering based on a value obtained by comparing a reconstructed image with an original image. After pixels included in an image have been divided into a predetermined number of groups, filters to be applied to each group may be determined, and filtering may be differentially performed for respective groups. information related to whether to apply an adaptive loop filter may be signaled for each CU. Such information may be signaled for a luma signal. The shapes and filter coefficients of ALFs to be applied to respective blocks may differ for respective blocks. Alternatively, regardless of the features of a block, an ALF having a fixed form may be applied to the block.

A non-local filter may perform filtering based on reconstructed blocks, similar to a target block. A region similar to the target block may be selected from a reconstructed picture, and filtering of the target block may be performed using the statistical properties of the selected similar region. Information about whether to apply a non-local filter may be signaled for a Coding Unit (CU). Also, the shapes and filter coefficients of the non-local filter to be applied to blocks may differ depending on the blocks.

The reconstructed block or the reconstructed image subjected to filtering through the filter unit 180 may be stored in the reference picture buffer 190 as a reference picture. The reconstructed block subjected to filtering through the filter unit 180 may be a part of a reference picture. In other words, the reference picture may be a reconstructed picture composed of reconstructed blocks subjected to filtering through the filter unit 180. The stored reference picture may be subsequently used for inter prediction or a motion compensation.

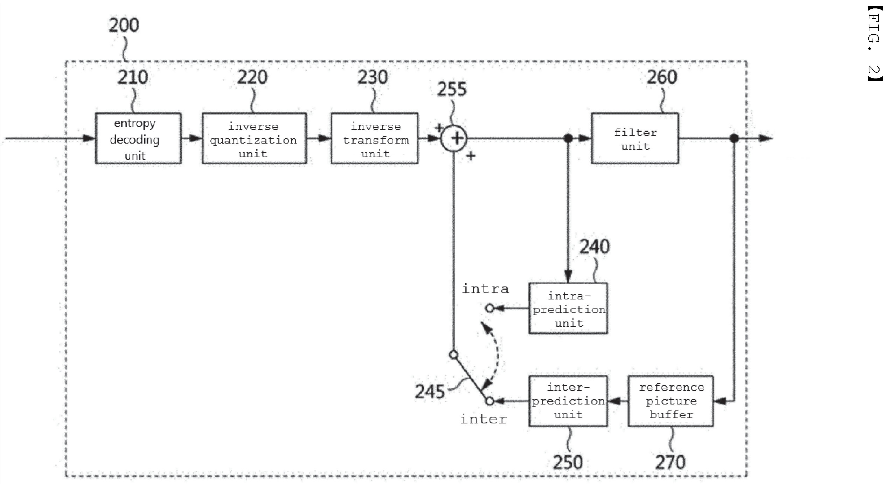

FIG. 2 is a block diagram illustrating the configuration of an embodiment of a decoding apparatus to which the present disclosure is applied.

A decoding apparatus 200 may be a decoder, a video decoding apparatus or an image decoding apparatus.

Referring to FIG. 2, the decoding apparatus 200 may include an entropy decoding unit 210, a dequantization (inverse quantization) unit 220, an inverse transform unit 230, an intra-prediction unit 240, an inter-prediction unit 250, a switch 245 an adder 255, a filter unit 260, and a reference picture buffer 270.

The decoding apparatus 200 may receive a bitstream output from the encoding apparatus 100. The decoding apparatus 200 may receive a bitstream stored in a computer-readable storage medium, and may receive a bitstream that is streamed through a wired/wireless transmission medium.

The decoding apparatus 200 may perform decoding on the bitstream in an intra mode and/or an inter mode. Further, the decoding apparatus 200 may generate a reconstructed image or a decoded image via decoding, and may output the reconstructed image or decoded image.

For example, switching to an intra mode or an inter mode based on the prediction mode used for decoding may be performed by the switch 245. When the prediction mode used for decoding is an intra mode, the switch 245 may be operated to switch to the intra mode. When the prediction mode used for decoding is an inter mode, the switch 245 may be operated to switch to the inter mode.

The decoding apparatus 200 may acquire a reconstructed residual block by decoding the input bitstream, and may generate a prediction block. When the reconstructed residual block and the prediction block are acquired, the decoding apparatus 200 may generate a reconstructed block, which is the target to be decoded, by adding the reconstructed residual block and the prediction block.

The entropy decoding unit 210 may generate symbols by performing entropy decoding on the bitstream based on the probability distribution of a bitstream. The generated symbols may include symbols in a form of a quantized transform coefficient level (i.e., a quantized level or a quantized coefficient). Here, the entropy decoding method may be similar to the above-described entropy encoding method. That is, the entropy decoding method may be the reverse procedure of the above-described entropy encoding method.

The entropy decoding unit 210 may change a coefficient having a one-dimensional (1D) vector form to a 2D block shape through a transform coefficient scanning method in order to decode a quantized transform coefficient level.

For example, the coefficients of the block may be changed to 2D block shapes by scanning the block coefficients using up-right diagonal scanning. Alternatively, which one of up-right diagonal scanning, vertical scanning, and horizontal scanning is to be used may be determined depending on the size and/or the intra-prediction mode of the corresponding block.

The quantized coefficient may be inversely quantized by the dequantization unit 220. The dequantization unit 220 may generate an inversely quantized coefficient by performing dequantization on the quantized coefficient. Further, the inversely quantized coefficient may be inversely transformed by the inverse transform unit 230. The inverse transform unit 230 may generate a reconstructed residual block by performing an inverse transform on the inversely quantized coefficient. As a result of performing dequantization and the inverse transform on the quantized coefficient, the reconstructed residual block may be generated. Here, the dequantization unit 220 may apply a quantization matrix to the quantized coefficient when generating the reconstructed residual block.

When the intra mode is used, the intra-prediction unit 240 may generate a prediction block by performing spatial prediction that uses the pixel values of previously decoded neighbor blocks adjacent to a target block for the target block.

The inter-prediction unit 250 may include a motion compensation unit. Alternatively, the inter-prediction unit 250 may be designated as a "motion compensation unit".

When the inter mode is used, the motion compensation unit may generate a prediction block by performing motion compensation that uses a motion vector and a reference image stored in the reference picture buffer 270 for the target block.

The motion compensation unit may apply an interpolation filter to a partial area of the reference image when the motion vector has a value other than an integer, and may generate a prediction block using the reference image to which the interpolation filter is applied. In order to perform motion compensation, the motion compensation unit may determine which one of a skip mode, a merge mode, an Advanced Motion Vector Prediction (AMVP) mode, and a current picture reference mode corresponds to the motion compensation method used for a PU included in a CU, based on the CU, and may perform motion compensation depending on the determined mode.

The reconstructed residual block and the prediction block may be added to each other by the adder 255. The adder 255 may generate a reconstructed block by adding the reconstructed residual block to the prediction block.

The reconstructed block may be subjected to filtering through the filter unit 260. The filter unit 260 may apply at least one of a deblocking filter, an SAO filter, an ALF, and a NLF to the reconstructed block or the reconstructed image. The reconstructed image may be a picture including the reconstructed block.

The filter unit may output the reconstructed image.

The reconstructed image and/or the reconstructed block subjected to filtering through the filter unit 260 may be stored as a reference picture in the reference picture buffer 270. The reconstructed block subjected to filtering through the filter unit 260 may be a part of the reference picture. In other words, the reference picture may be an image composed of reconstructed blocks subjected to filtering through the filter unit 260. The stored reference picture may be subsequently used for inter prediction or a motion compensation.

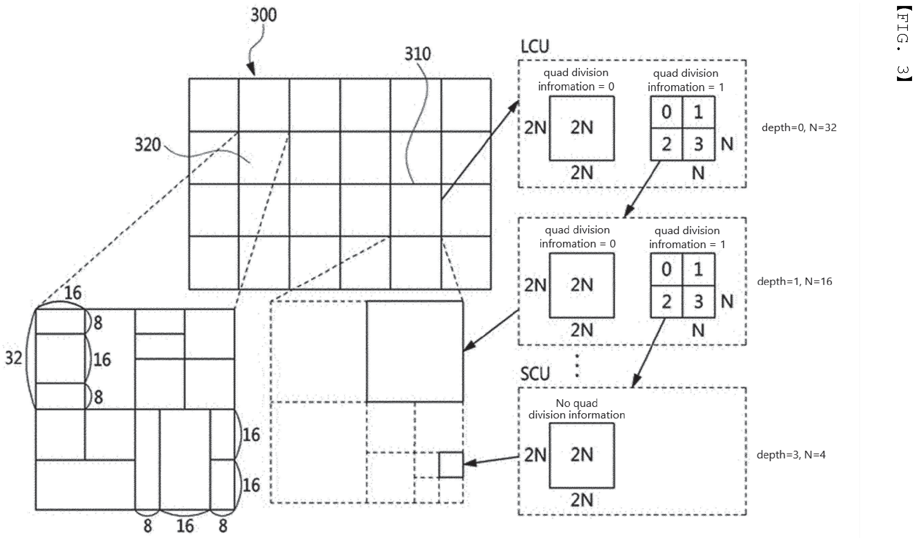

FIG. 3 is a diagram schematically illustrating the partition structure of an image when the image is encoded and decoded.

FIG. 3 may schematically illustrate an example in which a single unit is partitioned into multiple sub-units.

In order to efficiently partition the image, a Coding Unit (CU) may be used in encoding and decoding. The term "unit" may be used to collectively designate 1) a block including image samples and 2) a syntax element. For example, the "partitioning of a unit" may mean the "partitioning of a block corresponding to a unit".

A CU may be used as a base unit for image encoding/decoding. A CU may be used as a unit to which one mode selected from an intra mode and an inter mode in image encoding/decoding is applied. In other words, in image encoding/decoding, which one of an intra mode and an inter mode is to be applied to each CU may be determined.

Further, a CU may be a base unit in prediction, transform, quantization, inverse transform, dequantization, and encoding/decoding of transform coefficients.

Referring to FIG. 3, an image 300 may be sequentially partitioned into units corresponding to a Largest Coding Unit (LCU), and a partition structure may be determined for each LCU. Here, the LCU may be used to have the same meaning as a Coding Tree Unit (CTU).

The partitioning of a unit may mean the partitioning of a block corresponding to the unit. Block partition information may include depth information about the depth of a unit. The depth information may indicate the number of times the unit is partitioned and/or the degree to which the unit is partitioned. A single unit may be hierarchically partitioned into a plurality of sub-units while having depth information based on a tree structure.

Each of partitioned sub-units may have depth information. The depth information may be information indicating the size of a CU. The depth information may be stored for each CU.

Each CU may have depth information. When the CU is partitioned, CUs resulting from partitioning may have a depth increased from the depth of the partitioned CU by 1.

The partition structure may mean the distribution of Coding Units (CUs) to efficiently encode the image in an LCU 310. Such a distribution may be determined depending on whether a single CU is to be partitioned into multiple CUs. The number of CUs generated by partitioning may be a positive integer of 2 or more, including 2, 3, 4, 8, 16, etc.

The horizontal size and the vertical size of each of CUs generated by the partitioning may be less than the horizontal size and the vertical size of a CU before being partitioned, depending on the number of CUs generated by partitioning. For example, the horizontal size and the vertical size of each of CUs generated by the partitioning may be half of the horizontal size and the vertical size of a CU before being partitioned.

Each partitioned CU may be recursively partitioned into four CUs in the same way. Via the recursive partitioning, at least one of the horizontal size and the vertical size of each partitioned CU may be reduced compared to at least one of the horizontal size and the vertical size of the CU before being partitioned.

The partitioning of a CU may be recursively performed up to a predefined depth or a predefined size.

For example, the depth of a CU may have a value ranging from 0 to 3. The size of the CU may range from a size of 64x64 to a size of 8x8 depending on the depth of the CU.

For example, the depth of an LCU 310 may be 0, and the depth of a Smallest Coding Unit (SCU) may be a predefined maximum depth. Here, as described above, the LCU may be the CU having the maximum coding unit size, and the SCU may be the CU having the minimum coding unit size.

Partitioning may start at the LCU 310, and the depth of a CU may be increased by 1 whenever the horizontal and/or vertical sizes of the CU are reduced by partitioning.

For example, for respective depths, a CU that is not partitioned may have a size of 2Nx2N. Further, in the case of a CU that is partitioned, a CU having a size of 2Nx2N may be partitioned into four CUs, each having a size of NxN. The value of N may be halved whenever the depth is increased by 1.

Referring to FIG. 3, an LCU having a depth of 0 may have 64x64 pixels or 64x64 blocks. 0 may be a minimum depth. An SCU having a depth of 3 may have 8x8 pixels or 8x8 blocks. 3 may be a maximum depth. Here, a CU having 64x64 blocks, which is the LCU, may be represented by a depth of 0. A CU having 32x32 blocks may be represented by a depth of 1. A CU having 16x16 blocks may be represented by a depth of 2. A CU having 8x8 blocks, which is the SCU, may be represented by a depth of 3.

Information about whether the corresponding CU is partitioned may be represented by the partition information of the CU. The partition information may be 1-bit information. All CUs except the SCU may include partition information. For example, the value of the partition information of a CU that is not partitioned may be a first value. The value of the partition information of a CU that is partitioned may be a second value. When the partition information indicates whether a CU is partitioned or not, the first value may be "0" and the second value may be "1".

For example, when a single CU is partitioned into four CUs, the horizontal size and vertical size of each of four CUs generated by partitioning may be half the horizontal size and the vertical size of the CU before being partitioned. When a CU having a 32x32 size is partitioned into four CUs, the size of each of four partitioned CUs may be 16x16. When a single CU is partitioned into four CUs, it may be considered that the CU has been partitioned in a quad-tree structure. In other words, it may be considered that a quad-tree partition has been applied to a CU.

For example, when a single CU is partitioned into two CUs, the horizontal size or the vertical size of each of two CUs generated by partitioning may be half the horizontal size or the vertical size of the CU before being partitioned. When a CU having a 32x32 size is vertically partitioned into two CUs, the size of each of two partitioned CUs may be 16x32. When a CU having a 32x32 size is horizontally partitioned into two CUs, the size of each of two partitioned CUs may be 32x16. When a single CU is partitioned into two CUs, it may be considered that the CU has been partitioned in a binary-tree structure. In other words, it may be considered that a binary-tree partition has been applied to a CU.

For example, when a single CU is partitioned (or split) into three CUs, the original CU before being partitioned is partitioned so that the horizontal size or vertical size thereof is divided at a ratio of 1:2:1, thus enabling three sub-CUs to be generated. For example, when a CU having a 16x32 size is horizontally partitioned into three sub-CUs, the three sub-CUs resulting from the partitioning may have sizes of 16x8, 16x16, and 16x8, respectively, in a direction from the top to the bottom. For example, when a CU having a 32x32 size is vertically partitioned into three sub-CUs, the three sub-CUs resulting from the partitioning may have sizes of 8x32, 16x32, and 8x32, respectively, in a direction from the left to the right. When a single CU is partitioned into three CUs, it may be considered that the CU is partitioned in a ternary-tree form. In other words, it may be considered that a ternary-tree partition has been applied to the CU.

Both of quad-tree partitioning and binary-tree partitioning are applied to the LCU 310 of FIG. 3.

In the encoding apparatus 100, a Coding Tree Unit (CTU) having a size of 64x64 may be partitioned into multiple smaller CUs by a recursive quad-tree structure. A single CU may be partitioned into four CUs having the same size. Each CU may be recursively partitioned, and may have a quad-tree structure.

By the recursive partitioning of a CU, an optimal partitioning method that incurs a minimum rate-distortion cost may be selected.

The Coding Tree Unit (CTU) 320 in FIG. 3 is an example of a CTU to which all of a quad-tree partition, a binary-tree partition, and a ternary-tree partition are applied.

As described above, in order to partition a CTU, at least one of a quad-tree partition, a binary-tree partition, and a ternary-tree partition may be applied to the CTU. Partitions may be applied based on specific priority.

For example, a quad-tree partition may be preferentially applied to the CTU. A CU that cannot be partitioned in a quad-tree form any further may correspond to a leaf node of a quad-tree. A CU corresponding to the leaf node of the quad-tree may be a root node of a binary tree and/or a ternary tree. That is, the CU corresponding to the leaf node of the quad-tree may be partitioned in a binary-tree form or a ternary-tree form, or may not be partitioned any further. In this case, each CU, which is generated by applying a binary-tree partition or a ternary-tree partition to the CU corresponding to the leaf node of a quad-tree, is prevented from being subjected again to quad-tree partitioning, thus effectively performing partitioning of a block and/or signaling of block partition information.

The partition of a CU corresponding to each node of a quad-tree may be signaled using quad-partition information. Quad-partition information having a first value (e.g., "1") may indicate that the corresponding CU is partitioned in a quad-tree form. Quad-partition information having a second value (e.g., "0") may indicate that the corresponding CU is not partitioned in a quad-tree form. The quad-partition information may be a flag having a specific length (e.g., 1 bit).

Priority may not exist between a binary-tree partition and a ternary-tree partition. That is, a CU corresponding to the leaf node of a quad-tree may be partitioned in a binary-tree form or a ternary-tree form. Also, the CU generated through a binary-tree partition or a ternary-tree partition may be further partitioned in a binary-tree form or a ternary-tree form, or may not be partitioned any further.

Partitioning performed when priority does not exist between a binary-tree partition and a ternary-tree partition may be referred to as a "multi-type tree partition". That is, a CU corresponding to the leaf node of a quad-tree may be the root node of a multi-type tree. Partitioning of a CU corresponding to each node of the multi-type tree may be signaled using at least one of information indicating whether the CU is partitioned in a multi-type tree, partition direction information, and partition tree information. For partitioning of a CU corresponding to each node of a multi-type tree, information indicating whether partitioning in the multi-type tree is performed, partition direction information, and partition tree information may be sequentially signaled.

For example, information indicating whether a CU is partitioned in a multi-type tree and having a first value (e.g., "1") may indicate that the corresponding CU is partitioned in a multi-type tree form. Information indicating whether a CU is partitioned in a multi-type tree and having a second value (e.g., "0") may indicate that the corresponding CU is not partitioned in a multi-type tree form.

When a CU corresponding to each node of a multi-type tree is partitioned in a multi-type tree form, the corresponding CU may further include partition direction information.

The partition direction information may indicate the partition direction of the multi-type tree partition. Partition direction information having a first value (e.g., "1") may indicate that the corresponding CU is partitioned in a vertical direction. Partition direction information having a second value (e.g., "0") may indicate that the corresponding CU is partitioned in a horizontal direction.

When a CU corresponding to each node of a multi-type tree is partitioned in a multi-type tree form, the corresponding CU may further include partition-tree information. The partition-tree information may indicate the tree that is used for a multi-type tree partition.

For example, partition-tree information having a first value (e.g., "1") may indicate that the corresponding CU is partitioned in a binary-tree form. Partition-tree information having a second value (e.g., "0") may indicate that the corresponding CU is partitioned in a ternary-tree form.

Here, each of the above-described information indicating whether partitioning in the multi-type tree is performed, partition-tree information, and partition direction information may be a flag having a specific length (e.g., 1 bit).

At least one of the above-described quad-partition information, information indicating whether partitioning in the multi-type tree is performed, partition direction information, and partition-tree information may be entropy-encoded and/or entropy-decoded. In order to perform entropy encoding/decoding of such information, information of a neighbor CU adjacent to a target CU may be used.

For example, it may be considered that there is a high probability that the partition form of a left CU and/or an above CU (i.e., partitioning/non-partitioning, a partition tree and/or a partition direction) and the partition form of a target CU will be similar to each other. Therefore, based on the information of a neighbor CU, context information for entropy encoding and/or entropy decoding of the information of the target CU may be derived. Here, the information of the neighbor CU may include at least one of 1) quad-partition information of the neighbor CU, 2) information indicating whether the neighbor CU is partitioned in a multi-type tree, 3) partition direction information of the neighbor CU, and 4) partition-tree information of the neighbor CU.

In another embodiment, of a binary-tree partition and a ternary-tree partition, the binary-tree partition may be preferentially performed. That is, the binary-tree partition may be first applied, and then a CU corresponding to the leaf node of a binary tree may be set to the root node of a ternary tree. In this case, a quad-tree partition or a binary-tree partition may not be performed on the CU corresponding to the node of the ternary tree.

A CU, which is not partitioned any further through a quad-tree partition, a binary-tree partition, and/or a ternary-tree partition, may be the unit of encoding, prediction and/or transform. That is, the CU may not be partitioned any further for prediction and/or transform. Therefore, a partition structure for partitioning the CU into Prediction Units (PUs) and/or Transform Units (TUs), partition information thereof, etc. may not be present in a bitstream.

However, when the size of a CU, which is the unit of partitioning, is greater than the size of a maximum transform block, the CU may be recursively partitioned until the size of the CU becomes less than or equal to the size of the maximum transform block. For example, when the size of a CU is 64x64 and the size of the maximum transform block is 32x32, the CU may be partitioned into four 32x32 blocks so as to perform a transform. For example, when the size of a CU is 32x64 and the size of the maximum transform block is 32x32, the CU may be partitioned into two 32x32 blocks.

In this case, information indicating whether a CU is partitioned for a transform may not be separately signaled. Without signaling, whether a CU is partitioned may be determined via a comparison between the horizontal size (and/or vertical size) of the CU and the horizontal size (and/or vertical size) of the maximum transform block. For example, when the horizontal size of the CU is greater than the horizontal size of the maximum transform block, the CU may be vertically bisected. Further, when the vertical size of the CU is greater than the vertical size of the maximum transform block, the CU may be horizontally bisected.

Information about the maximum size and/or minimum size of a CU and information about the maximum size and/or minimum size of a transform block may be signaled or determined at a level higher than that of the CU. For example, the higher level may be a sequence level, a picture level, a tile level, a tile group level or a slice level. For example, the minimum size of the CU may be set to 4x4. For example, the maximum size of the transform block may be set to 64x64. For example, the maximum size of the transform block may be set to 4x4.

Information about the minimum size of a CU corresponding to the leaf node of a quad-tree (i.e., the minimum size of the quad-tree) and/or information about the maximum depth of a path from the root node to the leaf node of a multi-type tree (i.e., the maximum depth of a multi-type tree) may be signaled or determined at a level higher than that of the CU. For example, the higher level may be a sequence level, a picture level, a slice level, a tile group level or a tile level. Information about the minimum size of a quad-tree and/or information about the maximum depth of a multi-type tree may be separately signaled or determined at each of an intra-slice level and an inter-slice level.

Information about the difference between the size of a CTU and the maximum size of a transform block may be signaled or determined at a level higher than that of a CU. For example, the higher level may be a sequence level, a picture level, a slice level, a tile group level or a tile level. Information about the maximum size of a CU corresponding to each node of a binary tree (i.e., the maximum size of the binary tree) may be determined based on the size and the difference information of a CTU. The maximum size of a CU corresponding to each node of a ternary tree (i.e., the maximum size of the ternary tree) may have different values depending on the type of slice. For example, the maximum size of the ternary tree at an intra-slice level may be 32x32. For example, the maximum size of the ternary tree at an inter-slice level may be 128x128. For example, the minimum size of a CU corresponding to each node of a binary tree (i.e., the minimum size of the binary tree) and/or the minimum size of a CU corresponding to each node of a ternary tree (i.e., the minimum size of the ternary tree) may be set to the minimum size of a CU.

In a further example, the maximum size of a binary tree and/or the maximum size of a ternary tree may be signaled or determined at a slice level. Also, the minimum size of a binary tree and/or the minimum size of a ternary tree may be signaled or determined at a slice level.

Based on the above-described various block sizes and depths, quad-partition information, information indicating whether partitioning in a multi-type tree is performed, partition tree information and/or partition direction information may or may not be present in a bitstream.

For example, when the size of a CU is not greater than the minimum size of a quad-tree, the CU may not include quad-partition information, and quad-partition information of the CU may be inferred as a second value.

For example, when the size of a CU corresponding to each node of a multi-type tree (horizontal size and vertical size) is greater than the maximum size of a binary tree (horizontal size and vertical size) and/or the maximum size of a ternary tree (horizontal size and vertical size), the CU may not be partitioned in a binary-tree form and/or a ternary-tree form. By means of this determination manner, information indicating whether partitioning in a multi-type tree is performed may not be signaled, but may be inferred as a second value.

Alternatively, when the size of a CU corresponding to each node of a multi-type tree (horizontal size and vertical size) is equal to the minimum size of a binary tree (horizontal size and vertical size), or when the size of a CU (horizontal size and vertical size) is equal to twice the minimum size of a ternary tree (horizontal size and vertical size), the CU may not be partitioned in a binary tree form and/or a ternary tree form. By means of this determination manner, information indicating whether partitioning in a multi-type tree is performed may not be signaled, but may be inferred as a second value. The reason for this is that, when a CU is partitioned in a binary tree form and/or a ternary tree form, a CU smaller than the minimum size of the binary tree and/or the minimum size of the ternary tree is generated.

Alternatively, a binary-tree partition or a ternary-tree partition may be limited based on the size of a virtual pipeline data unit (i.e., the size of a pipeline buffer). For example, when a CU is partitioned into sub-CUs unsuitable for the size of a pipeline buffer through a binary-tree partition or a ternary-tree partition, a binary-tree partition or a ternary-tree partition may be limited. The size of the pipeline buffer may be equal to the maximum size of a transform block (e.g., 64x64).

For example, when the size of the pipeline buffer is 64x64, the following partitions may be limited.
- Ternary-tree partition for NxM CU (where N and/or M are 128)
- Horizontal binary-tree partition for 128xN CU (where N <= 64)
- Vertical binary-tree partition for Nx128 CU (where N <= 64)

Alternatively, when the depth of a CU corresponding to each node of a multi-type tree is equal to the maximum depth of the multi-type tree, the CU may not be partitioned in a binary-tree form and/or a ternary-tree form. By means of this determination manner, information indicating whether partitioning in a multi-type tree is performed may not be signaled, but may be inferred as a second value.

Alternatively, information indicating whether partitioning in a multi-type tree is performed may be signaled only when at least one of a vertical binary-tree partition, a horizontal binary-tree partition, a vertical ternary-tree partition, and a horizontal ternary-tree partition is possible for a CU corresponding to each node of a multi-type tree. Otherwise, the CU may not be partitioned in a binary-tree form and/or a ternary-tree form. By means of this determination manner, information indicating whether partitioning in a multi-type tree is performed may not be signaled, but may be inferred as a second value.

Alternatively, partition direction information may be signaled only when both a vertical binary-tree partition and a horizontal binary-tree partition are possible or only when both a vertical ternary-tree partition and a horizontal ternary-tree partition are possible, for a CU corresponding to each node of a multi-type tree. Otherwise, the partition direction information may not be signaled, but may be inferred as a value indicating the direction in which the CU can be partitioned.

Alternatively, partition tree information may be signaled only when both a vertical binary-tree partition and a vertical ternary-tree partition are possible or only when both a horizontal binary-tree partition and a horizontal ternary-tree partition are possible, for a CU corresponding to each node of a multi-type tree. Otherwise, the partition tree information may not be signaled, but may be inferred as a value indicating a tree that can be applied to the partition of the CU.

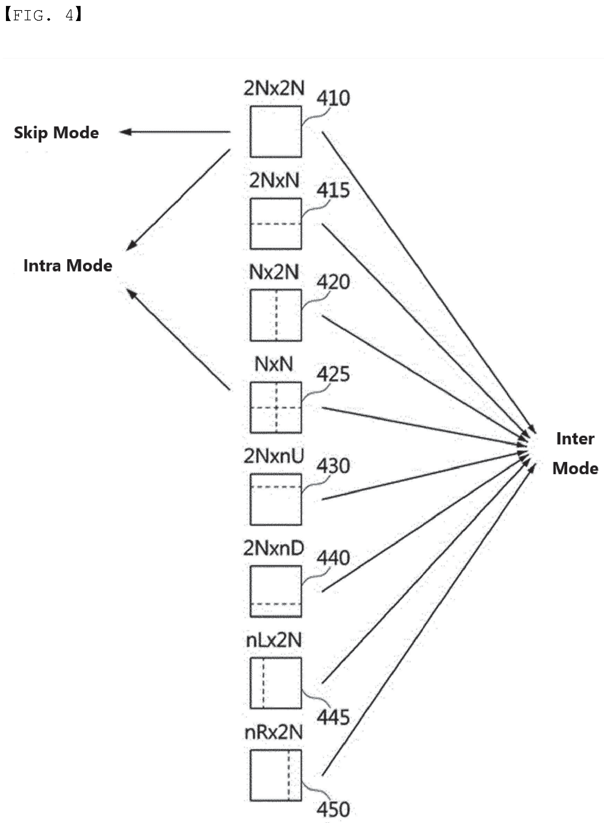

FIG. 4 is a diagram illustrating the form of a Prediction Unit that a Coding Unit can include.

When, among CUs partitioned from an LCU, a CU, which is not partitioned any further, may be divided into one or more Prediction Units (PUs). Such division is also referred to as "partitioning".

A PU may be a base unit for prediction. A PU may be encoded and decoded in any one of a skip mode, an inter mode, and an intra mode. A PU may be partitioned into various shapes depending on respective modes. For example, the target block, described above with reference to FIG. 1, and the target block, described above with reference to FIG. 2, may each be a PU.

A CU may not be split into PUs. When the CU is not split into PUs, the size of the CU and the size of a PU may be equal to each other.

In a skip mode, partitioning may not be present in a CU. In the skip mode, a 2Nx2N mode 410, in which the sizes of a PU and a CU are identical to each other, may be supported without partitioning.

In an inter mode, 8 types of partition shapes may be present in a CU. For example, in the inter mode, the 2Nx2N mode 410, a 2NxN mode 415, an Nx2N mode 420, an NxN mode 425, a 2NxnU mode 430, a 2NxnD mode 435, an nLx2N mode 440, and an nRx2N mode 445 may be supported.

In an intra mode, the 2Nx2N mode 410 and the NxN mode 425 may be supported.

In the 2Nx2N mode 410, a PU having a size of 2Nx2N may be encoded. The PU having a size of 2Nx2N may mean a PU having a size identical to that of the CU. For example, the PU having a size of 2Nx2N may have a size of 64x64, 32x32, 16x16 or 8x8.

In the NxN mode 425, a PU having a size of NxN may be encoded.

For example, in intra prediction, when the size of a PU is 8x8, four partitioned PUs may be encoded. The size of each partitioned PU may be 4x4.

When a PU is encoded in an intra mode, the PU may be encoded using any one of multiple intra-prediction modes. For example, HEVC technology may provide 35 intra-prediction modes, and the PU may be encoded in any one of the 35 intra-prediction modes.

Which one of the 2Nx2N mode 410 and the NxN mode 425 is to be used to encode the PU may be determined based on rate-distortion cost.

The encoding apparatus 100 may perform an encoding operation on a PU having a size of 2Nx2N. Here, the encoding operation may be the operation of encoding the PU in each of multiple intra-prediction modes that can be used by the encoding apparatus 100. Through the encoding operation, the optimal intra-prediction mode for a PU having a size of 2Nx2N may be derived. The optimal intra-prediction mode may be an intra-prediction mode in which a minimum rate-distortion cost occurs upon encoding the PU having a size of 2Nx2N, among multiple intra-prediction modes that can be used by the encoding apparatus 100.

Further, the encoding apparatus 100 may sequentially perform an encoding operation on respective PUs obtained from NxN partitioning. Here, the encoding operation may be the operation of encoding a PU in each of multiple intra-prediction modes that can be used by the encoding apparatus 100. By means of the encoding operation, the optimal intra-prediction mode for the PU having a size of NxN may be derived. The optimal intra-prediction mode may be an intra-prediction mode in which a minimum rate-distortion cost occurs upon encoding the PU having a size of NxN, among multiple intra-prediction modes that can be used by the encoding apparatus 100.

The encoding apparatus 100 may determine which of a PU having a size of 2Nx2N and PUs having sizes of NxN to be encoded based on a comparison of a rate-distortion cost of the PU having a size of 2Nx2N and a rate-distortion costs of the PUs having sizes of NxN.

A single CU may be partitioned into one or more PUs, and a PU may be partitioned into multiple PUs.

For example, when a single PU is partitioned into four PUs, the horizontal size and vertical size of each of four PUs generated by partitioning may be half the horizontal size and the vertical size of the PU before being partitioned. When a PU having a 32x32 size is partitioned into four PUs, the size of each of four partitioned PUs may be 16x16. When a single PU is partitioned into four PUs, it may be considered that the PU has been partitioned in a quad-tree structure.

For example, when a single PU is partitioned into two PUs, the horizontal size or the vertical size of each of two PUs generated by partitioning may be half the horizontal size or the vertical size of the PU before being partitioned. When a PU having a 32x32 size is vertically partitioned into two PUs, the size of each of two partitioned PUs may be 16x32. When a PU having a 32x32 size is horizontally partitioned into two PUs, the size of each of two partitioned PUs may be 32x16. When a single PU is partitioned into two PUs, it may be considered that the PU has been partitioned in a binary-tree structure.

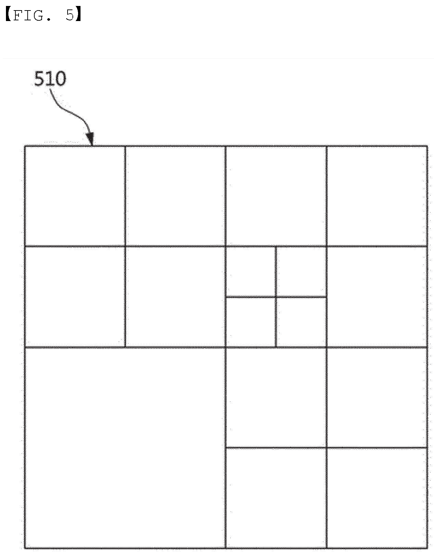

FIG. 5 is a diagram illustrating the form of a Transform Unit that can be included in a Coding Unit.

A Transform Unit (TU) may have a base unit that is used for a procedure, such as transform, quantization, inverse transform, dequantization, entropy encoding, and entropy decoding, in a CU.

A TU may have a square shape or a rectangular shape. A shape of a TU may be determined based on a size and/or a shape of a CU.

Among CUs partitioned from the LCU, a CU which is not partitioned into CUs any further may be partitioned into one or more TUs. Here, the partition structure of a TU may be a quad-tree structure. For example, as shown in FIG. 5, a single CU 510 may be partitioned one or more times depending on the quad-tree structure. By means of this partitioning, the single CU 510 may be composed of TUs having various sizes.

It can be considered that when a single CU is split two or more times, the CU is recursively split. Through splitting, a single CU may be composed of Transform Units (TUs) having various sizes.

Alternatively, a single CU may be split into one or more TUs based on the number of vertical lines and/or horizontal lines that split the CU.

A CU may be split into symmetric TUs or asymmetric TUs. For splitting into asymmetric TUs, information about the size and/or shape of each TU may be signaled from the encoding apparatus 100 to the decoding apparatus 200. Alternatively, the size and/or shape of each TU may be derived from information about the size and/or shape of the CU.

A CU may not be split into TUs. When the CU is not split into TUs, the size of the CU and the size of a TU may be equal to each other.

A single CU may be partitioned into one or more TUs, and a TU may be partitioned into multiple TUs.

For example, when a single TU is partitioned into four TUs, the horizontal size and vertical size of each of four TUs generated by partitioning may be half the horizontal size and the vertical size of the TU before being partitioned. When a TU having a 32x32 size is partitioned into four TUs, the size of each of four partitioned TUs may be 16x16. When a single TU is partitioned into four TUs, it may be considered that the TU has been partitioned in a quad-tree structure.

For example, when a single TU is partitioned into two TUs, the horizontal size or the vertical size of each of two TUs generated by partitioning may be half the horizontal size or the vertical size of the TU before being partitioned. When a TU having a 32x32 size is vertically partitioned into two TUs, the size of each of two partitioned TUs may be 16x32. When a TU having a 32x32 size is horizontally partitioned into two TUs, the size of each of two partitioned TUs may be 32x16. When a single TU is partitioned into two TUs, it may be considered that the TU has been partitioned in a binary-tree structure.

In a way differing from that illustrated in FIG. 5, a CU may be split.

For example, a single CU may be split into three CUs. The horizontal sizes or vertical sizes of the three CUs generated from splitting may be 1/4, 1/2, and 1/4, respectively, of the horizontal size or vertical size of the original CU before being split.

For example, when a CU having a 32x32 size is vertically split into three CUs, the sizes of the three CUs generated from the splitting may be 8x32, 16x32, and 8x32, respectively. In this way, when a single CU is split into three CUs, it may be considered that the CU is split in the form of a ternary tree.

One of exemplary splitting forms, that is, quad-tree splitting, binary tree splitting, and ternary tree splitting, may be applied to the splitting of a CU, and multiple splitting schemes may be combined and used together for splitting of a CU. Here, the case where multiple splitting schemes are combined and used together may be referred to as "complex tree-format splitting".

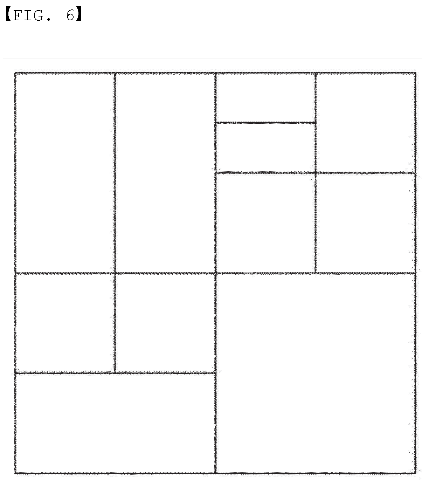

FIG. 6 illustrates the splitting of a block according to an example.

In a video encoding and/or decoding process, a target block may be split, as illustrated in FIG. 6. For example, the target block may be a CU.

For splitting of the target block, an indicator indicating split information may be signaled from the encoding apparatus 100 to the decoding apparatus 200. The split information may be information indicating how the target block is split.

The split information may be one or more of a split flag (hereinafter referred to as "split_flag"), a quad-binary flag (hereinafter referred to as "QB_flag"), a quad-tree flag (hereinafter referred to as "quadtree_flag"), a binary tree flag (hereinafter referred to as "binarytree_flag"), and a binary type flag (hereinafter referred to as "Btype_flag").

"split_flag" may be a flag indicating whether a block is split. For example, a split_flag value of 1 may indicate that the corresponding block is split. A split_flag value of 0 may indicate that the corresponding block is not split.

"QB_flag" may be a flag indicating which one of a quad-tree form and a binary tree form corresponds to the shape in which the block is split. For example, a QB_flag value of 0 may indicate that the block is split in a quad-tree form. A QB_flag value of 1 may indicate that the block is split in a binary tree form. Alternatively, a QB_flag value of 0 may indicate that the block is split in a binary tree form. A QB_flag value of 1 may indicate that the block is split in a quad-tree form.

"quadtree_flag" may be a flag indicating whether a block is split in a quad-tree form. For example, a quadtree_flag value of 1 may indicate that the block is split in a quad-tree form. A quadtree_flag value of 0 may indicate that the block is not split in a quad-tree form.

"binarytree_flag" may be a flag indicating whether a block is split in a binary tree form. For example, a binarytree_flag value of 1 may indicate that the block is split in a binary tree form. A binarytree_flag value of 0 may indicate that the block is not split in a binary tree form.

"Btype_flag" may be a flag indicating which one of a vertical split and a horizontal split corresponds to a split direction when a block is split in a binary tree form. For example, a Btype_flag value of 0 may indicate that the block is split in a horizontal direction. A Btype_flag value of 1 may indicate that a block is split in a vertical direction. Alternatively, a Btype_flag value of 0 may indicate that the block is split in a vertical direction. A Btype_flag value of 1 may indicate that a block is split in a horizontal direction.

For example, the split information of the block in FIG. 6 may be derived by signaling at least one of quadtree_flag, binarytree_flag, and Btype_flag, as shown in the following Table 1.

**Table 1**

| | quadtree_flag | binarytree_flag | Btype_flag |
|---|---|---|---|
| | 1 | | |
| | 0 | | |
| | | 1 | |
| | | | 1 |
| | | 0 | |
| | | 0 | |
| | 1 | | |
| | 0 | | |
| | | 1 | |
| | | | 0 |
| | | 0 | |
| | | 0 | |
| | 0 | | |
| | | 0 | |
| | 0 | | |
| | | 0 | |
| | 0 | | |
| | | 0 | |
| | 0 | | |
| | | 1 | |
| | | | 0 |
| | | 1 | |
| | | | 1 |
| | | 0 | |
| | | 0 | |
| | | 0 | |
| | 0 | | |
| | | 0 | |

For example, the split information of the block in FIG. 6 may be derived by signaling at least one of split_flag, QB_flag and Btype_flag, as shown in the following Table 2.

**Table 2**

| | split_flag | QB_flag | Btype_flag |
|---|---|---|---|
| | 1 | | |
| | | 0 | |
| | 1 | | |
| | | 1 | |
| | | | 1 |
| | 0 | | |
| | 0 | | |
| | 1 | | |
| | | 0 | |
| | 1 | | |
| | | 1 | |
| | | | 0 |
| | 0 | | |
| | 0 | | |
| | 0 | | |
| | 0 | | |
| | 0 | | |
| | 1 | | |
| | | 1 | |
| | | | 0 |
| | 1 | | |
| | | | 1 |
| | 0 | | |
| | 0 | | |
| | 0 | | |
| | 0 | | |

The splitting method may be limited only to a quad-tree or to a binary tree depending on the size and/or shape of the block. When this limitation is applied, split_flag may be a flag indicating whether a block is split in a quad-tree form or a flag indicating whether a block is split in a binary tree form. The size and shape of a block may be derived depending on the depth information of the block, and the depth information may be signaled from the encoding apparatus 100 to the decoding apparatus 200.

When the size of a block falls within a specific range, only splitting in a quad-tree form may be possible. For example, the specific range may be defined by at least one of a maximum block size and a minimum block size at which only splitting in a quad-tree form is possible.

Information indicating the maximum block size and the minimum block size at which only splitting in a quad-tree form is possible may be signaled from the encoding apparatus 100 to the decoding apparatus 200 through a bitstream. Further, this information may be signaled for at least one of units such as a video, a sequence, a picture, a parameter, a tile group, and a slice (or a segment).

Alternatively, the maximum block size and/or the minimum block size may be fixed sizes predefined by the encoding apparatus 100 and the decoding apparatus 200. For example, when the size of a block is above 64x64 and below 256x256, only splitting in a quad-tree form may be possible. In this case, split_flag may be a flag indicating whether splitting in a quad-tree form is performed.

When the size of a block is greater than the maximum size of a transform block, only partitioning in a quad-tree form may be possible. Here, a sub-block resulting from partitioning may be at least one of a CU and a TU.

In this case, split_flag may be a flag indicating whether a CU is partitioned in a quad-tree form.

When the size of a block falls within the specific range, only splitting in a binary tree form or a ternary tree form may be possible. For example, the specific range may be defined by at least one of a maximum block size and a minimum block size at which only splitting in a binary tree form or a ternary tree form is possible.

Information indicating the maximum block size and/or the minimum block size at which only splitting in a binary tree form or splitting in a ternary tree form is possible may be signaled from the encoding apparatus 100 to the decoding apparatus 200 through a bitstream. Further, this information may be signaled for at least one of units such as a sequence, a picture, and a slice (or a segment).

Alternatively, the maximum block size and/or the minimum block size may be fixed sizes predefined by the encoding apparatus 100 and the decoding apparatus 200. For example, when the size of a block is above 8x8 and below 16x16, only splitting in a binary tree form may be possible. In this case, split_flag may be a flag indicating whether splitting in a binary tree form or a ternary tree form is performed.

The above description of partitioning in a quad-tree form may be equally applied to a binary-tree form and/or a ternary-tree form.

The partition of a block may be limited by a previous partition. For example, when a block is partitioned in a specific binary-tree form and then multiple sub-blocks are generated from the partitioning, each sub-block may be additionally partitioned only in a specific tree form. Here, the specific tree form may be at least one of a binary-tree form, a ternary-tree form, and a quad-tree form.

When the horizontal size or vertical size of a partition block is a size that cannot be split further, the above-described indicator may not be signaled.

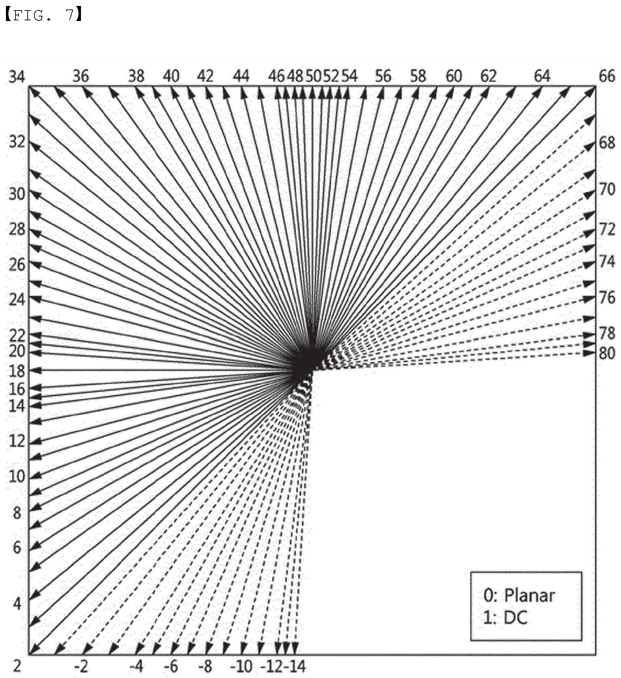

FIG. 7 is a diagram for explaining an embodiment of an intra-prediction process.

Arrows radially extending from the center of the graph in FIG. 7 indicate the prediction directions of intra-prediction modes. Further, numbers appearing near the arrows indicate examples of mode values assigned to intra-prediction modes or to the prediction directions of the intra-prediction modes.

In FIG. 7, A number 0 may represent a Planar mode which is a non-directional intra prediction mode. A number 1 may represent a DC mode which is a non-directional intra prediction mode

Intra encoding and/or decoding may be performed using a reference sample of neighbor block of a target block. The neighbor block may be a reconstructed neighbor block. The reference sample may mean a neighbor sample.

For example, intra encoding and/or decoding may be performed using the value of a reference sample which are included in are reconstructed neighbor block or the coding parameters of the reconstructed neighbor block.

The encoding apparatus 100 and/or the decoding apparatus 200 may generate a prediction block by performing intra prediction on a target block based on information about samples in a target image. When intra prediction is performed, the encoding apparatus 100 and/or the decoding apparatus 200 may generate a prediction block for the target block by performing intra prediction based on information about samples in the target image. When intra prediction is performed, the encoding apparatus 100 and/or the decoding apparatus 200 may perform directional prediction and/or non-directional prediction based on at least one reconstructed reference sample.

A prediction block may be a block generated as a result of performing intra prediction. A prediction block may correspond to at least one of a CU, a PU, and a TU.

The unit of a prediction block may have a size corresponding to at least one of a CU, a PU, and a TU. The prediction block may have a square shape having a size of 2Nx2N or NxN. The size of NxN may include sizes of 4x4, 8x8, 16x16, 32x32, 64x64, or the like.

Alternatively, a prediction block may a square block having a size of 2x2, 4x4, 8x8, 16x16, 32x32, 64x64 or the like or a rectangular block having a size of 2x8, 4x8, 2x16, 4x16, 8x16, or the like.

Intra prediction may be performed in consideration of the intra-prediction mode for the target block. The number of intra-prediction modes that the target block can have may be a predefined fixed value, and may be a value determined differently depending on the attributes of a prediction block. For example, the attributes of the prediction block may include the size of the prediction block, the type of prediction block, etc. Further, the attribute of a prediction block may indicate a coding parameter for the prediction block.

For example, the number of intra-prediction modes may be fixed at N regardless of the size of a prediction block. Alternatively, the number of intra-prediction modes may be, for example, 3, 5, 9, 17, 34, 35, 36, 65, 67 or 95.

The intra-prediction modes may be non-directional modes or directional modes.

For example, the intra-prediction modes may include two non-directional modes and 65 directional modes corresponding to numbers 0 to 66 illustrated in FIG. 7.

For example, the intra-prediction modes may include two non-directional modes and 93 directional modes corresponding to numbers -14 to 80 illustrated in FIG. 7 in a case that a specific intra prediction method is used.

The two non-directional modes may include a DC mode and a planar mode.

A directional mode may be a prediction mode having a specific direction or a specific angle. The directional mode may also be referred to as an "angular mode".

An intra-prediction mode may be represented by at least one of a mode number, a mode value, a mode angle, and a mode direction. In other words, the terms "(mode) number of the intra-prediction mode", "(mode) value of the intra-prediction mode", "(mode) angle of the intra-prediction mode", and "(mode) direction of the intra-prediction mode" may be used to have the same meaning, and may be used interchangeably with each other.

The number of intra-prediction modes may be M. The value of M may be 1 or more. In other words, the number of intra-prediction modes may be M, which includes the number of non-directional modes and the number of directional modes.

The number of intra-prediction modes may be fixed to M regardless of the size and/or the color component of a block. For example, the number of intra-prediction modes may be fixed at any one of 35 and 67 regardless of the size of a block.

Alternatively, the number of intra-prediction modes may differ depending on the shape, the size and/or the type of the color component of a block.

For example, in FIG. 7, directional prediction modes illustrated as dashed lines may be applied only for a prediction for a non-square block.

For example, the larger the size of the block, the greater the number of intra-prediction modes. Alternatively, the larger the size of the block, the smaller the number of intra-prediction modes. When the size of the block is 4x4 or 8x8, the number of intra-prediction modes may be 67. When the size of the block is 16x16, the number of intra-prediction modes may be 35. When the size of the block is 32x32, the number of intra-prediction modes may be 19. When the size of a block is 64x64, the number of intra-prediction modes may be 7.

For example, the number of intra prediction modes may differ depending on whether a color component is a luma signal or a chroma signal. Alternatively, the number of intra-prediction modes corresponding to a luma component block may be greater than the number of intra-prediction modes corresponding to a chroma component block.

For example, in a vertical mode having a mode value of 50, prediction may be performed in a vertical direction based on the pixel value of a reference sample. For example, in a horizontal mode having a mode value of 18, prediction may be performed in a horizontal direction based on the pixel value of a reference sample.

Even in directional modes other than the above-described mode, the encoding apparatus 100 and the decoding apparatus 200 may perform intra prediction on a target unit using reference samples depending on angles corresponding to the directional modes.

Intra-prediction modes located on a right side with respect to the vertical mode may be referred to as 'vertical-right modes'. Intra-prediction modes located below the horizontal mode may be referred to as 'horizontal-below modes'. For example, in FIG. 7, the intra-prediction modes in which a mode value is one of 51, 52, 53, 54, 55, 56, 57, 58, 59, 60, 61, 62, 63, 64, 65, and 66 may be vertical-right modes. Intra-prediction modes in which a mode value is one of 2, 3, 4, 5, 6, 7, 8, 9, 10, 11, 12, 13, 14, 15, 16, and 17 may be horizontal-below modes.

The non-directional mode may include a DC mode and a planar mode. For example, a value of the DC mode may be 1. A value of the planar mode may be 0.

The directional mode may include an angular mode. Among the plurality of the intra prediction modes, remaining modes except for the DC mode and the planar mode may be directional modes.

When the intra-prediction mode is a DC mode, a prediction block may be generated based on the average of pixel values of a plurality of reference pixels. For example, a value of a pixel of a prediction block may be determined based on the average of pixel values of a plurality of reference pixels.

The number of above-described intra-prediction modes and the mode values of respective intra-prediction modes are merely exemplary. The number of above-described intra-prediction modes and the mode values of respective intra-prediction modes may be defined differently depending on the embodiments, implementation and/or requirements.

In order to perform intra prediction on a target block, the step of checking whether samples included in a reconstructed neighbor block can be used as reference samples of a target block may be performed. When a sample that cannot be used as a reference sample of the target block is present among samples in the neighbor block, a value generated via copying and/or interpolation that uses at least one sample value, among the samples included in the reconstructed neighbor block, may replace the sample value of the sample that cannot be used as the reference sample. When the value generated via copying and/or interpolation replaces the sample value of the existing sample, the sample may be used as the reference sample of the target block.

When intra prediction is used, a filter may be applied to at least one of a reference sample and a prediction sample based on at least one of the intra-prediction mode and the size of the target block.

The type of filter to be applied to at least one of a reference sample and a prediction sample may differ depending on at least one of the intra-prediction mode of a target block, the size of the target block, and the shape of the target block. The types of filters may be classified depending on one or more of the length of filter tap, the value of a filter coefficient, and filter strength. The length of filter tap may mean the number of filter taps. Also, the number of filter tap may mean the length of the filter.

When the intra-prediction mode is a planar mode, a sample value of a prediction target block may be generated using a weighted sum of an above reference sample of the target block, a left reference sample of the target block, an above-right reference sample of the target block, and a below-left reference sample of the target block depending on the location of the prediction target sample in the prediction block when the prediction block of the target block is generated.

When the intra-prediction mode is a DC mode, the average of reference samples above the target block and the reference samples to the left of the target block may be used when the prediction block of the target block is generated. Also, filtering using the values of reference samples may be performed on specific rows or specific columns in the target block. The specific rows may be one or more upper rows adjacent to the reference sample. The specific columns may be one or more left columns adjacent to the reference sample.

When the intra-prediction mode is a directional mode, a prediction block may be generated using the above reference samples, left reference samples, above-right reference sample and/or below-left reference sample of the target block.

In order to generate the above-described prediction sample, real-number-based interpolation may be performed.

The intra-prediction mode of the target block may be predicted from intra prediction mode of a neighbor block adjacent to the target block, and the information used for prediction may be entropy-encoded/decoded.

For example, when the intra-prediction modes of the target block and the neighbor block are identical to each other, it may be signaled, using a predefined flag, that the intra-prediction modes of the target block and the neighbor block are identical.

For example, an indicator for indicating an intra-prediction mode identical to that of the target block, among intra-prediction modes of multiple neighbor blocks, may be signaled.

When the intra-prediction modes of the target block and a neighbor block are different from each other, information about the intra-prediction mode of the target block may be encoded and/or decoded using entropy encoding and/or decoding.

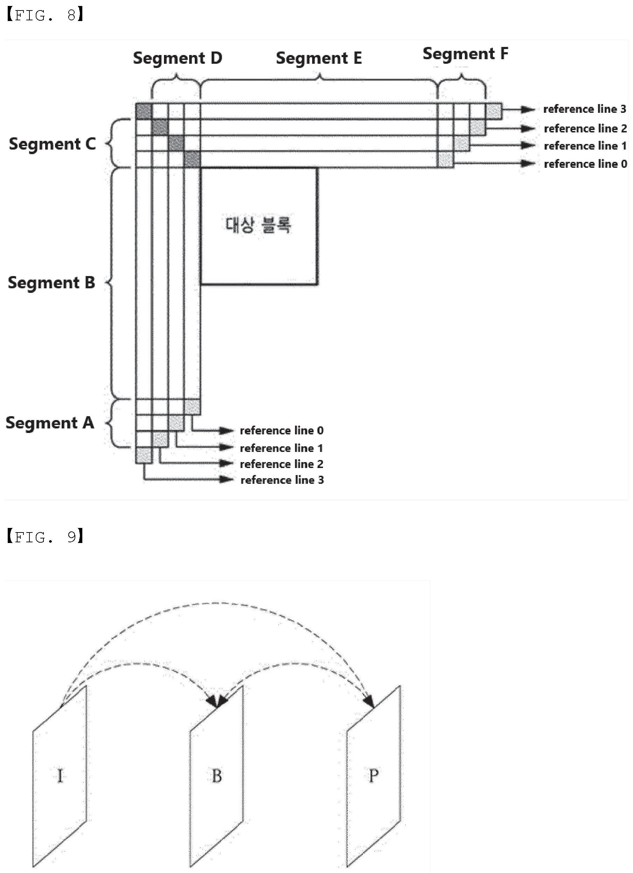

FIG. 8 is a diagram illustrating reference samples used in an intra-prediction procedure.

Reconstructed reference samples used for intra prediction of the target block may include below-left reference samples, left reference samples, an above-left corner reference sample, above reference samples, and above-right reference samples.

For example, the left reference samples may mean reconstructed reference pixels adjacent to the left side of the target block. The above reference samples may mean reconstructed reference pixels adjacent to the top of the target block. The above-left corner reference sample may mean a reconstructed reference pixel located at the above-left corner of the target block. The below-left reference samples may mean reference samples located below a left sample line composed of the left reference samples, among samples located on the same line as the left sample line. The above-right reference samples may mean reference samples located to the right of an above sample line composed of the above reference samples, among samples located on the same line as the above sample line.

When the size of a target block is NxN, the numbers of the below-left reference samples, the left reference samples, the above reference samples, and the above-right reference samples may each be N.

By performing intra prediction on the target block, a prediction block may be generated. The generation of the prediction block may include the determination of the values of pixels in the prediction block. The sizes of the target block and the prediction block may be equal.

The reference samples used for intra prediction of the target block may vary depending on the intra-prediction mode of the target block. The direction of the intra-prediction mode may represent a dependence relationship between the reference samples and the pixels of the prediction block. For example, the value of a specified reference sample may be used as the values of one or more specified pixels in the prediction block. In this case, the specified reference sample and the one or more specified pixels in the prediction block may be the sample and pixels which are positioned in a straight line in the direction of an intra-prediction mode. In other words, the value of the specified reference sample may be copied as the value of a pixel located in a direction reverse to the direction of the intra-prediction mode. Alternatively, the value of a pixel in the prediction block may be the value of a reference sample located in the direction of the intra-prediction mode with respect to the location of the pixel.

In an example, when the intra-prediction mode of a target block is a vertical mode, the above reference samples may be used for intra prediction. When the intra-prediction mode is the vertical mode, the value of a pixel in the prediction block may be the value of a reference sample vertically located above the location of the pixel. Therefore, the above reference samples adjacent to the top of the target block may be used for intra prediction. Furthermore, the values of pixels in one row of the prediction block may be identical to those of the above reference samples.

In an example, when the intra-prediction mode of a target block is a horizontal mode, the left reference samples may be used for intra prediction. When the intra-prediction mode is the horizontal mode, the value of a pixel in the prediction block may be the value of a reference sample horizontally located left to the location of the pixel. Therefore, the left reference samples adjacent to the left of the target block may be used for intra prediction. Furthermore, the values of pixels in one column of the prediction block may be identical to those of the left reference samples.

In an example, when the mode value of the intra-prediction mode of the current block is 34, at least some of the left reference samples, the above-left corner reference sample, and at least some of the above reference samples may be used for intra prediction. When the mode value of the intra-prediction mode is 34, the value of a pixel in the prediction block may be the value of a reference sample diagonally located at the above-left corner of the pixel.

Further, At least a part of the above-right reference samples may be used for intra prediction in a case that an intra prediction mode of which a mode value is a value ranging from 52 to 66.

Further, At least a part of the below-left reference samples may be used for intra prediction in a case that an intra prediction mode of which a mode value is a value ranging from 2 to 17.

Further, the above-left corner reference sample may be used for intra prediction in a case that an intra prediction mode of which a mode value is a value ranging from 19 to 49.

The number of reference samples used to determine the pixel value of one pixel in the prediction block may be either 1, or 2 or more.

As described above, the pixel value of a pixel in the prediction block may be determined depending on the location of the pixel and the location of a reference sample indicated by the direction of the intra-prediction mode. When the location of the pixel and the location of the reference sample indicated by the direction of the intra-prediction mode are integer positions, the value of one reference sample indicated by an integer position may be used to determine the pixel value of the pixel in the prediction block.

When the location of the pixel and the location of the reference sample indicated by the direction of the intra-prediction mode are not integer positions, an interpolated reference sample based on two reference samples closest to the location of the reference sample may be generated. The value of the interpolated reference sample may be used to determine the pixel value of the pixel in the prediction block. In other words, when the location of the pixel in the prediction block and the location of the reference sample indicated by the direction of the intra-prediction mode indicate the location between two reference samples, an interpolated value based on the values of the two samples may be generated.

The prediction block generated via prediction may not be identical to an original target block. In other words, there may be a prediction error which is the difference between the target block and the prediction block, and there may also be a prediction error between the pixel of the target block and the pixel of the prediction block.

Hereinafter, the terms "difference", "error", and "residual" may be used to have the same meaning, and may be used interchangeably with each other.

For example, in the case of directional intra prediction, the longer the distance between the pixel of the prediction block and the reference sample, the greater the prediction error that may occur. Such a prediction error may result in discontinuity between the generated prediction block and neighbor blocks.

In order to reduce the prediction error, filtering for the prediction block may be used. Filtering may be configured to adaptively apply a filter to an area, regarded as having a large prediction error, in the prediction block. For example, the area regarded as having a large prediction error may be the boundary of the prediction block. Further, an area regarded as having a large prediction error in the prediction block may differ depending on the intra-prediction mode, and the characteristics of filters may also differ depending thereon.

As illustrated in FIG. 8, for intra prediction of a target block, at least one of reference line 0 to reference line 3 may be used.

Each reference line in FIG. 8 may indicate a reference sample line comprising one or more reference samples. As the number of the reference line is lower, a line of reference samples closer to a target block may be indicated.

Samples in segment A and segment F may be acquired through padding that uses samples closest to the target block in segment B and segment E instead of being acquired from reconstructed neighbor blocks.

Index information indicating a reference sample line to be used for intra-prediction of the target block may be signaled. The index information may indicate a reference sample line to be used for intra-prediction of the target block, among multiple reference sample lines. For example, the index information may have a value corresponding to any one of 0 to 3.

When the top boundary of the target block is the boundary of a CTU, only reference sample line 0 may be available. Therefore, in this case, index information may not be signaled. When an additional reference sample line other than reference sample line 0 is used, filtering of a prediction block, which will be described later, may not be performed.

In the case of inter-color intra prediction, a prediction block for a target block of a second color component may be generated based on the corresponding reconstructed block of a first color component.

For example, the first color component may be a luma component, and the second color component may be a chroma component.

In order to perform inter-color intra prediction, parameters for a linear model between the first color component and the second color component may be derived based on a template.

The template may include reference samples above the target block (above reference samples) and/or reference samples to the left of the target block (left reference samples), and may include above reference samples and/or left reference samples of a reconstructed block of the first color component, which correspond to the reference samples.

For example, parameters for a linear model may be derived using 1) the value of the sample of a first color component having the maximum value, among the samples in the template, 2) the value of the sample of a second color component corresponding to the sample of the first color component, 3) the value of the sample of a first color component having the minimum value, among the samples in the template, and 4) the value of the sample of a second color component corresponding to the sample of the first color component.

When the parameters for the linear model are derived, a prediction block for the target block may be generated by applying the corresponding reconstructed block to the linear model.

Depending on the image format, sub-sampling may be performed on samples neighbor the reconstructed block of the first color component and the corresponding reconstructed block of the first color component. For example, when one sample of the second color component corresponds to four samples of the first color component, one corresponding sample may be calculated by performing sub-sampling on the four samples of the first color component. When sub-sampling is performed, derivation of the parameters for the linear model and inter-color intra prediction may be performed based on the sub-sampled corresponding sample.

Information about whether inter-color intra prediction is performed and/or the range of the template may be signaled in an intra-prediction mode.

The target block may be partitioned into two or four sub-blocks in a horizontal direction and/or a vertical direction.

The sub-blocks resulting from the partitioning may be sequentially reconstructed. That is, as intra-prediction is performed on each sub-block, a sub-prediction block for the sub-block may be generated. Also, as dequantization (inverse quantization) and/or an inverse transform are performed on each sub-block, a sub-residual block for the corresponding sub-block may be generated. A reconstructed sub-block may be generated by adding the sub-prediction block to the sub-residual block. The reconstructed sub-block may be used as a reference sample for intra prediction of the sub-block having the next priority.

A sub-block may be a block including a specific number (e.g., 16) of samples or more. For example, when the target block is an 8x4 block or a 4x8 block, the target block may be partitioned into two sub-blocks. Also, when the target block is a 4x4 block, the target block cannot be partitioned into sub-blocks. When the target block has another size, the target block may be partitioned into four sub-blocks.

Information about whether intra prediction based on such sub-blocks is performed and/or information about a partition direction (horizontal direction or vertical direction) may be signaled.

Such sub-block-based intra prediction may be limited such that it is performed only when reference sample line 0 is used. When sub-block-based intra-prediction is performed, filtering of a prediction block, which will be described below, may not be performed.

A final prediction block may be generated by performing filtering on the prediction block generated via intra prediction.

Filtering may be performed by applying specific weights to a filtering target sample, which is the target to be filtered, a left reference sample, an above reference sample, and/or an above-left reference sample.

The weights and/or reference samples (e.g., the range of reference samples, the locations of the reference samples, etc.) used for filtering may be determined based on at least one of a block size, an intra-prediction mode, and the location of the filtering target sample in a prediction block.

For example, filtering may be performed only in a specific intra-prediction mode (e.g., DC mode, planar mode, vertical mode, horizontal mode, diagonal mode and/or adjacent diagonal mode).

The adjacent diagonal mode may be a mode having a number obtained by adding k to the number of the diagonal mode, and may be a mode having a number obtained by subtracting k from the number of the diagonal mode. In other words, the number of the adjacent diagonal mode may be the sum of the number of the diagonal mode and k, or may be the difference between the number of the diagonal mode and k. For example, k may be a positive integer of 8 or less.

The intra-prediction mode of the target block may be derived using the intra-prediction mode of a neighbor block present near the target block, and such a derived intra-prediction mode may be entropy-encoded and/or entropy-decoded.

For example, when the intra-prediction mode of the target block is identical to the intra-prediction mode of the neighbor block, information indicating that the intra-prediction mode of the target block is identical to the intra-prediction mode of the neighbor block may be signaled using specific flag information.

Further, for example, indicator information for a neighbor block having an intra-prediction mode identical to the intra-prediction mode of the target block, among intra-prediction modes of multiple neighbor blocks, may be signaled.

For example, when the intra-prediction mode of the target block is different from the intra-prediction mode of the neighbor block, entropy encoding and/or entropy decoding may be performed on information about the intra-prediction mode of the target block by performing entropy encoding and/or entropy decoding based on the intra-prediction mode of the neighbor block.

FIG. 9 is a diagram for explaining an embodiment of an inter prediction procedure.

The rectangles shown in FIG. 9 may represent images (or pictures). Further, in FIG. 9, arrows may represent prediction directions. An arrow pointing from a first picture to a second picture means that the second picture refers to the first picture. That is, each image may be encoded and/or decoded depending on the prediction direction.

Images may be classified into an Intra Picture (I picture), a Uni-prediction Picture or Predictive Coded Picture (P picture), and a Bi-prediction Picture or Bi-predictive Coded Picture (B picture) depending on the encoding type. Each picture may be encoded and/or decoded depending on the encoding type thereof.

When a target image that is the target to be encoded is an I picture, the target image may be encoded using data contained in the image itself without inter prediction that refers to other images. For example, an I picture may be encoded only via intra prediction.

When a target image is a P picture, the target image may be encoded via inter prediction, which uses reference pictures existing in one direction. Here, the one direction may be a forward direction or a backward direction.

When a target image is a B picture, the image may be encoded via inter prediction that uses reference pictures existing in two directions, or may be encoded via inter prediction that uses reference pictures existing in one of a forward direction and a backward direction. Here, the two directions may be the forward direction and the backward direction.

A P picture and a B picture that are encoded and/or decoded using reference pictures may be regarded as images in which inter prediction is used.

Below, inter prediction in an inter mode according to an embodiment will be described in detail.

Inter prediction or a motion compensation may be performed using a reference image and motion information.

In an inter mode, the encoding apparatus 100 may perform inter prediction and/or motion compensation on a target block. The decoding apparatus 200 may perform inter prediction and/or motion compensation, corresponding to inter prediction and/or motion compensation performed by the encoding apparatus 100, on a target block.

Motion information of the target block may be individually derived by the encoding apparatus 100 and the decoding apparatus 200 during the inter prediction. The motion information may be derived using motion information of a reconstructed neighbor block, motion information of a col block, and/or motion information of a block adjacent to the col block.

For example, the encoding apparatus 100 or the decoding apparatus 200 may perform prediction and/or motion compensation by using motion information of a spatial candidate and/or a temporal candidate as motion information of the target block. The target block may mean a PU and/or a PU partition.

A spatial candidate may be a reconstructed block which is spatially adjacent to the target block.

A temporal candidate may be a reconstructed block corresponding to the target block in a previously reconstructed co-located picture (col picture).

In inter prediction, the encoding apparatus 100 and the decoding apparatus 200 may improve encoding efficiency and decoding efficiency by utilizing the motion information of a spatial candidate and/or a temporal candidate. The motion information of a spatial candidate may be referred to as 'spatial motion information'. The motion information of a temporal candidate may be referred to as 'temporal motion information'.

Below, the motion information of a spatial candidate may be the motion information of a PU including the spatial candidate. The motion information of a temporal candidate may be the motion information of a PU including the temporal candidate. The motion information of a candidate block may be the motion information of a PU including the candidate block.

Inter prediction may be performed using a reference picture.

The reference picture may be at least one of a picture previous to a target picture and a picture subsequent to the target picture. The reference picture may be an image used for the prediction of the target block.

In inter prediction, a region in the reference picture may be specified by utilizing a reference picture index (or refIdx) for indicating a reference picture, a motion vector, which will be described later, etc. Here, the region specified in the reference picture may indicate a reference block.

Inter prediction may select a reference picture, and may also select a reference block corresponding to the target block from the reference picture. Further, inter prediction may generate a prediction block for the target block using the selected reference block.

The motion information may be derived during inter prediction by each of the encoding apparatus 100 and the decoding apparatus 200.

A spatial candidate may be a block 1) which is present in a target picture, 2) which has been previously reconstructed via encoding and/or decoding, and 3) which is adjacent to the target block or is located at the corner of the target block. Here, the "block located at the corner of the target block" may be either a block vertically adjacent to a neighbor block that is horizontally adjacent to the target block, or a block horizontally adjacent to a neighbor block that is vertically adjacent to the target block. Further, "block located at the corner of the target block" may have the same meaning as "block adjacent to the corner of the target block". The meaning of "block located at the corner of the target block" may be included in the meaning of "block adjacent to the target block".

For example, a spatial candidate may be a reconstructed block located to the left of the target block, a reconstructed block located above the target block, a reconstructed block located at the below-left corner of the target block, a reconstructed block located at the above-right corner of the target block, or a reconstructed block located at the above-left corner of the target block.

Each of the encoding apparatus 100 and the decoding apparatus 200 may identify a block present at the location spatially corresponding to the target block in a col picture. The location of the target block in the target picture and the location of the identified block in the col picture may correspond to each other.

Each of the encoding apparatus 100 and the decoding apparatus 200 may determine a col block present at the predefined relative location for the identified block to be a temporal candidate. The predefined relative location may be a location present inside and/or outside the identified block.

For example, the col block may include a first col block and a second col block. When the coordinates of the identified block are (xP, yP) and the size of the identified block is represented by (nPSW, nPSH), the first col block may be a block located at coordinates (xP + nPSW, yP + nPSH). The second col block may be a block located at coordinates (xP + (nPSW >> 1), yP + (nPSH >> 1)). The second col block may be selectively used when the first col block is unavailable.

The motion vector of the target block may be determined based on the motion vector of the col block. Each of the encoding apparatus 100 and the decoding apparatus 200 may scale the motion vector of the col block. The scaled motion vector of the col block may be used as the motion vector of the target block. Further, a motion vector for the motion information of a temporal candidate stored in a list may be a scaled motion vector.

The ratio of the motion vector of the target block to the motion vector of the col block may be identical to the ratio of a first temporal distance to a second temporal distance. The first temporal distance may be the distance between the reference picture and the target picture of the target block. The second temporal distance may be the distance between the reference picture and the col picture of the col block.

The scheme for deriving motion information may change depending on the inter-prediction mode of a target block. For example, as inter-prediction modes applied for inter prediction, an Advanced Motion Vector Predictor (AMVP) mode, a merge mode, a skip mode, a merge mode with a motion vector difference, a sub block merge mode, a triangle partition mode, an inter-intra combined prediction mode, an affine inter mode, a current picture reference mode, etc. may be present. The merge mode may also be referred to as a "motion merge mode". Individual modes will be described in detail below.

### 1) AMVP mode

When an AMVP mode is used, the encoding apparatus 100 may search a neighbor region of a target block for a similar block. The encoding apparatus 100 may acquire a prediction block by performing prediction on the target block using motion information of the found similar block. The encoding apparatus 100 may encode a residual block, which is the difference between the target block and the prediction block.

### 1-1) Creation of list of prediction motion vector candidates

When an AMVP mode is used as the prediction mode, each of the encoding apparatus 100 and the decoding apparatus 200 may create a list of prediction motion vector candidates using the motion vector of a spatial candidate, the motion vector of a temporal candidate, and a zero vector. The prediction motion vector candidate list may include one or more prediction motion vector candidates. At least one of the motion vector of a spatial candidate, the motion vector of a temporal candidate, and a zero vector may be determined and used as a prediction motion vector candidate.

Hereinafter, the terms "prediction motion vector (candidate)" and "motion vector (candidate)" may be used to have the same meaning, and may be used interchangeably with each other.

Hereinafter, the terms "prediction motion vector candidate" and "AMVP candidate" may be used to have the same meaning, and may be used interchangeably with each other.

Hereinafter, the terms "prediction motion vector candidate list" and "AMVP candidate list" may be used to have the same meaning, and may be used interchangeably with each other.

Spatial candidates may include a reconstructed spatial neighbor block. In other words, the motion vector of the reconstructed neighbor block may be referred to as a "spatial prediction motion vector candidate".

Temporal candidates may include a col block and a block adjacent to the col block. In other words, the motion vector of the col block or the motion vector of the block adjacent to the col block may be referred to as a "temporal prediction motion vector candidate".

The zero vector may be a (0, 0) motion vector.

The prediction motion vector candidates may be motion vector predictors for predicting a motion vector. Also, in the encoding apparatus 100, each prediction motion vector candidate may be an initial search location for a motion vector.

### 1-2) Search for motion vectors that use list of prediction motion vector candidates

The encoding apparatus 100 may determine the motion vector to be used to encode a target block within a search range using a list of prediction motion vector candidates. Further, the encoding apparatus 100 may determine a prediction motion vector candidate to be used as the prediction motion vector of the target block, among prediction motion vector candidates present in the prediction motion vector candidate list.

The motion vector to be used to encode the target block may be a motion vector that can be encoded at minimum cost.

Further, the encoding apparatus 100 may determine whether to use the AMVP mode to encode the target block.

### 1-3) Transmission of inter-prediction information

The encoding apparatus 100 may generate a bitstream including inter-prediction information required for inter prediction. The decoding apparatus 200 may perform inter prediction on the target block using the inter-prediction information of the bitstream.

The inter-prediction information may contain 1) mode information indicating whether an AMVP mode is used, 2) a prediction motion vector index, 3) a Motion Vector Difference (MVD), 4) a reference direction, and 5) a reference picture index.

Hereinafter, the terms "prediction motion vector index" and "AMVP index" may be used to have the same meaning, and may be used interchangeably with each other.

Further, the inter-prediction information may contain a residual signal.

The decoding apparatus 200 may acquire a prediction motion vector index, an MVD, a reference direction, and a reference picture index from the bitstream through entropy decoding when mode information indicates that the AMVP mode is used.

The prediction motion vector index may indicate a prediction motion vector candidate to be used for the prediction of a target block, among prediction motion vector candidates included in the prediction motion vector candidate list.

### 1-4) Inter prediction in AMVP mode that uses inter-prediction information

The decoding apparatus 200 may derive prediction motion vector candidates using a prediction motion vector candidate list, and may determine the motion information of a target block based on the derived prediction motion vector candidates.

The decoding apparatus 200 may determine a motion vector candidate for the target block, among the prediction motion vector candidates included in the prediction motion vector candidate list, using a prediction motion vector index. The decoding apparatus 200 may select a prediction motion vector candidate, indicated by the prediction motion vector index, from among prediction motion vector candidates included in the prediction motion vector candidate list, as the prediction motion vector of the target block.

The encoding apparatus 100 may generate an entropy-encoded prediction motion vector index by applying entropy encoding to a prediction motion vector index, and may generate a bitstream including the entropy-encoded prediction motion vector index. The entropy-encoded prediction motion vector index may be signaled from the encoding apparatus 100 to the decoding apparatus 200 through a bitstream. The decoding apparatus 200 may extract the entropy-encoded prediction motion vector index from the bitstream, and may acquire the prediction motion vector index by applying entropy decoding to the entropy-encoded prediction motion vector index.

The motion vector to be actually used for inter prediction of the target block may not match the prediction motion vector. In order to indicate the difference between the motion vector to be actually used for inter prediction of the target block and the prediction motion vector, an MVD may be used. The encoding apparatus 100 may derive a prediction motion vector similar to the motion vector to be actually used for inter prediction of the target block so as to use an MVD that is as small as possible.

A Motion Vector Difference (MVD) may be the difference between the motion vector of the target block and the prediction motion vector. The encoding apparatus 100 may calculate the MVD, and may generate an entropy-encoded MVD by applying entropy encoding to the MVD. The encoding apparatus 100 may generate a bitstream including the entropy-encoded MVD.

The MVD may be transmitted from the encoding apparatus 100 to the decoding apparatus 200 through the bitstream. The decoding apparatus 200 may extract the entropy-encoded MVD from the bitstream, and may acquire the MVD by applying entropy decoding to the entropy-encoded MVD.

The decoding apparatus 200 may derive the motion vector of the target block by summing the MVD and the prediction motion vector. In other words, the motion vector of the target block derived by the decoding apparatus 200 may be the sum of the MVD and the motion vector candidate.

Also, the encoding apparatus 100 may generate entropy-encoded MVD resolution information by applying entropy encoding to calculated MVD resolution information, and may generate a bitstream including the entropy-encoded MVD resolution information. The decoding apparatus 200 may extract the entropy-encoded MVD resolution information from the bitstream, and may acquire MVD resolution information by applying entropy decoding to the entropy-encoded MVD resolution information. The decoding apparatus 200 may adjust the resolution of the MVD using the MVD resolution information.

Meanwhile, the encoding apparatus 100 may calculate an MVD based on an affine model. The decoding apparatus 200 may derive the affine control motion vector of the target block through the sum of the MVD and an affine control motion vector candidate, and may derive the motion vector of a sub-block using the affine control motion vector.

The reference direction may indicate a list of reference pictures to be used for prediction of the target block. For example, the reference direction may indicate one of a reference picture list L0 and a reference picture list L1.

The reference direction merely indicates the reference picture list to be used for prediction of the target block, and may not mean that the directions of reference pictures are limited to a forward direction or a backward direction. In other words, each of the reference picture list L0 and the reference picture list L1 may include pictures in a forward direction and/or a backward direction.

That the reference direction is unidirectional may mean that a single reference picture list is used. That the reference direction is bidirectional may mean that two reference picture lists are used. In other words, the reference direction may indicate one of the case where only the reference picture list L0 is used, the case where only the reference picture list L1 is used, and the case where two reference picture lists are used.

The reference picture index may indicate a reference picture that is used for prediction of the target block, among reference pictures present in a reference picture list. The encoding apparatus 100 may generate an entropy-encoded reference picture index by applying entropy encoding to the reference picture index, and may generate a bitstream including the entropy-encoded reference picture index. The entropy-encoded reference picture index may be signaled from the encoding apparatus 100 to the decoding apparatus 200 through the bitstream. The decoding apparatus 200 may extract the entropy-encoded reference picture index from the bitstream, and may acquire the reference picture index by applying entropy decoding to the entropy-encoded reference picture index.

When two reference picture lists are used to predict the target block, a single reference picture index and a single motion vector may be used for each of the reference picture lists. Further, when two reference picture lists are used to predict the target block, two prediction blocks may be specified for the target block. For example, the (final) prediction block of the target block may be generated using the average or weighted sum of the two prediction blocks for the target block.

The motion vector of the target block may be derived by the prediction motion vector index, the MVD, the reference direction, and the reference picture index.

The decoding apparatus 200 may generate a prediction block for the target block based on the derived motion vector and the reference picture index. For example, the prediction block may be a reference block, indicated by the derived motion vector, in the reference picture indicated by the reference picture index.

Since the prediction motion vector index and the MVD are encoded without the motion vector itself of the target block being encoded, the number of bits transmitted from the encoding apparatus 100 to the decoding apparatus 200 may be decreased, and encoding efficiency may be improved.

For the target block, the motion information of reconstructed neighbor blocks may be used. In a specific inter-prediction mode, the encoding apparatus 100 may not separately encode the actual motion information of the target block. The motion information of the target block is not encoded, and additional information that enables the motion information of the target block to be derived using the motion information of reconstructed neighbor blocks may be encoded instead. As the additional information is encoded, the number of bits transmitted to the decoding apparatus 200 may be decreased, and encoding efficiency may be improved.

For example, as inter-prediction modes in which the motion information of the target block is not directly encoded, there may be a skip mode and/or a merge mode. Here, each of the encoding apparatus 100 and the decoding apparatus 200 may use an identifier and/or an index that indicates a unit, the motion information of which is to be used as the motion information of the target unit, among reconstructed neighbor units.

### 2) Merge mode

As a scheme for deriving the motion information of a target block, there is merging. The term "merging" may mean the merging of the motion of multiple blocks. "Merging" may mean that the motion information of one block is also applied to other blocks. In other words, a merge mode may be a mode in which the motion information of the target block is derived from the motion information of a neighbor block.

When a merge mode is used, the encoding apparatus 100 may predict the motion information of a target block using the motion information of a spatial candidate and/or the motion information of a temporal candidate. The spatial candidate may include a reconstructed spatial neighbor block that is spatially adjacent to the target block. The spatial neighbor block may include a left neighbor block and an above neighbor block. The temporal candidate may include a col block. The terms "spatial candidate" and "spatial merge candidate" may be used to have the same meaning, and may be used interchangeably with each other. The terms "temporal candidate" and "temporal merge candidate" may be used to have the same meaning, and may be used interchangeably with each other.

The encoding apparatus 100 may acquire a prediction block via prediction. The encoding apparatus 100 may encode a residual block, which is the difference between the target block and the prediction block.

### 2-1) Creation of merge candidate list

When the merge mode is used, each of the encoding apparatus 100 and the decoding apparatus 200 may create a merge candidate list using the motion information of a spatial candidate and/or the motion information of a temporal candidate. The motion information may include 1) a motion vector, 2) a reference picture index, and 3) a reference direction. The reference direction may be unidirectional or bidirectional. The reference direction may mean a inter prediction indicator.

The merge candidate list may include merge candidates. The merge candidates may be motion information. In other words, the merge candidate list may be a list in which pieces of motion information are stored.

The merge candidates may be pieces of motion information of temporal candidates and/or spatial candidates. In other words, the merge candidates list may comprise motion information of a temporal candidates and/or spatial candidates, etc.

Further, the merge candidate list may include new merge candidates generated by a combination of merge candidates that are already present in the merge candidate list. In other words, the merge candidate list may include new motion information generated by a combination of pieces of motion information previously present in the merge candidate list.

Also, a merge candidate list may include history-based merge candidates. The history-based merge candidates may be the motion information of a block which is encoded and/or decoded prior to a target block.

Also, a merge candidate list may include a merge candidate based on an average of two merge candidates.

The merge candidates may be specific modes deriving inter prediction information. The merge candidate may be information indicating a specific mode deriving inter prediction information. Inter prediction information of a target block may be derived according to a specific mode which the merge candidate indicates. Furthermore, the specific mode may include a process of deriving a series of inter prediction information. This specific mode may be an inter prediction information derivation mode or a motion information derivation mode.

The inter prediction information of the target block may be derived according to the mode indicated by the merge candidate selected by the merge index among the merge candidates in the merge candidate list.

For example, the motion information derivation modes in the merge candidate list may be at least one of 1) motion information derivation mode for a sub-block unit and 2) an affine motion information derivation mode.

Furthermore, the merge candidate list may include motion information of a zero vector. The zero vector may also be referred to as a "zero-merge candidate".

In other words, pieces of motion information in the merge candidate list may be at least one of 1) motion information of a spatial candidate, 2) motion information of a temporal candidate, 3) motion information generated by a combination of pieces of motion information previously present in the merge candidate list, and 4) a zero vector.

Motion information may include 1) a motion vector, 2) a reference picture index, and 3) a reference direction. The reference direction may also be referred to as an "inter-prediction indicator". The reference direction may be unidirectional or bidirectional. The unidirectional reference direction may indicate L0 prediction or L1 prediction.

The merge candidate list may be created before prediction in the merge mode is performed.

The number of merge candidates in the merge candidate list may be predefined. Each of the encoding apparatus 100 and the decoding apparatus 200 may add merge candidates to the merge candidate list depending on the predefined scheme and predefined priorities so that the merge candidate list has a predefined number of merge candidates. The merge candidate list of the encoding apparatus 100 and the merge candidate list of the decoding apparatus 200 may be made identical to each other using the predefined scheme and the predefined priorities.

Merging may be applied on a CU basis or a PU basis. When merging is performed on a CU basis or a PU basis, the encoding apparatus 100 may transmit a bitstream including predefined information to the decoding apparatus 200. For example, the predefined information may contain 1) information indicating whether to perform merging for individual block partitions, and 2) information about a block with which merging is to be performed, among blocks that are spatial candidates and/or temporal candidates for the target block.

### 2-2) Search for motion vector that uses merge candidate list

The encoding apparatus 100 may determine merge candidates to be used to encode a target block. For example, the encoding apparatus 100 may perform prediction on the target block using merge candidates in the merge candidate list, and may generate residual blocks for the merge candidates. The encoding apparatus 100 may use a merge candidate that incurs the minimum cost in prediction and in the encoding of residual blocks to encode the target block.

Further, the encoding apparatus 100 may determine whether to use a merge mode to encode the target block.

### 2-3) Transmission of inter-prediction information

The encoding apparatus 100 may generate a bitstream that includes inter-prediction information required for inter prediction. The encoding apparatus 100 may generate entropy-encoded inter-prediction information by performing entropy encoding on inter-prediction information, and may transmit a bitstream including the entropy-encoded inter-prediction information to the decoding apparatus 200. Through the bitstream, the entropy-encoded inter-prediction information may be signaled to the decoding apparatus 200 by the encoding apparatus 100. The decoding apparatus 200 may extract entropy-encoded inter-prediction information from the bitstream, and may acquire inter-prediction information by applying entropy decoding to the entropy-encoded inter-prediction information.

The decoding apparatus 200 may perform inter prediction on the target block using the inter-prediction information of the bitstream.

The inter-prediction information may contain 1) mode information indicating whether a merge mode is used, 2) a merge index and 3) correction information.

Further, the inter-prediction information may contain a residual signal.

The decoding apparatus 200 may acquire the merge index from the bitstream only when the mode information indicates that the merge mode is used.

The mode information may be a merge flag. The unit of the mode information may be a block. Information about the block may include mode information, and the mode information may indicate whether a merge mode is applied to the block.

The merge index may indicate a merge candidate to be used for the prediction of the target block, among merge candidates included in the merge candidate list. Alternatively, the merge index may indicate a block with which the target block is to be merged, among neighbor blocks spatially or temporally adjacent to the target block.

The encoding apparatus 100 may select a merge candidate having the highest encoding performance among the merge candidates included in the merge candidate list and set a value of the merge index to indicate the selected merge candidate.

Correction information may be information used to correct a motion vector. The encoding apparatus 100 may generate correction information. The decoding apparatus 200 may correct the motion vector of a merge candidate selected by a merge index based on the correction information.

The correction information may include at least one of information indicating whether correction is to be performed, correction direction information, and correction size information. A prediction mode in which the motion vector is corrected based on the signaled correction information may be referred to as a "merge mode having a motion vector difference".

### 2-4) Inter prediction of merge mode that uses inter-prediction information

The decoding apparatus 200 may perform prediction on the target block using the merge candidate indicated by the merge index, among merge candidates included in the merge candidate list.

The motion vector of the target block may be specified by the motion vector, reference picture index, and reference direction of the merge candidate indicated by the merge index.

### 3) Skip mode

A skip mode may be a mode in which the motion information of a spatial candidate or the motion information of a temporal candidate is applied to the target block without change. Also, the skip mode may be a mode in which a residual signal is not used. In other words, when the skip mode is used, a reconstructed block may be the same as a prediction block.

The difference between the merge mode and the skip mode lies in whether or not a residual signal is transmitted or used. That is, the skip mode may be similar to the merge mode except that a residual signal is not transmitted or used.

When the skip mode is used, the encoding apparatus 100 may transmit information about a block, the motion information of which is to be used as the motion information of the target block, among blocks that are spatial candidates or temporal candidates, to the decoding apparatus 200 through a bitstream. The encoding apparatus 100 may generate entropy-encoded information by performing entropy encoding on the information, and may signal the entropy-encoded information to the decoding apparatus 200 through a bitstream. The decoding apparatus 200 may extract entropy-encoded information from the bitstream, and may acquire information by applying entropy decoding to the entropy-encoded information.

Further, when the skip mode is used, the encoding apparatus 100 may not transmit other syntax information, such as an MVD, to the decoding apparatus 200. For example, when the skip mode is used, the encoding apparatus 100 may not signal a syntax element related to at least one of an MVD, a coded block flag, and a transform coefficient level to the decoding apparatus 200.

### 3-1) Creation of merge candidate list

The skip mode may also use a merge candidate list. In other words, a merge candidate list may be used both in the merge mode and in the skip mode. In this aspect, the merge candidate list may also be referred to as a "skip candidate list" or a "merge/skip candidate list".

Alternatively, the skip mode may use an additional candidate list different from that of the merge mode. In this case, in the following description, a merge candidate list and a merge candidate may be replaced with a skip candidate list and a skip candidate, respectively.

The merge candidate list may be created before prediction in the skip mode is performed.

### 3-2) Search for motion vector that uses merge candidate list

The encoding apparatus 100 may determine the merge candidates to be used to encode a target block. For example, the encoding apparatus 100 may perform prediction on the target block using the merge candidates in a merge candidate list. The encoding apparatus 100 may use a merge candidate that incurs the minimum cost in prediction to encode the target block.

Further, the encoding apparatus 100 may determine whether to use a skip mode to encode the target block.

### 3-3) Transmission of inter-prediction information

The encoding apparatus 100 may generate a bitstream that includes inter-prediction information required for inter prediction. The decoding apparatus 200 may perform inter prediction on the target block using the inter-prediction information of the bitstream.

The inter-prediction information may include 1) mode information indicating whether a skip mode is used, and 2) a skip index.

The skip index may be identical to the above-described merge index.

When the skip mode is used, the target block may be encoded without using a residual signal. The inter-prediction information may not contain a residual signal. Alternatively, the bitstream may not include a residual signal.

The decoding apparatus 200 may acquire a skip index from the bitstream only when the mode information indicates that the skip mode is used. As described above, a merge index and a skip index may be identical to each other. The decoding apparatus 200 may acquire the skip index from the bitstream only when the mode information indicates that the merge mode or the skip mode is used.

The skip index may indicate the merge candidate to be used for the prediction of the target block, among the merge candidates included in the merge candidate list.

### 3-4) Inter prediction in skip mode that uses inter-prediction information

The decoding apparatus 200 may perform prediction on the target block using a merge candidate indicated by a skip index, among the merge candidates included in a merge candidate list.

The motion vector of the target block may be specified by the motion vector, reference picture index, and reference direction of the merge candidate indicated by the skip index.

### 4) Current picture reference mode

The current picture reference mode may denote a prediction mode that uses a previously reconstructed region in a target picture to which a target block belongs.

A motion vector for specifying the previously reconstructed region may be used. Whether the target block has been encoded in the current picture reference mode may be determined using the reference picture index of the target block.

A flag or index indicating whether the target block is a block encoded in the current picture reference mode may be signaled by the encoding apparatus 100 to the decoding apparatus 200. Alternatively, whether the target block is a block encoded in the current picture reference mode may be inferred through the reference picture index of the target block.

When the target block is encoded in the current picture reference mode, the target picture may exist at a fixed location or an arbitrary location in a reference picture list for the target block.

For example, the fixed location may be either a location where a value of the reference picture index is 0 or the last location.

When the target picture exists at an arbitrary location in the reference picture list, an additional reference picture index indicating such an arbitrary location may be signaled by the encoding apparatus 100 to the decoding apparatus 200.

### 5) Sub-block merge mode

A sub-block merge mode may be a mode in which motion information is derived from the sub-block of a CU.

When the sub-block merge mode is applied, a sub-block merge candidate list may be generated using the motion information of a co-located sub-block (col-sub-block) of a target sub-block (i.e., a sub-block-based temporal merge candidate) in a reference image and/or an affine control point motion vector merge candidate.

### 6) Triangle partition mode

In a triangle partition mode, a target block may be partitioned in a diagonal direction, and sub-target blocks resulting from partitioning may be generated. For each sub-target block, motion information of the corresponding sub-target block may be derived, and a prediction sample for each sub-target block may be derived using the derived motion information. A prediction sample for the target block may be derived through a weighted sum of the prediction samples for the sub-target blocks resulting from the partitioning.

### 7) Combination inter-intra prediction mode

The combination inter-intra prediction mode may be a mode in which a prediction sample for a target block is derived using a weighted sum of a prediction sample generated via inter-prediction and a prediction sample generated via intra-prediction.

In the above-described modes, the decoding apparatus 200 may autonomously correct derived motion information. For example, the decoding apparatus 200 may search a specific area for motion information having the minimum sum of Absolute Differences (SAD) based on a reference block indicated by the derived motion information, and may derive the found motion information as corrected motion information.

In the above-described modes, the decoding apparatus 200 may compensate for the prediction sample derived via inter prediction using an optical flow.

In the above-described AMVP mode, merge mode, skip mode, etc., motion information to be used for prediction of the target block may be specified among pieces of motion information in a list using the index information of the list.

In order to improve encoding efficiency, the encoding apparatus 100 may signal only the index of an element that incurs the minimum cost in inter prediction of the target block, among elements in the list. The encoding apparatus 100 may encode the index, and may signal the encoded index.

Therefore, the above-described lists (i.e. the prediction motion vector candidate list and the merge candidate list) must be able to be derived by the encoding apparatus 100 and the decoding apparatus 200 using the same scheme based on the same data. Here, the same data may include a reconstructed picture and a reconstructed block. Further, in order to specify an element using an index, the order of the elements in the list must be fixed.

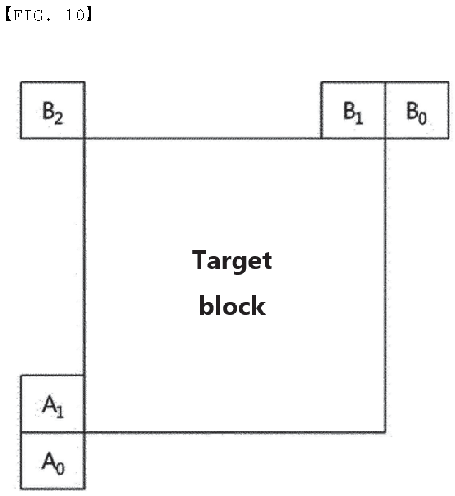

FIG. 10 illustrates spatial candidates according to an embodiment.

In FIG. 10, the locations of spatial candidates are illustrated.

The large block in the center of the drawing may denote a target block. Five small blocks may denote spatial candidates.

The coordinates of the target block may be (xP, yP), and the size of the target block may be represented by (nPSW, nPSH).

Spatial candidate A0 may be a block adjacent to the below-left corner of the target block. A0 may be a block that occupies pixels located at coordinates (xP - 1, yP + nPSH).

Spatial candidate A1 may be a block adjacent to the left of the target block. A1 may be a lowermost block, among blocks adjacent to the left of the target block. Alternatively, A1 may be a block adjacent to the top of A0. A1 may be a block that occupies pixels located at coordinates (xP - 1, yP + nPSH - 1).

Spatial candidate B0 may be a block adjacent to the above-right corner of the target block. B0 may be a block that occupies pixels located at coordinates (xP + nPSW, yP - 1).

Spatial candidate B1 may be a block adjacent to the top of the target block. B1 may be a rightmost block, among blocks adjacent to the top of the target block. Alternatively, B1 may be a block adjacent to the left of B0. B1 may be a block that occupies pixels located at coordinates (xP + nPSW - 1, yP - 1).

Spatial candidate B2 may be a block adjacent to the above-left corner of the target block. B2 may be a block that occupies pixels located at coordinates (xP - 1, yP - 1).

### Determination of availability of spatial candidate and temporal candidate

In order to include the motion information of a spatial candidate or the motion information of a temporal candidate in a list, it must be determined whether the motion information of the spatial candidate or the motion information of the temporal candidate is available.

Hereinafter, a candidate block may include a spatial candidate and a temporal candidate.

For example, the determination may be performed by sequentially applying the following steps 1) to 4).

Step 1) When a PU including a candidate block is out of the boundary of a picture, the availability of the candidate block may be set to "false". The expression "availability is set to false" may have the same meaning as "set to be unavailable".

Step 2) When a PU including a candidate block is out of the boundary of a slice, the availability of the candidate block may be set to "false". When the target block and the candidate block are located in different slices, the availability of the candidate block may be set to "false".

Step 3) When a PU including a candidate block is out of the boundary of a tile, the availability of the candidate block may be set to "false". When the target block and the candidate block are located in different tiles, the availability of the candidate block may be set to "false".

Step 4) When the prediction mode of a PU including a candidate block is an intra-prediction mode, the availability of the candidate block may be set to "false". When a PU including a candidate block does not use inter prediction, the availability of the candidate block may be set to "false".

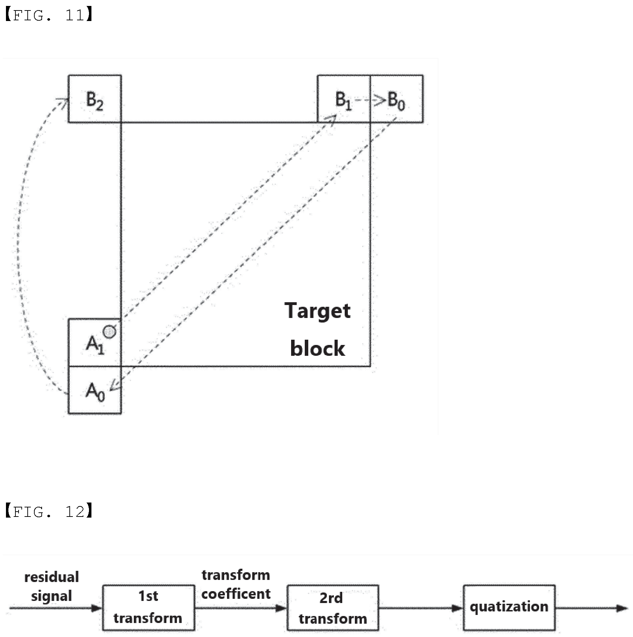

FIG. 11 illustrates the order of addition of motion information of spatial candidates to a merge list according to an embodiment.

As shown in FIG. 11, when pieces of motion information of spatial candidates are added to a merge list, the order of A1, B1, B0, A0, and B2 may be used. That is, pieces of motion information of available spatial candidates may be added to the merge list in the order of A1, B1, B0, A0, and B2.

### Method for deriving merge list in merge mode and skip mode

As described above, the maximum number of merge candidates in the merge list may be set. The set maximum number is indicated by "N". The set number may be transmitted from the encoding apparatus 100 to the decoding apparatus 200. The slice header of a slice may include N. In other words, the maximum number of merge candidates in the merge list for the target block of the slice may be set by the slice header. For example, the value of N may be basically 5.

Pieces of motion information (i.e., merge candidates) may be added to the merge list in the order of the following steps 1) to 4).

Step 1) Among spatial candidates, available spatial candidates may be added to the merge list. Pieces of motion information of the available spatial candidates may be added to the merge list in the order illustrated in FIG. 11. Here, when the motion information of an available spatial candidate overlaps other motion information already present in the merge list, the motion information may not be added to the merge list. The operation of checking whether the corresponding motion information overlaps other motion information present in the list may be referred to in brief as an "overlap check".

The maximum number of pieces of motion information that are added may be N.

Step 2) When the number of pieces of motion information in the merge list is less than N and a temporal candidate is available, the motion information of the temporal candidate may be added to the merge list. Here, when the motion information of the available temporal candidate overlaps other motion information already present in the merge list, the motion information may not be added to the merge list.

Step 3) When the number of pieces of motion information in the merge list is less than N and the type of a target slice is "B", combined motion information generated by combined bidirectional prediction (bi-prediction) may be added to the merge list.

The target slice may be a slice including a target block.

The combined motion information may be a combination of L0 motion information and L1 motion information. L0 motion information may be motion information that refers only to a reference picture list L0. L1 motion information may be motion information that refers only to a reference picture list L1.

In the merge list, one or more pieces of L0 motion information may be present. Further, in the merge list, one or more pieces of L1 motion information may be present.

The combined motion information may include one or more pieces of combined motion information. When the combined motion information is generated, L0 motion information and L1 motion information, which are to be used for generation, among the one or more pieces of L0 motion information and the one or more pieces of L1 motion information, may be predefined. One or more pieces of combined motion information may be generated in a predefined order via combined bidirectional prediction, which uses a pair of different pieces of motion information in the merge list. One of the pair of different pieces of motion information may be L0 motion information and the other of the pair may be L1 motion information.

For example, combined motion information that is added with the highest priority may be a combination of L0 motion information having a merge index of 0 and L1 motion information having a merge index of 1. When motion information having a merge index of 0 is not L0 motion information or when motion information having a merge index of 1 is not L1 motion information, the combined motion information may be neither generated nor added. Next, the combined motion information that is added with the next priority may be a combination of L0 motion information, having a merge index of 1, and L1 motion information, having a merge index of 0. Subsequent detailed combinations may conform to other combinations of video encoding/decoding fields.

Here, when the combined motion information overlaps other motion information already present in the merge list, the combined motion information may not be added to the merge list.

Step 4) When the number of pieces of motion information in the merge list is less than N, motion information of a zero vector may be added to the merge list.

The zero-vector motion information may be motion information for which the motion vector is a zero vector.

The number of pieces of zero-vector motion information may be one or more. The reference picture indices of one or more pieces of zero-vector motion information may be different from each other. For example, the value of the reference picture index of first zero-vector motion information may be 0. The value of the reference picture index of second zero-vector motion information may be 1.

The number of pieces of zero-vector motion information may be identical to the number of reference pictures in the reference picture list.

The reference direction of zero-vector motion information may be bidirectional. Both of the motion vectors may be zero vectors. The number of pieces of zero-vector motion information may be the smaller one of the number of reference pictures in the reference picture list L0 and the number of reference pictures in the reference picture list L1. Alternatively, when the number of reference pictures in the reference picture list L0 and the number of reference pictures in the reference picture list L1 are different from each other, a reference direction that is unidirectional may be used for a reference picture index that may be applied only to a single reference picture list.

The encoding apparatus 100 and/or the decoding apparatus 200 may sequentially add the zero-vector motion information to the merge list while changing the reference picture index.

When zero-vector motion information overlaps other motion information already present in the merge list, the zero-vector motion information may not be added to the merge list.

The order of the above-described steps 1) to 4) is merely exemplary, and may be changed. Further, some of the above steps may be omitted depending on predefined conditions.

### Method for deriving prediction motion vector candidate list in AMVP mode

The maximum number of prediction motion vector candidates in a prediction motion vector candidate list may be predefined. The predefined maximum number is indicated by N. For example, the predefined maximum number may be 2.

Pieces of motion information (i.e. prediction motion vector candidates) may be added to the prediction motion vector candidate list in the order of the following steps 1) to 3).

Step 1) Available spatial candidates, among spatial candidates, may be added to the prediction motion vector candidate list. The spatial candidates may include a first spatial candidate and a second spatial candidate.

The first spatial candidate may be one of A0, A1, scaled A0, and scaled A1. The second spatial candidate may be one of B0, B1, B2, scaled B0, scaled B1, and scaled B2.

Pieces of motion information of available spatial candidates may be added to the prediction motion vector candidate list in the order of the first spatial candidate and the second spatial candidate. In this case, when the motion information of an available spatial candidate overlaps other motion information already present in the prediction motion vector candidate list, the motion information may not be added to the prediction motion vector candidate list. In other words, when the value of N is 2, if the motion information of a second spatial candidate is identical to the motion information of a first spatial candidate, the motion information of the second spatial candidate may not be added to the prediction motion vector candidate list.

The maximum number of pieces of motion information that are added may be N.

Step 2) When the number of pieces of motion information in the prediction motion vector candidate list is less than N and a temporal candidate is available, the motion information of the temporal candidate may be added to the prediction motion vector candidate list. In this case, when the motion information of the available temporal candidate overlaps other motion information already present in the prediction motion vector candidate list, the motion information may not be added to the prediction motion vector candidate list.

Step 3) When the number of pieces of motion information in the prediction motion vector candidate list is less than N, zero-vector motion information may be added to the prediction motion vector candidate list.

The zero-vector motion information may include one or more pieces of zero-vector motion information. The reference picture indices of the one or more pieces of zero-vector motion information may be different from each other.

The encoding apparatus 100 and/or the decoding apparatus 200 may sequentially add pieces of zero-vector motion information to the prediction motion vector candidate list while changing the reference picture index.

When zero-vector motion information overlaps other motion information already present in the prediction motion vector candidate list, the zero-vector motion information may not be added to the prediction motion vector candidate list.

The description of the zero-vector motion information, made above in connection with the merge list, may also be applied to zero-vector motion information. A repeated description thereof will be omitted.

The order of the above-described steps 1) to 3) is merely exemplary, and may be changed. Further, some of the steps may be omitted depending on predefined conditions.

FIG. 12 illustrates a transform and quantization process according to an example.

As illustrated in FIG. 12, quantized levels may be generated by performing a transform and/or quantization process on a residual signal.

A residual signal may be generated as the difference between an original block and a prediction block. Here, the prediction block may be a block generated via intra prediction or inter prediction.

The residual signal may be transformed into a signal in a frequency domain through a transform procedure that is a part of a quantization procedure.

A transform kernel used for a transform may include various DCT kernels, such as Discrete Cosine Transform (DCT) type 2 (DCT-II) and Discrete Sine Transform (DST) kernels.

These transform kernels may perform a separable transform or a two-dimensional (2D) non-separable transform on the residual signal. The separable transform may be a transform indicating that a one-dimensional (1D) transform is performed on the residual signal in each of a horizontal direction and a vertical direction.

The DCT type and the DST type, which are adaptively used for a 1D transform, may include DCT-V, DCT-VIII, DST-I, and DST-VII in addition to DCT-II, as shown in each of the following Table 3 and the following table 4.

**Table 3**

| Transform set | Transform candidates |
|---|---|
| 0 | DST-VII, DCT-VIII |
| 1 | DST-VII, DST-I |
| 2 | DST-VII, DCT-V |

**Table 4**

| Transform set | Transform candidates |
|---|---|
| 0 | DST-VII, DCT-VIII, DST-I |
| 1 | DST-VII, DST-I, DCT-VIII |
| 2 | DST-VII, DCT-V, DST-I |

As shown in Table 3 and Table 4, when a DCT type or a DST type to be used for a transform is derived, transform sets may be used. Each transform set may include multiple transform candidates. Each transform candidate may be a DCT type or a DST type.

The following Table 5 shows examples of a transform set to be applied to a horizontal direction and a transform set to be applied to a vertical direction depending on intra-prediction modes.

**Table 5**

| | | | | | | | | | | |
|---|---|---|---|---|---|---|---|---|---|---|
| **Intra prediction mode** | 0 | 1 | 2 | 3 | 4 | 5 | 6 | 7 | 8 | 9 |
| Vertical direction transform set | 2 | 1 | 0 | 1 | 0 | 1 | 0 | 1 | 0 | 1 |
| Horizontal direction transform set | 2 | 1 | 0 | 1 | 0 | 1 | 0 | 1 | 0 | 1 |
| **Intra prediction mode** | 10 | 11 | 12 | 13 | 14 | 15 | 16 | 17 | 18 | 19 |
| Vertical direction transform set | 0 | 1 | 0 | 1 | 0 | 0 | 0 | 0 | 0 | 0 |
| Horizontal direction transform set | 0 | 1 | 0 | 1 | 2 | 2 | 2 | 2 | 2 | 2 |
| **Intra prediction mode** | 20 | 21 | 22 | 23 | 24 | 25 | 26 | 27 | 28 | 29 |
| Vertical direction transform set | 0 | 0 | 0 | 1 | 0 | 1 | 0 | 1 | 0 | 1 |
| Horizontal direction transform set | 2 | 2 | 2 | 1 | 0 | 1 | 0 | 1 | 0 | 1 |
| **Intra prediction mode** | 30 | 31 | 32 | 33 | 34 | 35 | 36 | 37 | 38 | 39 |
| Vertical direction transform set | 0 | 1 | 0 | 1 | 0 | 1 | 0 | 1 | 0 | 1 |
| Horizontal direction transform set | 0 | 1 | 0 | 1 | 0 | 1 | 0 | 1 | 0 | 1 |
| **Intra prediction mode** | 40 | 41 | 42 | 43 | 44 | 45 | 46 | 47 | 48 | 49 |
| Vertical direction transform set | 0 | 1 | 0 | 1 | 0 | 1 | 2 | 2 | 2 | 2 |
| Horizontal direction transform set | 0 | 1 | 0 | 1 | 0 | 1 | 0 | 0 | 0 | 0 |
| **Intra prediction mode** | 50 | 51 | 52 | 53 | 54 | 55 | 56 | 57 | 58 | 59 |
| Vertical direction transform set | 2 | 2 | 2 | 2 | 2 | 1 | 0 | 1 | 0 | 1 |
| Horizontal direction transform set | 0 | 0 | 0 | 0 | 0 | 1 | 0 | 1 | 0 | 1 |
| **Intra prediction mode** | 60 | 61 | 62 | 63 | 64 | 65 | 66 | | | |
| Vertical direction transform set | 0 | 1 | 0 | 1 | 0 | 1 | 0 | | | |
| Horizontal direction transform set | 0 | 1 | 0 | 1 | 0 | 1 | 0 | | | |

In Table 5, numbers of vertical transform sets and horizontal transform sets that are to be applied to the horizontal direction of a residual signal depending on the intra-prediction modes of the target block are indicated.

As exemplified in Table 5, transform sets to be applied to the horizontal direction and the vertical direction may be predefined depending on the intra-prediction mode of the target block. The encoding apparatus 100 may perform a transform and an inverse transform on the residual signal using a transform included in the transform set corresponding to the intra-prediction mode of the target block. Further, the decoding apparatus 200 may perform an inverse transform on the residual signal using a transform included in the transform set corresponding to the intra-prediction mode of the target block.

In the transform and inverse transform, transform sets to be applied to the residual signal may be determined, as exemplified in Tables 3, 4, and 5, and may not be signaled. Transform indication information may be signaled from the encoding apparatus 100 to the decoding apparatus 200. The transform indication information may be information indicating which one of multiple transform candidates included in the transform set to be applied to the residual signal is used.

For example, when the size of the target block is 64x64 or less, transform sets, each having three transforms, may be configured depending on the intra-prediction modes. An optimal transform method may be selected from among a total of nine multiple transform methods resulting from combinations of three transforms in a horizontal direction and three transforms in a vertical direction. Through such an optimal transform method, the residual signal may be encoded and/or decoded, and thus coding efficiency may be improved.

Here, information indicating which one of transforms belonging to each transform set has been used for at least one of a vertical transform and a horizontal transform may be entropy-encoded and/or -decoded. Here, truncated unary binarization may be used to encode and/or decode such information.

As described above, methods using various transforms may be applied to a residual signal generated via intra prediction or inter prediction.

The transform may include at least one of a first transform and a secondary transform. A transform coefficient may be generated by performing the first transform on the residual signal, and a secondary transform coefficient may be generated by performing the secondary transform on the transform coefficient.

The first transform may be referred to as a "primary transform". Further, the first transform may also be referred to as an "Adaptive Multiple Transform (AMT) scheme". AMT may mean that, as described above, different transforms are applied to respective 1D directions (i.e. a vertical direction and a horizontal direction).

A secondary transform may be a transform for improving energy concentration on a transform coefficient generated by the first transform. Similar to the first transform, the secondary transform may be a separable transform or a non-separable transform. Such a non-separable transform may be a Non-Separable Secondary Transform (NSST).

The first transform may be performed using at least one of predefined multiple transform methods. For example, the predefined multiple transform methods may include a Discrete Cosine Transform (DCT), a Discrete Sine Transform (DST), a Karhunen-Loeve Transform (KLT), etc.

Further, a first transform may be a transform having various transform types depending on a kernel function that defines a Discrete Cosine Transform (DCT) or a Discrete Sine Transform (DST).

For example, the transform type may be determined based at least one of 1) a prediction mode of a target block (for example, one of an intra prediction and an inter prediction), 2) a size of a target block, 3) a shape of a target block, 4) an intra prediction mode of a target block, 5) a component of a target block (for example, one of a luma component an a chroma component), and 6) a partitioning type applied to a target block (for example, one of a Quad Tree, a Binary Tree and a Ternary Tree).

For example, the first transform may include transforms, such as DCT-2, DCT-5, DCT-7, DST-7, DST-1, DST-8, and DCT-8 depending on the transform kernel presented in the following Table 6. In the following Table 6, various transform types and transform kernel functions for Multiple Transform Selection (MTS) are exemplified.

MTS may refer to the selection of combinations of one or more DCT and/or DST kernels so as to transform a residual signal in a horizontal and/or vertical direction.

**Table 6**

| Transform type | Transform kernel function *Tᵢ*(*j*) |
|---|---|
| DCT-2 | ${T}_{i} \left(j\right) = {ω}_{0} ⋅ \sqrt{\frac{2}{N}} ⋅ cos \left(\frac{π ⋅ i ⋅ \left(2j+1\right)}{2 N}\right) where {ω}_{0} = \sqrt{\frac{2}{N}} \left(i=0\right) or 1 \left(otherwise\right)$ |
| DST-7 | ${T}_{i} \left(j\right) = \sqrt{\frac{4}{2 N + 1}} ⋅ sin \left(\frac{π ⋅ \left(2j+1\right) ⋅ \left(j+1\right)}{2 N + 1}\right)$ |
| DCT-5 | ${T}_{i} \left(j\right) = {ω}_{0} ⋅ {ω}_{1} ⋅ \sqrt{\frac{2}{2 N - 1}} ⋅ cos \left(\frac{2 π ⋅ i ⋅ j}{2 N + 1}\right) where {ω}_{0 / 1} = \sqrt{\frac{2}{N}} \left(i or j=0\right) or 1 \left(otherwise\right)$ |
| DCT-8 | ${T}_{i} \left(j\right) = \sqrt{\frac{4}{2 N + 1}} ⋅ cos \left(\frac{π ⋅ \left(2j+1\right) ⋅ \left(2j+1\right)}{4 N + 2}\right)$ |
| DST-1 | ${T}_{i} \left(j\right) = \sqrt{\frac{2}{N + 1}} ⋅ sin \left(\frac{π ⋅ \left(i+1\right) ⋅ \left(j+1\right)}{N + 1}\right)$ |

In Table 6, i and j may be integer values that are equal to or greater than 0 and are less than or equal to N-1.

The secondary transform may be performed on the transform coefficient generated by performing the first transform.

As in the first transform, transform sets may also be defined in a secondary transform. The methods for deriving and/or determining the above-described transform sets may be applied not only to the first transform but also to the secondary transform.

The first transform and the secondary transform may be determined for a specific target.

For example, a first transform and a secondary transform may be applied to signal components corresponding to one or more of a luminance (luma) component and a chrominance (chroma) component. Whether to apply the first transform and/or the secondary transform may be determined depending on at least one of coding parameters for a target block and/or a neighbor block. For example, whether to apply the first transform and/or the secondary transform may be determined depending on the size and/or shape of the target block.

In the encoding apparatus 100 and the decoding apparatus 200, transform information indicating the transform method to be used for the target may be derived by utilizing specified information.

For example, the transform information may include a transform index to be used for a primary transform and/or a secondary transform. Alternatively, the transform information may indicate that a primary transform and/or a secondary transform are not used.

For example, when the target of a primary transform and a secondary transform is a target block, the transform method(s) to be applied to the primary transform and/or the secondary transform indicated by the transform information may be determined depending on at least one of coding parameters for the target block and/or blocks neighbor the target block.

Alternatively, transform information indicating a transform method for a specific target may be signaled from the encoding apparatus 100 to the decoding apparatus 200.

For example, for a single CU, whether to use a primary transform, an index indicating the primary transform, whether to use a secondary transform, and an index indicating the secondary transform may be derived as the transform information by the decoding apparatus 200. Alternatively, for a single CU, the transform information, which indicates whether to use a primary transform, an index indicating the primary transform, whether to use a secondary transform, and an index indicating the secondary transform, may be signaled.

The quantized transform coefficient (i.e. the quantized levels) may be generated by performing quantization on the result, generated by performing the first transform and/or the secondary transform, or on the residual signal.

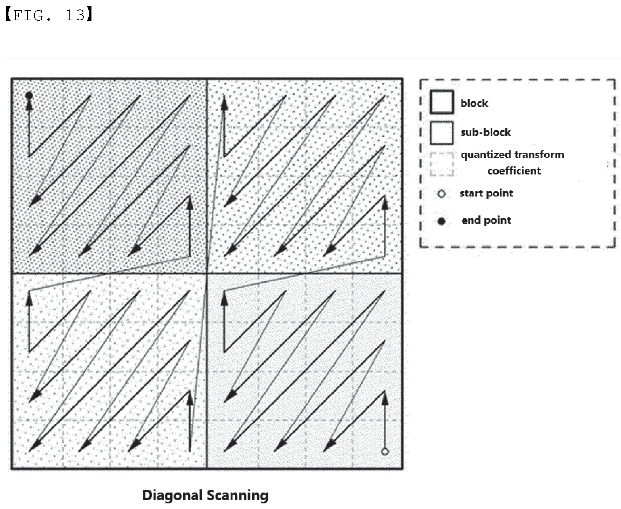

FIG. 13 illustrates diagonal scanning according to an example.

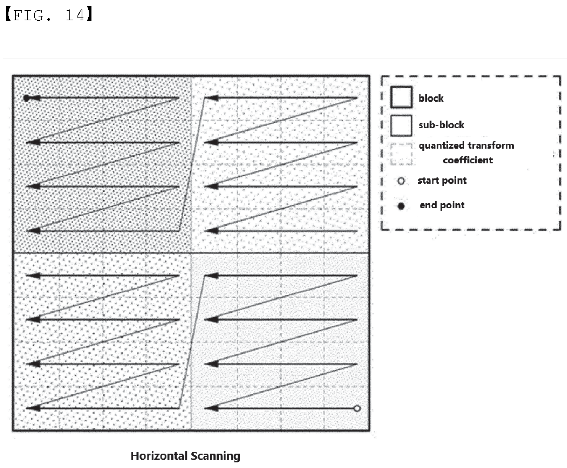

FIG. 14 illustrates horizontal scanning according to an example.

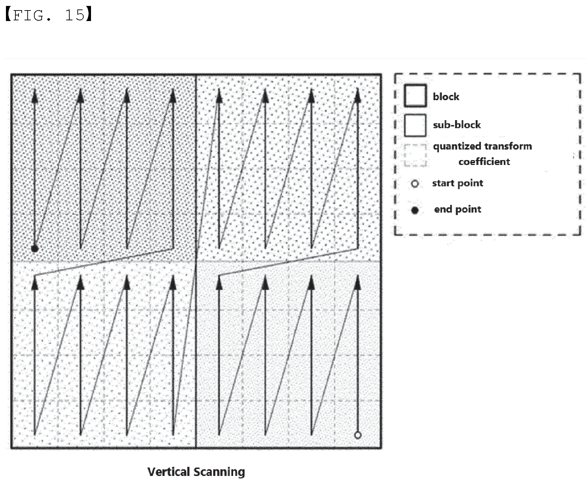

FIG. 15 illustrates vertical scanning according to an example.

Quantized transform coefficients may be scanned via at least one of (up-right) diagonal scanning, vertical scanning, and horizontal scanning depending on at least one of an intra-prediction mode, a block size, and a block shape. The block may be a Transform Unit (TU).

Each scanning may be initiated at a specific start point, and may be terminated at a specific end point.

For example, quantized transform coefficients may be changed to 1D vector forms by scanning the coefficients of a block using diagonal scanning of FIG. 13. Alternatively, horizontal scanning of FIG. 14 or vertical scanning of FIG. 15, instead of diagonal scanning, may be used depending on the size and/or intra-prediction mode of a block.

Vertical scanning may be the operation of scanning 2D block-type coefficients in a column direction. Horizontal scanning may be the operation of scanning 2D block-type coefficients in a row direction.

In other words, which one of diagonal scanning, vertical scanning, and horizontal scanning is to be used may be determined depending on the size and/or inter-prediction mode of the block.

As illustrated in FIGS. 13, 14, and 15, the quantized transform coefficients may be scanned along a diagonal direction, a horizontal direction or a vertical direction.

The quantized transform coefficients may be represented by block shapes. Each block may include multiple sub-blocks. Each sub-block may be defined depending on a minimum block size or a minimum block shape.

In scanning, a scanning sequence depending on the type or direction of scanning may be primarily applied to sub-blocks. Further, a scanning sequence depending on the direction of scanning may be applied to quantized transform coefficients in each sub-block.

For example, as illustrated in FIGS. 13, 14, and 15, when the size of a target block is 8x8, quantized transform coefficients may be generated through a first transform, a secondary transform, and quantization on the residual signal of the target block. Therefore, one of three types of scanning sequences may be applied to four 4x4 sub-blocks, and quantized transform coefficients may also be scanned for each 4x4 sub-block depending on the scanning sequence.

The encoding apparatus 100 may generate entropy-encoded quantized transform coefficients by performing entropy encoding on scanned quantized transform coefficients, and may generate a bitstream including the entropy-encoded quantized transform coefficients.

The decoding apparatus 200 may extract the entropy-encoded quantized transform coefficients from the bitstream, and may generate quantized transform coefficients by performing entropy decoding on the entropy-encoded quantized transform coefficients. The quantized transform coefficients may be aligned in the form of a 2D block via inverse scanning. Here, as the method of inverse scanning, at least one of up-right diagonal scanning, vertical scanning, and horizontal scanning may be performed.

In the decoding apparatus 200, dequantization may be performed on the quantized transform coefficients. A secondary inverse transform may be performed on the result generated by performing dequantization depending on whether to perform the secondary inverse transform. Further, a first inverse transform may be performed on the result generated by performing the secondary inverse transform depending on whether the first inverse transform is to be performed. A reconstructed residual signal may be generated by performing the first inverse transform on the result generated by performing the secondary inverse transform.

For a luma component which is reconstructed via intra prediction or inter prediction, inverse mapping having a dynamic range may be performed before in-loop filtering.

The dynamic range may be divided into 16 equal pieces, and mapping functions for respective pieces may be signaled. Such a mapping function may be signaled at a slice level or a tile group level.

An inverse mapping function for performing inverse mapping may be derived based on the mapping function.

In-loop filtering, the storage of a reference picture, and motion compensation may be performed in an inverse mapping area.

A prediction block generated via inter prediction may be changed to a mapped area through mapping using a mapping function, and the changed prediction block may be used to generate a reconstructed block. However, since intra prediction is performed in the mapped area, a prediction block generated via intra prediction may be used to generate a reconstructed block without requiring mapping and/or inverse mapping.

For example, when the target block is a residual block of a chroma component, the residual block may be changed to an inversely mapped area by scaling the chroma component of the mapped area.

Whether scaling is available may be signaled at a slice level or a tile group level.

For example, scaling may be applied only to the case where mapping is available for a luma component and where the partitioning of the luma component and the partitioning of the chroma component follow the same tree structure.

Scaling may be performed based on the average of the values of samples in a luma prediction block, which corresponds to a chroma prediction block. Here, when the target block uses inter prediction, the luma prediction block may mean a mapped luma prediction block.

A value required for scaling may be derived by referring to a look-up table using the index of a piece to which the average of sample values of the luma prediction block belongs.

The residual block may be changed to an inversely mapped area by scaling the residual block using a finally derived value. Thereafter, for the block of a chroma component, reconstruction, intra prediction, inter prediction, in-loop filtering, and the storage of a reference picture may be performed in the inversely mapped area.

For example, information indicating whether the mapping and/or inverse mapping of a luma component and a chroma component are available may be signaled through a sequence parameter set.

A prediction block for the target block may be generated based on a block vector. The block vector may indicate displacement between the target block and a reference block. The reference block may be a block in a target image.

In this way, a prediction mode in which the prediction block is generated by referring to the target image may be referred to as an "Intra-Block Copy (IBC) mode".

An IBC mode may be applied to a CU having a specific size. For example, the IBC mode may be applied to an MxN CU. Here, M and N may be less than or equal to 64.

The IBC mode may include a skip mode, a merge mode, an AMVP mode, etc. In the case of the skip mode or the merge mode, a merge candidate list may be configured, and a merge index is signaled, and thus a single merge candidate may be specified among merge candidates present in the merge candidate list. The block vector of the specified merge candidate may be used as the block vector of the target block.

In the case of the AMVP mode, a differential block vector may be signaled. Also, a prediction block vector may be derived from the left neighbor block and the above neighbor block of the target block. Further, an index indicating which neighbor block is to be used may be signaled.

A prediction block in the IBC mode may be included in a target CTU or a left CTU, and may be limited to a block within a previously reconstructed area. For example, the value of a block vector may be limited so that a prediction block for a target block is located in a specific area. The specific area may be an area defined by three 64x64 blocks that are encoded and/or decoded prior to a 64x64 block including the target block. The value of the block vector is limited in this way, and thus memory consumption and device complexity caused by the implementation of the IBC mode may be decreased.

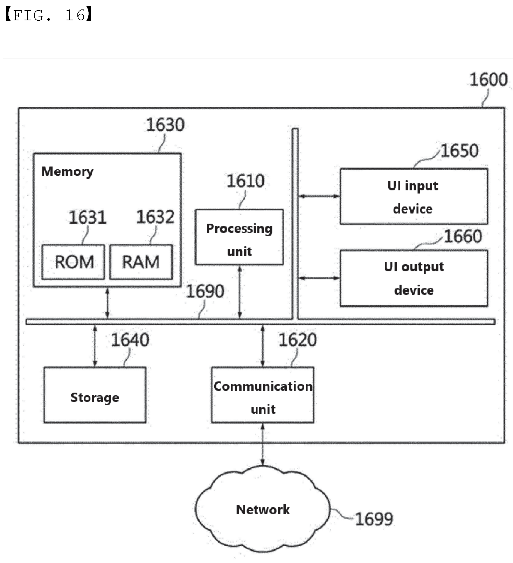

FIG. 16 is a configuration diagram of an encoding apparatus according to an embodiment.

An encoding apparatus 1600 may correspond to the above-described encoding apparatus 100.

The encoding apparatus 1600 may include a processing unit 1610, memory 1630, a user interface (UI) input device 1650, a UI output device 1660, and storage 1640, which communicate with each other through a bus 1690. The encoding apparatus 1600 may further include a communication unit 1620 coupled to a network 1699.

The processing unit 1610 may be a Central Processing Unit (CPU) or a semiconductor device for executing processing instructions stored in the memory 1630 or the storage 1640. The processing unit 1610 may be at least one hardware processor.

The processing unit 1610 may generate and process signals, data or information that are input to the encoding apparatus 1600, are output from the encoding apparatus 1600, or are used in the encoding apparatus 1600, and may perform examination, comparison, determination, etc. related to the signals, data or information. In other words, in embodiments, the generation and processing of data or information and examination, comparison and determination related to data or information may be performed by the processing unit 1610.

The processing unit 1610 may include an inter-prediction unit 110, an intra-prediction unit 120, a switch 115, a subtractor 125, a transform unit 130, a quantization unit 140, an entropy encoding unit 150, a dequantization unit 160, an inverse transform unit 170, an adder 175, a filter unit 180, and a reference picture buffer 190.

At least some of the inter-prediction unit 110, the intra-prediction unit 120, the switch 115, the subtractor 125, the transform unit 130, the quantization unit 140, the entropy encoding unit 150, the dequantization unit 160, the inverse transform unit 170, the adder 175, the filter unit 180, and the reference picture buffer 190 may be program modules, and may communicate with an external device or system. The program modules may be included in the encoding apparatus 1600 in the form of an operating system, an application program module, or other program modules.

The program modules may be physically stored in various types of well-known storage devices. Further, at least some of the program modules may also be stored in a remote storage device that is capable of communicating with the encoding apparatus 1200.

The program modules may include, but are not limited to, a routine, a subroutine, a program, an object, a component, and a data structure for performing functions or operations according to an embodiment or for implementing abstract data types according to an embodiment.

The program modules may be implemented using instructions or code executed by at least one processor of the encoding apparatus 1600.

The processing unit 1610 may execute instructions or code in the inter-prediction unit 110, the intra-prediction unit 120, the switch 115, the subtractor 125, the transform unit 130, the quantization unit 140, the entropy encoding unit 150, the dequantization unit 160, the inverse transform unit 170, the adder 175, the filter unit 180, and the reference picture buffer 190.

A storage unit may denote the memory 1630 and/or the storage 1640. Each of the memory 1630 and the storage 1640 may be any of various types of volatile or nonvolatile storage media. For example, the memory 1630 may include at least one of Read-Only Memory (ROM) 1631 and Random Access Memory (RAM) 1632.

The storage unit may store data or information used for the operation of the encoding apparatus 1600. In an embodiment, the data or information of the encoding apparatus 1600 may be stored in the storage unit.

For example, the storage unit may store pictures, blocks, lists, motion information, inter-prediction information, bitstreams, etc.

The encoding apparatus 1600 may be implemented in a computer system including a computer-readable storage medium.

The storage medium may store at least one module required for the operation of the encoding apparatus 1600. The memory 1630 may store at least one module, and may be configured such that the at least one module is executed by the processing unit 1610.

Functions related to communication of the data or information of the encoding apparatus 1600 may be performed through the communication unit 1620.

For example, the communication unit 1620 may transmit a bitstream to a decoding apparatus 1600, which will be described later.

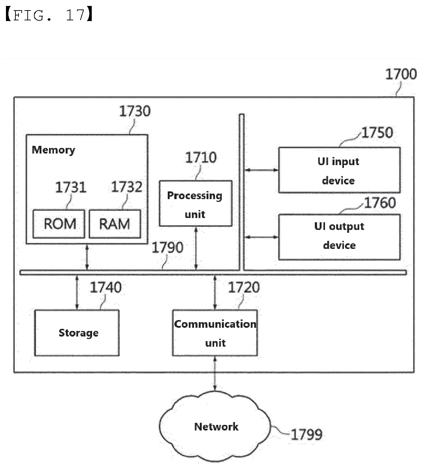

FIG. 17 is a configuration diagram of a decoding apparatus according to an embodiment.

The decoding apparatus 1700 may correspond to the above-described decoding apparatus 200.

The decoding apparatus 1700 may include a processing unit 1710, memory 1730, a user interface (UI) input device 1750, a UI output device 1760, and storage 1740, which communicate with each other through a bus 1790. The decoding apparatus 1700 may further include a communication unit 1720 coupled to a network 1799.

The processing unit 1710 may be a Central Processing Unit (CPU) or a semiconductor device for executing processing instructions stored in the memory 1730 or the storage 1740. The processing unit 1710 may be at least one hardware processor.

The processing unit 1710 may generate and process signals, data or information that are input to the decoding apparatus 1700, are output from the decoding apparatus 1700, or are used in the decoding apparatus 1700, and may perform examination, comparison, determination, etc. related to the signals, data or information. In other words, in embodiments, the generation and processing of data or information and examination, comparison and determination related to data or information may be performed by the processing unit 1710.

The processing unit 1710 may include an entropy decoding unit 210, a dequantization unit 220, an inverse transform unit 230, an intra-prediction unit 240, an inter-prediction unit 250, a switch 245, an adder 255, a filter unit 260, and a reference picture buffer 270.

At least some of the entropy decoding unit 210, the dequantization unit 220, the inverse transform unit 230, the intra-prediction unit 240, the inter-prediction unit 250, the adder 255, the switch 245, the filter unit 260, and the reference picture buffer 270 of the decoding apparatus 200 may be program modules, and may communicate with an external device or system. The program modules may be included in the decoding apparatus 1700 in the form of an operating system, an application program module, or other program modules.

The program modules may be physically stored in various types of well-known storage devices. Further, at least some of the program modules may also be stored in a remote storage device that is capable of communicating with the decoding apparatus 1700.

The program modules may include, but are not limited to, a routine, a subroutine, a program, an object, a component, and a data structure for performing functions or operations according to an embodiment or for implementing abstract data types according to an embodiment.

The program modules may be implemented using instructions or code executed by at least one processor of the decoding apparatus 1700.

The processing unit 1710 may execute instructions or code in the entropy decoding unit 210, the dequantization unit 220, the inverse transform unit 230, the intra-prediction unit 240, the inter-prediction unit 250, the switch 245, the adder 255, the filter unit 260, and the reference picture buffer 270.

A storage unit may denote the memory 1730 and/or the storage 1740. Each of the memory 1730 and the storage 1740 may be any of various types of volatile or nonvolatile storage media. For example, the memory 1730 may include at least one of ROM 1731 and RAM 1732.

The storage unit may store data or information used for the operation of the decoding apparatus 1700. In an embodiment, the data or information of the decoding apparatus 1700 may be stored in the storage unit.

For example, the storage unit may store pictures, blocks, lists, motion information, inter-prediction information, bitstreams, etc.

The decoding apparatus 1700 may be implemented in a computer system including a computer-readable storage medium.

The storage medium may store at least one module required for the operation of the decoding apparatus 1700. The memory 1730 may store at least one module, and may be configured such that the at least one module is executed by the processing unit 1710.

Functions related to communication of the data or information of the decoding apparatus 1700 may be performed through the communication unit 1720.

For example, the communication unit 1720 may receive a bitstream from the encoding apparatus 1700.

Hereinafter, a processing unit may represent the processing unit 1610 of the encoding apparatus 1600 and/or the processing unit 1710 of the decoding apparatus 1700. For example, as to functions relating to prediction, the processing unit may represent the switch 115 and/or the switch 245. As to functions relating to inter prediction, the processing unit may represent the inter-prediction unit 110, the subtractor 125 and the adder 175, and may represent the inter prediction unit 250 and the adder 255. As to functions relating to intra prediction, the processing unit may represent the intra prediction unit 120, the subtractor 125, and the adder 175, and may represent the intra prediction unit 240 and the adder 255. As to functions related to transform, the processing unit may represent the transform unit 130 and the inverse transform unit 170, and may represent the inverse transform unit 230. As to functions relating quantization, the processing unit may represent the quantization unit 140 and the inverse quantization unit 160, and may indicate the inverse quantization unit 220. As to functions relating to entropy encoding and/or entropy decoding, the processing unit may represent the entropy encoding unit 150 and/or the entropy decoding unit 210. As to functions relating filtering, the processing unit may represent the filter unit 180 and/or the filter unit 260. As to functions relating a reference picture, the processing unit may indicate the reference picture buffer 190 and/or the reference picture buffer 270.

The embodiments may be performed using the same method by the encoding apparatus 1600 and by the decoding apparatus 1700. Also, the image may be encoded/decoded using at least one of the embodiments or at least one combination thereof.

The order of application of the embodiments may be different from each other by the encoding apparatus 1600 and the decoding apparatus 1700, and the order of application of the embodiments may be (at least partially) identical to each other by the encoding apparatus 1600 and the decoding apparatus 1700.

The embodiments may be performed for each of a luma signal and a chroma signal, and may be equally performed for the luma signal and the chroma signal.

The form of a block to which the embodiments are applied may have a square or non-square shape.

Whether at least one of the above-described embodiments is to be applied and/or performed may be determined based on a condition related to the size of a block. In other words, at least one of the above-described embodiments may be applied and/or performed when the condition related to the size of a block is satisfied. The condition includes a minimum block size and a maximum block size. The block may be one of blocks described above in connection with the embodiments and the units described above in connection with the embodiments. The block to which the minimum block size is applied and the block to which the maximum block size is applied may be different from each other.

For example, when the block size is equal to or greater than the minimum block size and/or less than or equal to the maximum block size, the above-described embodiments may be applied and/or performed. When the block size is greater than the minimum block size and/or less than or equal to the maximum block size, the above-described embodiments may be applied and/or performed.

For example, the above-described embodiments may be applied only to the case where the block size is a predefined block size. The predefined block size may be 2x2, 4x4, 8x8, 16x16, 32x32, 64x64, or 128x128. The predefined block size may be (2*SIZEX)x(2*SIZEY). SIZEX may be one of integers of 1 or more. SIZEY may be one of integers of 1 or more.

For example, the above-described embodiments may be applied only to the case where the block size is equal to or greater than the minimum block size. The above-described embodiments may be applied only to the case where the block size is greater than the minimum block size. The minimum block size may be 2x2, 4x4, 8x8, 16x16, 32x32, 64x64, or 128x128. Alternatively, the minimum block size may be (2*SIZEMIN_X)x(2*SIZEMIN_Y). SIZEMIN_X may be one of integers of 1 or more. SIZEMIN_Y may be one of integers of 1 or more.

For example, the above-described embodiments may be applied only to the case where the block size is less than or equal to the maximum block size. The above-described embodiments may be applied only to the case where the block size is less than the maximum block size. The maximum block size may be 2x2, 4x4, 8x8, 16x16, 32x32, 64x64, or 128x128. Alternatively, the maximum block size may be (2*SIZEMAX_X)x(2*SIZEMAX_Y). SIZEMAX_X may be one of integers of 1 or more. SIZEMAX_Y may be one of integers of 1 or more.

For example, the above-described embodiments may be applied only to the case where the block size is equal to or greater than the minimum block size and is less than or equal to the maximum block size. The above-described embodiments may be applied only to the case where the block size is greater than the minimum block size and is less than or equal to the maximum block size. The above-described embodiments may be applied only to the case where the block size is equal to or greater than the minimum block size and is less than the maximum block size. The above-described embodiments may be applied only to the case where the block size is greater than the minimum block size and is less than the maximum block size.

In the above-described embodiments, the block size may be a horizontal size (width) or a vertical size (height) of a block. The block size may indicate both the horizontal size and the vertical size of the block. The block size may indicate the area of the block. Each of the area, minimum block size, and maximum block size may be one of integers equal to or greater than 1. In addition, the block size may be the result (or value) of a well-known equation using the horizontal size and the vertical size of the block, or the result (or value) of an equation in embodiments.

Further, in the embodiments, a first embodiment may be applied to a first size, and a second embodiment may be applied to a second size.

The embodiments may be applied depending on a temporal layer. In order to identify a temporal layer to which the embodiments are applicable, a separate identifier may be signaled, and the embodiments may be applied to the temporal layer specified by the corresponding identifier. Here, the identifier may be defined as the lowest (bottom) layer and/or the highest (top) layer to which the embodiments are applicable, and may be defined as being indicating a specific layer to which the embodiments are applied. Further, a fixed temporal layer to which the embodiments are applied may also be defined.

For example, the embodiments may be applied only to the case where the temporal layer of a target image is the lowermost layer. For example, the embodiments may be applied only to the case where the temporal layer identifier of a target image is equal to or greater than 1. For example, the embodiments may be applied only to the case where the temporal layer of a target image is the highest layer.

A slice type or a tile group type to which the embodiments to which the embodiments are applied may be defined, and the embodiments may be applied depending on the corresponding slice type or tile group type.

Information of a block in this specification may refer to at least one of information of a neighboring block, information of a reference block and information of a current block.

In addition, the information of a block may include at least one of encoding information or an encoding parameter.

Encoding information or an encoding parameter may include not only information (a flag, an index, etc.) encoded by an encoder and signaled to a decoder like a syntax element, but also information derived from an encoding process or a decoding process, and may refer to information required when encoding or decoding an image.

The encoding parameter information may include at least one of information used in inter prediction, intra prediction, transform, inverse transform, quantization, dequantization, entropy encoding/decoding or an in-loop filter.

In other words, information of a block refers to a combination or a value of at least one of a block size, a block depth, block partition information, a block form (square or non-square), whether to partition in a quad tree form, whether to partition in a binary tree form, a partition direction in a binary tree form (a horizontal direction or a vertical direction), a partition direction in a binary tree form (symmetric partition or asymmetric partition), a block index, a prediction mode (intra prediction or inter prediction), an intra luma prediction mode/direction, an intra chroma prediction mode/direction, an intra prediction mode candidate list, an intra prediction mode candidate index, intra partition information, inter partition information, an encoding block partition flag, a prediction block partition flag, a transform block partition flag, a reference sample filter tap, a reference sample filter coefficient, a prediction block filter tap, a prediction block filter coefficient, a prediction block boundary filter tap, a prediction block boundary filter coefficient, a motion vector (a motion vector for at least one of L0, L1, L2, L3, etc.), a motion vector difference (a motion vector difference for at least one of L0, L1, L2, L3, etc.), an inter prediction direction (an inter prediction direction for at least one of unidirectional prediction, bidirectional prediction, etc.), a reference image index (a reference image index for at least one of L0, L1, L2, L3, etc.), an inter prediction indicator, a prediction list utilization flag, a reference image list, a motion vector prediction index, a motion vector prediction candidate, a motion vector candidate list, whether to use a merge mode, a merge index, a merge candidate, a merge candidate list, whether to use a skip mode, an interpolation filter type, an interpolation filter tap, an interpolation filter coefficient, a motion vector size, motion vector representation accuracy (a motion vector representation unit represented as a n times sample or 1/n times samples such as an integer sample, a ½ sample, a ¼ sample, a 1/8 sample, a 1/16 sample, a 1/32 sample, etc. n may be a positive integer. In addition, the n may be determined based on at least one of the encoding parameter of a current block and the encoding parameter of a candidate. In addition, the U may be a value pre-coinfigured in an encoder/a decoder or may be a value signaled from an encoder to a decoder.), a transform type, a transform size, information on whether to use the first transform, information on whether to use the second transform, the first transform index, the second transform index, information on whether there is a residual signal, an encoding block pattern, an encoding block flag, a quantization parameter, a residual quantization parameter, a quantization matrix, whether to apply an intra loop filter, an intra loop filter coefficient, an intra loop filter tap, an intra loop filter shape/form, whether to apply a deblocking filter, a deblocking filter coefficient, a deblocking filter tap, deblocking filter strength, a deblocking filter shape/form, whether to apply an adaptive sample offset, an adaptive sample offset value, an adaptive sample offset category, an adaptive sample offset type, whether to apply an adaptive loop filter, an adaptive loop filter coefficient, an adaptive loop filter tap, an adaptive loop filter shape/form, a binarization/inverse binarization method, a context model determination method, a context model update method, whether to perform a regular mode, whether to perform a bypass mode, a context bin, a bypass bin, a significant coefficient flag, the last significant coefficient flag, an encoding flag in a coefficient group unit, the last significant coefficient position, a flag for whether a coefficient value is greater than 1, a flag for whether a coefficient value is greater than 2, a flag for whether a coefficient value is greater than 3, information on the remaining coefficient values, sign information, a reconstructed luma sample, a reconstructed chroma sample, a residual luma sample, a residual chroma sample, a luma transform coefficient, a chroma transform coefficient, a luma quantization level, a chroma quantization level, a transform coefficient level scanning method, a size of a decoder-side motion vector search region, a form of a decoder-side motion vector search range, the number of decoder-side motion vector search times, CTU size information, minimum block size information, maximum block size information, maximum block depth information, minimum block depth information, slice identification information, slice partition information, tile identification information, a tile type, tile partition information, an input sample bit depth, a reconstructed sample bit depth, a residual sample bit depth, a transform coefficient bit depth or a quantization level bit depth, and values that may be derived through these values may also be included in an encoding parameter.

A matching technique in this specification is a method for calculating an error cost while adjusting the position of a template by using a defined template between comparison targets, which includes template matching and bi-lateral matching, etc.

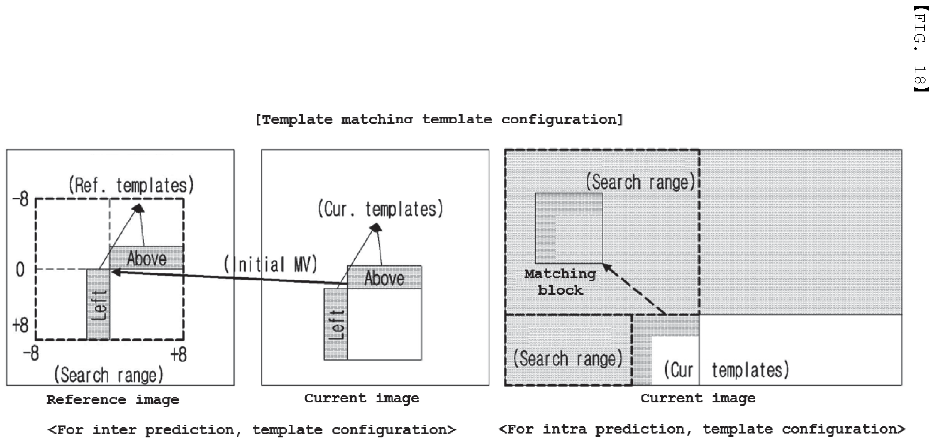

FIG. 18 may show a template configuration method for template matching according to intra/inter prediction.

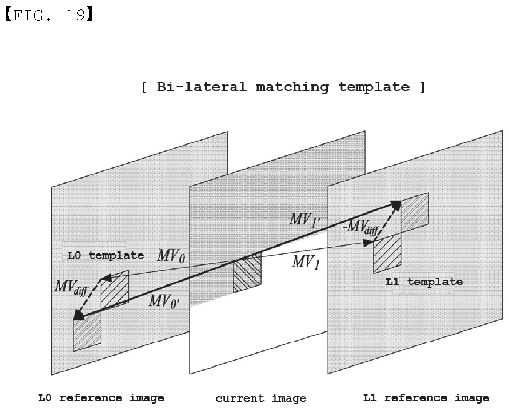

FIG. 19 may show a template configuration method for bi-lateral matching.

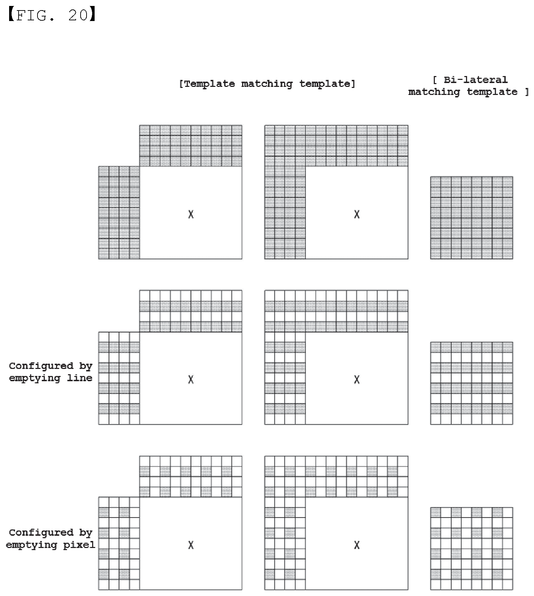

FIG. 20 may show a method for configuring a template by emptying at least one pixel or line in template matching and bi-lateral matching.

The template matching may configure a template (a current template) for a current block by using the neighboring pixel of a current block as in FIG. 18, and may configure a reference template that matches a current template by using a pixel in the search range of a reference image.

Bi-lateral matching may configure a template by using a pixel in a reference image as in FIG. 19. In this case, a template may be configured with at least one pixel among the pixels reconstructed in a current image or a reference image.

In configuring a template in the matching technique, at least one pixel or at least one line may be configured by leaving them blank as in FIG. 20.

In addition, the number of pixels configuring a template, the number of lines and the form of a template may be configured differently based on an encoding parameter.

As an embodiment, the form of a template may be configured differently according to the partition form or size of a current block or a neighboring block and a statistical value thereof.

For example, a template having a surface whose size is the same as that of a surface in contact with a current block or a neighboring block may be configured.

For example, a template having a surface whose size is smaller than that of a surface in contact with a current block or a neighboring block may be configured.

For example, a template having a surface whose size is greater than that of a surface in contact with a current block or a neighboring block may be configured.

For example, a template may be configured by setting the maximum value, the minimum value and a median value for the size of each surface of a current block and a neighboring block as the size of a surface.

For example, when the size of a current block or a neighboring block is smaller than a threshold, a template may be configured by reducing lines or pixels or the size of a template may be decreased.

For example, when the size of a current block or a neighboring block is smaller than a threshold, a template may be configured by increasing lines or pixels or the size of a template may be increased.

For example, when the size of a current block or a neighboring block is greater than a threshold, a template may be configured by reducing lines or pixels or the size of a template may be decreased.

For example, when the size of a current block or a neighboring block is greater than a threshold, a template may be configured by increasing lines or pixels or the size of a template may be increased.

The threshold may be a value pre-configured in an encoder/a decoder or a value signaled from an encoder to a decoder.

As an embodiment, it may be configured differently according to the motion information of a neighboring block or its statistical value.

For example, when one of the statistical values of the motion vector of a neighboring block is smaller than a threshold, a template may be configured by reducing lines or pixels or the size of a template may be decreased.

For example, when one of the statistical values of the motion vector of a neighboring block is smaller than a threshold, a template may be configured by increasing lines or pixels or the size of a template may be increased.

For example, when one of the statistical values of the motion vector of a neighboring block is greater than a threshold, a template may be configured by reducing lines or pixels or the size of a template may be decreased.

For example, when one of the statistical values of the motion vector of a neighboring block is greater than a threshold, a template may be configured by increasing lines or pixels or the size of a template may be increased.

The threshold may be a value pre-configured in an encoder/a decoder or a value signaled from an encoder to a decoder.

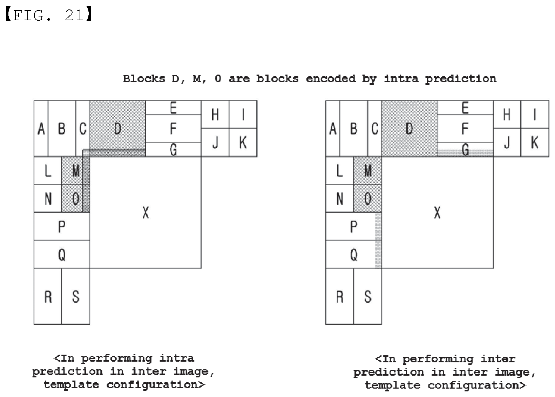

FIG. 21 may show a method for configuring a template by considering at least one of a prediction mode of a current block or a neighboring block.

As an embodiment, it may be configured differently according to the prediction mode of a current block or a neighboring block. (FIG. 21)

For example, when a current block is performing inter prediction, a template may be configured by selecting at least one of the blocks determined by inter prediction.

For example, when a current block is performing inter prediction, a template may be configured by selecting at least one of the blocks determined by intra prediction.

For example, when a current block is performing intra prediction (in an inter picture), a template may be configured by selecting at least one of the blocks determined by inter prediction.

For example, when a current block is performing intra prediction (in an inter picture), a template may be configured by selecting at least one of the blocks determined by intra prediction.

In addition, the number of pixels configuring a template, the number of lines and the form of a template may be configured differently based on a pixel position, a distance between pixels, a partition region, etc.

As an embodiment, the form of a template may be configured differently according to a distance from the center of a search range.

For example, when a distance between positions where matching is performed from the center of a search range is less than a threshold, a template may be configured by reducing lines or pixels or the size of a template may be decreased.

For example, when a distance between positions where matching is performed from the center of a search range is less than a threshold, a template may be configured by increasing lines or pixels or the size of a template may be increased.

For example, when a distance between positions where matching is performed from the center of a search range is greater than a threshold, a template may be configured by reducing lines or pixels or the size of a template may be decreased.

For example, when a distance between positions where matching is performed from the center of a search range is greater than a threshold, a template may be configured by increasing lines or pixels or the size of a template may be increased.

The threshold may be a value pre-configured in an encoder/a decoder or a value signaled from an encoder to a decoder.

As an embodiment, the form of a template may be configured differently according to a distance from a pixel where matching is performed first.

For example, when a distance from a pixel where matching is performed first is less than a threshold, a template may be configured by reducing lines or pixels or the size of a template may be decreased.

For example, when a distance from a pixel where matching is performed first is less than a threshold, a template may be configured by increasing lines or pixels or the size of a template may be increased.

For example, when a distance from a pixel where matching is performed first is greater than a threshold, a template may be configured by reducing lines or pixels or the size of a template may be decreased.

For example, when a distance from a pixel where matching is performed first is greater than a threshold, a template may be configured by increasing lines or pixels or the size of a template may be increased.

The threshold may be a value pre-configured in an encoder/a decoder or a value signaled from an encoder to a decoder.

As an embodiment, when a search range is partitioned into partition regions, the form of a template may be configured differently for each partition region.

In addition, the number of pixels configuring a template, the number of lines and the form of a template may be configured differently based on the step of performing matching.

For example, when trying to find a neighboring block with the minimum error cost by using template matching, template matching may be performed only at a specific position belonging to a pattern determined within a search range like a pattern matching method in order to reduce complexity.

In this case, a pattern matching method may be performed in steps as follows.

In the first step, sparse matching may be performed by enlarging a pattern within a search range or increasing a distance between positions where matching will be performed.

In the next step, more precise matching may be performed by reducing a pattern or narrowing a distance between positions where matching will be performed based on a position with the smallest error cost found in the previous step.

In this case, a template may be configured by reducing lines or pixels or the size of a template may be decreased in the first step and then, a template may be configured by increasing lines or pixels or the size of a template may be increased in the next step.

In addition, a template may be configured by increasing lines or pixels or the size of a template may be increased in the first step and then, a template may be configured by reducing lines or pixels or the size of a template may be decreased in the next step.

In addition, a position where matching will be performed based on the matching technique may be performed at at least one pixel position within a search range.

For example, it may be performed at at least one of the positions derived from candidates within a candidate list.

For example, it may be performed at at least one of the pixel positions that are at a certain distance from a current block.

For example, it may be performed at at least one of the pixel positions that are outside a certain distance from a current block.

For example, when a search range is partitioned, it may be performed at at least one of the positions in a specific partition region.

For example, it may be performed at at least one of the pixel positions belonging to a specific pattern.

For example, it may be performed at at least one of the pixel positions derived from a block (a similar candidate) whose encoding parameter is the same as or similar to that of a current block. A block whose encoding parameter is the same as or similar to that of a current block
may include a block when 1) the statistical value of the motion information of a corresponding block is the same as or similar to that of a current block, 2) the prediction information (intra, inter) of a corresponding block is the same as or similar to that of a current block, 3) the prediction direction of a corresponding block is the same as or similar to that of a current block and 4) the intra prediction mode of a corresponding block is the same as or similar to that of a current block.

The same process may be performed based on the statistical value of the encoding parameter of the candidates.

The threshold may be a value pre-configured in an encoder/a decoder or a value signaled from an encoder to a decoder.

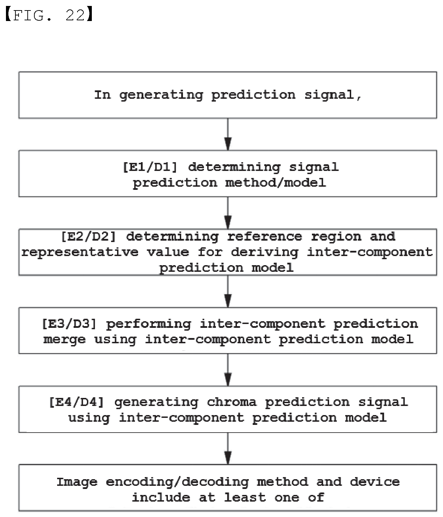

FIG. 22 may show a flowchart of an image encoding/decoding method for generating a chroma prediction signal using an inter-component prediction model of this invention.

### [E1/D1] A step of determining a chroma signal prediction method/model

In determining the chrominance signal prediction method/model, a prediction signal (or prediction block) can be generated based on the correlation between chromatic components.

In chroma signal prediction based on an inter-color relationship, a prediction signal may be derived based on a cross-component linear model (CCLM).

A chroma signal prediction method based on the cross-component linear model may generate a chroma prediction block for chroma prediction by using the sample value of reconstructed chroma samples adjacent to a current chroma block and luma samples reconstructed at a position corresponding thereto.

Here, a sample may include a pixel, the statistical value of pixel values of at least one pixel or encoding information derived from at least one pixel.

In this case, statistical values such as the maximum value and the minimum value or a correlation between neighboring pixels of a luma block and neighboring pixels of a chroma block may be used to derive a linear regression model as in the following Equation (1) and calculate model coefficients a and b. And these two values and pixels within a luma block may be used to derive a chroma block to be currently predicted. 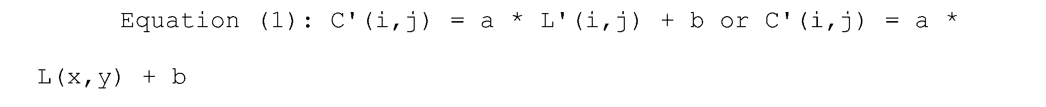 C'(i,j) = a * L'(i,j) + b or C'(i,j) = a * L(x,y) + b

In this case, C(i,j) may refer to a sample within a chroma prediction block or a current chroma prediction block, and L'(i,j) may refer to a reconstructed luma block/sample corresponding to the position of a chroma block to be currently predicted. However, L'(i,j) may refer to the luma sample of a luma block whose size is adjusted to be the same as that of a chroma block through subsampling, downsampling, etc., and L(x,y) may refer to the luma sample of a luma block whose size is not the same as that of a chroma block. Accordingly, (x, y) of a luma sample L(x,y) corresponding to a chroma sample C'(i, j) may be different from a chroma sample position (i, j).

In deriving a model coefficient in the Equation (1), it may be not only derived for each of U and V signals, but a model coefficient applied to both U and V signals may be also derived.

Whether to apply the linear model may be determined for each of U and V, which may be signaled.

In order to derive the value of model coefficients a and b, information on at least one of the adjacent neighboring samples of a chroma block to be currently predicted, the adjacent neighboring samples of a luma block corresponding to the position of a chroma block to be currently predicted and the reference line index of a corresponding luma block may be used.

In this case, in determining a reference line for deriving the model coefficient, at least N lines or more may be used as a reference line. Here, N is a positive number greater than or equal to 0, and may be a value pre-configured in an encoder/a decoder or a value signaled from an encoder to a decoder. It may be transmitted from an encoder.

In this case, a used neighboring block or sample position may vary depending on a chroma format.

For example, in a YUV4:4:4 or YUV:4:2:2 format, the adjacent sample line of a luma block indicated by the reference line index of a luma block and the adjacent neighboring sample line of a chroma block at the same position corresponding thereto may be used.

For example, in a YUV4:2:0 format, the adjacent sample line index (IntraChromaRefLineIdx) of a chroma block to be used may be derived as a floor (IntraLumaRefLineIdx / 2) value.

In addition, based on a sub-sampling method, only even or odd samples from a reconstructed luma reference line may be used to match the number of luma samples to the number of chroma samples. (A luma sample corresponding to a chroma sample may be determined.)

In addition, a luma sample at a specific sample position may be determined as a sample corresponding to a chroma sample. For example, when the size of a luma block is 2Mx2N and the size of a chroma block is MxN, samples positioned at (M+N)*X1/8, (M+N)*X2/8, (M+N)*X3/8 and (M+N)*X4/8 in a luma block may be determined as a luma sample corresponding to a chroma sample. In this case, Xi(i = 1,2,3) is an arbitrary constant for determining a sample position, and may increase as the number of samples increases. For example, when 4 samples are used as above, a constant substituted from X1 to X4 may be arbitrarily determined as (1, 3, 5, 7), (2, 4, 6, 8), etc., and a value may be different according to information on the encoding of neighboring blocks.

In addition, a luma sample corresponding to 1 chroma sample may be derived by using N luma samples. In this case, N may be an arbitrary positive integer.

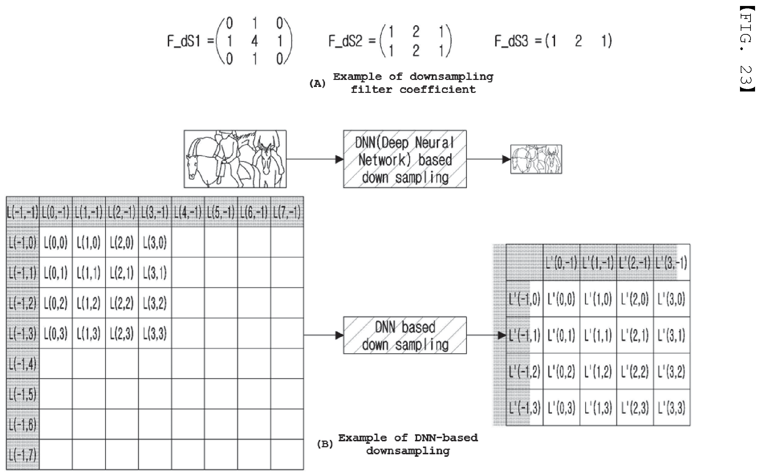

FIG. 23 may show an example of a downsampling filter coefficient and an example of DNN-based downsampling.

For example, a luma sample corresponding to a chroma sample may be determined by using downsampling. In this case, downsampling may be performed not only based on various filters as in FIG. 23, but also through neural network-based filtering.

In this case, at least one of statistical values such as an average value, the maximum value, the minimum value, a median value, etc. of at least one sample of N luma samples may be calculated to derive and use one representative luma sample.

For example, when luma samples corresponding to the adjacent sample c(0,-1) of a current chroma block are L(-1,-2), L(0,-2), L(1,-2), L(-1,-1), L(0,-1) and L(1,-1), a candidate value for deriving a representative value through an average value, the maximum value, the minimum value, a median value, etc. may be derived by using at least one sample among them. Here, a candidate value for obtaining a representative value may refer to a statistical value. Here, a representative value may refer to a sample value of luma samples corresponding to a chroma sample used to derive a model coefficient. Specifically, the reference line of a chroma block may be derived through the following Equation. c(0,-1)= ( L(-1,-2) + 2 * L(0,-2) + L(1,-2) + L(-1,-1) + 2 * L(0,-1) + L(1,-1) + 4 ) >> 3. In this case, >> may refer to a right shift operator.

Luma samples corresponding to the chroma sample may be different, and a formula for deriving a chroma prediction sample may be also different. Information on luma samples corresponding to the adjacent sample of the current chroma block or information on a formula for deriving the adjacent sample of the current chroma block may be signaled in an encoder.

The sample position may be a value pre-configured in an encoder/a decoder or a value signaled from an encoder to a decoder. It may be transmitted from an encoder. Alternatively, it may be derived through the encoding information of a neighboring sample or block.

The value of model coefficients a and b may be derived to generate a chroma block to be currently predicted through Equation (1). In this case, a and b values may be derived as in Equations (2) to (4) by using at least one of N selected or derived representative values (the first representative value, the second representative value, the third representative value and the fourth representative value). In this case, N may be a positive integer, or may be at least 2, or may be 4.$a = \left(CMAX-CMIN\right) / \left(LMAX-LMIN\right)$$b = CMIN - a * LMIN$

In this case, the first representative value (LMAX) may represent the x-axis of the maximum value, the second representative value (CMAX) may represent the y-axis of the maximum value, the third representative value (LMIN) may represent the x-axis of the minimum value and the fourth representative value (CMIN) may represent the y-axis of the minimum value.

For example, Equation (2) may have difficulty in implementing an integer unit because division is used. Accordingly, a division operation may be used by being replaced with multiplication and >> (shift operation).

As another example, Equation (4) may avoid using a division operation in Equation (2) and derive the value of a through subtraction by using Log2.$a = Log 2 \left(CMAX-CMIN\right) - Log 2 \left(LMAX-LMIN\right) ≫ k$

In this case, since it is derived through Log2, the value of k may be used in >> (shift operation) to normalize the value of a.

In chroma signal prediction based on the cross-component linear model, a chroma signal/sample/block may be derived by using a plurality of models.

In deriving a plurality of models, they may be derived from a luma sample at a different position.

For example, one model may be derived from even-numbered luma samples in a reference line and another model may be derived from odd-numbered samples.

For example, samples at the top (above) position of a luma block and samples at the left position may be divided and each divided sample may be used to derive a different model.

Alternatively, in deriving a plurality of models, samples used to derive a model parameter may be divided based on a defined threshold and each divided sample may be used to derive a different model.

For example, by using a specific value as a threshold, samples having a sample value less than or equal to a threshold and samples having a sample value exceeding a threshold may be divided and a different model may be derived from each divided sample.

The threshold may be a value pre-configured in an encoder/a decoder or a value signaled from an encoder to a decoder.

In addition, in deriving a plurality of models, a model may be derived based on the statistical value of luma samples.

For example, by using the average value of luma samples as a threshold, samples having a sample value less than or equal to a threshold and samples having a sample value exceeding a threshold may be divided and a different model may be derived from each divided sample.

For example, sample values of a luma sample are arranged in order of proximity to the average to select N samples from the top and S samples from the bottom, which may be used to derive a different model. In this case, N and S may be a value pre-configured in an encoder/a decoder or a value signaled from an encoder to a decoder.

For example, a sample value range between the maximum value and the minimum value of values of samples may be divided into N groups and the samples of each divided group may be used to derive a different model. In this case, N may be a value pre-configured in an encoder/a decoder or a value signaled from an encoder to a decoder.

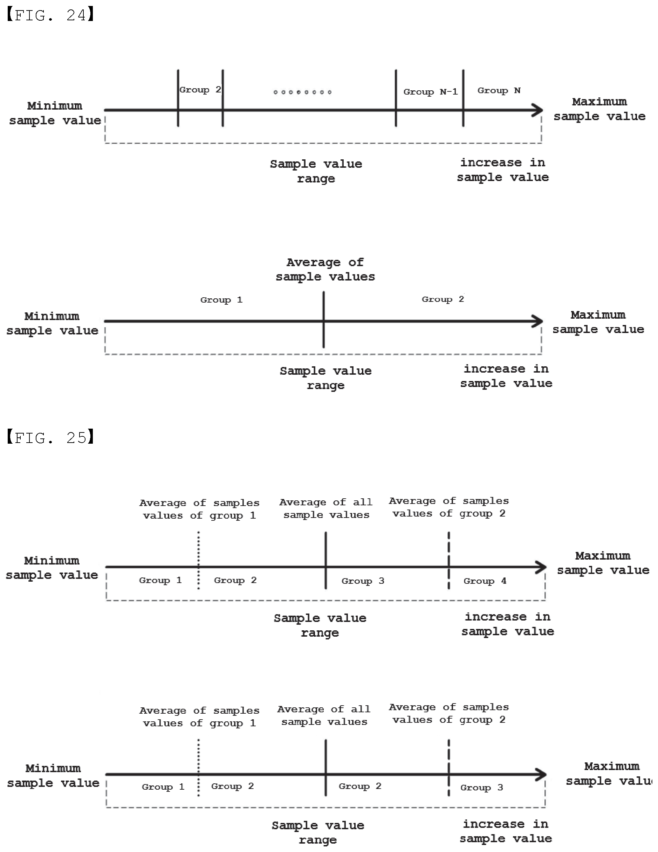

FIG. 24 is an example in which a sample within a sample value range between the minimum sample value and the maximum sample value is divided in a unit of a group.

FIG. 25 is an example in which a new group is generated by using an average value of samples calculated for each group.

For example, when samples are divided in the group unit, a different model may be derived by using the statistical value of samples for each group. In this case, the average value of samples for each group may be calculated and a new sample group may be generated based on an average value to derive a different model. (FIG. 24)

For example, after calculating the average value of samples for each group, samples with a sample value less than or equal to the average value of sample values for each group and samples with a sample value exceeding the average value may be divided into groups to derive a different model for each group. (FIG. 24)

For example, a new model may be derived by dividing the average value of samples calculated for each group into a new group. (FIG. 25)

In dividing a sample (a reference region) for deriving the plurality of models, a sample for deriving a model may be divided based on the centroid of a sample.

For example, a centroid for dividing samples into two groups may be derived by the following method.

STEP 1) The average value of all pixel values may be calculated (AVG_OLD).

STEP 2) Samples may be divided into two groups based on an average value (AVG_OLD) and the average value of samples for each group may be recalculated (AVG_G1, AVG_G2) by using samples belonging to a group for each group.

STEP 3) The median value of average values calculated in two groups may be used as a new average value (AVG_NEW = (AVG_G1 + AVG_G2) and STEP 2 may be repeated.

Regarding this, when STEP 2 starts, AVG_OLD may be updated to AVG_NEW. In this case, when AVG_NEW is equal to AVG_OLD, repetition may be stopped.

STEP 4) AVG_NEW calculated in STEP 3 may be determined as a centroid.

Whether to use a method for dividing a sample by using the centroid may be a value pre-configured in an encoder/a decoder or a value signaled from an encoder to a decoder.

When determining a method for dividing a reference sample (pixel) for generating the plurality of models, at least one of the proposed methods may be selected and used.

The proposed methods may be used to divide a reference region for each method and derive a model, and an optimal method may be determined based on an encoding cost calculated in a prediction encoding process using this.

A model may be derived for each method by using the proposed methods and may be applied to a template configured with the adjacent samples of a current block to determine an optimal method based on a calculated template matching cost.

Among the methods for dividing a sample, an optimal method may be a value pre-configured in an encoder/a decoder or a value signaled from an encoder to a decoder.

In deriving a plurality of models, a model derived from pre-encoded/decoded blocks may be used.

For example, a derived model may be stored for each block and a stored model may be taken from a current block and used.

In this case, a model may be stored for each block or may be stored only when the chroma mode of a corresponding block is determined as an inter-component model-based chroma mode.

In determining a reference block for deriving the model (referring to a stored model coefficient) of the current block, at least one block of adjacent or non-adjacent blocks may be selected and used.

In determining a reference block for deriving the model (referring to a stored model coefficient), at least one block of blocks within a reference picture may be selected and used.

In deriving a plurality of models, a model derived from a block whose size is different from that of a current block may be used.

For example, when the position of a reference region or a reference sample is different according to the size of a block and accordingly, a different model is generated, a model generated from a block in a higher size may be used by a block in a lower size. Conversely, a model derived from a block in a lower size may be used by a block in a higher size.

In deriving a plurality of models, a model derived from a block at a different position in a partition block may be used.

For example, when the position of a reference region or a reference sample is different according to a block position in a partition block and accordingly, a different model is generated, a model derived from a block at a different position in a partition block may be used in a current block.

In deriving a plurality of models, a new model may be derived by modifying the coefficient value of a pre-derived (calculated/derived) model.

In this case, it may be derived by modifying coefficients, biases or non-linear terms of pre-derived (calculated) models of at least one of a coefficient, a bias or a non-linear term configuring a new model.

For example, in a model C'(i,j) = a * L'(i,j) + b in Equation (1) above, a new model may be generated by modifying the value of a or b for a model coefficient a and a bias value b.

Here, when values obtained by modifying a and b are a' and b', a' and b' may be configured in the form of adding, subtracting, multiplying or dividing a and b by a specific value v.

For example, a' = a + v, a' = a - v, a' = a * v, or a' = a /v.

Here, a formula for obtaining a' and b' may be configured in a polynomial form using a and b.

For example, a' = a*t + s.

A coefficient such as v, t, s, etc. used to derive the a' and b' may be a value pre-configured in an encoder/a decoder or a value signaled from an encoder to a decoder.

In this case, when the range of values of a' and b' is W, X, Y, Z (W < a'< X, Y < b'< Z), W, X, Y, Z may be a value pre-configured in an encoder/a decoder or a value signaled from an encoder to a decoder.

In deriving a plurality of models, a new model may be derived through a weighted sum of coefficient values of pre-derived (calculated) models.

In this casee, at least one of a coefficient value, a bias or a non-linear term configuring a new model may be derived through a weighted sum of coefficient values, biases or non-linear terms of pre-derived (calculated) models.

For example, it is assumed that a pre-derived model is as follows.
Model 1: C'(i,j) = a * L'(i,j) + b
Model 2: C'(i,j) = c * L'(i,j) + d
   In this case, it is assumed that model 3 newly generated by using model 1 and model 2 above is as follows.
Model 3: C'(i,j) = e * L'(i,j) + f

In this case, the coefficient e and bias f of model 3 may be generated through a weighted sum of model coefficients and biases of Models 1 and 2.$e = w * a + \left(1-w\right) * c , f = w * b + \left(1-w\right) * d \left(w:weight\right)$

In this case, a weight w may be a value pre-configured in an encoder/a decoder or a value signaled from an encoder to a decoder.

A method for deriving the model may be used to derive not only a plurality of models, but also a single model for a current block.

For example, instead of calculating (deriving) a new model by using reference samples in a current block, a model which is pre-calculated in at least one of an adjacent or neighboring block or a block within a reference picture may be used as a model for a current block.

For example, instead of calculating (deriving) a new model by using neighboring samples in a current block, a model derived through a weighted sum of coefficient values of a pre-derived (calculated) model may be used as a model for a current block.

For example, instead of calculating (deriving) a new model by using neighboring samples in a current block, a model made by modifying the coefficient value of a pre-derived (calculated) model may be used as a model for a current block.

In the chroma signal prediction based on a plurality of models, model information used for generating a chroma signal/block among a plurality of models may be signaled or may be derived by using neighboring encoding information. In this case, model information may include an equation required to derive a chroma signal and coefficient and constant information included therein.

In this case, for example, it may be assumed that four models are derived as follows.
Model 1: C'(I,j) = a * L'(I,j) + b
Model 2: C''(I,j) = c * L'(I,j) + d
Model 3: C‴(I,j) = e * L'(I,j) + f
Model 4: Cʺʺ(I,j) = g * L'(I,j) + h

(A method for signaling model information) In generating a chroma signal/block based on a plurality of models, model information used in generating a final chroma signal/block may be signaled.

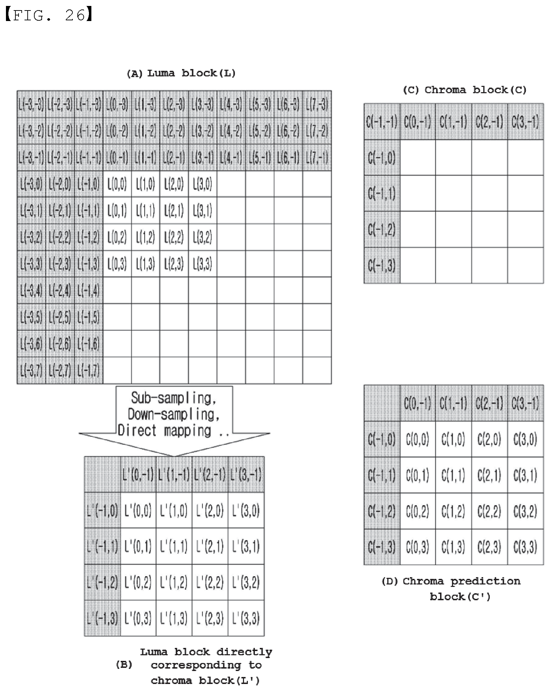

FIG. 26 shows an example of a chroma prediction block and a luma block directly corresponding to a chroma block.

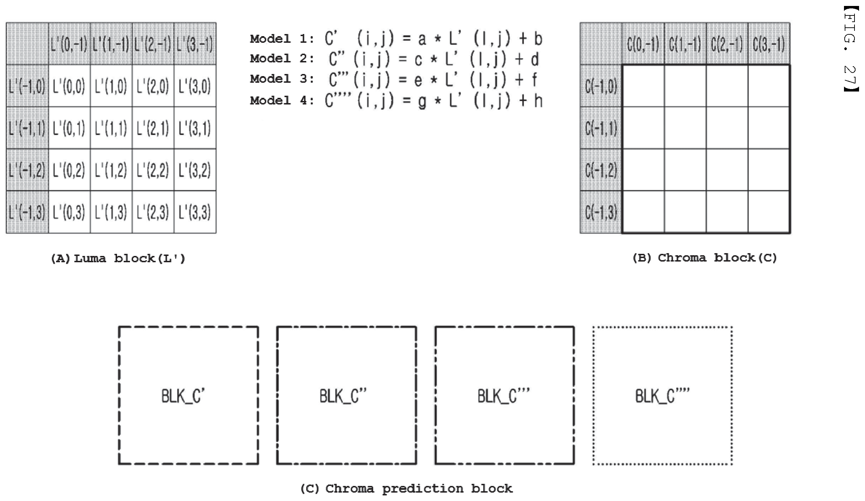

FIG. 27 shows an example of a chroma prediction block.

Specifically, FIG. 27 may 1) use models to generate a prediction sample (C', C'', C‴, Cʺʺ) or a chroma prediction block (BLK_C', BLK_C'', BLK_C‴, BLK_Cʺʺ) for a corresponding region, 2) select a chroma prediction block and model with the minimum error cost through chroma prediction and 3) signal corresponding model information from an encoder to a decoder.

In this case, after the plurality of models are used to generate a chroma prediction block as in FIG. 26/FIG. 27 and perform chroma prediction, an error cost may be calculated.

In this case, a final model may be determined based on an error cost and corresponding model information may be signaled.

For example, a model with the smallest error cost may be determined as a final prediction model.

In this case, an error cost for U and V may be calculated respectively or may be calculated together.

(A method for deriving model information) In generating a chroma signal/block based on a plurality of models, a final model used for generating a final chroma block may be derived by performing chroma prediction through model derivation and model application in a reference region.

For example, in order to derive the final model information, a region for deriving a model in a reference region and a region for calculating an error cost by applying a derived model may be used separately.

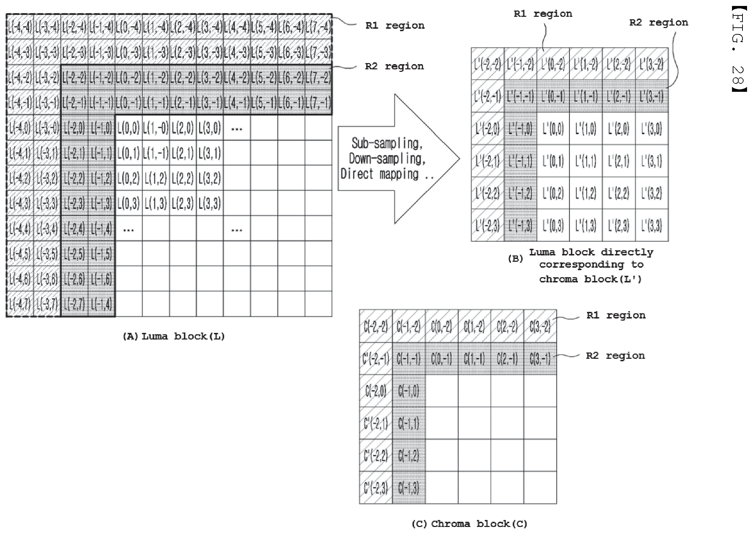

FIG. 28 shows an example of a region used to derive a model among the reference regions and a region required to calculate an error cost between a chroma prediction signal and a chroma signal.

In this case, as in FIG. 28, it may be assumed that a region used to derive a model among the reference regions is R1 and a reference region required to generate a chroma prediction signal by applying a derived model and calculate an error cost for a chroma signal is R2.

In this case, at least one model may be derived by using luma samples in R1 and chroma samples corresponding thereto, and each derived model may be applied to a luma sample in a R2 region to generate chroma prediction samples (C', C'', C‴, Cʺʺ) for each model. In this case, chroma prediction samples may also be combined and configured as one template. (PRED_TMP_C', PRED_TMP_C'', PRED_TMP_C‴, PRED_TMP_Cʺʺ)

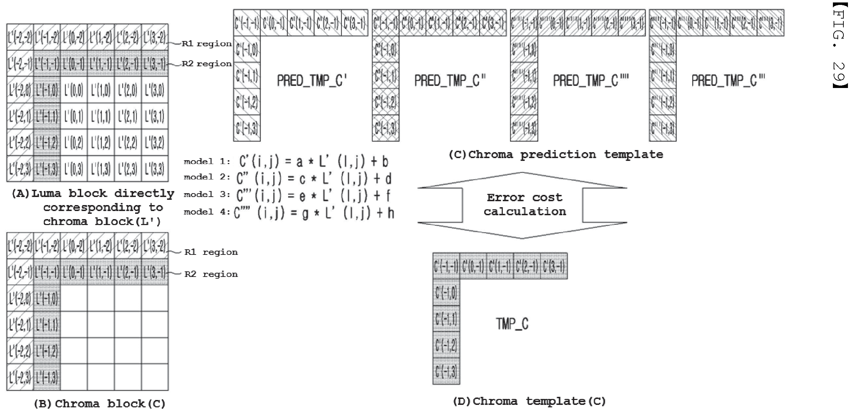

FIG. 29 shows an example of calculating an error cost between a chroma template and a chroma prediction template generated for each model. In this case, as in FIG. 29, a final prediction model may be derived by calculating an error cost between chroma prediction samples (or chroma prediction templates) generated for each model and reconstructed chroma samples (or chroma templates) in a R2 region.

For example, a model with the smallest error cost may be determined as a final prediction model.

In this case, an error cost for U and V may be calculated respectively or may be calculated together.

The size, position and form of the R1 and R2 regions may be variable. In this case, corresponding information may be a value pre-configured in an encoder/a decoder or a value signaled from an encoder to a decoder.

The R1 and R2 regions may be determined based on template matching. For example, as in TIMD, a reference region (R1, template) is determined by using a template to generate a prediction block (template), which may be compared with the adjacent template (R2) of a corresponding block to calculate an error cost.

In chroma signal prediction based on the plurality of models, the number of bits required for signaling model information may be reduced by using the method for deriving model information.

For example, when there are a plurality of models, a prediction mode index (model index) may be defined in the form of a table for each model. In this case, the name of a table may be referred to as 'a chroma prediction mode table'.

In this case, as in a method for deriving model information, chroma prediction samples (C', C'', C‴, Cʺʺ) around a chroma block may be generated for each model and an error cost between a generated chroma prediction sample and a reconstructed chroma sample (C) around a chroma block corresponding thereto may be calculated.

In this case, a prediction mode index may be arranged and used based on the size of a calculated error cost value.

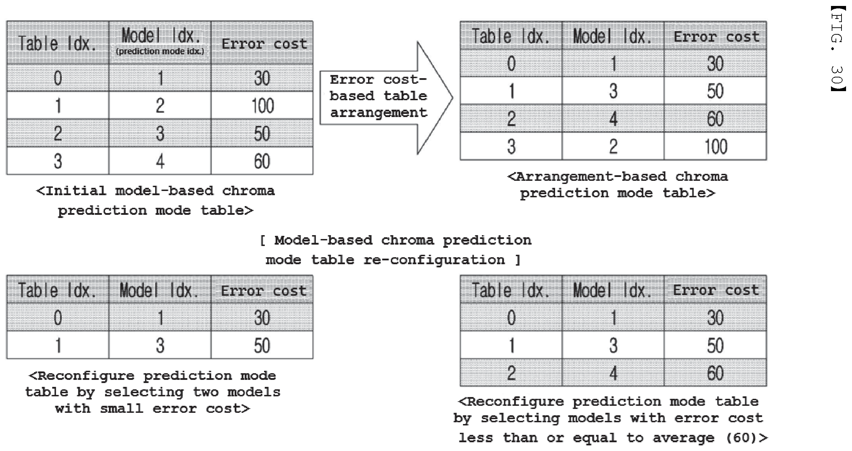

FIG. 30 shows an example of reconfiguring a model-based chroma prediction mode table.

In this case, for example, when a model with a small error cost is arranged to have a high index value on a 'model-based chroma prediction mode table' as in FIG. 30, a chroma prediction block may be generated only for top N models and model information finally determined through chroma prediction may be signaled, saving signaling bits.

In this case, in selecting models that will be included in chroma prediction block generation and a model-based chroma prediction mode table, a decision may be made based on the statistical value of an error cost.

For example, only models with an error cost less than or equal to an average error cost may be selected to generate a chroma prediction mode table and a chroma prediction block.

For example, S models with a small variance value may be selected to generate a chroma prediction mode table and a chroma prediction block.

Here, N and S may be a value pre-configured as a value greater than or equal to 1 and less than or equal to 4 in an encoder/a decoder or a value signaled from an encoder to a decoder.

In chroma signal prediction based on a correlation between inter-color encoding information, a prediction signal may be derived based on a gradient linear model (GLM) that represents a variation in a sample value or a statistical value of sample values among a variety of encoding information.

A method for predicting a chroma signal by using a gradient value-based inter-color linear model may generate a chroma prediction block/signal by using a gradient value calculated by using reconstructed chroma samples adjacent to a current chroma block and reconstructed luma samples at a position corresponding thereto.

Here, a sample may include a pixel, the statistical value of pixel values of a pixel or pixels or encoding information derived from a pixel or pixels.

In this case, a correlation between the neighboring pixels of a luma block and the neighboring pixels of a chroma block or a correlation between statistical values such as the maximum value and the minimum value may be used to derive a linear regression model as in Equation (5) below and calculate the value of model coefficients a and b. And, these two values and the gradient value of pixels within a luma block may be used to derive a chroma signal/block to be currently predicted.$C ′ \left(I, j\right) = a * G \left(I, j\right) + b$

In this case, C(I,j) may refer to a chroma block to be currently predicted or a pixel value within a chroma block, and G(I,j) may refer to a gradient sample derived from a reconstructed luma block corresponding to the position of a chroma block to be currently predicted.

In deriving a model coefficient in the Equation (5), it may be not only derived for each of U and V signals, but a model coefficient applied to both U and V signals may be also derived.

Whether to apply the linear model may be determined for each of U and V, which may be signaled.

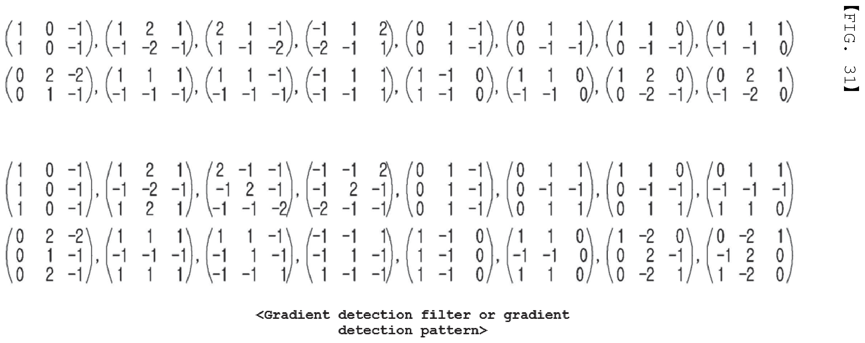

FIG. 31 shows an example of a gradient detection filter or a gradient detection pattern.

In detecting the gradient value, as in FIG. 31, a plurality of gradient detection filters may be used to derive a gradient sample corresponding to a chroma sample. In this case, the number of filters used may be at least one, and the number of filters may be a value pre-configured in an encoder/a decoder or a value signaled from an encoder to a decoder.

In this case, a gradient value may be detected respectively for each filter that detects the gradient value to derive a gradient linear model corresponding thereto.

For example, it is assumed that a gradient value detected through a plurality of gradient detection filters is used to derive a plurality of gradient linear models as follows. (An example is an example of deriving four models by using four gradient detection filters)
Model 1: C' (i,j) = a * G(i,j) + b → Use Filter 1 to derive a gradient value
Model 2: C'' (i,j) = c * G(i,j) + d → Use Filter 2 to derive a gradient value
Model 3: C‴ (i,j) = e * G(i,j) + f → Use Filter 3 to derive a gradient value
Model 4: Cʺʺ (i,j) = g * G(i,j) + h → Use Filter 4 to derive a gradient value

In chroma signal prediction using the gradient linear model, a chroma signal/sample/block may be derived by using a plurality of gradient-based models.

In deriving a plurality of models, a gradient sample may be derived from a luma sample at a different position.

For example, a gradient sample may be generated from even-numbered luma samples on a reference line and one model may be derived by using it. In this case, a gradient sample may be generated from odd-numbered luma samples and another model may be derived by using it.

For example, samples at the top position (above) of a luma block and samples at the left position of a luma block may be divided, each divided sample may be used to generate a gradient sample and a generated gradient sample may be used to derive a different model.

In addition, in deriving a plurality of models, a model may be derived based on the statistical value of gradient samples.

For example, by using the average value of gradient samples as a threshold, samples having a sample value less than or equal to a threshold and samples having a sample value exceeding a threshold may be divided and a different model may be derived from each divided gradient sample.

For example, sample values of a gradient sample are arranged in order of proximity to the average to select N samples from the top and S samples from the bottom, which may be used to derive a different model. In this case, N and S may be a value pre-configured in an encoder/a decoder or a value signaled from an encoder to a decoder.

Alternativeluy, in deriving a plurality of models, a model may be derived based on a defined threshold.

For example, by using a specific value as a threshold, samples having a sample value less than or equal to a threshold and samples having a sample value exceeding a threshold may be divided and a different model may be derived from each divided sample.

The threshold may be a value pre-configured in an encoder/a decoder or a value signaled from an encoder to a decoder.

A plurality of models may be derived by using a gradient sample derived through a plurality of gradient detection filters.

In this case, a plurality of models may be derived by using a gradient sample through one gradient detection filter.

In deriving a plurality of models, a model derived from pre-encoded/decoded blocks may be used.

In deriving a plurality of models, a model derived from a block whose size is different from that of a current block may be used.

In deriving a plurality of models, a model derived from a block at a different position in a partition block may be used.

In deriving a plurality of models, a new model may be derived by modifying the coefficient value of a pre-derived (calculated) model.

In deriving a plurality of models, a new model may be derived through a weighted sum of coefficient values of a pre-derived (calculated) model.

A method for deriving the model may be used to derive not only a plurality of models, but also a single model for a current block.

A method for deriving a plurality of models and a method for deriving a model for a current block may derive a model by using at least one of a plurality of methods for deriving a model used in "Cross-component Linear Model (CCLM)".

Information on a filter used to derive a model that generates a final chroma prediction block among the plurality of gradient detection filters may be signaled or may be derived by using encoding information.

In this case, the number of filters used to derive a model that generates a final chroma prediction block may be at least one, and the number of filters may be a value pre-configured in an encoder/a decoder or a value signaled from an encoder to a decoder.

(A method for signaling gradient detection filter information) Information on a filter used to derive a model that generates a final chroma prediction block among a plurality of gradient detection filters may be signaled.

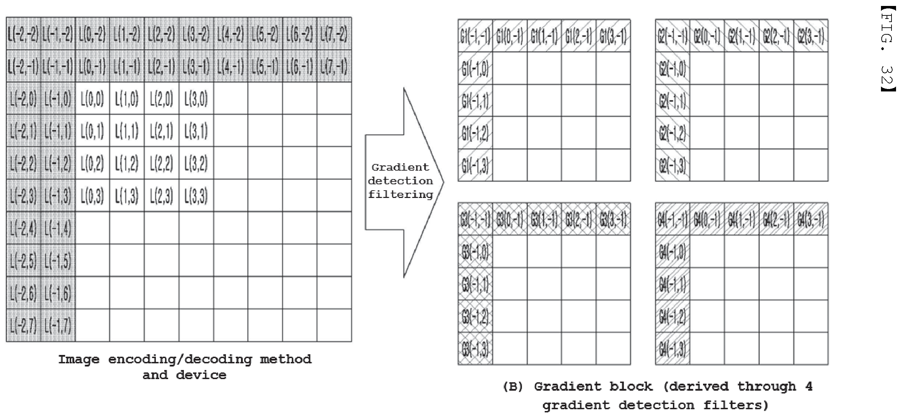

FIG. 32 shows a gradient block derived through four gradient detection filters.

In this case, the plurality of gradient detection filters may be used to derive gradient linear models corresponding to each filter as in FIG. 32, and each model may be used to generate chroma prediction blocks.

In this case, after performing chroma prediction by using a generated chroma prediction block, an error cost may be calculated, and based on an error cost, a gradient linear model used to generate a final chroma prediction block and a gradient detection filter used to derive a corresponding model may be derived.

In this case, for example, a gradient detection filter used to generate a chroma prediction block having the smallest error cost may be determined as a final gradient detection filter and corresponding filter information may be signaled.

In this case, an error cost for U and V may be calculated respectively or may be calculated together.

In this case, for a gradient detection filter, a different filter may be used for each of U and V or the same filter may be used for both U and V. In this case, filter information used may be signaled.

(A method for deriving gradient detection filter information #1) In finding filter information used to derive a model required to generate a final chroma prediction block among a plurality of gradient detection filters, a gradient detection filter used to derive a final model may be derived by performing chroma prediction through model derivation and model application in a reference region.

In deriving information on a gradient detection filter to derive a model used to generate a final chroma prediction block, a reference region (a reference gradient sample) may be used separately.

In this case, in dividing a reference region, a region for deriving a gradient linear model corresponding to each filter through multiple gradient filters and a region for applying a derived model to generate chroma prediction signals (or samples) and calculate an error cost with a chroma signal may be divided.

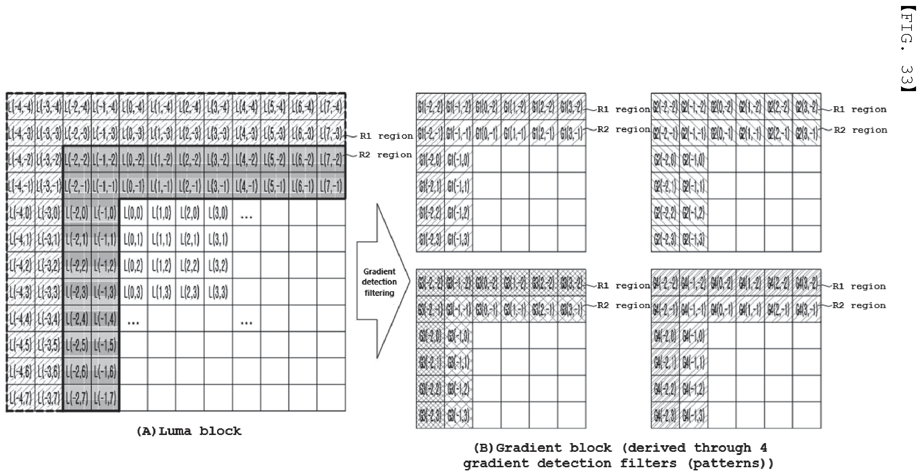

FIG. 33 shows a reference region for deriving a model of a gradient block derived through four gradient detection filters and a reference region required for calculating an error cost.

In this case, as in FIG. 33, it may be assumed that a region for deriving a model among the reference regions is R1 and a reference region required to generate a chroma prediction signal by applying a derived model and calculate an error cost therefor is R2.

In this case, a plurality of gradient detection filters may be used to generate gradient blocks, at least one model may be derived by using gradient samples in the R1 region of each gradient block and chroma samples corresponding thereto and each derived model may be applied to a gradient sample in a R2 region to generate chroma prediction samples (C', C'', C‴, Cʺʺ) for each model. In this case, chroma prediction samples may also be combined and configured as one template.
(PRED_TMP_C', PRED_TMP_C'', PRED_TMP_C‴, PRED_TMP_Cʺʺ)

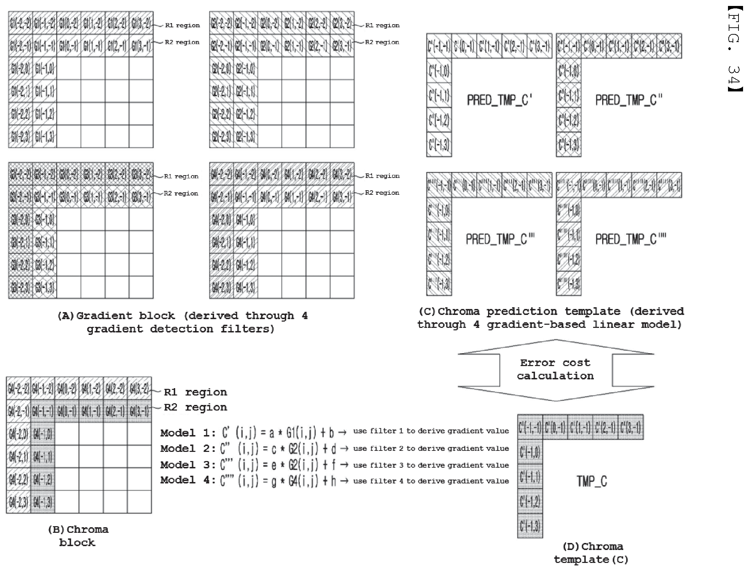

FIG. 34 shows an example of calculating an error cost of a chroma prediction template derived through four gradient-based linear models and a chroma template.

Specifically, in FIG. 34, [STEP 1. Generate a gradient sample] A plurality of gradient detection filters (patterns) may be used to generate gradient samples (or gradient templates) for each filter. [STEP 2. Derive a model coefficient] The model coefficient values of gradient linear models may be derived by using samples included in a reconstructed R1 region among the gradient samples directly corresponding to a chroma block and samples included in a R1 region among the reconstructed neighboring reference samples of a chroma block. In this case, when using a plurality of gradient detection filters (patterns), a gradient linear model corresponding to each filter may be derived. In this case, a plurality of gradient linear models may be derived by dividing samples used for deriving a model coefficient. (For example, even-numbered, odd-numbered) [STEP 3. Generate a chroma prediction sample (template) by using a model] The derived models may be used to generate a chroma prediction sample (C', C'', C‴, Cʺʺ) corresponding to a R2 region among the reconstructed neighboring reference samples of a chroma block. In this case, chroma prediction samples may also be combined to configure one template. [STEP 4. Calculate an error cost] An error cost between the generated chroma prediction templates (PRED_TMP_C', PRED_TMP_C'', PRED_TMP_C‴, PRED_TMP_Cʺʺ) and a chroma template (TMP_C) generated by using samples included in a R2 region among the reconstructed neighboring reference samples of a chroma block corresponding thereto may be calculated. [STEP 5. Select a model and Perform chroma prediction] A model may be selected based on the error cost and a chroma prediction block may be generated to perform chroma prediction. In this case, a filter finally used among a plurality of gradient detection filters (patterns) is a gradient detection filter used to derive a finally determined gradient linear model. In other words, it is a filter used to generate a gradient sample required to derive a finally determined gradient linear model.

In this case, as in FIG. 34, an error cost between chroma prediction samples (or chroma prediction templates) generated for each model and a reconstructed chroma sample (or chroma template) in a R2 region may be calculated to determine a final gradient linear model.

For example, a model with the smallest error cost may be determined as a final prediction model.

In this case, an error cost for U and V may be calculated respectively or may be calculated together.

In this case, a gradient prediction filter used to derive the final model may be determined as a final gradient detection filter.

The size, position and form of the R1 and R2 regions may be variable. In this case, corresponding information may be a value pre-configured in an encoder/a decoder or a value signaled from an encoder to a decoder.

The R1 and R2 regions may be determined based on template matching. For example, as in TIMD, a reference region (R1, template) is determined by using a template to generate a prediction block (template), which may be compared with the adjacent template (R2) of a corresponding block to calculate an error cost.

(A method for deriving gradient detection filter information #2) In finding information on a filter used to derive a model required to generate a final chroma prediction block among a plurality of gradient detection filters, it may be found by using intra prediction mode information.

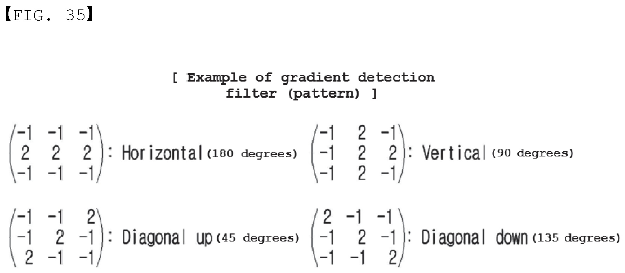

FIG. 35 shows an example of a gradient detection filter (pattern).

For example, when a gradient detection filter (pattern) is designed to be advantageous in detecting a specific gradient (gradient, direction) value as in FIG. 35, a gradient detection filter designed to detect a gradient (gradient, direction) value most similar to the gradient (gradient, direction) value of a prediction mode determined from the directional prediction of a neighboring block or a current block may be used to derive a gradient linear model.

In this case, when the directional prediction mode of a neighboring block or a current block is vertical, a gradient detection pattern designed to detect a vertical component among the given gradient prediction filters (patterns) may be selected.

Similarly to the above, a gradient detection filter designed to detect a gradient (gradient, direction) component most similar to the gradient (gradient, direction) of a prediction mode determined through DIMD in a neighboring block or a current block may be used to derive a gradient linear model.

(A method for deriving gradient detection filter information #3) In finding information on a filter used to derive a model required to generate a final chroma prediction block among a plurality of gradient detection filters, it may be found by using a reconstructed luma sample within a luma block.

For example, samples within a luma block may be used to obtain the histogram of gradient values of corresponding samples as in DIMD to determine a prediction mode for a corresponding block and based on it, a gradient detection filter designed to detect a gradient (gradient, direction) component most similar to the gradient (gradient, direction) of a corresponding prediction mode may be used to derive a gradient linear model.

In addition, a gradient value or a gradient sample may also be derived through neural network-based filtering.

In order to derive the value of model coefficients a and b, information on at least one of adjacent neighboring samples of a chroma block to be currently predicted; adjacent neighboring samples of a luma block corresponding to the position of a chroma block to be currently predicted; a gradient block or a gradient sample generated by using a sample within a luma block and adjacent neighboring samples; a reference line index of a corresponding luma block; and a gradient value derived from luma samples may be used.

For example, N luma samples may be used to derive a gradient sample for a luma sample corresponding to one chroma sample. In this case, N may be an arbitrary positive integer.

For example, at least one of statistical values such as an average, the maximum value, the minimum value, a median value, etc. of at least one of the gradient values of N gradient samples may be calculated to derive and use one representative gradient value.

Luma samples used to derive a gradient sample corresponding to the chroma sample may vary and in addition, a formula for deriving a chroma prediction signal may also vary. Information on luma samples corresponding to the adjacent sample of the current chroma block or information on a formula for deriving the adjacent sample of the current chroma block may be signaled in an encoder.

A luma sample position used to derive the gradient sample or information thereon may be a value pre-configured in an encoder/a decoder or a value signaled from an encoder to a decoder. Alternatively, it may be derived through the encoding information of a neighboring sample or block.

When a plurality of models are used in chroma prediction using the gradient linear model, the amount of signaling bits for model information signaling may be reduced by using the method for deriving model information.

For example, when there are a plurality of models, a prediction mode index (model index) may be defined in the form of a table for each model. In this case, the name of a table may be referred to as 'a chroma prediction mode table'. In this case, a gradient prediction filter index used to derive a model may also be included in a 'chroma prediction mode table'.

In this case, as in a method for deriving model information, chroma prediction samples (C', C'', C‴, Cʺʺ) around a chroma block may be generated for each model and an error cost between a generated chroma prediction sample and a reconstructed chroma sample (C) around a chroma block corresponding thereto may be calculated.

In this case, a prediction mode index may be arranged and used based on the size of a calculated error cost value.

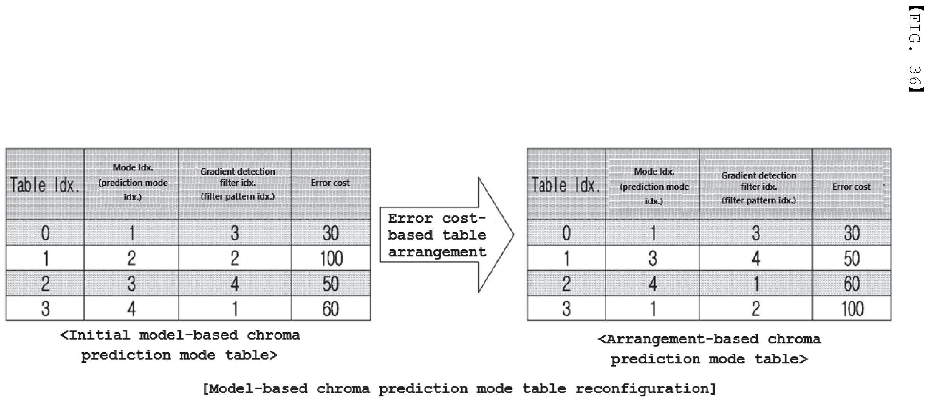

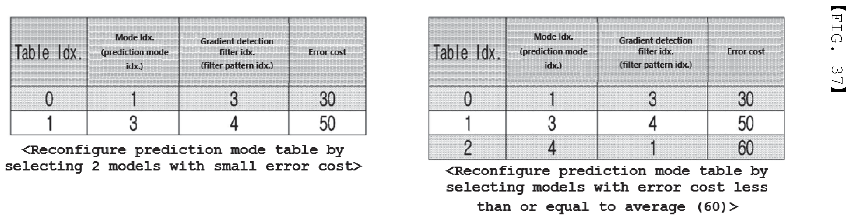

FIG. 36 and FIG. 37 show an example of reconfiguring a model-based chroma prediction mode table.

In this case, for example, when a model with a small error cost is arranged to have a high index value on a 'model-based chroma prediction mode table' as in FIG. 36 and FIG. 37, a chroma prediction block may be generated only for top N models and model information finally determined through chroma prediction may be signaled, saving signaling bits.

In this case, in selecting models that will be included in chroma prediction block generation and a model-based chroma prediction mode table, a decision may be made based on the statistical value of an error cost.

For example, only models with an error cost less than or equal to an average error cost may be selected to generate a chroma prediction mode table and a chroma prediction block.

For example, S models with a small variance value may be selected to generate a chroma prediction mode table and a chroma prediction block.

Here, N and S may be a value pre-configured as a value greater than or equal to 1 and less than or equal to 4 in an encoder/a decoder or a value signaled from an encoder to a decoder.

In the 'chroma prediction mode table', a prediction mode index (a model index) and a gradient prediction filter index may be managed as one. In other words, corresponding indexes may be grouped and expressed as one symbol.

In chroma signal prediction based on an inter-color relationship, a prediction signal may be generated based on a filter based linear model (FLM).

The filter based linear model may uses a correlation between the neighboring samples of a luma block and the neighboring samples of a chroma block or a correlation between statistical values such as the maximum value and the minimum value to derive a filter-based linear regression model as in Equation (6) below and calculate the value of filter coefficient a(x,y) and offset (or bias) b. In addition, a derived filter based linear model and samples in a luma block may be used to derive a chroma block to be currently predicted. $C ′ \left(i, j\right) = {\sum }_{i = 0 , j = 0}^{N - 1} {a}_{\left(x, y\right)} ⋅ {L}_{\left(x, y\right)} + b or C ′ = {\sum }_{i = 0}^{N - 1} {a}_{i} ⋅ {L}_{i} + b$

In this case, C'(i,j), C' may refer to a current chroma prediction block or a sample value within a chroma prediction block, and L(x,y) may refer to a reconstructed luma block/sample at a (x, y) position. (x, y) of a luma sample L(x,y) corresponding to a chroma sample C'(i, j) may be different from a chroma sample position (i, j).

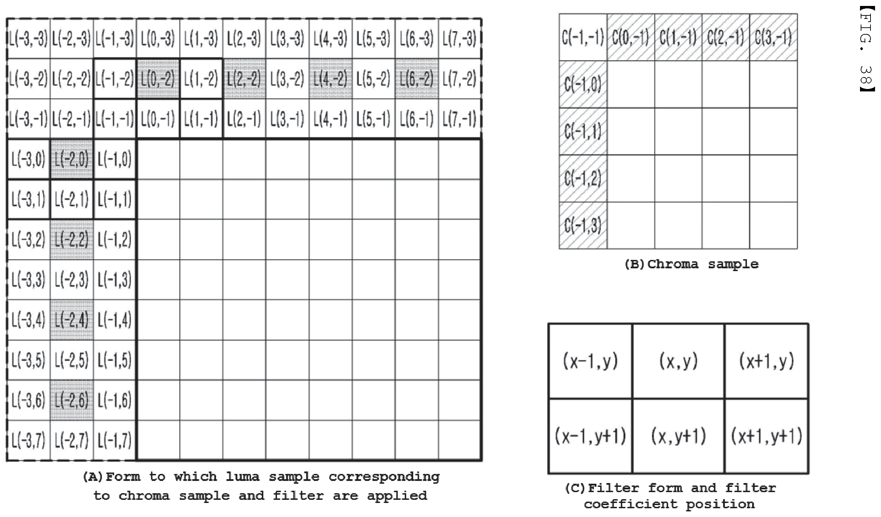

FIG. 38 shows a form in which a luma sample corresponding to a chroma sample and a filter are applied.

In this case, the filter may be applied as in FIG. 38.

In deriving a filter coefficient in Equation (6) above, not only may it be derived for each of U and V signals, but also a model coefficient applied to both U and V signals may be derived.

Whether to apply the filter based linear model may be determined for each of U and V, which may be signaled.

In order to derive the value of filter coefficient a(x,y) and offset b, information on at least one of adjacent neighboring samples of a chroma block to be currently predicted, adjacent neighboring samples of a luma block corresponding to the position of a chroma block to be currently predicted and a reference line index of a corresponding luma block may be used.

In this case, in determining a reference line for deriving the filter coefficient, at least N lines or more may be used as a reference line. Here, N is a positive number greater than or equal to 0, and may be a value pre-configured in an encoder/a decoder or a value signaled from an encoder to a decoder. It may be transmitted from an encoder.

In this case, at least one of statistical values such as an average, the maximum value, the minimum value, a median value, etc. of at least one of N luma samples may be calculated to derive and use at least one representative luma sample and derive a filter coefficient from corresponding representative samples.

For example, only samples whose sample value is greater than the average value of samples among the adjacent samples of a current chroma block may be selected and used to derive a filter coefficient.

For example, only samples whose sample value is smaller than the average value of samples among the adjacent samples of a current chroma block may be selected and used to derive a filter coefficient.

Luma samples for deriving the filter coefficient may vary and in addition, a formula for deriving a chroma prediction sample may also vary. Information on the luma samples or information on a formula for deriving the adjacent sample of the current chroma block may be signaled in an encoder.

The sample position may be a value pre-configured in an encoder/a decoder or a value signaled from an encoder to a decoder. It may be transmitted from an encoder. Alternatively, it may be derived through the encoding information of a neighboring sample or block.

In the filter based linear model, the form of a filter may be determined according to the position (x, y) of a luma sample to which a filter is applied and the number of applied filters, and in this case, the position of a sample to which a filter is applied and the number of filters may be a value pre-configured in an encoder/a decoder or a value signaled from an encoder to a decoder.

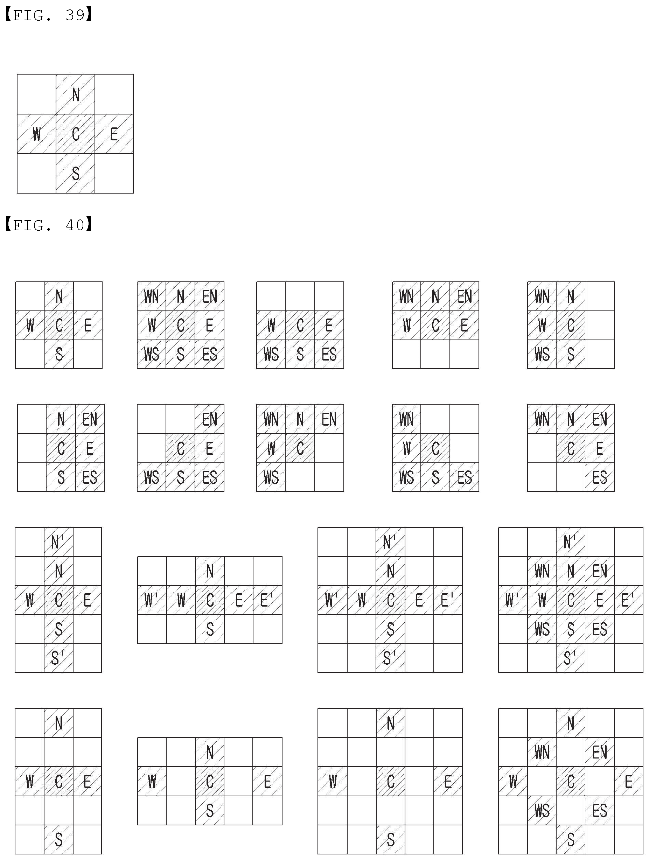

FIG. 39 shows a form of a cross-shaped filter and a position of a sample to which a corresponding filter is applied.

FIG. 40 shows various examples of a form of a filter and a position of a sample to which a filter is applied.

In the filter based linear model, the form of a filter may be determined according to the position (x, y) of a luma sample to which a filter is applied and the number of applied filters, and in this case, the position of a sample to which a filter is applied and the number of filters may be different according to the encoding information of a current block and a neighboring block. (FIG. 40)

In this case, the form of the filter may be configured in various forms such as cross, radial, hexagonal, diamond, triangular patterns, etc.

In configuring the form of the filter, filter coefficients configuring a filter may be positioned at a specific distance.

For example, a distance between filter coefficients included in a filter may be equal.

For example, a distance between filter coefficients included in a filter may be different from each other.

A distance between filter coefficients included in a filter may select at least one of the methods.

In this case, a distance between filter coefficients may be a value pre-configured in an encoder/a decoder or may be signaled from an encoder to a decoder.

In addition, the form of a filter may be configured not only in a symmetrical form, but also in an asymmetrical form.

In addition, when a sample at a position of a filter coefficient included in a filter may not be referenced, it may be replaced with a neighboring referenceable sample.

For example, it may be replaced with a sample at the same spatial position in a reference image.

In this case, the form and size of a filter may be different according to the size of a neighboring/current block.

For example, when the size of a neighboring adjacent block is smaller than the size of a current block, the size of a filter may be reduced or when a sample to which a filter is applied is outside an adjacent block, a corresponding sample may be excluded from filtering.

For example, when the size of a neighboring adjacent block is larger than the size of a current block, the size of a filter may be increased or the number of coefficients or samples included in a filter may be increased.

For example, as the size of a current block increases, the size of a filter may be increased or the number of filter coefficients may be increased. In addition, an interval between filter coefficients may be increased.

For example, as the size of a current block increases, the size of a filter may be decreased or the number of filter coefficients may be decreased. In addition, an interval between filter coefficients may be decreased.

For example, as the size of a current block decreases, the size of a filter may be increased or the number of filter coefficients may be increased. In addition, an interval between filter coefficients may be increased.

For example, as the size of a current block decreases, the size of a filter may be decreased or the number of filter coefficients may be decreased. In addition, an interval between filter coefficients may be decreased.

In this case, the form and size of a filter may be different according to the shape (partition form) of a neighboring/current block.

For example, when a current block or a neighboring block is partitioned and a horizontal size is larger than a vertical size, the size of a filter may be increased in a horizontal direction or conversely, the size of a filter may be increased in a vertical direction.

For example, when a current block or a neighboring block is partitioned and a horizontal size is smaller than a vertical size, the size of a filter may be increased in a vertical direction or conversely, the size of a filter may be increased in a horizontal direction.

For the case, when the number of filter coefficients is determined, a filter coefficient at a position corresponding to the determined direction may be increased or decreased.

In this case, the form and size of a filter may be different according to the prediction mode of a neighboring/current block.

For example, the form and size of a filter may be different according to an intra prediction mode direction. In this case, the size of a filter may be increased in an intra prediction mode direction at the position of a current sample or the number of filter coefficients may be increased. In addition, an interval between filters may also be adjusted. Alternatively, the size of a filter may be decreased from an intra prediction mode direction at the position of a current sample to a corresponding direction at the position of a current sample or the number of filter coefficients may be decreased. In addition, an interval between filters may also be adjusted.

In this case, in deriving a filter coefficient, a filter coefficient may be derived by using sample values at a position that does not correspond to the position of a filter coefficient.

Here, when a filter is given as in FIG. 39 and each filter coefficient is derived, a filter coefficient may generally be obtained by using samples at a position corresponding to the position of each filter coefficient.

In this case, a filter coefficient may be derived by using the statistical value of sample values at a position that does not correspond to the positions of a filter coefficient.

For example, a corresponding filter coefficient may be derived by using a sample derived through the sum of samples at a position different from the position of a corresponding coefficient.

Sample Value at Position of Filter Coefficient N = Sample Value at Position S + Sample Value at Position N

For example, a corresponding filter coefficient may be derived by using a sample derived through a difference with a sample at a different position.

Sample Value at Position of Filter Coefficient N = Sample Value at Position S - Sample Value at Position N

For example, a corresponding filter coefficient may be derived by using a sample derived through multiplication with a sample at a different position.

Sample Value at Position of Filter Coefficient N = Sample Value at Position S x Sample Value at Position N

For example, a corresponding filter coefficient may be derived by using a sample derived through a division operation with a sample at a different position.

Sample Value at Position of Filter Coefficient N = Sample Value at Position S / Sample Value at Position N

For example, a corresponding filter coefficient may be derived by using a relation (or a polynomial) between samples at a different position.

Sample Value at Position of Filter Coefficient N = Sample Value at Position a*S + Sample Value at Position N

Sample Value at Position of Filter Coefficient N = Sample Value at Position w*S + Sample Value at Position (1-w)* N (w: weight)

In this case, a and w in the formula may be a value pre-configured in an encoder/a decoder or may be signaled from an encoder to a decoder.

For example, a corresponding filter coefficient may be derived by using the average value of sample values at the position of a filter coefficient.

In chroma signal prediction based on the filter based linear model, a chroma signal/sample/block may be derived by using a plurality of models.

In deriving the plurality of models, a plurality of filter based linear models may be derived based on 'a luma sample at a different position', 'a statistical value of luma samples', 'a defined threshold', etc. as in 'Cross-component linear model (CCLM)'.

In deriving a plurality of models, a model derived from pre-encoded/decoded blocks may be used. (AC0315/AD0188)

In deriving a plurality of models, a model derived from a block whose size is different from that of a current block may be used.

In deriving a plurality of models, a model derived from a block at a different position in a partition block may be used.

In deriving a plurality of models, a new model may be derived by modifying the coefficient value of a pre-derived (calculated) model.

In deriving a plurality of models, a new model may be derived through a weighted sum of coefficient values of a pre-derived (calculated) model.

A method for deriving the model may be used to derive not only a plurality of models, but also a single model for a current block.

A method for deriving a plurality of models and a method for deriving a model for a current block may derive a model by using at least one or more of methods for deriving a model used in "Cross-component Linear Model (CCLM)".

In chroma signal prediction based on the plurality of models, model information used to generate a chroma signal/block among a plurality of models may be signaled or may be derived by using neighboring encoding information. In this case, model information may include an equation required to derive a chroma signal and coefficient and constant information included therein.

In this case, model information used to generate a final chroma prediction signal/sample/block among a plurality of models may signal corresponding model information by using a model for generating a prediction signal/block/sample with the minimum error cost as a final model in a chroma signal prediction process, as in a method for signaling final model information in a 'Cross-component Linear Model (CCLM)'.

In this case, model information used to generate a final chroma prediction signal/sample/block among a plurality of models may divide a reference region into 'a region (R1) for deriving a model' and 'a region (R2) for applying a derived model and calculating an error cost' to derive a plurality of models from a R1 region and generate a chroma prediction sample using a plurality of models to calculate an error cost with a reconstructed chroma sample in a R2 region, as in a method for deriving final model information in a 'Cross-component Linear Model (CCLM)'. In this case, a final model used to generate a final chroma prediction signal/sample/block may be determined according to a calculated error cost.

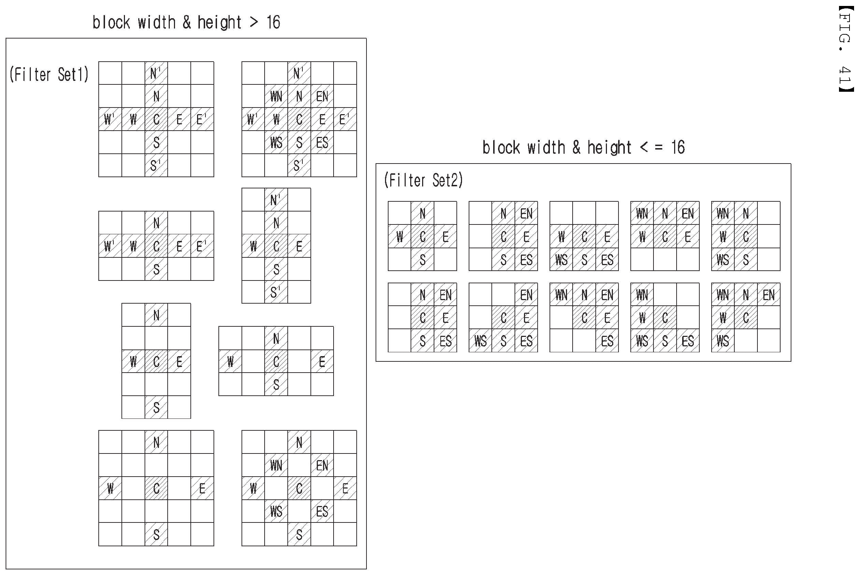

FIG. 41 shows an example of a filter or a filter set configuration according to a block size.

Specifically, referring to FIG. 41, when the width and height of a block are greater than 16, filter set 1 may be used and when the width or height of a block is less than or equal to 16, filter set 2 may be used. At least one filter may be selected and used from each filter set.

When a plurality of filters are selected and used from the filter set, information on a finally determined filter may be signaled from an encoder to a decoder.

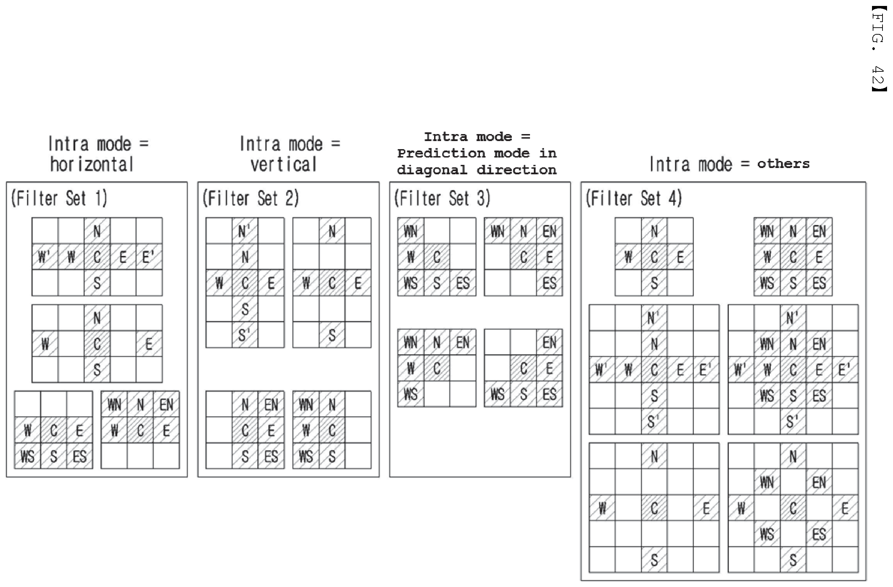

FIG. 42 shows an example of a filter set configuration according to the direction of an intra prediction mode.

At least one filter may be selected and used from each filter set below.

When a plurality of filters are selected and used from the filter set, information on a finally determined filter may be signaled from an encoder to a decoder.

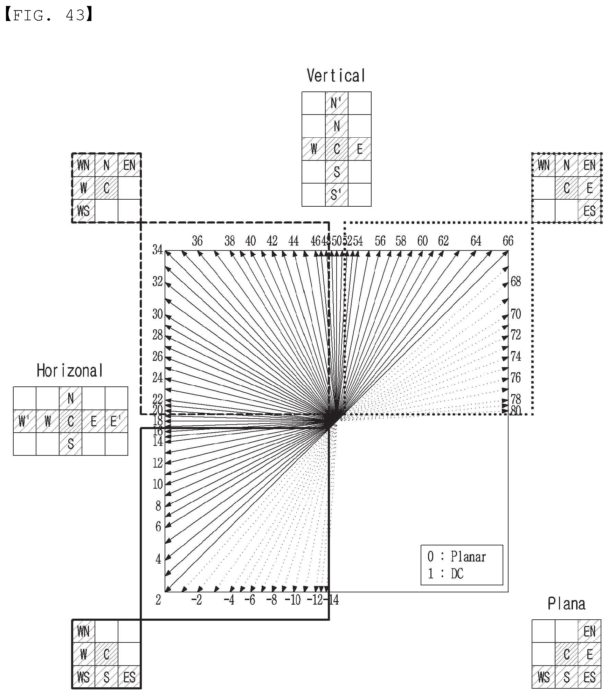

FIG. 43 shows an example of varying a filter according to the prediction direction of an intra prediction mode or the position of samples used to create a prediction mode.

According to the prediction direction of an intra prediction mode or the position of samples used to generate a prediction mode, a filter used may be different as in FIG. 43.

In chroma signal prediction based on an inter-color relationship, a prediction signal may be generated based on a convolutional cross-component model (CCCM).

The convolutional cross-component model may use a correlation between the neighboring samples of a luma block and the neighboring samples of a chroma block or a correlation between statistical values such as the maximum value and the minimum value to derive a model as in Equation (7) below and calculate the value of filter coefficient α_ and offset (or bias) b. Then, a chroma block to be currently predicted may be derived by using a derived filter-based model and samples in a luma block. 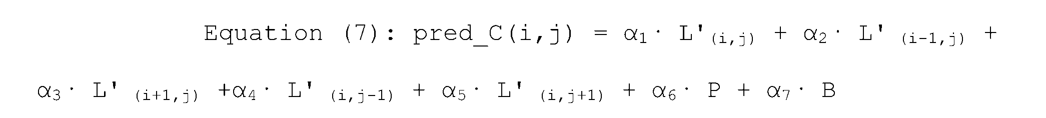 pred_C(i,j) = α1· L'(i,j) + α2· L' (i-1,j) + α3· L' (i+1,j) +α4· L' (i,j-1) + α5· L' (i,j+1) + α6· P + α7 · B
or predChromaVal = α₁ · C + α₂ · N + α₃ · S + α₄ · E + α₅ · W + α₆ · P + α₇ · B $pred_C \left(i, j\right) = {α}_{1} ⋅ {L}_{\left(x, y\right)} + {α}_{2} ⋅ {L}_{\left(\begin{matrix}x - 1 , \\ y\end{matrix}\right)} + {α}_{3} ⋅ {L}_{\left(x+1, y\right)} + {α}_{4} ⋅ {L}_{\left(x, y-1\right)} + {α}_{5} ⋅ {L}_{\left(x, y+1\right)} + {α}_{6} ⋅ P + {α}_{7} ⋅ B$

In this case, pred_C (or pred_C (i, j) ) may refer to a current chroma prediction block or a sample value in a chroma prediction block and L (x, y) may refer to a reconstructed luma block/sample at a (x, y) position.

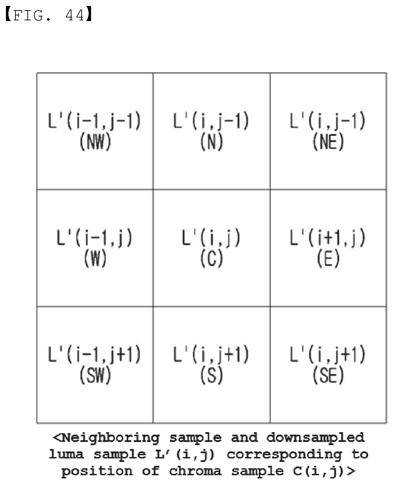

FIG. 44 shows an example of a neighboring sample and a downsampled luma sample L'(i,j) corresponding to the position of a chroma sample C(i,j).

In this case, C, N, S, E, W may be expressed as in FIG. 44.

In this case, P may be defined as a non-linear term as follows.

P(C) = ( C*C + midVal ) >> bitDepth, P = ( C*C + 512 ) >> 10 (for 10bits), and in this case, C may refer to a downsampled luma sample L' at a position corresponding to a chroma signal position C.

In this case, B (bias term) is a scalar offset value between input and output, and for 10 bits, it may be configured as 512 which is generally the median value of a sample.

However, L'(x,y) may refer to the luma sample of a luma block whose size is adjusted to be the same as that of a chroma block through subsampling, downsampling, etc. and L(x,y) may refer to the luma sample of a luma block whose size is not the same as that of a chroma block. Accordingly, (x, y) of a luma sample L(x,y) corresponding to a chroma prediction sample pred_C(i, j) may be different from a chroma sample position (i, j).

As in a case for Equation (7-1) above, a luma sample (L), not a downsampled luma sample (L'), may be used to define a CCCM model and derive a model parameter.

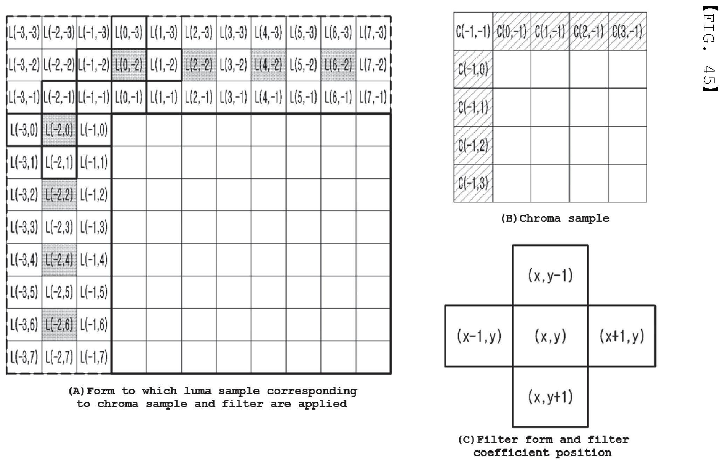

FIG. 45 shows an example of a form in which a luma sample corresponding to a chroma sample and a filter are applied.

In this case, the model (filter) may be applied as in FIG. 45.

In deriving a model coefficient in the Equation (7), it may be not only derived for each of U and V signals, but a model coefficient applied to both U and V signals may be also derived.

Whether to apply the model may be determined for both or each of U and V, which may be signaled from an encoder to a decoder.

In order to derive the value of filter coefficient α and offset (bias) b, information on at least one of adjacent neighboring samples of a chroma block to be currently predicted, adjacent neighboring samples of a luma block corresponding to the position of a chroma block to be currently predicted and a reference line index of a corresponding luma block may be used.

In this case, in determining a reference line for deriving the filter coefficient, at least N lines or more may be used as a reference line. Here, N is a positive number greater than or equal to 0, and may be a value pre-configured in an encoder/a decoder or a value signaled from an encoder to a decoder. It may be transmitted from an encoder.

In this case, at least one of statistical values such as an average, the maximum value, the minimum value, a median value, etc. of at least one of N luma samples may be calculated to derive and use at least one representative luma sample and derive a filter coefficient from corresponding representative samples.

For example, only samples whose sample value is greater than the average value of samples among the adjacent samples of a current chroma block may be selected and used to derive a filter coefficient.

For example, only samples whose sample value is smaller than the average value of samples among the adjacent samples of a current chroma block may be selected and used to derive a filter coefficient.

Luma samples for deriving the filter coefficient may vary and in addition, a formula for deriving a chroma prediction sample may also vary. Information on the luma samples or information on a formula for deriving the adjacent sample of the current chroma block may be signaled in an encoder.

The sample position may be a value pre-configured in an encoder/a decoder or a value signaled from an encoder to a decoder. It may be transmitted from an encoder. Alternatively, it may be derived through the encoding information of a neighboring sample or block.

A reference region (or line) for deriving the filter coefficient and offset may be not only selected from a referenceable region in the same picture, but may also be used by selecting a reference region from a different referenceable picture.

In this case, a sample value within a reference region taken from a different picture may be scaled and used.

In the convolutional cross-component model, the form of a filter may be determined according to the position (x, y) of a luma sample to which a filter is applied and the number of filters applied, and in this case, the position of a sample to which a filter is applied and the number of filters may be a value pre-configured in an encoder/a decoder or a value signaled from an encoder to a decoder.

In the filter based linear model, the form of a filter may be determined according to the position (x, y) of a luma sample to which a filter is applied and the number of applied filters, and in this case, the position of a sample to which a filter is applied and the number of filters may be different according to the encoding information of a current block and a neighboring block.

In this case, the form of the filter may be configured in various forms such as cross, radial, hexagonal, diamond, triangular patterns, etc.

In configuring the form of the filter, filter coefficients configuring a filter may be positioned at a specific distance.

For example, a distance between filter coefficients included in a filter may be equal.

For example, a distance between filter coefficients included in a filter may be different from each other.

A distance between filter coefficients included in a filter may select at least one of the methods.

In this case, a distance between filter coefficients may be a value pre-configured in an encoder/a decoder or may be signaled from an encoder to a decoder.

In addition, the form of a filter may be configured not only in a symmetrical form, but also in an asymmetrical form.

In addition, when a sample at a position of a filter coefficient included in a filter may not be referenced, it may be replaced with a neighboring referenceable sample.

For example, it may be replaced with a sample at the same spatial position in a reference image.

In this case, the form and size of a filter may be different according to the size of a neighboring/current block.

For example, when the size of a neighboring adjacent block is smaller than the size of a current block, the size of a filter may be reduced or when a sample to which a filter is applied is outside an adjacent block, a corresponding sample may be excluded from filtering.

For example, when the size of a neighboring adjacent block is larger than the size of a current block, the size of a filter may be increased or the number of coefficients or samples included in a filter may be increased.

For example, as the size of a current block increases, the size of a filter may be increased or the number of filter coefficients may be increased. In addition, an interval between filter coefficients may be increased.

For example, as the size of a current block increases, the size of a filter may be decreased or the number of filter coefficients may be decreased. In addition, an interval between filter coefficients may be decreased.

For example, as the size of a current block decreases, the size of a filter may be increased or the number of filter coefficients may be increased. In addition, an interval between filter coefficients may be increased.

For example, as the size of a current block decreases, the size of a filter may be decreased or the number of filter coefficients may be decreased. In addition, an interval between filter coefficients may be decreased.

In this case, the form and size of a filter may be different according to the shape (partition form) of a neighboring/current block.

For example, when a current block or a neighboring block is partitioned and a horizontal size is larger than a vertical size, the size of a filter may be increased in a horizontal direction or conversely, the size of a filter may be increased in a vertical direction.

For example, when a current block or a neighboring block is partitioned and a horizontal size is smaller than a vertical size, the size of a filter may be increased in a vertical direction or conversely, the size of a filter may be increased in a horizontal direction.

For the case, when the number of filter coefficients is determined, a filter coefficient at a position corresponding to the determined direction may be increased or decreased.

In this case, the form and size of a filter may be different according to the prediction mode of a neighboring/current block.

For example, the form and size of a filter may be different according to an intra prediction mode direction. In this case, the size of a filter may be increased in an intra prediction mode direction at the position of a current sample or the number of filter coefficients may be increased. In addition, an interval between filters may also be adjusted. Alternatively, the size of a filter may be decreased from an intra prediction mode direction at the position of a current sample to a corresponding direction at the position of a current sample or the number of filter coefficients may be decreased. In addition, an interval between filters may also be adjusted.

The form and size of the filter may be determined by using at least one of filter form and size determination methods in a 'Filter based Linear Model (FLM)' mentioned above.

In chroma signal prediction based on the convolutional cross-component model, a plurality of models may be used to derive a chroma signal/sample/block.

In deriving the plurality of models, a plurality of filter based linear models may be derived based on 'a luma sample at a different position', 'a statistical value of luma samples', 'a defined threshold', etc. as in 'Cross-component linear model (CCLM)'.

In deriving a plurality of models, a model derived from pre-encoded/decoded blocks may be used.

In deriving a plurality of models, a model derived from a block whose size is different from that of a current block may be used.

In deriving a plurality of models, a model derived from a block at a different position in a partition block may be used.

In deriving a plurality of models, a new model may be derived by modifying the coefficient value of a pre-derived (calculated) model.

In deriving a plurality of models, a new model may be derived through a weighted sum of coefficient values of a pre-derived (calculated) model.

A method for deriving the model may be used to derive not only a plurality of models, but also a single model for a current block.

A method for deriving a plurality of models and a method for deriving a model for a current block may derive a model by using at least one or more of methods for deriving a model used in "Cross-component Linear Model (CCLM)" and Filter based Linear Mode (FLM).

In chroma signal prediction based on the plurality of models, model information used to generate a chroma signal/block among a plurality of models may be signaled or may be derived by using neighboring encoding information. In this case, model information may include an equation required to derive a chroma signal and coefficient and constant information included therein.

In this case, model information used to generate a final chroma prediction signal/sample/block among a plurality of models may signal corresponding model information by using a model for generating a prediction signal/block/sample with the minimum error cost as a final model in a chroma signal prediction process, as in a method for signaling final model information in a 'Cross-component Linear Model (CCLM)'.

In this case, model information used to generate a final chroma prediction signal/sample/block among a plurality of models may divide a reference region into 'a region (R1) for deriving a model' and 'a region (R2) for applying a derived model and calculating an error cost' to derive a plurality of models from a R1 region and generate a chroma prediction sample using a plurality of models to calculate an error cost with a reconstructed chroma sample in a R2 region, as in a method for deriving final model information in a 'Cross-component Linear Model (CCLM)'. In this case, a final model used to generate a final chroma prediction signal/sample/block may be determined according to a calculated error cost.

In chroma signal prediction based on an inter-color relationship, a prediction signal may be generated based on a Gradient and location based Convolutional cross-component Model (GL-CCCM).

The GL-CCCM may use a correlation between the neighboring samples of a luma block and the neighboring samples of a chroma block, in particular, gradient information between neighboring samples (, ) and the position information (X, Y) of a corresponding sample within a block to derive a model as in Equation (8) below and calculate the value of filter coefficient α and offset (or bias) b. Then, a chroma block to be currently predicted may be derived by using a derived filter-based model and samples in a luma block. $\begin{matrix}pred_C \left(i, j\right) = \\ {α}_{1} ⋅ L {′}_{\left(i, j\right)} + {α}_{2} ⋅ {G}_{y} + {α}_{3} ⋅ {G}_{x} + {α}_{4} ⋅ Y + {α}_{5} ⋅ X + {α}_{6} ⋅ P + {α}_{7} ⋅ B\end{matrix}$
or predChromaVal = α₁ ·C+α₂ ·G+α₃ ·G+α₄ ·Y+α₅ ·X+α₆ ·P+α₇ ·B

In this case, pred_C(pred_C(i,j) ) may refer to a current chroma prediction block or a sample value within a chroma prediction block and L(x,y) may refer to a reconstructed luma block/sample at a (x, y) position.

The position information Y and X of a corresponding sample within a block may refer to a position (a coordinate) moved horizontally (X) and vertically (Y) from the top-left position of a block.

In this case, Gy and Gx above may be expressed as follows.$Gy = \left(2N+NW+NE\right) - \left(2S+SW+SE\right)$$Gx = \left(2W+NW+SW\right) - \left(2E+NE+SE\right)$

In this case, C, N, S, E, W may be expressed as in FIG. 44.

In this case, P may be defined as a non-linear term as follows.

P(C) = ( C*C + midVal ) >> bitDepth, P = ( C*C + 512 ) >> 10 (for 10bits), and in this case, C may refer to a downsampled luma sample L' at a position corresponding to a chroma signal position C.

In this case, B (bias term) is a scalar offset value between input and output, and for 10 bits, it may be configured as 512 which is generally the median value of a sample.

However, L'(x,y) may refer to the luma sample of a luma block whose size is adjusted to be the same as that of a chroma block through subsampling, downsampling, etc. and L(x,y) may refer to the luma sample of a luma block whose size is not the same as that of a chroma block. Accordingly, (x, y) of a luma sample L(x,y) corresponding to a chroma prediction sample pred_C(i, j) may be different from a chroma sample position (i, j).

In deriving a model coefficient in the Equation (8), it may be not only derived for each of U and V signals, but a model coefficient applied to both U and V signals may be also derived.

Whether to apply the model may be determined for both or each of U and V, which may be signaled from an encoder to a decoder.

In order to derive the value of filter coefficient αₖ and offset (bias) b, information on at least one of adjacent neighboring samples of a chroma block to be currently predicted, adjacent neighboring samples of a luma block corresponding to the position of a chroma block to be currently predicted and a reference line index of a corresponding luma block may be used.

In the convolutional cross-component model, the form of a filter may be determined according to the position (x, y) of a luma sample to which a filter is applied and the number of filters applied, and in this case, the position of a sample to which a filter is applied and the number of filters may be a value pre-configured in an encoder/a decoder or a value signaled from an encoder to a decoder.

In the filter based linear model, the form of a filter may be determined according to the position (x, y) of a luma sample to which a filter is applied and the number of applied filters, and in this case, the position of a sample to which a filter is applied and the number of filters may be different according to the encoding information of a current block and a neighboring block.

In chroma signal prediction based on the GL-CCCM model, a plurality of models may be used to derive a chroma signal/sample/block.

In chroma signal prediction based on the plurality of models, model information used to generate a chroma signal/block among a plurality of models may be signaled or may be derived by using neighboring encoding information. In this case, model information may include an equation required to derive a chroma signal and coefficient and constant information included therein.

An embodiment of the methods may be applied in the same manner as a method applied in CCLM/GLM/FLM/CCCM defined above.

In chroma signal prediction based on an inter-color relationship, a prediction signal may be generated based on a CCCM using multiple downsampling filters (MDF-CCCM).

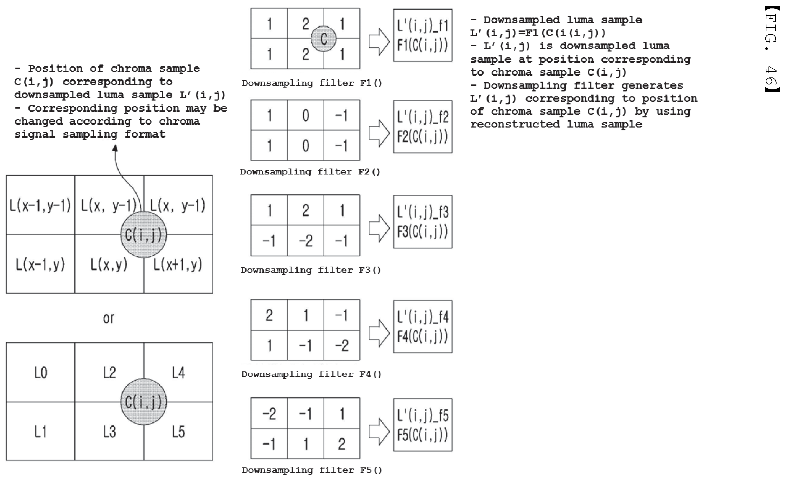

FIG. 46 shows an example of using a plurality of downsampling filters to generate a luma sample corresponding to a chroma sample.

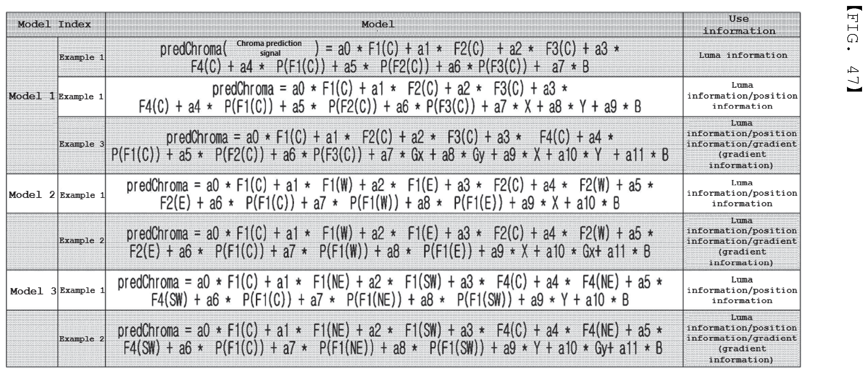

FIG. 47 shows a model for generating a chroma prediction signal and information used by a corresponding model.

In FIG. 47, ai may be a filter coefficient (A model parameter) (derived by LDL decomposition). The C may refer to a downsampled luma sample L' corresponding to a chroma sample position, not a chroma sample. P() is non-linear term -> P(C) = ( C*C + midVal ) >> bitDepth -> P = ( C*C + 512 ) >> 10 (for 10 bits) and in this case, C may be a downsampled luma sample L' at a position corresponding to a chroma signal position C. B (bias term) may be a scalar offset value between input and output (generally for 10 bits, may be configured as 512 which is the median value of a sample). Y and X may be a position (a coordinate) moved horizontally (X) and vertically (Y) from the top-left position of a block. It may be Gy = (2N + NW + NE) - (2S + SW + SE) and Gx = (2W + NW + SW) - (2E + NE + SE).

In deriving an inter-component prediction model based on a correlation between the neighboring samples of a luma block and the neighboring samples of a chroma block, the MDC-CCCM may use a plurality of downsampling filters as in FIG. 46 to define a model as in FIG. 47 (Example 1) and calculate the value of filter coefficient αₖ and offset (or bias) b in generating a luma sample corresponding to a chroma sample. Then, a chroma block to be currently predicted may be derived by using a derived filter-based model and samples in a luma block.

In performing the downsampling, a variety of filters defined in FIGS. 40 to 42 as well as a filter in FIG. 46 may be used.

In defining the model, gradient information between pixels and the position information (location) of a luma pixel within a luma block as well as a luma pixel (L, L') may be used as in FIG. 47. (Examples 2 and 3 in FIG. 47)

According to downsampling filter information used to generate the downsampled luma sample L'(i,j), an inter-component prediction model may be defined differently.

For example, according to the type of a used filter, the number of model parameters and the input of a model (a luma sample, a gradient, a location) may be changed to define a model and derive a model coefficient.

Whether to apply the derived model, model information and downsampling filter information used for deriving a model may be pre-configured in an encoder and a decoder or may be signaled from an encoder to a decoder.

In this case, in defining one inter-component prediction model, a downsampled (L'(i,j)) luma sample required to derive a model may be generated by using at least one downsampling filter.

For example, as in FIG. 46, in generating a luma sample corresponding to each chroma sample, a plurality of filters may be applied to one sample position to generate a plurality of luma samples or a filter different according to a sample position may be applied to generate a downsampled luma sample at a chroma sample position. In this case, a sample downsampled by at least one filter may be used to define an inter-component prediction model and derive the model parameter of a model as in FIG. 43.

In deriving the model parameter of the model, it may not only be derived for each of U and V signals, but also a model coefficient applied to both U and V signals may be derived.

Whether to apply the model may be determined for both or each of U and V, which may be signaled from an encoder to a decoder.

In order to derive the value of filter coefficient αₖ and offset (bias) b, information on at least one of adjacent neighboring samples of a chroma block to be currently predicted, adjacent neighboring samples of a luma block corresponding to the position of a chroma block to be currently predicted and a reference line index of a corresponding luma block may be used.

In the convolutional cross-component model, the form of a filter may be determined according to the position (x, y) of a luma sample to which a filter is applied and the number of filters applied, and in this case, the position of a sample to which a filter is applied and the number of filters may be a value pre-configured in an encoder/a decoder or a value signaled from an encoder to a decoder.

In the filter based linear model, the form of a filter may be determined according to the position (x, y) of a luma sample to which a filter is applied and the number of applied filters, and in this case, the position of a sample to which a filter is applied and the number of filters may be different according to the encoding information of a current block and a neighboring block.

In chroma signal prediction based on the GL-CCCM model, a plurality of models may be used to derive a chroma signal/sample/block.

In chroma signal prediction based on the plurality of models, model information used to generate a chroma signal/block among a plurality of models may be signaled or may be derived by using neighboring encoding information. In this case, model information may include an equation required to derive a chroma signal and coefficient and constant information included therein.

An embodiment of the methods may be applied in the same manner as a method applied in CCLM/GLM/FLM/CCCM defined above.

In chroma signal prediction based on an inter-color relationship, a prediction signal may be generated based on a CCCM using non-downsampled luma samples (NS-CCCM).

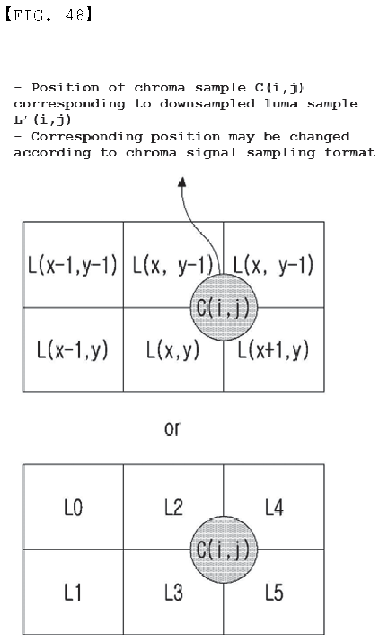

FIG. 48 shows a position of a chroma sample corresponding to a down-sampled luma sample.

CCCM/MDF-CCCM/GL-CCCM defined above derive a chroma prediction signal by modeling a correlation between the luma sample (L') of a downsampled neighboring reconstructed region and a chroma sample ⓒ corresponding thereto, whereas NS-CCCM may define an inter-component prediction model which will predict a chroma sample as in Equation below by using adjacent luma samples corresponding to a chroma sample position to be predicted as in FIG. 48. $\begin{matrix}pre_C \left(Chroma Prediction Signal\right) = \\ {\sum }_{i = 0}^{5} {a}_{i} ⋅ {L}_{i} + {\sum }_{i = 6}^{7} {a}_{i} ⋅ \left(\left({\left({L}_{i - 4}\right)}^{2}+β\right)≫bitDepth\right) + {a}_{8} ⋅ β\end{matrix}$
or pre_C = *aᵢ*·*L*_{(*x*,*y*)}+*a*₂·*L*_{(*x-1,y*)}+*a*₃·*L*_{(*x*+1,}*_{y)}+a*₄·*L*_{(*x*,*y*-1)}+*a*₅·*L*_{(*x*,*y*+1)}+*a*_{6·}*P+a*₇·*B* $\begin{matrix}pre_C = \\ {\sum }_{i = 0}^{5} {a}_{i} ⋅ \left({L}_{i}-offsetLuma\right) + {\sum }_{i = 6}^{9} {a}_{i} ⋅ \left(\left({\left({L}_{i - 4}-offsetLuma\right)}^{2}+β\right)≫bitDepth\right) + {a}_{10} ⋅ β + offsetChroma\end{matrix}$

Equation (9) above is the same as a model in a CCCM that uses a luma sample (L), not a downsampled luma sample (L'), as input.

In this case, pre_C may refer to a predicted chroma sample (chroma prediction sample), Li may refer to a chroma signal neighboring luma sample, ai may refer to a model coefficient (parameter) and β may refer to an offset (or a bias).

Pⓒ = ( C*C + midVal ) >> bitDepth, P = ( C*C + 512 ) >> 10 (for 10 bits), and in this case, C may refer to a downsampled luma sample L' at a position corresponding to a chroma signal position C.

Compared to a method in which a MDF-CCCM uses a downsampling filter to generate downsampled luma samples (L'0 to L'5) corresponding to a chroma sample C by using luma samples (L0 to L1) around a chroma sample C and uses them to derive a model and predict a chroma prediction sample as in FIG. 46, a NS-CCC may define a model and derive a model parameter by directly using luma samples (L0 to L1) around a chroma sample C without filtering for downsampling as in FIG. 48. Afterwards, a chroma signal may be predicted through a derived model.

In this case, an equation may be configured by using "offsetLuma" and "offsetChroma" values as in Equation (9-1).

Here, an offset value may be defined as the average value of reconstructed samples around a luma block and a chroma block.

In this case, at least one sample among the neighboring reconstructed samples may be used to calculate an offset value.

In this case, for calculating an offset value, a neighboring reconstructed sample may be limited to samples within a reference region used to derive a model parameter.

In this case, offsetChroma may be calculated for each or both of U and V.

In defining the model, gradient information between pixels and the position information (location) of a luma pixel within a luma block as well as a luma pixel (L, L') may be used.

In deriving the model parameter of the model, it may not only be derived for each of U and V signals, but also a model coefficient applied to both U and V signals may be derived.

Whether to apply the model may be determined for both or each of U and V, which may be signaled from an encoder to a decoder.

In order to derive the value of filter coefficient αₖ and offset (bias) b, information on at least one of adjacent neighboring samples of a chroma block to be currently predicted, adjacent neighboring samples of a luma block corresponding to the position of a chroma block to be currently predicted and a reference line index of a corresponding luma block may be used.

In the convolutional cross-component model, the form of a filter may be determined according to the position (x, y) of a luma sample to which a filter is applied and the number of filters applied, and in this case, the position of a sample to which a filter is applied and the number of filters may be a value pre-configured in an encoder/a decoder or a value signaled from an encoder to a decoder.

In the filter based linear model, the form of a filter may be determined according to the position (x, y) of a luma sample to which a filter is applied and the number of applied filters, and in this case, the position of a sample to which a filter is applied and the number of filters may be different according to the encoding information of a current block and a neighboring block.

In chroma signal prediction based on the GL-CCCM model, a plurality of models may be used to derive a chroma signal/sample/block.

In chroma signal prediction based on the plurality of models, model information used to generate a chroma signal/block among a plurality of models may be signaled or may be derived by using neighboring encoding information. In this case, model information may include an equation required to derive a chroma signal and coefficient and constant information included therein.

An embodiment of the methods may be applied in the same manner as a method applied in CCLM/GLM/FLM/CCCM defined above.

In determining the chroma signal prediction method, when a prediction signal (or a prediction block) is generated by using an inter-color correlation-based model, a plurality of different models may be combined and used.

In this case, a chroma prediction signal/sample/block may be generated by using at least one model of a cross-component linear model (CCLM), a gradient linear model (GLM), a filter based linear model (FLM) and a convolutional cross-component model (CCCM).

For example, a cross-component linear model (CCLM) and a gradient linear model (GLM) may be combined as in Equation below and used to generate a chroma prediction signal/sample/block.$C ′ \left(i, j\right) = a 1 * G \left(i, j\right) + a 2 * L ′ \left(I, j\right) + b$

Here, a1 and a2 are a model coefficient value, b is an offset (or a bias), L'(I,j) is a luma sample corresponding to a chroma sample and G(i,j) is a gradient sample corresponding to a chroma sample.

In the filter linear model (FLM) and the convolutional cross-component model (CCCM, GL-CCCM, MDF-CCCM, NS-CCCM), a filter and a model for generating a prediction signal may be used as the same concept.

In determining the inter-component prediction model-based chroma signal prediction method, when a prediction signal (or a prediction block) is generated by using a model based on an inter-color correlation, a plurality of different models may be combined and used.

In deriving the inter-component prediction model for a target block, inter-component prediction model information which will be used for a target block may be derived from a pre-encoded/decoded block.

In this case, model information that is pre-calculated or stored in a (pre-encoded/decoded) neighboring block may be taken and used for chroma prediction for a target block.

In this case, the coefficient value of a model derived from a neighboring block may be modified to derive a new model.

For example, when a model derived from a neighboring block is a CCLM, a new model may be generated by modifying the value of a or b for model coefficient a and bias value b.

Here, when values obtained by modifying a and b are a' and b', a' and b' may be configured in the form of adding, subtracting, multiplying or dividing a and b by a specific value v.$a ′ = a + v , a ′ = a - v , a ′ = a * v , a ′ = a / v$

A coefficient such as v, t, s, etc. used to derive the a' and b' may be a value pre-configured in an encoder/a decoder or a value signaled from an encoder to a decoder.

In this case, when the range of values of a' and b' is W, X, Y, Z(W < a'< X, Y < b' < Z), W, X, Y, Z may be a value pre-configured in an encoder/a decoder or a value signaled from an encoder to a decoder.

When a new model is derived by modifying the model coefficient (or parameter), a difference in a coefficient (or parameter) value between an original model and a modified model may be signaled from an encoder to a decoder.

The model coefficient may be corrected through template matching based on a modification method.

For example, after a template matching cost is calculated by applying a modified model to a template region, a model coefficient may be corrected by modifying a model coefficient to ensure that a template matching cost is minimized.

In this case, a template matching cost may be calculated by modifying each model coefficient by a determined value range (e.g., +- 5) and a model coefficient may be corrected to have the smallest template matching cost.

In this case, a new model may be derived through the weighted sum of coefficient values of models derived from a neighboring block.

In this case, after performing chroma signal prediction for a target (or current) block by using at least one model derived from a neighboring block, an optimal inter-component prediction model among the models which will be used for prediction may be determined. In this case, model information used (a model index, a parameter, a block position from which a model is taken, etc.) may be signaled from an encoder to a decoder.

[E2/D2] A step for determining a reference region and a representative value for deriving an inter-component prediction model;
In determining a reference region and a representative value in a Cross-component Linear Model (CCLM) and a Gradient Linear Model (GLM),

In order to derive the value of a and b in Equation 10 below, information on at least one of adjacent neighboring samples of a chroma block to be currently predicted, adjacent neighboring samples of a luma block corresponding to the position of a chroma block to be currently predicted and a reference line index of a corresponding luma block may be used. 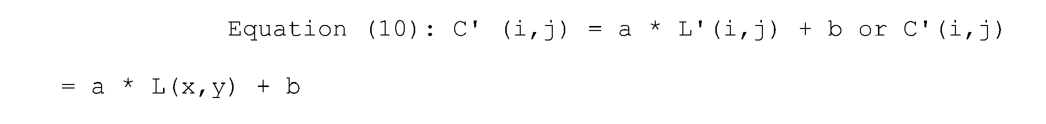 Equation (10): C' (i,j) = a * L'(i,j) + b or C'(i,j) = a * L(x,y) + b

Here, at least one of values of a and b may be determined based on at least one of encoding parameters of a luma block.

In addition, at least one of values of a and b may be determined based on at least one of encoding parameters of a chroma block.

A luma block corresponding to a neighboring pixel in a chroma block may be represented by a luma left neighboring sample (pLeftDsY) and a luma top neighboring sample (pTopDsY). The value of a and b may be derived through the value of adjacent neighboring samples of a chroma block and the value of adjacent neighboring samples of a luma block corresponding to the position of a chroma block to be currently predicted. In other words, in order to derive the value of a and b, the neighboring sample of a chroma prediction block and the neighboring sample of a luma prediction block at the position of a block currently encoded/decoded may be referenced.

In this case, when a gradient linear model is used, a luma sample or a luma sample value used for determining the representative value may be replaced with a derived gradient sample to proceed with a procedure for determining a representative value.

At least one of pLeftDsY and pTopDsY may be referenced. In this case, the value of a and b may be derived by configuring at least two representative values (at least one of statistical values such as the minimum value, the maximum value, a median value, an average, etc.) in referenced pLeftDsY and pTopDsY.

Here, among the representative values (the first representative value, the second representative value, the third representative value, the fourth representative value), the first representative value may be represented as LMAX, the second representative value may be represented as CMAX, the second representative value may be represented as LMIN and the third representative value may be represented as CMIN.

Here, in order to derive at least one of values of a and b, at least one sample of a luma left neighboring sample (pLeftDsY) and a luma top neighboring sample (pTopDsY) may be determined based on at least one of encoding parameters of a luma block.

In addition, in order to derive at least one of values of a and b, at least one of a luma left neighboring sample (pLeftDsY) and a luma top neighboring sample (pTopDsY) may be determined based on at least one of encoding parameters of a chroma block.

Each sample value may be represented as a x-axis and a y-axis by referring to at least one of pLeftDsY and pTopDsY. A x-axis may represent a luma sample value and a y-axis may represent a chroma sample value. In this case, at least two of the sample values represented on a x-axis and a y-axis may be selected to configure a representative value.

Alternatively, one of the sample values represented on a x-axis and a y-axis may be selected and at least one remaining sample value may be selected to configure a representative value by using a predetermined angle.

Here, a predetermined angle may be determined based on at least one of encoding parameters of a luma block and encoding parameters of a chroma block.

Encoding information may be used to determine the number of reference lines and luma samples (or sample values) required to determine a representative value in a Cross-component Linear Model (CCLM), a Gradient Linear Model (GLM), a Filter based Linear Model (FLM) and a Convolutional cross-component Model (CCCM).

The CCCM may include CCCM and GL-CCCM, MDF-CCCM, NS-CCCM. Models used by modifying a corresponding model parameter may also be included.

The representative value may refer to samples within a reference region used to derive a model (or derive a model/filter coefficient).

In this case, it may be determined by considering a CTU boundary, a VPDU boundary, etc.

For example, when some surfaces of a corresponding block are on a CTU boundary or a VPDU boundary, the number of reference lines and reference samples referenced for deriving a representative value in a region adjacent to a boundary surface may be different from those of a region adjacent to a surface that is not positioned on a boundary.

For example, the number of reference lines and reference samples referenced for deriving a representative value in a region adjacent to a boundary surface may be smaller than those used in a region adjacent to a surface that is not positioned on a boundary.

In addition, the number of reference lines and reference samples referenced for deriving a representative value in a region adjacent to a boundary surface may be fixed to N. In this case, here, N may be a value pre-configured in an encoder/a decoder as a value greater than or equal to 0 or a value signaled from an encoder to a decoder.

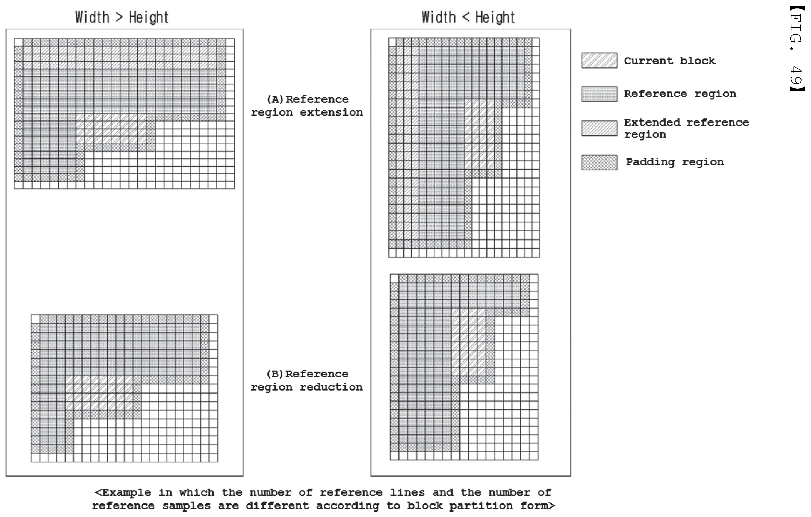

FIG. 49 shows an example of varying the number of reference lines and the number of reference samples according to a block partition form.

In this case, the number of reference lines and the number of reference samples used to derive a representative value may be different according to the size of a neighboring/current block. (FIG. 49)

For example, when the size of a neighboring adjacent block is smaller than the size of a current block, the number of reference lines and the number of reference samples used to derive the representative value of a filter in a reference region that includes a surface touching an adjacent block may be decreased.

For example, when the size of a neighboring adjacent block is greater than the size of a current block, the number of reference lines and the number of reference samples used to derive the representative value of a filter in a reference region that includes a surface touching an adjacent block may be increased.

For example, as the size of a current block decreases, the number of reference lines and the number of reference samples used to derive the representative value of a filter in a reference region may be decreased.

For example, as the size of a current block increases, the number of reference lines and the number of reference samples used to derive the representative value of a filter in a reference region that includes a surface touching an adjacent block may be increased.

In this case, whether to use a changed reference line/sample may be signaled from an encoder to a decoder.

In this case, the number of changed reference lines/samples may be a value pre-configured in an encoder/a decoder or may be signaled from an encoder to a decoder.

In this case, the number of reference lines and the number of reference samples used to derive a representative value may be different according to the shape (partition form) of a neighboring/current block.

For example, when a current block or a neighboring block is partitioned and a horizontal size is larger than a vertical size, the number of reference lines and the number of reference samples used to derive the representative value of a filter in a reference region that includes a surface touching a horizontal surface may be increased.

For example, when a current block or a neighboring block is partitioned and a horizontal size is larger than a vertical size, the number of reference lines and the number of reference samples used to derive the representative value of a filter in a reference region that includes a surface touching a vertical surface may be increased.

For example, when a current block or a neighboring block is partitioned and a horizontal size is larger than a vertical size, the number of reference lines and the number of reference samples used to derive the representative value of a filter in a reference region that includes a surface touching a horizontal surface may be decreased.

For example, when a current block or a neighboring block is partitioned and a horizontal size is larger than a vertical size, the number of reference lines and the number of reference samples used to derive the representative value of a filter in a reference region that includes a surface touching a vertical surface may be decreased.

In this case, whether to use a changed reference line/sample may be signaled from an encoder to a decoder.

In this case, the number of changed reference lines/samples may be a value pre-configured in an encoder/a decoder or may be signaled from an encoder to a decoder.

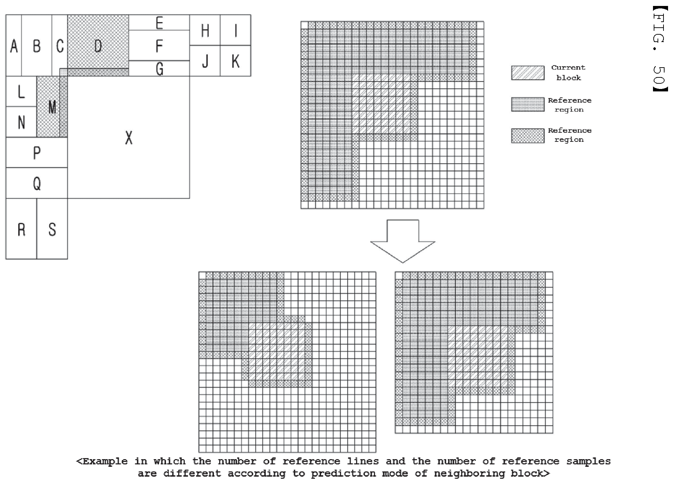

FIG. 50 shows an example of varying the number of reference lines and the number of reference samples according to a prediction mode of a neighboring block.

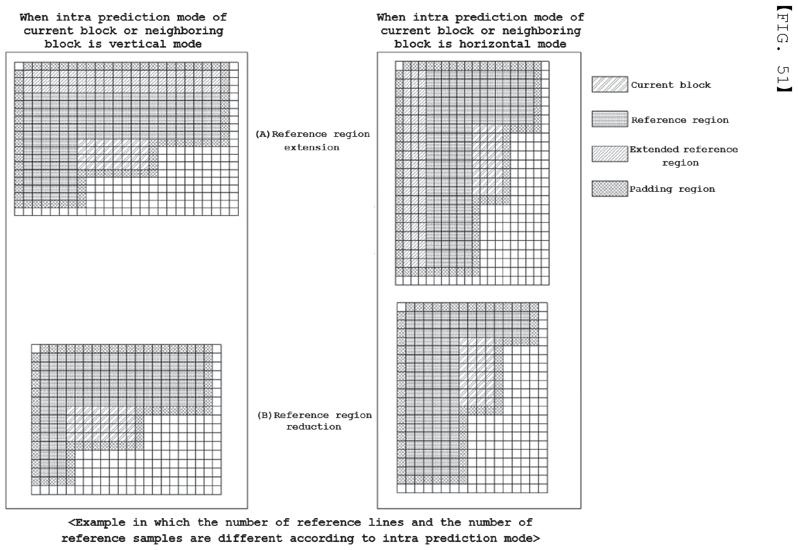

FIG. 51 shows an example of varying the number of reference lines and the number of reference samples according to an intra prediction mode.

In this case, the number of reference lines and the number of reference samples may be different according to the prediction mode of a neighboring/current block. (FIG. 50, FIG. 51)

In this case, the number of reference lines and the number of reference samples may be different according to the direction of an intra prediction mode.

For example, when an intra prediction mode is a vertical mode, the number of reference lines/samples at the top (above) of a current block may be increased.

For example, when an intra prediction mode is a vertical mode, the number of reference lines/samples at the left of a current block may be decreased.

For example, when an intra prediction mode is a horizontal mode, the number of reference lines/samples at the top (above) of a current block may be decreased.

For example, when an intra prediction mode is a horizontal mode, the number of reference lines/samples at the left of a current block may be increased.

In this case, whether to use a changed reference line/sample may be signaled from an encoder to a decoder.

In this case, the number of changed reference lines/samples may be a value pre-configured in an encoder/a decoder or may be signaled from an encoder to a decoder.

For example, when a neighboring block is encoded in an inter prediction mode, samples included in a corresponding block may be excluded.

In the example of an increase/a decrease in the number of reference lines/samples above, an increase/a decrease may also be applied in the opposite case to the example. For example, in the example of increasing the number of reference lines/samples, the number of reference lines/samples may be decreased conversely.

In this case, the number of reference lines and the number of reference samples may be varied by using the motion vector/block vector (BV) of a neighboring block.

For example, the number of reference lines or reference samples in a direction indicating a motion vector/a block vector may be increased.

In this case, a region found through a matching method may be included when determining a reference line and a reference sample.

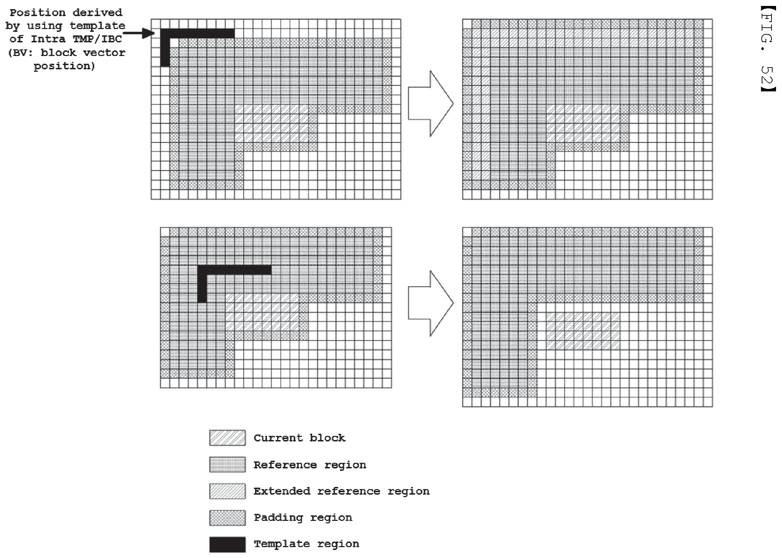

FIG. 52 shows an example of adjusting a reference region so that a position found by intra template matching(Intra TMP)/IBC is included in a reference region.

For example, as in FIG. 52, a reference region may be adjusted so that a position found by intra template matching (Intra TMP)/IBC is included in a reference region.

For example, as in FIG. 52, a new reference region may be configured based on the position of a block vector derived through IntraTMP/IBC.

For example, when the existing reference region is 6 lines on a surface touching a current block, new 6 lines may be configured as a reference region starting from a template region found through IBC/IntraTMP.

For example, a new reference region may be configured based on a position indicated by a block vector (BV) derived through IntraTMP/IBC. In this case, a configured reference region may be a region that is not adjacent to a current block.

In deriving the block vector, it may be derived from a referenceable adjacent/non-adjacent/collocated block or a block in a pre-encoded reference picture.

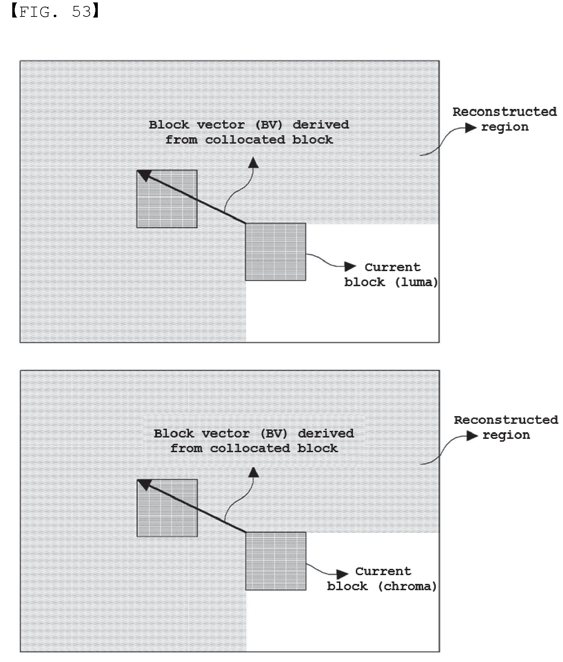

FIG. 53 shows an example of determining a reference region for deriving a model parameter by referring to a block vector of a collocated block.

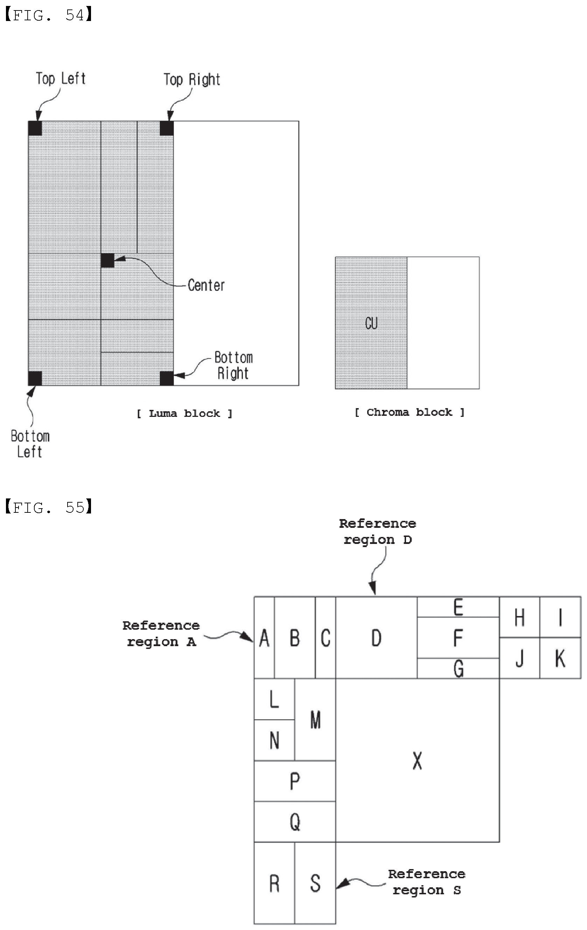

FIG. 54 shows an example of deriving a block vector from a block at a specific position within a collocated block.

For example, a reference region for deriving a model parameter may be determined by referring to the block vector of a collocated block as in FIG. 53. In this case, a luma/chroma reference region may be derived by referring to a block vector in a current picture or a collocated picture.

In this case, a block vector may be derived and used from a block at a specific position within a collocated block as in FIG. 54.

The reference line and the reference sample may be determined based on an error cost.

In this case, the reference region of a luma signal may be filtered by using an inter-component prediction model derived from a current block or a neighboring block, it may be compared with the reference region of a chroma signal to calculate a difference value (an error cost) in a pixel unit and that difference value may be compared with a specific threshold to determine whether to use a corresponding pixel as a reference pixel for re-deriving an inter-component prediction model.

For example, by using the average value of pixel value differences as a threshold, pixels larger than an average value may be excluded from a reference region (a reference sample) for re-deriving an inter-component prediction model.

In configuring a reference region (a size, a shape, a position, etc.) for deriving an inter-component prediction model (an inter-color model) by using samples within the referenceable reconstruction region, it may be configured by using the information (a size, a shape, a position) of pre-encoded/decoded blocks.

FIG. 55 shows a neighboring reference region of a current block.

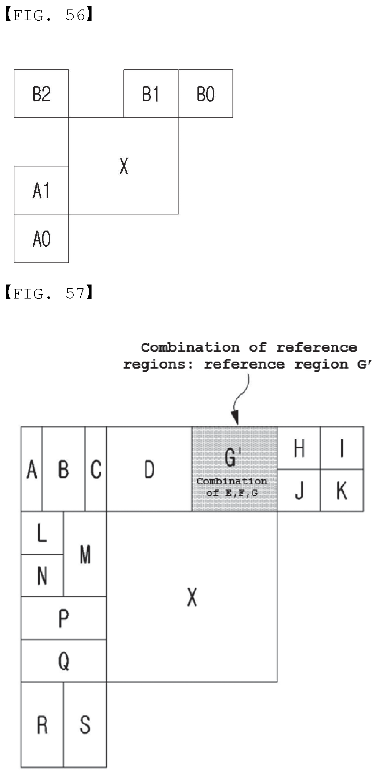

FIG. 56 shows a neighboring reference block at an arbitrary position around a current block.

FIG. 57 shows an example of combining a reference region based on a neighboring reference region of a current block.

For example, when there are adjacent blocks from A to S as in FIG. 55, reference samples (reference regions) for deriving a cross-component prediction (CCP) model may be configured by using reconstructed samples belonging to an adjacent block (reference block).

In this case, the form (size, shape) and position of a reference region used to derive a model may correspond to the form (size and shape) and position of an adjacent block determined in an encoding/decoding process.

For example, as in FIG. 55 or FIG. 57, the form and position of a reference region may use the form and position of an encoded/decoded adjacent block as they are.

For example, the size of a reference region may be used by scaling the size of an encoded/decoded adjacent block at a certain ratio.

In this case, ratio adjustment may be the same or different in width/height, and an adjustment ratio may be a value pre-configured in an encoder/a decoder or may be signaled from an encoder to a decoder.

In determining a reference block (sample) for configuring the reference region, block or sample lines at an arbitrary determined position may be selected as in FIG. 56.

In determining the size of the adjacent block, an arbitrary size defined in an encoder/a decoder may be determined.

For example, the size of a reference block (an adjacent block) for determining a reference region may be 8x8 or 16x16.

For example, the size of a reference block (region) may be the size of the smallest block among the adjacent blocks.

For example, the size of a reference block (region) may be the size of the largest block among the adjacent blocks. In this case, the size of small blocks may be expanded by the size of the largest block.

For example, reference blocks may be determined excluding blocks smaller than a pre-defined block among the adjacent blocks.

In this case, all reconstructed samples within referenceable adjacent blocks may be determined as a reference sample for deriving an inter-component prediction model.

In this case, a reference region (or sample) may be configured by combining samples within at least one block among the referenceable adjacent blocks.

For example, as in FIG. 57, a reference region may be configured by collecting samples within blocks E, F and G.

In this case, a reference region may be configured by using only blocks that touch the surface, line or point of a target block.

For example, when adjacent blocks are positioned as in FIG. 55, a reference region may be configured by selecting at least one block among the blocks C, D, G, J, M, P, Q and S.

For example, a reference region may be configured with non-adjacent samples around a current block.

In this case, a reference region may be configured with non-adjacent lines within a certain range.

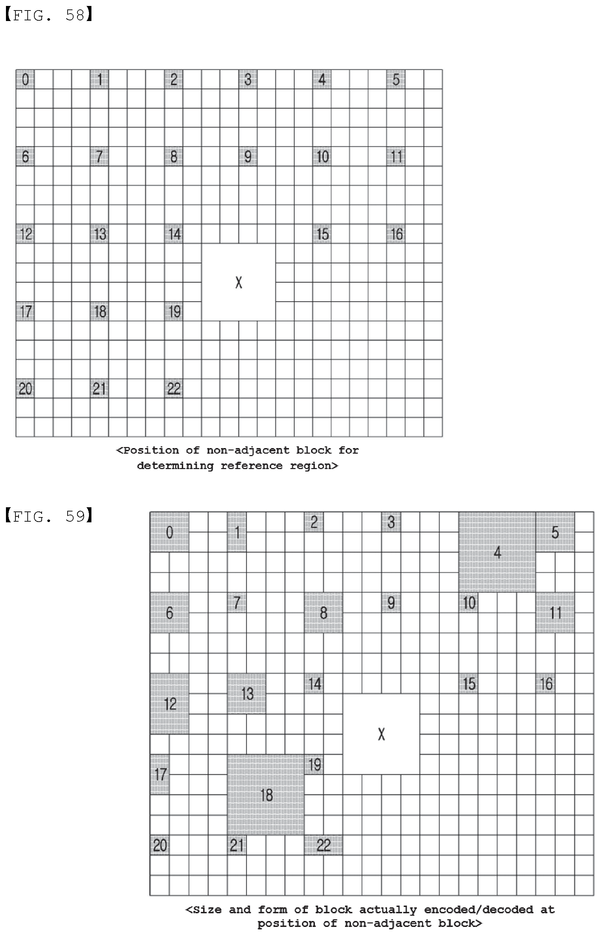

FIG. 58 shows a position of a non-adjacent block for determining a reference region.

FIG. 59 shows a size and a form of a block which is actually encoded/decoded at a position of a non-adjacent block.

For example, as in FIG. 58, reconstructed samples belonging to a non-adjacent block may be used as a reference sample for deriving an inter-component prediction model.

In this case, the form (size, shape) and position of a reference region used to derive a model may correspond to the form (size and shape) and position of a pre-encoded/decoded non-adjacent block in the position of a pre-determined non-adjacent block (determined arbitrarily or by a pattern) in FIG. 58, as in the example of FIG. 59.

For example, as in FIG. 59 above, the form and position of a reference region may be the same as the form and position of an encoded/decoded non-adjacent block.

For example, a method for adjusting the size of a reference region and determining an adjustment ratio may be the same as a method for adjusting the size and ratio of an adjacent block.

In determining a reference block (sample or reference line) for configuring the reference region, at least one of the blocks at an arbitrarily determined non-adjacent position may be selected and configured.

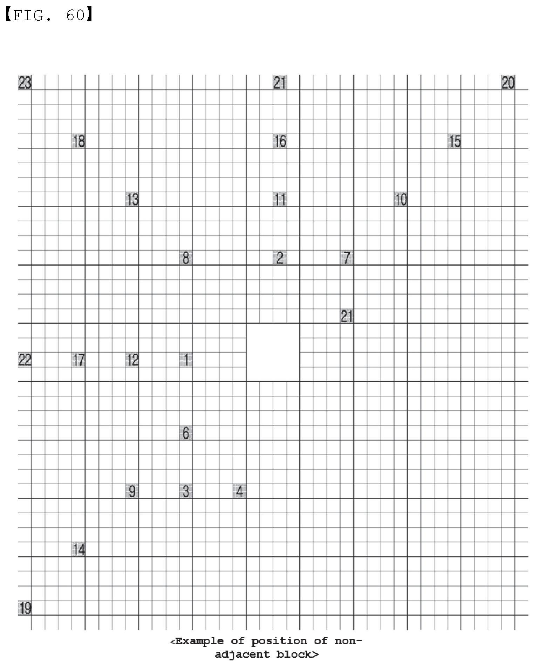

FIG. 60 shows an example of a position of a non-adjacent block.

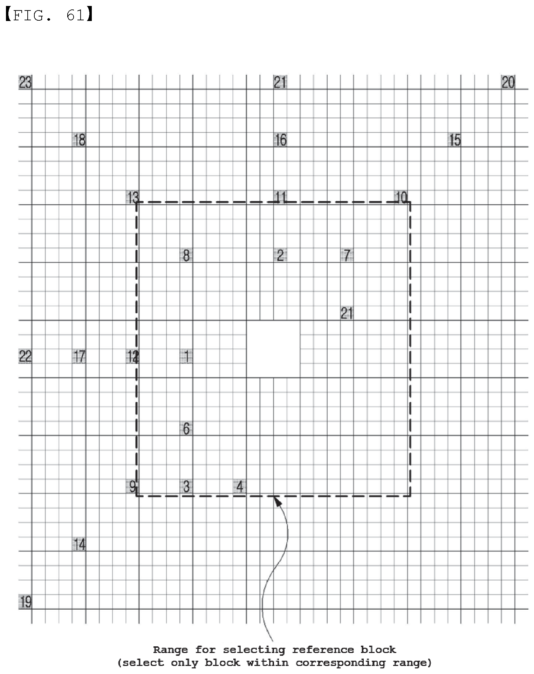

FIG. 61 shows an example of a range for selecting a reference block.

For example, an arbitrary position may be determined in an arbitrary pattern form as in FIG. 58 to FIG. 61. In this case, a pattern refers to the distribution form of neighboring blocks determined according to the position and number of referenceable neighboring blocks among a lot of neighboring blocks around a current block, and may be configured in various forms such as cross, radial, hexagonal, diamond, triangle patterns, etc.

In generating the pattern, a distance between neighboring blocks included in a pattern may be variable. In addition, the form of a pattern may be configured in an asymmetrical form as well as a symmetrical form.

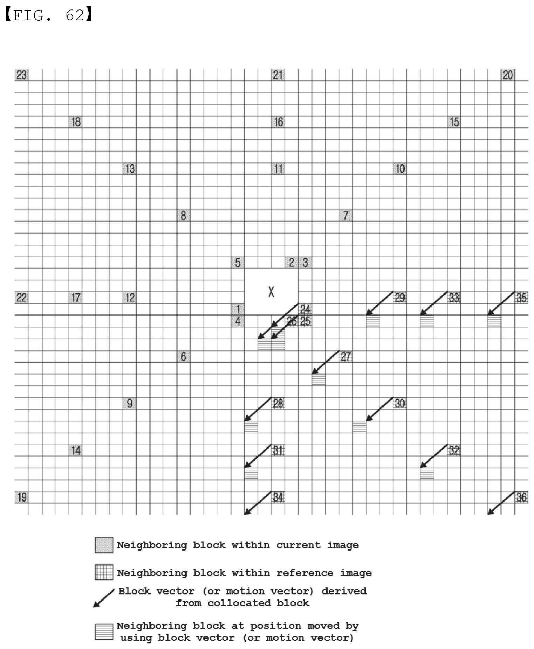

FIG. 62 shows an example of a neighboring block at a position moved by using a block vector from a neighboring block within a reference image for configuring a reference region among the non-adjacent blocks.

In determining a reference block (sample or reference line) for configuring a reference region among the non-adjacent blocks, a reference region may be configured by selecting only a reference block within a certain distance from a target block as in FIG. 62.

In determining the size of the non-adjacent block, it may be an arbitrary size defined in an encoder/a decoder.

For example, the size of a reference block (a non-adjacent block) for determining a reference region may be 8x8 or 16x16.

For example, the size of a reference block (region) may be the size of the smallest block among the non-adjacent blocks.

For example, the size of a reference block (region) may be the size of the largest block among the non-adjacent blocks. In this case, the size of small blocks may be expanded by the size of the largest block.

For example, reference blocks may be determined excluding blocks smaller than a pre-defined block among the adjacent blocks.

In this case, all reconstructed samples within referenceable non-adjacent blocks may be used as a reference sample for deriving an inter-component prediction model.

In this case, a reference region (or sample, block) may be configured by combining samples within at least one block among the referenceable non-adjacent blocks.

In determining the position of the adjacent/non-adjacent block, at least one block position among the block positions adjusted by using a motion vector or a block vector derived from a neighboring block or a collocated block may be included in a reference region for deriving a model.

For example, as in FIG. 62, at least one of the blocks that moved the existing adjacent/non-adjacent block by using the block vector of a collocated block may be included in a reference region for deriving a model.

In determining blocks whose position will be adjusted through a motion vector or a block vector, at least one block of an adjacent block, a non-adjacent block, a block within a current picture and a block within a reference picture may be selected to adjust a selected block position.

In this case, the order of addition to a reference region candidate list for deriving a model (an index in a candidate list) may be different according to the position of a block from which a block vector or a motion vector is taken.

For example, a block whose position is adjusted may be first added to a candidate list by using a block vector taken from a top (above) position.

For example, a block whose position is adjusted (or a block position) may be added to a candidate list by using a block vector derived from a corresponding block in the order of above → left → bottom left → above right → above left.

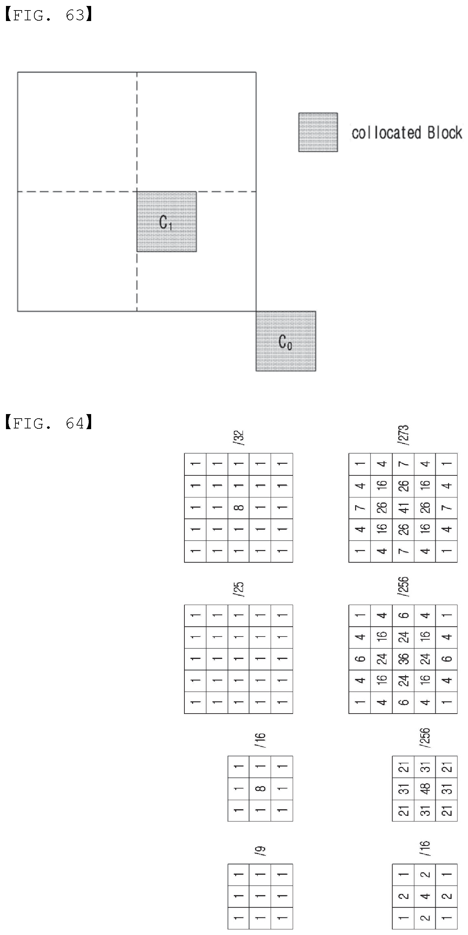

FIG. 63 shows an example of a position of a block vector used when there is a collocated block.

For example, when there is a collocated block as in FIG. 63, a block whose position is adjusted may be first added to a candidate list by using a block vector taken from a C0 position and then, a block whose position is adjusted may be first added to a candidate list by using a block vector taken from a C0 position.

An adjacent/non-adjacent block or a block position derived from the examples may be not only used to determine a reference region for deriving a model, but also used as a block position for deriving model information for merge prediction.

### (Use stored model information)

For example, prediction model information for an inter-component prediction merge may be inherited from a block position defined in the example to configure an inter-component prediction merge list for chroma signal prediction.

In this case, an inter-component prediction merge list configured by a method in the example may be used not only for inter-component prediction model-based chroma signal prediction in intra prediction, but also for inter-component prediction model-based residual signal prediction (cross-component residual model) in inter prediction.

An adjacent/non-adjacent block or a block position derived in the examples may be used to configure a MPM list in intra prediction.

For example, a MPM list may be configured by inheriting an intra prediction mode from a block position defined in the example.

In the example of an adjacent/non-adjacent block, a reference region may be configured for each block and an inter-component prediction model may be derived for each block by using samples within each configured reference region.

The reference regions (or blocks) used to derive a model may be divided by using an index, and the index and related information (a size, a position) of a reference region where a final prediction model determined through inter-component prediction is derived may be signaled from an encoder to a decoder.

In this case, an index in a candidate list may be configured to increase in order from the closest to the farthest to a target block.

In this case, it may be configured to increase in spiral order from the inside to the outside based on a target block.

In inter-component prediction model-based residual signal prediction, at least one reference sample of a prediction sample or a sample in a reference region may be modified (changed) and used.

In this case, modification (change) may refer to not only changing a value by performing an arithmetic operation using a specific value on a corresponding sample/pixel, but also changing a sample/pixel value through filtering using a specific filter.

In this case, the statistical value of samples in a reference region or a prediction block may be used to modify a sample belonging to a reference region.

For example, the average value of samples within a reference region or a prediction block may be calculated and added to or subtracted from samples within a reference region or a prediction block.

For example, all samples having the maximum value and the minimum value may be modified to a specific value. In this case, a specific value may be a value pre-configured in an encoder/a decoder or may be signaled from an encoder to a decoder.

For example, it may be designated as 0.

For example, all sample values of samples different by a threshold from an average may be changed to a specific value.

In this case, a threshold may be the variance or standard deviation value of samples.

When the specific value is a variance or a standard deviation, if a sample value in a reference region is greater than (average + variance/standard deviation) or smaller than (average - variance/standard deviation), the value of corresponding samples may be designated as a specific value.

In this case, a threshold and a specific value may be a value pre-configured in an encoder/a decoder or may be signaled from an encoder to a decoder.

In this case, samples in a reference region or a prediction block may be modified (adjusted) through filtering.

FIG. 64 shows an example of a gaussian filter or a low pass filter used for modifying a reference sample or a prediction sample.

For example, a reference sample or a prediction sample may be modified through smoothing based on a gaussian filter or a low pass filter in FIG. 64.

For example, a reference sample or a prediction sample may be modified by using a sharpening filter.

For example, reference samples or prediction samples may be modified by using an edge preserving filter such as a bilateral filter.

For example, reference samples or prediction samples may be modified by using an edge detection filter such as a sobel/canny filter.

For example, a reference sample or a prediction sample may be modified by selecting at least one of a plurality of downsampling filters.

For example, a sample in a reference region or a prediction block may be modified by using an inter-component prediction model derived from an adjacent/non-adjacent block in a referenceable current/reference picture.

When modifying a sample in a reference region or a prediction block through filtering, at least one of the above-mentioned filters may be used.

In prediction sample filtering using the filter, not only a sample in a prediction block, but also reference samples (neighboring samples) may be used.

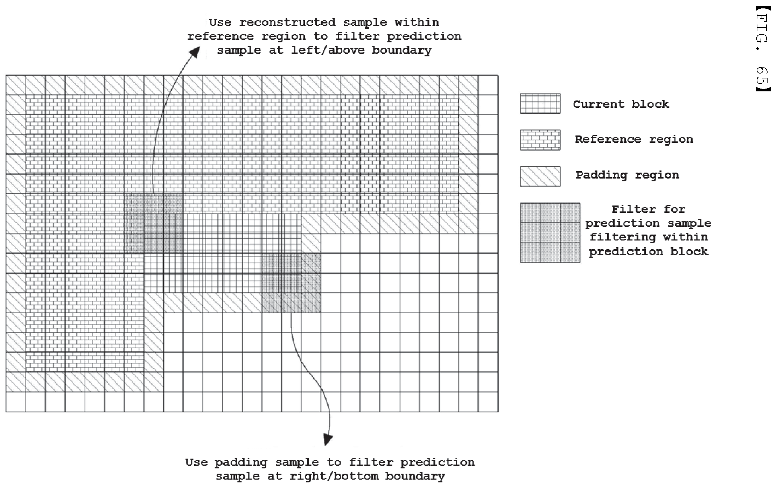

FIG. 65 shows an example of an adjacent neighboring reconstructed sample for filtering a prediction sample within a prediction block.

For example, in filtering samples at the left/top boundary of a prediction block as in FIG. 65, filtering may be performed by using adjacent neighboring reconstructed samples.

For example, in filtering samples at the right/bottom boundary of a prediction block as in FIG. 65, when there are no adjacent reconstructed samples which will be used for filtering, padding may be performed by using samples within a block and then, filtering may be performed by using padded samples.

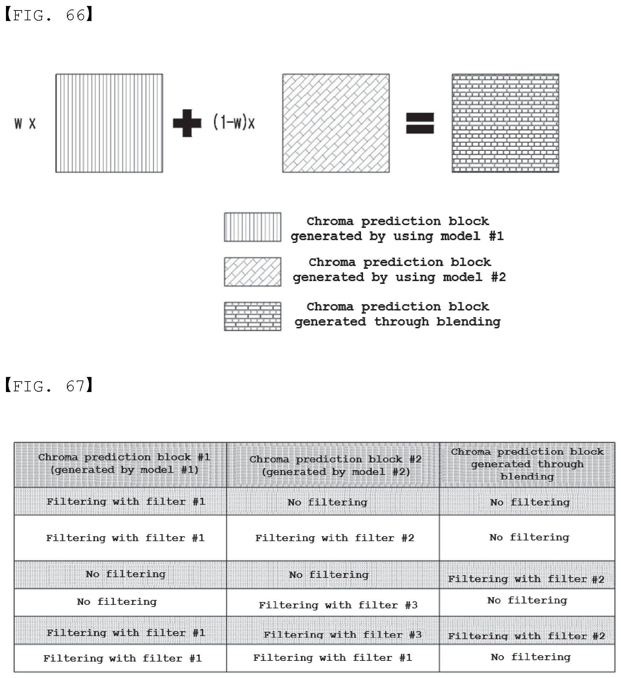

FIG. 66 shows an example of blending a chroma prediction block generated by using a plurality of models.

FIG. 67 shows an example of applying filtering in blending a chroma prediction block generated by using a plurality of models.

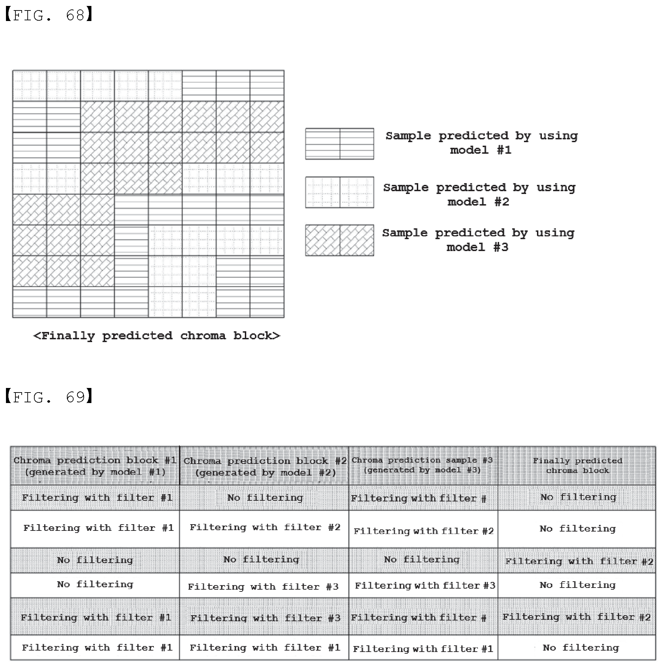

FIG. 68 shows an example of obtaining a chroma block that is finally predicted by using a plurality of models.

FIG. 69 shows an example of applying filtering in obtaining a chroma block that is finally predicted by using a plurality of models.

In applying the filtering, when a prediction block is generated by using a plurality of models as in an example of FIG. 66/FIG. 67 and FIG. 68/FIG. 69, it is possible to determine whether to apply a filter to a prediction block (or sample) generated for each model or a new prediction block (or sample) generated by using it and which filter will be used.

At least one filter may be selected for the filtering to perform filtering. When a reference region or a prediction sample is filtered by using a plurality of filters, a plurality of models may be derived and prediction encoding may be performed to derive an optimal filter among a plurality of filters, and in this case, finally selected filter information may be signaled from an encoder to a decoder.

In the example, whether to apply filtering and used filter information (a filter index or a filter coefficient, an offset) may be pre-configured in an encoder/a decoder or may be signaled from an encoder to a decoder.

In this case, a new inter-component prediction model (or inter-color prediction) may be derived by using reference region samples modified through the filtering or modification method.

The modified (or filtered) reference samples may be used to derive a cross-component linear model (CCLM), a gradient linear model (GLM), a filter based linear model (FLM) and a convolutional cross-component model (CCCM) defined above.

In this case, whether to filter a sample used in deriving a prediction mode in each inter-color prediction and information on a used filter may be signaled from an encoder to decoder.

In this case, in addition to an inter-component prediction model defined above, a new inter-component prediction model may be defined by using modified (or filtered) reference samples.

For example, a model may be defined and derived by changing the number of model parameters of a model and a coefficient (gradient, location) configuring a parameter. In addition, a model may be defined and derived by changing the number of model parameters and a coefficient (gradient, location) configuring a parameter according to the type of a used filter.

In the example using a downsampling filter, an inter-component prediction model may be defined differently according to the type of a downsampling filter used for a luma sample.

For example, a model may be defined and derived by changing the number of model parameters and the input of a model (luma sample, gradient, location) according to the type of a used filter.

Whether to apply the derived model, model information and downsampling filter information used for deriving a model may be pre-configured in an encoder and a decoder or may be signaled from an encoder to a decoder.

In this case, samples within a reference region or a prediction block may be modified by using a pre-derived inter-component prediction model.

For example, samples within a reference region or a prediction block may be modified by using an inter-component prediction model derived (pre-calculated or stored) from current blocks or neighboring blocks, and a new inter-component prediction model may be derived by using samples within a modified reference region or prediction block.

The pre-derived model may be derived from a current block or a neighboring block.

Whether to use the modified reference sample or prediction sample may be pre-configured in an encoder/a decoder or may be signaled from an encoder to a decoder.

A method for modifying the reference region or prediction sample may be applied equally to methods for using a prediction sample (or block) or a template in an encoding/decoding process.

In this case, a sample value may be changed (or modified) by applying a method for modifying (or changing) the reference region or prediction sample to at least one sample among the samples within a prediction block and the samples within a template.

For example, when performing IBC, samples within an IBC prediction block may be modified (or changed) and used.

In this case, the statistical value of samples within a reference region or a prediction block may be used to modify a sample belonging to a reference region or modify (adjust) samples within a reference region or a prediction block through through filtering.

In this case, after an inter-component prediction model is derived by using neighboring reconstructed samples within a current/reference picture, a corresponding model may be used to filter a sample within an IBC prediction block.

For example, after a CCCM model is derived by using a neighboring reconstructed sample, it may be used to filter an IBC prediction block.

In this case, at least one sample within a prediction block may be filtered by using an inter-component prediction model derived (or stored) from an adjacent/non-adjacent block within a referenceable current/reference picture.

Whether to use a method using the modified prediction sample may be pre-configured in an encoder/a decoder or may be signaled from an encoder to a decoder.

For example, IntraTMP may be performed by modifying (or changing) a sample within a template in IntraTMP (Intra template matching).

In this case, the statistical value of samples within a template region may be used to modify a sample belonging to a template region or modify (adjust) samples within a template region through filtering.

In this case, after deriving an inter-component prediction model by using reconstructed samples within a current/reference picture, a corresponding model may be used to filter at least one sample within a template region in Intra TMP.

For example, after deriving a CCCM model by using a neighboring reconstructed sample, it may be used to filter at least a sample within an Intra TMP template.

In this case, at least one sample within an Intra TMP template may be filtered by using an inter-component prediction model derived (or stored) from an adjacent/non-adjacent block in a referenceable current/reference picture.

Whether to use Intra TMP using the modified template may be pre-configured in an encoder/a decoder or may be signaled from an encoder to a decoder.

[E3/D3] A step of performing inter-component prediction merge using an inter-component prediction model;
In inter-component prediction for a current block, new models are generated by modifying pre-derived models and a method for taking inter-component prediction model information stored from a pre-encoded/decoded neighboring block in addition to a model derived from a current block and using it for chroma prediction for a current block, which may be used for chroma prediction for a curreht block.

In this case, after performing chroma signal prediction for a target (or current) block by using at least one of the derived models to perform an inter-component prediction merge, an optimal inter-component prediction model among the models which will be used for prediction may be determined. In this case, model information used (a model index, a parameter, a block position from which a model is taken, etc.) may be signaled from an encoder to a decoder.

Here, a candidate list may refer to a list used for the arrangement, addition, removal, etc. of candidates in configuring a merge list that adds a merge candidate for a merge or a final merge list.

The inter-component prediction merge may be performed in the following process.

In performing an inter-component prediction merge, a candidate list for storing an inter-component prediction parameter derived from a neighboring block may be configured.

In this case, the size of a corresponding candidate list may be different according to the encoding information of a current block (a block size, whether to partition, a reference block position, prediction mode information, etc.).

In this case, a corresponding candidate list may include not only model information, but also the encoding information of a derived block of a model.

In this case, the size of a corresponding candidate list may be a value pre-defined in an encoder and a decoder or a corresponding value may be signaled from an encoder to a decoder.

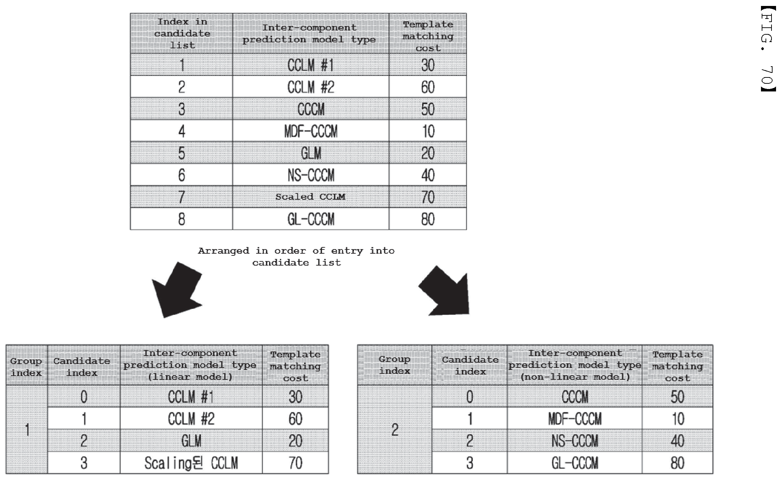

FIG. 70 shows classifying a candidate list of an inter-component prediction model by group.

In configuring the candidate list, each candidate list may be configured after classifying candidates based on the inter-component prediction method of candidates as in FIG. 70.

For example, a candidate list may be configured by dividing it into a linear prediction method (CCLM, GLM) and a nonlinear prediction method (CCCM, GL-CCCM, MDF-CCCM, NS-CCCM).

For example, a candidate list may be configured for each inter-component prediction mode.

In configuring the candidate list, at least one candidate list may be configured by combining a plurality of candidate lists.

In configuring the candidate list, a candidate list may be configured by selecting only specific candidates from a plurality of groups. For example, a candidate list may be configured by selecting only candidates whose candidate index is greater than or equal to/less than or equal to N (a defined number) from the candidate list of each group.

In configuring the candidate list, at least one candidate list may be separated to generate a plurality of candidate lists.

The order of STEPs defined below is the same as the order that a candidate is added to a candidate list (starting from a block corresponding to STEP 1), and the corresponding order may be pre-defined or may be different according to the encoding information of a current block (a block size, whether to partition, a reference block position, prediction mode information, etc.). In addition, corresponding information may be signaled from an encoder to a decoder.

In this case, when a candidate list is full in a corresponding STEP, adding a candidate may be stopped.

In adding a candidate to a candidate list, similar of the same candidates may not be added.

For example, when at least one model parameter is the same, it may not be added.

For example, when a plurality of models are used like MMLM, if at least one model is the same, it may not be added to a candidate list.

In adding a candidate within a candidate list, information which will be inherited as a neighboring block may be determined.

Here, only some model parameters of an inter-component prediction mode may be taken and the remaining parameters may be derived by using the information of a current block. For example, in the inter-component prediction model of an example in the present disclosure, a nonlinear parameter (P) and an offset B (or lumaOffset, ChromaOffset) may be recalculated by using the neighboring samples of a current block without being inherited.

STEP 1) A candidate (model information and encoding information) stored in a neighboring adjacent and non-adjacent block may be added to a list.

In this case, a neighboring adjacent/non-adjacent block which will bring model information and encoding information may be all blocks encoded/decoded in an inter-component prediction mode among the neighboring referenceable blocks.

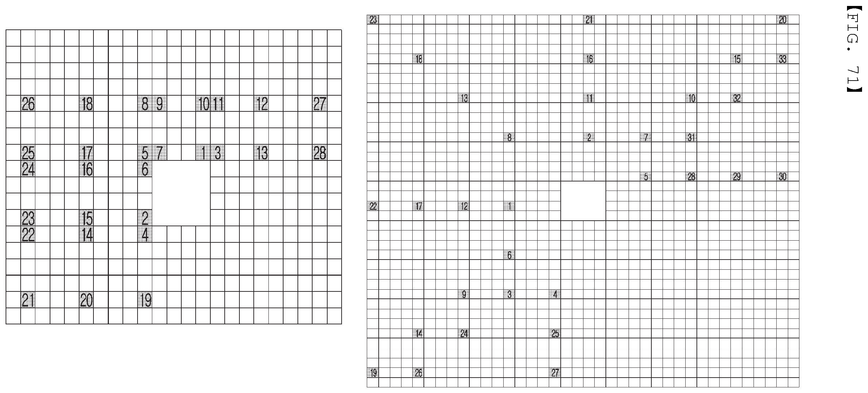

FIG. 71 shows an example of a neighboring adjacent/non-adjacent block which will bring model information and encoding information.

In this case, a neighboring adjacent/non-adjacent block which will bring model information and encoding information may be a specific pre-defined position as in FIG. 71 or may be in the form of a specific pattern defined as a cross, a radial, a hexagon, a diamond and a triangle.

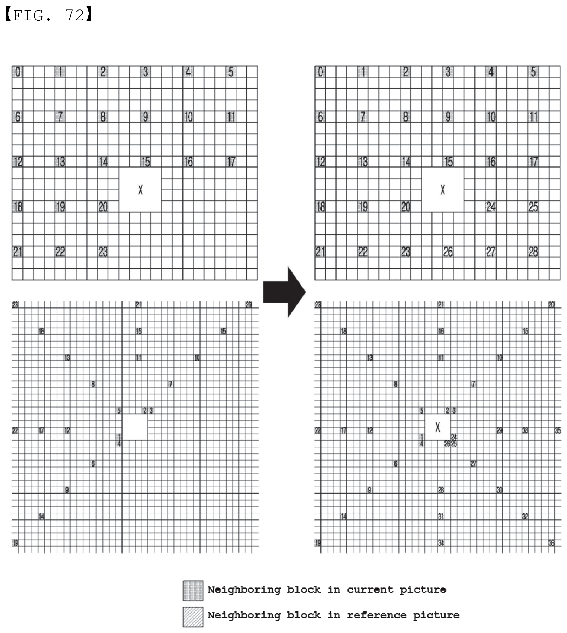

FIG. 72 shows a neighboring adjacent/non-adjacent block which will bring model information and encoding information within a reference picture.

In this case, a neighboring adjacent/non-adjacent block which will bring model information and encoding information may include not only a block within a current picture, but also a block within a reference picture as in FIG. 72.

In this case, the position of a neighboring adjacent/non-adjacent block which will bring model information and encoding information may be different according to the encoding information of a current block (a block size, whether to partition, a reference block position, prediction mode information, etc.).

In this case, the order that a neighboring adjacent and non-adjacent block is added to a candidate list may be pre-defined or may be different according to the encoding information of a current block (a block size, whether to partition, a reference block position, prediction mode information, etc.).

For example, a block may be first added to a candidate list in the order of proximity to a target block.

For example, a block may be added to a candidate list first from the inside in the spiral order based on a target block.

For example, a neighboring block within a current picture may be added to a candidate list first and a neighboring block within a reference picture may be added later.

STEP 2) Add a history-based candidate (model information and encoding information) to a list

In this case, when a list in a FIFO form like HMVP is defined and a candidate is stored in a list in the order of encoding/decoding to perform inter-component merge prediction in a target block, it may be added to a candidate list for an inter-component prediction merge.

STEP 3) Add a modified candidate to a list

In this case, at least one of a model pre-derived from a current block or a model in a candidate list may be selected, modified and added.

In the above-described modification method, for example, a new model may be generated by scaling a model parameter or an offset and added to a candidate list.

For example, for a CCLM, each model may be generated by multiplying the model coefficient (or parameter) of a CCLM by the value of [0, 1/8, -1/8, 2/8, -2/8, 3/8, -3/8, 4/8, -4/8, 5/8, -5/8, 6/8] and added to a candidate list.

In this case, at least one parameter may be modified in a derived model.

For example, for a CCCM, a new model may be generated by modifying only a1 to a5 among a total of seven model coefficients (a1 to a7).

A new candidate model may be generated by adjusting the prediction model parameter of a candidate from the reference sample or reference region of E2/D2.

For example, a candidate generated by modifying all or part of the model parameters of a candidate included in a merge candidate list based on the reference sample or reference region of a current block may be included.

Here, the reference sample or reference region may include an adjacent/non-adjacent reference sample or an adjacent/non-adjacent reference region as described above. In addition, a reference sample or a reference region at a position adjusted through a block vector may be included.

STEP 4) Arrange candidates in a candidate list

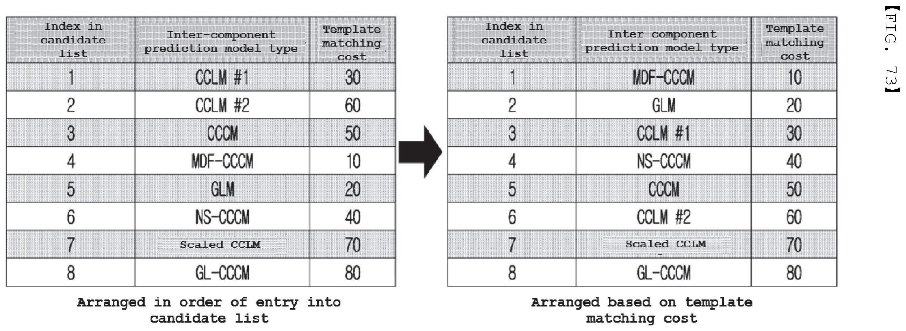

FIG. 73 shows an example of arranging candidates in a candidate list based on a template cost.

In this case, in arranging candidates in a candidate list, they may be arranged based on a template cost as in FIG. 73.

In the template cost-based arrangement, each model in a candidate list may be applied to samples around a luma block to generate a chroma prediction sample corresponding to each model and it may be used as a template cost by calculating an error cost with the neighboring samples of a corresponding chroma block.

In arranging candidates in a candidate list, at least one candidate may be arranged.

For example, only candidates in candidate list index 5 may be arranged.

For example, only linear prediction series candidates may be arranged.

For example, only the most candidates corresponding to an inter-component prediction method in a candidate list may be arranged.

For example, only CCLM candidates may be arranged.

After arranging candidates in a candidate list, N candidates may be removed from a candidate list. Similarly, only S candidates may be added to a candidate list based on the template cost. In this case, N and S may refer to an integer greater than or equal to 0. And N and S may be a value pre-configured in an encoder/a decoder or may be signaled from an encoder to a decoder.

For example, a candidate having a template cost greater than or equal to a certain threshold compared to a candidate with the smallest template cost may be removed from a candidate list.

STEP 5) Perform chroma signal prediction by using candidates in a candidate list

In performing the chroma prediction, each model in a candidate list may be applied to generate a chroma prediction block corresponding to each model and calculate an error cost between derived chroma prediction blocks and an original chroma block.

In this case, an error cost in a prediction process after prediction may be a SAD or SATD value. Here, in calculating an error cost, calculation complexity may be reduced by omitting some of the transform (primary/secondary transform), quantization and entropy encoding processes.

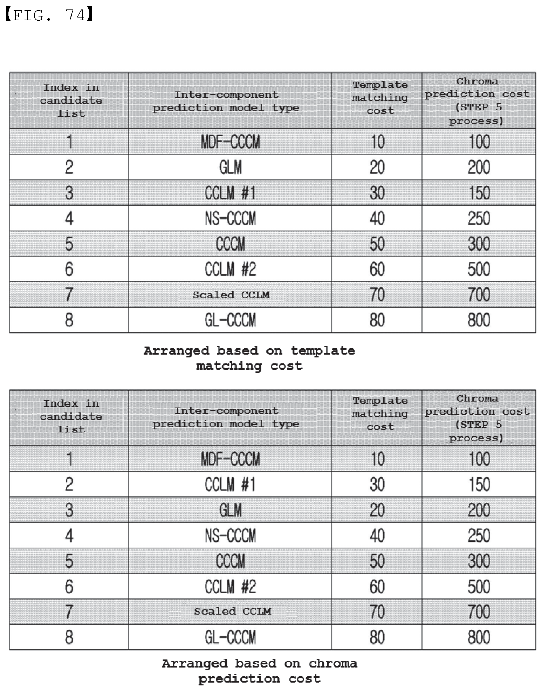

FIG. 74 shows an example of arranging candidates in a candidate list based on a chroma prediction cost.

In this case, in arranging candidates in a candidate list, they may be arranged based on a chroma prediction error cost as in FIG. 74.

In arranging the candidate list, the process of adding and deleting a candidate in a candidate list may be performed in the same manner as in STEP 4.

STEP 6) Perform rate-distortion optimization-based chroma signal encoding on candidates in a candidate list

M candidates within a candidate list in STEP 5 above may be selected to perform rate-distortion optimization-based encoding including transform, quantization and entropy encoding. Here, the complexity of an encoding process may be reduced by selecting only arbitrary candidates and making them go through STEP 6.

The index of a candidate with the minimum error cost among the M candidates may be signaled from an encoder to a decoder. In this case, since a decoder may not use an original chroma signal, the index of a candidate to be signaled may be signaled as an index in a list arranged based on a template cost in STEP 4.

A decoder may receive the index of a corresponding candidate and perform inter-component prediction merge-based chroma prediction.

In performing the inter-component prediction merge, a new model may be generated by using candidate (inter-component prediction model) information in a candidate list and added to a candidate list.

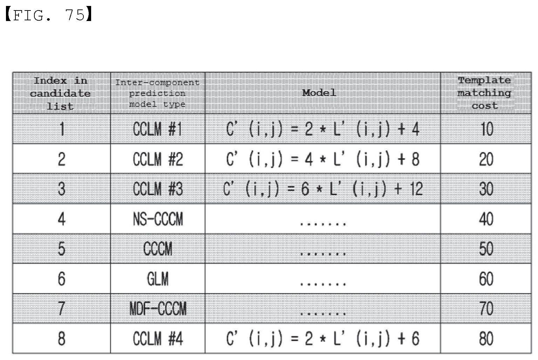

FIG. 75 shows a model and template matching cost according to an inter-component prediction model type in a candidate list.

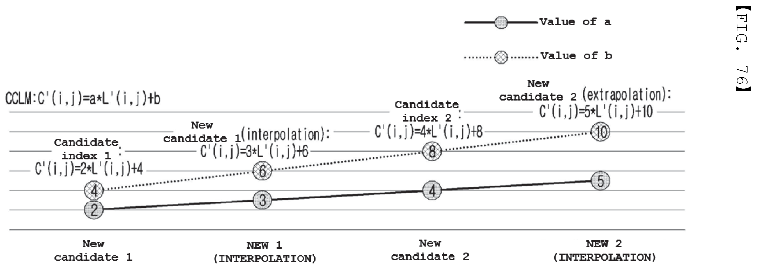

FIG. 76 shows an example of generating a new model by interpolating/extrapolating a model parameter between at least two or more candidates in a candidate list.

In generating a new model based on candidate information in the candidate list, as in FIG. 75 and FIG. 76, a model parameter between at least two candidates in a candidate list may be interpolated/extrapolated to derive a new model parameter and generate a new model through it.

In generating a new model based on candidate information in the candidate list, a new model may be generated through the weighted sum of information (parameters) of models in a candidate list and added to a candidate list.

In this case, a new candidate may be generated through the weighted sum of a model calculated in a current block and a model in a candidate list.

In this case, a weighted sum may be performed between the same inter-component prediction methods.

In this case, the weighted sum of a model parameter may be applied not only between candidates in a candidate list, but also between a prediction model derived in a current block and a model in a candidate list.

In this case, at least one of the new candidates generated through the weighted sum may be added to a candidate list.

The candidate addition may be performed in the process of STEP 1 to STEP 6.

However, since the process of STEP 5/STEP 6 is not performed in a decoder, when a candidate is added in this process, a flag for a candidate and an index in a candidate list may need to be newly added.

For example, a flag such as "ccp_pairwise_model" may be added to signal whether to use a corresponding model to a decoder.

For example, after increasing the index of a candidate list, a corresponding mode may be added at the end.

In the candidate addition, when a new candidate is added in STEP 4. A process of arranging candidates, adding a candidate may be omitted when the template matching cost of a new candidate is greater than that of other candidates in a candidate list. In addition, when a new candidate is added, the index of candidates with a larger template matching cost than a new candidate may be increased by the number of new candidates added. In this case, the size of a candidate list may be increased by the number of increased candidates and candidates that the index of an arranged candidate exceeds the maximum size of a candidate list may be removed from a candidate list.

In the process of generating a new model through the weighted sum, model generation may be limited.

For example, in selecting candidates which will perform the weighted sum after arranging candidates in the existing candidate list in STEP 4, candidates whose error cost is greater than or equal to a certain threshold may be excluded from a candidate which will perform the weighted sum.

For example, when an index difference between candidates to be merged in a candidate list is greater than or equal to a threshold, a candidate with a large candidate list index may be excluded from a candidate which will perform the weighted sum.

For example, when a difference in an error cost between candidates to be merged is greater than or equal to a threshold, a candidate with a large candidate list index may be excluded from a candidate which will perform the weighted sum.

In determining a weight for generating the new model, a weight may be determined based on an error value.

For example, a higher weight may be given to a candidate with a small matching cost based on the template matching cost of two candidates which will perform the weighted sum.

For example, 0.8 is given to a candidate with a small template matching cost and 0.2 is given to another candidate.

For example, a weight may be determined as in the following example based on the ratio of template matching costs of two candidates which will perform the weighted sum.

Example#1) weight1 is a weight of Cand1.$weight 1 = 1 - costCand 1 / \left(costCand1+costCand2\right)$$weight 2 = 1 - weight 1$

Example#2) for costCand2 < costCand1, weight1 is a weight of Cand1.$weight 1 = costCand 2 / \left(costCand1+costCand2\right)$$weight 2 = 1 - weight 1$

In determining a weight for generating the new model, a weight may be determined based on an index value in a candidate list.

For example, as a difference in an index value between two candidates is larger, a smaller weight may be given to a candidate with a large index value.

For example, a weight may be different in proportion to a difference in a candidate index value.

e.g.) the first candidate index 0(idx1), the second candidate index 10 (idx2), (but, idx1 < idx 2)
$weight 1 = 1 - 1 / \left(idx2-idx1\right)$$weight 2 = 1 - weight 1$

In generating a new model based on candidate information in the candidate list, a new prediction block may be generated through the weighted sum of chroma prediction blocks generated through models in a candidate list.

In this case, it may be added as a new candidate for an inter-component prediction merge.

In this case, a new prediction block may be generated through the weighted sum of a chroma prediction block generated through the inter-component prediction of a current block and a chroma prediction block generated by using candidate information in a candidate list.

In this case, a method for determining a model used for the weighted sum among the models in a candidate list and models generated in the current block may be a method pre-configured in an encoder and a decoder.

For example, after calculating the template matching cost of each candidate, a chroma prediction block may be generated by using a model with the smallest matching cost and a model with a next-ranked matching cost.

For example, a chroma prediction block may be generated by selecting a chroma prediction block generated in a current block and a model with the smallest matching cost.

In this case, model information which will be used to generate a new chroma prediction block may be signaled from an encoder to a decoder.

In this case, a flag such as "ccp_pairwise_model" above may be added to signal whether to use a corresponding model to a decoder.

In configuring a merge list (a candidate list) for the inter-component prediction merge, a new model may be derived by changing (modifying) the parameter of candidates in a candidate list.

In this case, a new model may be derived by changing (modifying) the parameter value of at least one of the parameters of candidate models.

For example, a new model may be derived through the addition, multiplication or division of a specifid value for the model parameter of a candidate in a candidate list.

For example, the statistical value of a model parameter of candidates, the same inter-component prediction method in a candidate list, may be used to derive a new model parameter and generate a new model by using it.

In this case, at least two models may be selected from a candidate list and the average value or the maximum value or the minimum value, etc. of each model parameter may be used to generate a new model parameter and generate a new model by using it.
Candidate 1: CCLM: C' (i,j) = 10 * L'(i,j) + 10
Candidate 2: CCLM: C' (i,j) = 8 * L'(i,j) + 2
Newly Generated Model (using an average value): CCLM: C' (i,j) = (10 +8)/2* L'(i,j) + (10+2)/2

In performing the inter-component prediction merge, a candidate in a candidate list may be removed.

In removing a candidate in a candidate list, whether to remove a candidate may be determined by comparing at least one of the model parameters of a corresponding candidate list with the model parameter of a candidate that is first added to a candidate list or has a higher index in a candidate list.

In this case, whether to remove a candidate may be determined by comparing model parameters between models derived by the same inter-component prediction method among the candidates in a candidate list.

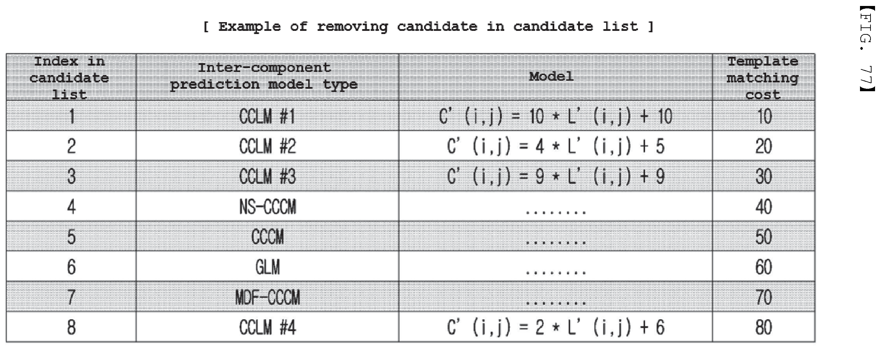

FIG. 77 shows an example of removing a candidate in a candidate list.

In this case, as in the example of FIG. 77, whether to remove a candidate may be determined by comparing the statistical value (sum, difference, average, etc.) of at least one of the model parameters of two candidates which will be compared in a candidate list with a threshold.

For example, when a difference in a specific model parameter (e.g., the value a of CCLM) between candidates is greater than or equal to a threshold, a candidate having a lower index (positioned below on a candidate list) in a candidate list may be removed.

For example, when a difference in a model parameter between candidates is less than or equal to a threshold, a candidate having a lower index (positioned below on a candidate list) in a candidate list may be removed.

In this case, a candidate in a candidate list may be removed based on a template cost.

For example, a template cost for candidates in a candidate list may be calculated and a candidate with the largest template cost may be removed.

For example, candidates whose template cost is greater than or equal to a specific threshold may be removed from a candidate list.

In this case, a specific threshold may be derived by using the statistical value of a template cost of candidates in a candidate list or may be signaled from an encoder to a decoder.

As an example of FIG. 77, an example of removing a candidate in a candidate list for a CCLM (a * L'(I,j) + b) model may be as follows.

First, after configuring a threshold as "5" and comparing it with model parameter a, whether to remove a candidate may be determined.
1) When a difference in the value of a between two models is greater than or equal to a threshold, remove * candidate 2/candidate 8 may be removed.
2) When a difference in the value of a between two models is less than or equal to a threshold, remove * candidate 3 may be removed.

As in the example, whether to remove a candidate may be determined by comparing the sum of differences of each model parameter with a threshold.

When a candidate in a candidate list is a candidate based on a plurality of models (a plurality of models are used to generate one prediction signal), at least one of a plurality of models may not be used or may be removed.

In performing the inter-component prediction merge, whether to add a specific candidate to a candidate list may be determined.

In this case, whether to add to a candidate list may be determined by comparing at least one of the model parameters of a candidate which will be added to a corresponding candidate list with the model parameter of a candidate in a candidate list.

In this case, a candidate which will be added to a candidate list among the candidates in a candidate list may be compared with models derived in the same inter-component prediction method to determine whether to add a corresponding candidate to a candidate list.

For example, when a candidate which will be added to a candidate list is a CCCM model, it may be compared with a candidate having a CCCM method among the candidates in a candidate list to determine whether to add a corresponding candidate to a candidate list.

In this case, whether to remove a candidate may be determined by comparing the statistical value (sum, difference, average, etc.) of at least one of the model parameters of two candidates to be compared with a threshold.

In this case, it is assumed that a model which will be used for the following example is as follows.
Candidate 1: CCLM: C' (I,j) = a1 * L'(I,j) + b1
Candidate 2: CCLM: C' (i,j) = a2* L'(i,j) + b2

For example, when a difference in a model parameter between candidates (abs(a1 - a2)) is greater than or equal to a threshold, a candidate having a lower index (positioned below on a candidate list) in a candidate list may be removed.

For example, when a difference in a model parameter between candidates is less than or equal to a threshold, a candidate having a lower index (positioned below on a candidate list) in a candidate list may be removed.

In this case, whether to add a candidate may be determined based on a template cost.

For example, when a template cost is determined by applying a corresponding model to the template region of a current block and it is compared with the largest template cost among the candidates in a candidate list, if such a difference is greater than or equal to a certain threshold, a corresponding candidate may not be added.

In performing the inter-component prediction merge, a prediction block may be generated by using at least one of the model parameters of a candidate in a candidate list or a model whose model parameter is adjusted based thereon may be added to a candidate list.

For example, for CCCM(C(i,j) = a₁*L'_{(i,j)}+ a₂*L'_{(i-1,j)}+ a₃*L'_{(i+1,j)}+ a₄*L'_{(i,j+1)}+ a₆*P+ a₇*B), a prediction block may be generated by using only a₁ to a₅ among the model parameters from a₁ to a₇ or a model generated by using only a corresponding parameter may be added to a candidate list.

In configuring a merge list (a candidate list) for the inter-component prediction merge, a new model may be derived (or a stored model may be taken) from a block positioned around candidates in a candidate list and added to a candidate list.

In this case, whether to add a candidate may be determined based on a template cost.

For example, when a template cost is determined by applying a corresponding model to the template region of a current block and it is compared with the largest template cost among the candidates in a candidate list, if such a difference is greater than or equal to a certain threshold, a corresponding candidate may not be added.

In performing the inter-component prediction merge, a candidate which will be added to a derived candidate list may be determined by using block vector (BV) information.

When a current block or neighboring block prediction mode is IBC or IntraTMP, information on an inter-component prediction model may be taken from a block at a position indicated by the BV of a corresponding block and added to a candidate list.

In this case, the addition of a BV and arrangement, removal, etc. therefrom in a candidate list may be performed in the same manner as in the example of the "method for generating a new model through the weighted sum".

In generating a candidate (an inter-component prediction model) for the inter-component prediction, a new model may be derived from a combined reference region by combining a reference regions used by candidates in a candidate list for the inter-component prediction to derive a model.

In configuring a candidate list for the inter-component prediction merge, a candidate list may be configured by using the type information of candidates (a method for taking candidates, an inter-component prediction method, etc.).

In this case, candidates may be classified based on a method for taking candidates.

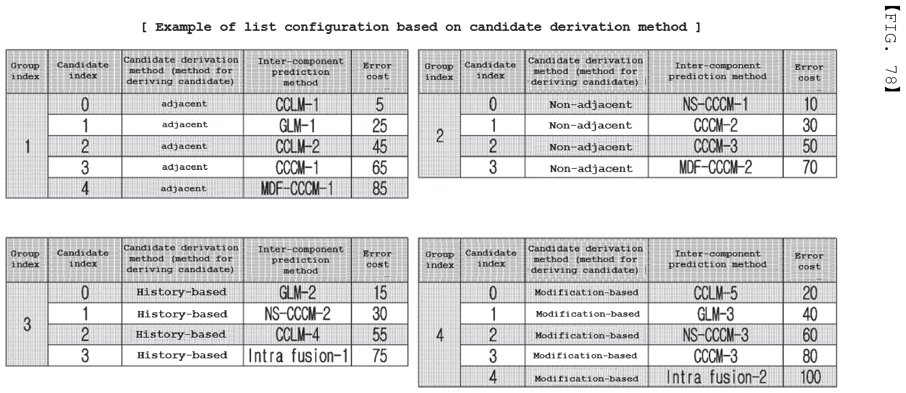

FIG. 78 shows an example of configuring a list based on a candidate derivation method.

For example, as in FIG. 78, they may be divided into an adjacent candidate (spatial/temporal), a non-adjacent candidate, a history-based candidate, a modified candidate (through scaling), etc.

In this case, candidates may be classified according to an inter-component prediction method.

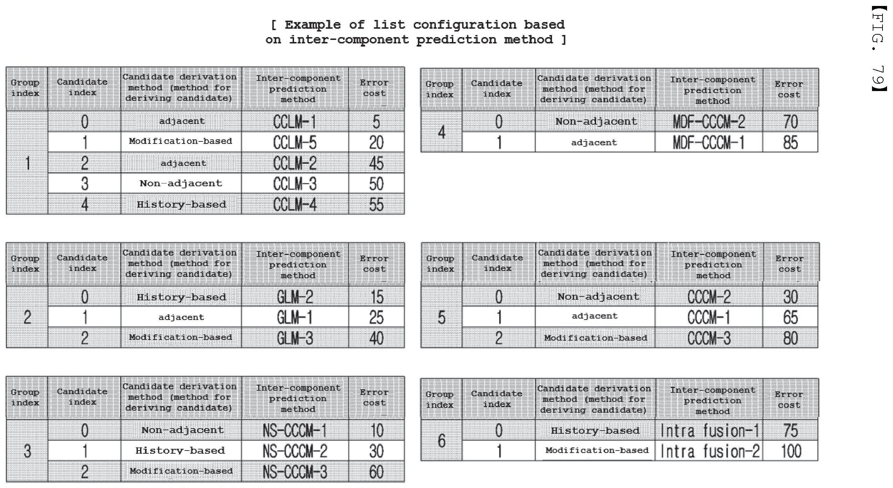

FIG. 79 shows an example of configuring a list based on an inter-component prediction method.

For example, as in FIG. 79, they may be divided into CCLM, GLM, CCCM, NS-CCCM, MDF-CCCM, GL-CCCM, CCCM/CCLM-based intra fusion, etc.

In this case, candidates divided by using type information may be used to configure and manage a list by type. In this case, management may refer to adding/removing/arranging a candidate in a list.

In configuring a candidate list for inter-component prediction merge by using the candidates divided by type, it may be determined based on the order in which candidates are included in a list divided by type or the order in which candidates are encoded/decoded.

For example, a list may be generated by type and h candidates may be selected from the top according to the order in which a candidate is added to a list for each list and added to a candidate list (a merge list) for prediction merge.

For example, a list may be generated by type and i candidates may be selected from the bottom according to the order in which a candidate is added to a list for each list and added to a candidate list (a merge list) for prediction merge.

For example, a list may be generated by type, a list may be arranged according to the order in which candidates are encoded/decoded for each list and j candidates may be selected from the top and added to a candidate list for prediction merge.

For example, a list may be generated by type, a list may be arranged according to the order in which candidates are encoded/decoded for each list and k candidates may be selected from the bottom and added to a candidate list for prediction merge.

In this case, h, i, j, k may be a value pre-configured in an encoder/a decoder or a value signaled from an encoder to a decoder.

In configuring a candidate list for inter-component prediction merge by using the candidates divided by type, it may be determined based on the error cost of candidates.

For example, as in FIG. 79, candidates may be arranged in descending order of error costs for each list and h candidates may be selected from the top and added to a candidate list for prediction merge.

For example, candidates may be arranged in descending order of error costs for each list and i candidates may be selected from the bottom and added to a candidate list for prediction merge.

For example, j candidates may be selected from the candidates whose error cost is less than a threshold for each list and added to a candidate list for prediction merge.

For example, k candidates may be selected from the candidates whose error cost is greater than a threshold for each list and added to a candidate list for prediction merge.

For example, l candidates may be selected from the candidates whose error cost is between thresholds for each list and added to a candidate list for prediction merge.

For example, after arranging candidates in the order in which an error cost is close to a threshold for each list, n candidates may be selected and determined as the same group.

For example, after arranging candidates in the order in which an error cost is far from a threshold for each list, m candidates may be selected and determined as the same group.

Here, h, i, j, k, l, n, m and a threshold may be a pre-configured value or a value signaled from an encoder to a decoder.

In this case, the same process may be performed by using the statistical value of an error cost in the example.

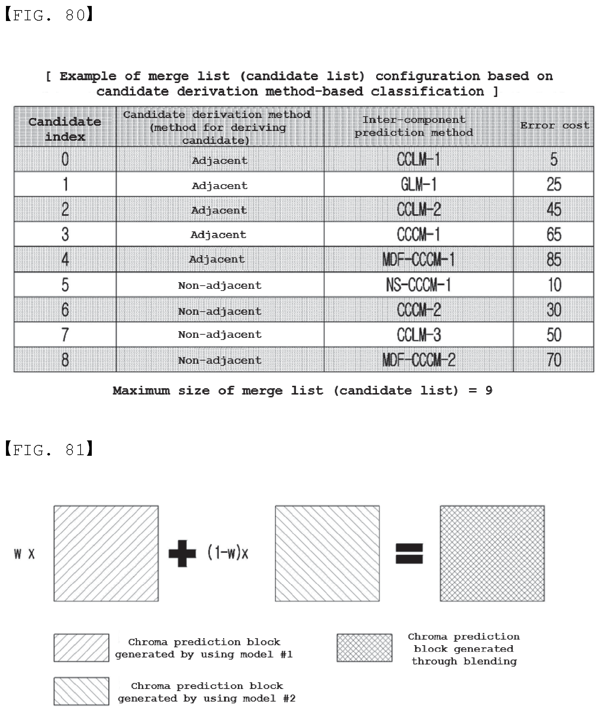

FIG. 80 shows an example of configuring a merge list (a candidate list) based on candidate derivation method-based classification.

For example, as in FIG. 78, each list may be divided according to a method for taking candidates and each list may be arranged in descending order of error costs and added to a final merge list in the adjacent, non-adjacent, history-based and modification-based order as in FIG. 80. In this case, in adding a candidate to a merge list, as many candidates as a determined merge list size may be added.

Addition, arrangement and removal in the example may be performed not only for each list classified by type, but also in an integrated list where divided lists are integrated into one.

For example, each divided list may be made into one integrated list to arrange candidates in a list in descending order of error costs and h candidates may be selected from the top and added to a final candidate list (merge list) for prediction merge.

In this case, a list management and candidate list (merge list) configuration method using the type information of a candidate in the example may be applied to all technologies that configure a list in a prediction process such as IBC merge/AMVP, Affine merge/AMVP, MPM, etc.

[E4/D4] A step of generating a chroma prediction signal by using an inter-component prediction model;

In generating a chroma signal/block/sample by using the model, a plurality of model information may be used to generate a chroma prediction signal/block/sample.

In this case, model information may be a model coefficient, an offset value and an equation configured by using it.

In this case, model information may be generated by using at least one prediction model among the chroma signal prediction models below.
Cross-component Linear Model (CCLM) Cross-component Linear Model)
Gradient Linear Model (GLM) Gradient Linear Model)
Filter based Linear Model (FLM) Filter based Linear Model)
Convolutional Cross-component Model (CCCM) Convolutional Cross-component Model)

FIG. 81 shows an example of performing a weighted sum on chroma prediction signals/blocks/samples generated by using a plurality of models.

For example, a new chroma prediction signal/block/sample which will be used for chroma prediction may be generated through the weighted sum of chroma prediction signals/blocks/samples generated by using the plurality of models. (FIG. 81)

In this case, the weight may be given equally or differentially.

In this case, a weight may be different according to encoding information.

In this case, the weight sum may be performed by using at least one chroma prediction signal/block/sample.

In this case, the number of models used for a weight and a weight sum may be a value pre-configured in an encoder/a decoder or a value signaled from an encoder to a decoder. It may be transmitted from an encoder. Alternatively, it may be a value derived by using neighboring information.

In this case, the type and number of models used for the weighted sum may be different according to neighboring encoding information.

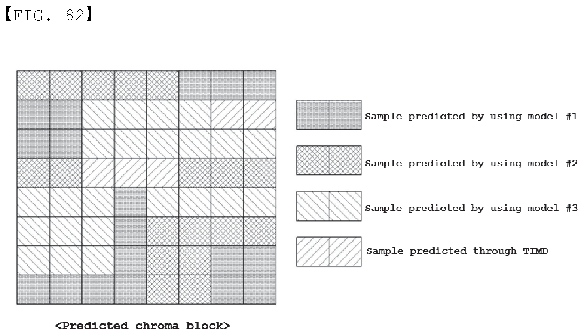

FIG. 82 shows an example of using a different model for each part to obtain a predicted chroma block.

In this case, a prediction signal which will be used for chroma prediction may be generated through the weighted sum of signals generated through a different type of inter-component prediction model. (FIG. 82)

For example, a new chroma prediction signal may be generated through the weighted sum of chroma prediction signals predicted through a Cross-component Linear Model (CCLM) and a Gradient Linear Model (GLM).

For example, in generating a chroma prediction signal (block), a chroma prediction signal may be generated by applying a different model in a sample unit. In addition, a prediction signal may be generated by applying a different weight in a sample unit. (FIG. 57)

Model information used to generate a chroma signal/block/sample which will be used for final chroma prediction through the weighted sum among a plurality of models may be signaled or derived by using encoding information.

In generating the chroma prediction signal, a prediction signal/block/sample which will be used for chroma prediction may be generated through the weighted sum of a signal generated through intra or inter prediction and a signal generated by using the inter-component prediction model. (FIG. 81, FIG. 82)

For example, a prediction signal/block/sample which will be used for chroma prediction may be generated through the weighted sum of a prediction signal generated by a method other than an inter-component prediction model such as TIMD, DIMD, angular mode, fusion modes and a prediction signal generated by using an inter-component prediction model.

In generating a prediction block which will be used for chroma prediction by using a prediction signal/sample generated through the plurality of models or prediction signals/samples generated through various intra predictions, a new chroma prediction signal may be generated by using a prediction sample generated through intra prediction or a different model in a sample unit.

For example, a chroma prediction signal (block) may be generated by using a prediction signal generated by applying a different model in a sample unit or a prediction signal generated by using a method other than an inter-component prediction model. In addition, a chroma prediction signal may be generated by applying a different weight in a sample unit.

Information on a model or a prediction mode used to generate the chroma signal may be signaled or derived by using encoding information.

In generating the chroma prediction signal, a chroma signal may be corrected by using a prediction model derived through inter-color modeling between chroma signals (U/V).

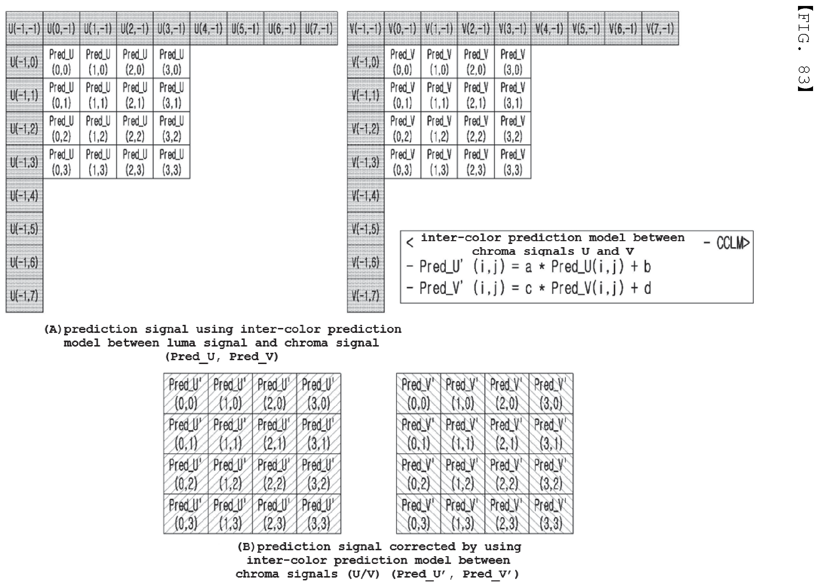

FIG. 83 shows an example of a prediction signal corrected by using an inter-component prediction model between chroma signals (U/V).

For example, as in FIG. 83, a chroma prediction signal Pred_U and a chroma prediction block Pred_V may be generated through inter-color modeling between a luma signal and a chroma signal, an inter-color prediction model between U and V may be derived by using reconstructed samples around chroma signals Pred_U and Pred_V and a derived prediction model may be used to correct chroma prediction blocks Pred_U and Pred_V.

In this case, when corrected Pred_U and Pred_V are referred to as Pred_U' and Pred_V', respectively, and a cross-component linear model (CCLM) for inter-color prediction is used, corrected chroma prediction signals Pred_U' and Pred_V' may be calculated as follows.$Pred_U ′ \left(i, j\right) = a * Pred_U \left(i, j\right) + b$$Pred_V ′ \left(i, j\right) = c * Pred_V \left(i, j\right) + d$

In this case, a modeling method used to model an inter-color correlation between a luma signal and a chroma signal may be different from a modeling method used to model an inter-color correlation between chroma signals.
A method for modeling an inter-color correlation between a luma signal and a chroma signal: CCCM/FLM
A method for modeling an inter-color correlation between chroma signals: CCLM/GLM

Model information (model index) used to model an inter-color correlation between a luma signal and a chroma signal or between chroma signals may be a pre-configured value or may be a value signaled from an encoder to a decoder.

The [E1/D1] to [E4/D4] processes may be applied to all prediction processes to which an inter-component prediction model as well as a chroma signal in intra prediction may be applied in an encoding process.

For example, it may be used to predict a chroma signal by using a cross-component residual model (CCRM) in inter prediction.

In this case, while an inter-component prediction model models and uses a correlation between a reconstructed luma signal and a chroma signal in intra prediction, a cross-component residual model may model and use a correlation between a luma prediction signal and a chroma prediction signal in inter prediction.

In deriving a model from a cross-component residual model for inter prediction, a model may be derived by using CCLM/GLM/CCCM/GL-CCCM/MDF-CCCM/NS-CCCM methods which are an inter-component prediction method used in intra prediction.

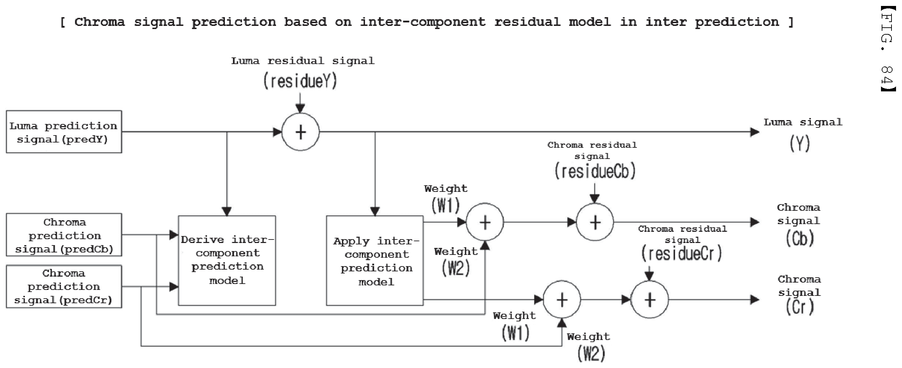

FIG. 84 shows an example of chroma signal prediction based on an inter-component residual model in inter prediction.

In the chroma signal prediction for inter prediction, as in FIG. 84 below, an inter-color prediction model may be derived between a luma prediction signal and a chroma prediction signal and may be applied to a reconstructed luma signal to generate a chroma prediction signal.

In this case, a chroma prediction signal may be generated through the weighted sum of a chroma prediction signal generated through inter-component prediction and a chroma prediction signal generated through inter chroma prediction, not inter-component prediction.

In this case, weights W1 and W2 in FIG. 84 may be a value which is arbitrarily determined.

For example, W1 = 0.8 and W2 = 0.2 may be configured.

In this case, various combinations of weights W1 and W2 may be listed to determine an optimal weight combination based on an encoding cost.

For example, a list may be configured by configuring a weight (W1, W2) as a set such as (0.5, 0.5), (0.25, 0.75), (0.75, 0.25), (0.3, 0.7), (0.7, 0.3) and an index for an optimal weight combination may be signaled from an encoder to a decoder.

A plurality of models may be derived from the cross-component residual model using a prediction signal to generate a chroma prediction signal.

In this case, a method for deriving a plurality of prediction models may be derived through the same process as a method for deriving a plurality of models by using a reconstruction signal in the intra prediction of the present disclosure.

In the chroma signal prediction using a cross-component residual model, model information (model parameter) may be inherited and used from an adjacent/non-adjacent block in a referenceable current/reference picture.

It may be applied in the same way as a method in which model information is inherited (or derived) from a neighboring block to configure a merge list (a candidate list) and perform inter-component prediction by using it in [E3/D3] "A step of performing inter-component prediction merge by using an inter-component prediction model".

In this case, in merge prediction using a cross-component residual model, at least one of the inter-component prediction models used for chroma signal prediction in intra prediction may be added to a corresponding merge list.

In this case, a merge list configured for inter-component prediction merge in the inter prediction and intra prediction may be integrated and managed as one.

In performing inter-component prediction through the [E1/D1] to [E4/D4] processes, even when an inter-component prediction model and a method for deriving a model are different, an embodiment described in the process and technologies used for an embodiment may be applied in the same way.

A single model-based inter-color linear model method

A single model-based inter-color linear model method is a method for predicting a chroma block by using one linear model that expresses a relationship between a chroma sample and a luma sample corresponding thereto. The linear model may be derived by using a Least-Mean-Square (LMS) method.

A single model-based inter-color linear model method may predict a chroma block as in the following Equation by using a linear model between a chroma sample and a luma sample corresponding thereto.${pred}_{c} \left(i, j\right) = α * {rec}_{L ′} \left(i, j\right) + β$

In [Equation 11] above, pred_{c}(i,j) is the prediction sample of a chroma block to be predicted and rec_{L'}(i,j) is a luma sample corresponding to a chroma block. In this case, a luma sample may be a downsampled luma sample.

Linear model parameters α and β may be derived from at least one of the reconstructed samples around a chroma block and at least one of the reconstructed samples around a luma block corresponding to a chroma block.

In addition, at least one of the linear model parameters α and β may be entropy encoded/decoded.

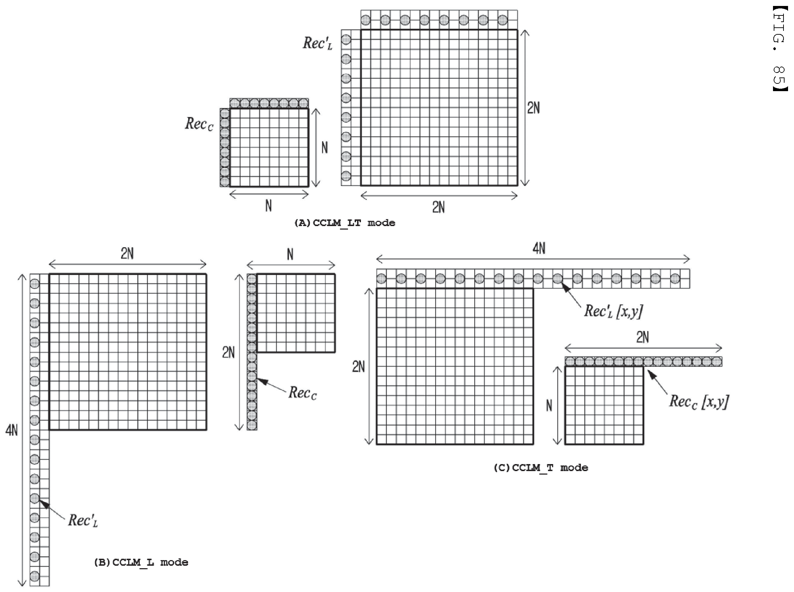

FIG. 85 shows an example of an inter-color linear model mode.

As in an example of [FIG. 85], a single model-based inter-color linear model method may be divided into three modes: CCLM_LT, CCLM_L and CCLM_T according to the position of a reconstructed sample around a current block used for deriving the linear model parameter.

A CCLM_LT mode may use at least one of the reconstructed samples on the top and left as a reconstructed sample around a current block. A CCLM_L mode may use at least one of the reconstructed samples on the left as a reconstructed sample around a current block. A CCLM_T mode may use at least one of the reconstructed samples on the top as a reconstructed sample around a current block.

The current block may refer to at least one of a chroma block and a luma block corresponding to a chroma block.

A reconstructed sample around a current block used for deriving the linear model parameter may be different according to at least one of a top-left position in a current block and the size of a current block. In other words, at least one of the reconstructed samples around a current block may be used for deriving a linear model parameter according to at least one of the horizontal size and the vertical size of a current block. In this case, at least one of the reconstructed samples around a current block in at least one direction of the left, the right, the top and the bottom based on a top-left position in a current block may be used to derive a linear model parameter.

For example, in a CCLM_LT mode, at least one of the samples included in a region at least 1 time the horizontal size or the vertical size of a current block among the reconstructed samples around the top and left of a current block in right and bottom directions based on a top-left position in a current block may be used to derive a linear model parameter.

As another example, in a CCLM_L mode, at least one of the samples included in a region at least 1 time the vertical size of a current block among the reconstructed samples around the left of a current block in a bottom direction based on a top-left position in a current block may be used to derive a linear model parameter.

As another example, in a CCLM_T mode, at least one of the samples included in a region at least 1 time the horizontal size of a current block among the reconstructed samples around the top of a current block in a right direction based on a top-left position in a current block may be used to derive a linear model parameter.

For example, in a CCLM_LT mode, at least one of the samples included in a region at least 3 times the horizontal size or the vertical size of a current block among the reconstructed samples around the top and left of a current block in right and bottom directions based on a top-left position in a current block may be used to derive a linear model parameter.

As another example, in a CCLM_L mode, at least one of the samples included in a region at least 3 times the vertical size of a current block among the reconstructed samples around the left of a current block in a bottom direction based on a top-left position in a current block may be used to derive a linear model parameter.

As another example, in a CCLM_T mode, at least one of the samples included in a region at least 3 times the horizontal size of a current block among the reconstructed samples around the top of a current block in a right direction based on a top-left position in a current block may be used to derive a linear model parameter.

For example, in a CCLM_LT mode, at least one of the samples included in a region at least 1 time the horizontal size or the vertical size of a current block among the reconstructed samples around the top and left of a current block in at least one of the left, right, top and bottom directions based on a top-left position in a current block may be used to derive a linear model parameter.

In other words, a reconstructed sample around the top may include at least one of the reconstructed samples on the left of the top as well as the right of the top based on a top-left position in a current block. In addition, a reconstructed sample around the left may include at least one of the reconstructed samples on the top of the left as well as the bottom of the left based on a top-left position in a current block.

As another example, in a CCLM_L mode, at least one of the samples included in a region at least 1 time the vertical size of a current block among the reconstructed samples around the left of a current block in at least one of the top and bottom directions based on a top-left position in a current block may be used to derive a linear model parameter.

In other words, a reconstructed sample around the left may include at least one of the reconstructed samples on the top of the left as well as the bottom of the left based on a top-left position in a current block.

As another example, in a CCLM_T mode, at least one of the samples included in a region at least 1 time the horizontal size of a current block among the reconstructed samples around the top of a current block in at least one of the left and right directions based on a top-left position in a current block may be used to derive a linear model parameter.

In other words, a reconstructed sample around the top may include at least one of the reconstructed samples on the left of the top as well as the right of the top based on a top-left position in a current block.

A region including at least one of the reconstructed samples around the current block may be a reference region.

When the top boundary of a current block is the top boundary of a coding tree unit (CTU), the reference region may use only three sample lines on the left of a current block without using two sample lines on the top of a current block.

In addition, when the top boundary of a current block is the top boundary of a CTU, the reference region may use only L sample lines on the left of a current block without using M sample lines on the top of a current block. Here, L may be a positive integer, and for example, may be 3. In addition, M may be a positive integer, and may be a value less than or equal to L.

A sample used to derive a linear model parameter in the reference region may be a sample that exists at a position sub-sampled at a certain interval. The certain interval may be K samples, where K may be a positive integer. In other words, only samples that exist at a position skipped by K samples within a reference region may be used for deriving a linear model parameter.

In addition, a sample used for deriving a linear model parameter in the reference region may be a sample that exists at a position where a x-coordinate and a y-coordinate are odd or even.

The reference region may have the same size regardless of at least one of the horizontal size and the vertical size of a current block.

In addition, the reference region may have a variable size according to at least one of the horizontal size and the vertical size of a current block.

In addition, when there is an unavailable sample in the reference region, the value of the unavailable sample may be replaced with the value of an available sample adjacent to the unavailable sample.

When the horizontal size of a current block is W and the vertical size of a current block is H, L1, the horizontal size of a reference region, and L2, the vertical size of a reference region, may have the following value.

At least one of W, H, L1 and L2 above may be 0 or a positive integer.

For example, at least one of L1 and L2 above may be a fixed value regardless of at least one of W and H.

As another example, at least one of L1 and L2 above may be a variable value according to at least one of W and H.

### A multi-model-based inter-color linear model method

A multi-model-based inter-color linear model method predicts a chroma block by using a linear model expressing a relationship between a chroma sample and a luma sample corresponding thereto similar to the single model-based inter-color linear model method, but may derive two linear models for one chroma block. Each of two linear models may be derived by using a Least-Mean-Square (LMS) method.

In performing a multi-model-based inter-color linear model method, at least one of the embodiments of the single model-based inter-color linear model method may be performed.

In order to derive the two linear models, the average value of reconstructed luma samples around a current luma block may be used as a threshold value and at least one of the reconstructed luma samples around a current luma block may be divided into two groups based on a threshold value.

Instead of the average value, at least one of the statistical values may be used.

Instead of the two linear models, at least two linear models may be derived.

Instead of the reconstructed luma sample around a current luma block, a reconstructed chroma sample around a current chroma block may be used.

The reconstructed luma samples around a current luma block may be a downsampled luma sample.

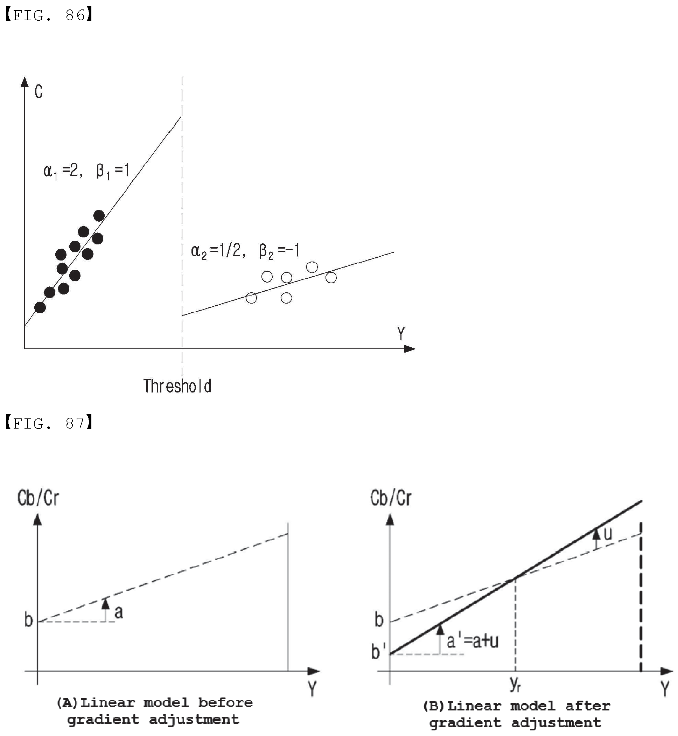

FIG. 86 shows an example of deriving two linear models.

Based on samples included in each divided group, at least one of the linear model parameters α and β for each group may be derived. As in the example of [FIG. 86], when two linear models are used, linear model parameters (α₁, β₁) and (α₂, β₂) for two linear models may be derived.

There may be a limit that at least one of the linear model parameters α and β for each group has the same value between groups.

For example, when two linear models are used, there may be a limit that α1 and α2 among the linear model parameters have the same value.

As another example, when two linear models are used, there may be a limit that β ₁ and β ₂ among the linear model parameters have the same value.

When linear model parameters (α₁, β₁) and (α₂, β₂) for two linear models are derived, a multi-model-based inter-color linear model method may predict a chroma block as in [Equation 12] by using a linear model between a chroma sample and a luma sample corresponding thereto for each group. ${pred}_{C} \left(i, j\right) = {α}_{1} * {rec}_{L ′} \left(i, j\right) + {β}_{1}$${pred}_{C} \left(i, j\right) = {α}_{2} * {rec}_{L ′} \left(i, j\right) + {β}_{2}$

In [Equation 12] above, pred_{C}(i,j) is the prediction sample of a chroma block to be predicted and rec_{L'}(i,j) is a luma sample corresponding to a chroma block. In this case, a luma sample may be a downsampled luma sample.

Information on whether to use a single model-based inter-color linear model method may be entropy encoded/decoded. When a single model-based inter-color linear model method is used, information on whether to use a multi-model-based inter-color linear model method may be entropy encoded/decoded.

In addition, information on whether to use an inter-color linear model method including a single model-based inter-color linear model method and a multi-model-based inter-color linear model method may be entropy encoded/decoded. When an inter-color linear model method is used, information on whether to use a single model-based inter-color linear model method or a multi-model-based inter-color linear model method may be entropy encoded/decoded.

Similar to a single model-based inter-color linear model method, as in the example of [FIG. 8], a multi-model-based inter-color linear model may be divided into three modes MMLM_LT, MMLM_L and MMLM_T according to the position of a reconstructed sample around a current block used for deriving the linear model parameter.

A MMLM_LT mode may use at least one of the reconstructed samples on the top and the left as a reconstructed sample around a current block. A MMLM_L mode may use at least one of the reconstructed samples on the left as a reconstructed sample around a current block. A MMLM_T mode may use at least one of the reconstructed samples on the top as a reconstructed sample around a current block.

The current block may refer to at least one of a chroma block and a luma block corresponding to a chroma block.

A reconstructed sample around a current block used for deriving the linear model parameter may be different according to at least one of a top-left position in a current block and the size of a current block. In other words, at least one of the reconstructed samples around a current block may be used for deriving a linear model parameter according to at least one of the horizontal size and the vertical size of a current block. In this case, at least one of the reconstructed samples around a current block in at least one direction of the left, the right, the top and the bottom based on a top-left position in a current block may be used to derive a linear model parameter.

For example, in a MMLM_LT mode, at least one of the samples included in a region at least 1 time the horizontal size or the vertical size of a current block among the reconstructed samples around the top and left of a current block in right and bottom directions based on a top-left position in a current block may be used to derive a linear model parameter.

As another example, in a MMLM_L mode, at least one of the samples included in a region at least 1 time the vertical size of a current block among the reconstructed samples around the left of a current block in a bottom direction based on a top-left position in a current block may be used to derive a linear model parameter.

As another example, in a MMLM_T mode, at least one of the samples included in a region at least 1 time the hotizontal size of a current block among the reconstructed samples around the top of a current block in a right direction based on a top-left position in a current block may be used to derive a linear model parameter.

For example, in a MMLM_LT mode, at least one of the samples included in a region at least 3 times the horizontal size or the vertical size of a current block among the reconstructed samples around the top and left of a current block in right and bottom directions based on a top-left position in a current block may be used to derive a linear model parameter.

As another example, in a MMLM_L mode, at least one of the samples included in a region at least 3 times the vertical size of a current block among the reconstructed samples around the left of a current block in a bottom direction based on a top-left position in a current block may be used to derive a linear model parameter.

As another example, in a MMLM_T mode, at least one of the samples included in a region at least 3 times the horizontal size of a current block among the reconstructed samples around the top of a current block in a right direction based on a top-left position in a current block may be used to derive a linear model parameter.

For example, in a MMLM_LT mode, at least one of the samples included in a region at least 1 time the horizontal size or the vertical size of a current block among the reconstructed samples around the top and left of a current block in at least one of left, right, top and bottom directions based on a top-left position in a current block may be used to derive a linear model parameter.

In other words, a reconstructed sample around the top may include at least one of the reconstructed samples on the left of the top as well as the right of the top based on a top-left position in a current block. In addition, a reconstructed sample around the left may include at least one of the reconstructed samples on the top of the left as well as the bottom of the left based on a top-left position in a current block.

As another example, in a MMLM_L mode, at least one of the samples included in a region at least 1 time the vertical size of a current block among the reconstructed samples around the left of a current block in at least one of top and bottom directions based on a top-left position in a current block may be used to derive a linear model parameter.

In other words, a reconstructed sample around the left may include at least one of the reconstructed samples on the top of the left as well as the bottom of the left based on a top-left position in a current block.

As another example, in a MMLM_T mode, at least one of the samples included in a region at least 1 time the horizontal size of a current block among the reconstructed samples around the top of a current block in at least one of left and right directions based on a top-left position in a current block may be used to derive a linear model parameter.

In other words, a reconstructed sample around the top may include at least one of the reconstructed samples on the left of the top as well as the right of the top based on a top-left position in a current block.

A region including at least one of the reconstructed samples around the current block may be a reference region.

When the top boundary of a current block is the top boundary of a coding tree unit (CTU), the reference region may use only three sample lines on the left of a current block without using two sample lines on the top of a current block.

In addition, when the top boundary of a current block is the top boundary of a CTU, the reference region may use only L sample lines on the left of a current block without using M sample lines on the top of a current block. Here, L may be a positive integer, and for example, may be 3. In addition, M may be a positive integer, and may be a value less than or equal to L.

A sample used to derive a linear model parameter in the reference region may be a sample that exists at a position sub-sampled at a certain interval. The certain interval may be K samples, where K may be a positive integer. In other words, only samples that exist at a position skipped by K samples within a reference region may be used for deriving a linear model parameter.

In addition, a sample used for deriving a linear model parameter in the reference region may be a sample that exists at a position where a x-coordinate and a y-coordinate are odd or even.

The reference region may have the same size regardless of at least one of the horizontal size and the vertical size of a current block.

In addition, the reference region may have a variable size according to at least one of the horizontal size and the vertical size of a current block.

In addition, when there is an unavailable sample in the reference region, the value of the unavailable sample may be replaced with the value of an available sample adjacent to the unavailable sample.

When the horizontal size of a current block is W and the vertical size of a current block is H, L1, the horizontal size of a reference region, and L2, the vertical size of a reference region, may have the following value.

At least one of W, H, L1 and L2 above may be 0 or a positive integer.

For example, at least one of L1 and L2 above may be a fixed value regardless of at least one of W and H.

As another example, at least one of L1 and L2 above may be a variable value according to at least one of W and H.

### Adjust the gradient of a linear model

An inter-color linear model method may include at least one of a single model-based inter-color linear model method and a multi-model-based inter-color linear model method.

Gradient adjustment is a method for updating a linear model by changing gradient (slope) parameter a and bias parameter b which are a linear model parameter used in an inter-color linear model method.

In order to update a linear model in an inter-color linear model method in [Equation 13], gradient parameter adjustment value u may be entropy encoded/decoded as in [Equation 14].$chromaVal = a ⋅ lumaVal + b$$chromaVal = a ′ lumaVal + b ′$
in [Equation 14] above, it may be a'=a+u, b'=b-u·yᵣ.

FIG. 87 shows an example of a linear model before/after gradient adjustment.

As in the example of [FIG. 87], a linear model in an inter-color linear model method may be tilted or rotated based on luma component value yᵣ. The luma component value yᵣ may be the average value of reconstructed luma samples around a current luma block.

Instead of the average value, at least one of the statistical values may be used.

Instead of the reconstructed luma sample around a current luma block, a reconstructed chroma sample around a current chroma block may be used.

The reconstructed luma samples around a current luma block may be a downsampled luma sample.

A slope parameter adjustment value may be entropy encoded/decoded in the form of an integer value between -4 and 4.

Instead of 4 above, it may be N. Here, N may be a positive integer.

The unit of a gradient parameter adjustment value may be 1/8 of a chroma sample value per luma sample value when the bit depth of a sample is 10 bits.

Instead of 8 above, it may be N. Here, N may be a positive integer.

The gradient adjustment of a linear model may be used for CCLM_LT and MMLM_LT.

Alternatively, the gradient adjustment of a linear model may be used for at least one of the inter-color linear model modes CCLM_LT, CCLM_L, CCLM_L, MMLM_LT, MMLM_L and MMLM_T.

When gradient adjustment is applied to a multi-model-based inter-color linear model method, it may be applied to both of the two linear models. Accordingly, up to two gradient parameter adjustment values may be entropy encoded/decoded for one chroma block.

Instead of the two linear models, at least two linear models may be derived.

When gradient adjustment is applied to a multi-model-based inter-color linear model method, it may be applied to at least one of two or more linear models. At least one gradient parameter adjustment value may be entropy encoded/decoded for at least one of a Cb block and a Cr block which are a chroma block.

When at least two linear models are used, a gradient parameter adjustment value for each linear model may be predicted and entropy encoded/decoded based on a difference.

For example, when two linear models are used, a difference value between the first gradient parameter adjustment value and the second gradient parameter adjustment value may be entropy-encoded after an encoder entropy-encodes the first gradient parameter adjustment value. After a decoder entropy-decodes the first gradient parameter adjustment value, a difference value between the first gradient parameter adjustment value and the second gradient parameter adjustment value may be entropy-decoded. Afterwards, the first gradient parameter adjustment value and the difference value may be added to derive the second gradient parameter adjustment value.

### A convolutional inter-color model method

A convolutional inter-color model method predicts a chroma sample in a chroma block from a luma sample in a luma block corresponding to a chroma block, similar to an inter-color linear model method.

Similar to an inter-color model method, a reconstructed luma sample may be a downsampled reconstructed luma sample.

A convolutional inter-color model method may use a single model and a multi-model.

A multi-model-based convolutional inter-color model method may be used in a block that may use at least 128 reference samples.

Instead of 128 above, it may be N. Here, N may be a positive integer.

A convolutional 7-tap filter may be configured with a 5-tap spatial filter coefficient in the shape of '+', a nonlinear term and a bias term.

Instead of 5 above, it may be N. Here, N may be a positive integer.

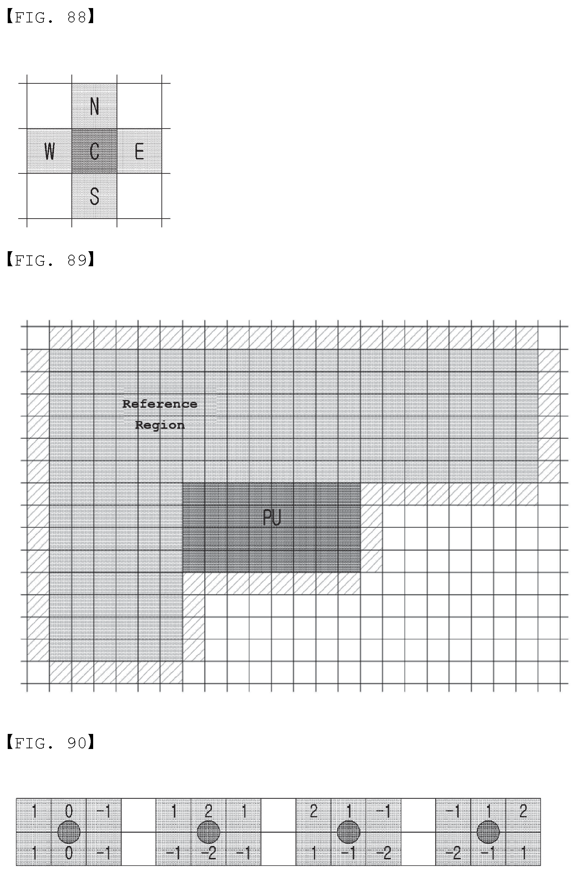

FIG. 88 shows an example of a 5-tap spatial filter.

As in the example of [FIG. 88], the input of a 5-tap spatial filter may be configured with center(C), top(N), bottom(S), left(W) and right(E) samples at the same position of a luma sample as a chroma sample to be predicted.

As in [Equation 15], nonlinear term P is expressed as the square of center luma sample C and may be scaled to the range of bit depth values.$P = \left(C*C+midVal\right) ≫ bitDepth$

In other words, when the bit depth of a sample is 10 bits, it may be calculated as in [Equation 16].$P = \left(C*C+512\right) ≫ 10$

Bias term B represents an offset between an input value and an output value and may be configured as the median value of chroma components.

As in [Equation 17], the output predChromaVal of a convolution filter may be calculated as a convolution between filter coefficient cᵢ and an input value and may be truncated to the range of valid chroma sample values. 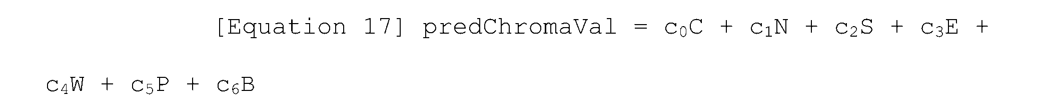 [Equation 17] predChromaVal = c0C + c1N + c2S + c3E + c4W + c5P + c6B

Filter coefficient cᵢ may be calculated so that a Mean Squared Error (MSE) is minimized by using at least one of the samples in a luma reference region corresponding to a chroma block and at least one of the samples in a chroma reference region. The luma reference region may be a reconstructed region around a luma block. In addition, the chroma reference region may be a reconstructed region around a chroma block. The filter coefficient may refer to a model parameter.

FIG. 89 shows an example of a reference region used for deriving a filter coefficient.

As in the example of [FIG. 89], six sample lines on the left of a current block and six sample lines on the top of a current block may be used as a reference region. In addition, a reference region may include a top-right region by the horizontal size of a current block and a bottom-left region by the vertical size of a current block.

Instead of 6 above, it may be N. Here, N may be a positive integer.

When the top boundary of a current block is the top boundary of a coding tree unit (CTU), the reference region may use only six sample lines on the left of a current block without using six sample lines on the top of a current block.

In addition, when the top boundary of a current block is the top boundary of a CTU, the reference region may use only L sample lines on the left of a current block without using M sample lines on the top of a current block. Here, L may be a positive integer, and for example, may be 6. In addition, M may be a positive integer, and may be a value less than or equal to L.

A sample used to derive a filter coefficient in the reference region may be a sample that exists at a sub-sampled position at a certain interval. The certain interval may be K samples, where K may be a positive integer. In other words, only samples existing at a position skipped by K samples within a reference region may be used to derive a filter coefficient.

In addition, a sample used to derive a filter coefficient in the reference region may be a sample existing at a position where a x-coordinate and a y-coordinate are odd or even.

The reference region may have the same size regardless of at least one of the horizontal size and the vertical size of a current block.

In addition, the reference region may have a variable size according to at least one of the horizontal size and the vertical size of a current block.

In addition, when there is an unavailable sample in the reference region, the value of the unavailable sample may be replaced with the value of an available sample adjacent to the unavailable sample.

When the horizontal size of a current block is W and the vertical size of a current block is H, L1, the horizontal size of a reference region, and L2, the vertical size of a reference region, may have the following value.

At least one of W, H, L1 and L2 above may be 0 or a positive integer.

For example, at least one of L1 and L2 above may be a fixed value regardless of at least one of W and H.

As another example, at least one of L1 and L2 above may be a variable value according to at least one of W and H.

A reconstructed sample around a current block corresponding to the reference region may be different according to at least one of a top-left position within a current block and the size of a current block. In other words, at least one of the reconstructed samples around a current block may be used according to at least one of the horizontal size and the vertical size of a current block. In this case, at least one of the reconstructed samples around a current block in at least one direction of the left, the right, the top and the bottom based on a top-left position in a current block may be used to derive a linear model parameter.

For example, at least one of the samples included in a region at least 1 time the horizontal size or the vertical size of a current block among the reconstructed samples around the top and left of a current block in right and bottom directions based on a top-left position in a current block may be included in a reference region.

As another example, at least one of the samples included in a region at least 1 time the vertical size of a current block among the reconstructed samples around the left of a current block in a bottom direction based on a top-left position in a current block may be included in a reference region.

As another example, at least one of the samples included in a region at least 1 time the horizontal size of a current block among the reconstructed samples around the top of a current block in a right direction based on a top-left position in a current block may be included in a reference region.

For example, at least one of the samples included in a region at least 3 times the horizontal size or the vertical size of a current block among the reconstructed samples around the top and left of a current block in right and bottom directions based on a top-left position in a current block may be included in a reference region.

As another example, at least one of the samples included in a region at least 3 times the vertical size of a current block among the reconstructed samples around the left of a current block in a bottom direction based on a top-left position in a current block may be included in a reference region.

As another example, at least one of the samples included in a region at least 3 times the horizontal size of a current block among the reconstructed samples around the top of a current block in a right direction based on a top-left position in a current block may be included in a reference region.

For example, at least one of the samples included in a region at least 1 time the horizontal size or the vertical size of a current block among the reconstructed samples around the top and left of a current block in at least one of left, right, top and bottom directions based on a top-left position in a current block may be included in a reference region.

In other words, a reconstructed sample around the top may include at least one of the reconstructed samples on the left of the top as well as the right of the top based on a top-left position in a current block. In addition, a reconstructed sample around the left may include at least one of the reconstructed samples on the top of the left as well as the bottom of the left based on a top-left position in a current block.

As another example, at least one of the samples included in a region at least 1 time the vertical size of a current block among the reconstructed samples around the left of a current block in at least one of top and bottom directions based on a top-left position in a current block may be included in a reference region.

In other words, a reconstructed sample around the left may include at least one of the reconstructed samples on the top of the left as well as the bottom of the left based on a top-left position in a current block.

As another example, at least one of the samples included in a region at least 1 time the horizontal size of a current block among the reconstructed samples around the top of a current block in at least one of left and right directions based on a top-left position in a current block may be included in a reference region.

In other words, a reconstructed sample around the top may include at least one of the reconstructed samples on the left of the top as well as the right of the top based on a top-left position in a current block.

The MSE may be minimized by calculating an autocorrelation matrix for reconstructed luma samples in a reference region and a cross-correlation vector between a reconstructed luma sample in a reference region and a reconstructed chroma sample in a reference region. An autocorrelation matrix may be decomposed into lower diagonal matrix-diagonal matrix-lower diagonal matrix (LDL) and a final filter coefficient may be calculated by using back-substitution.

Information on whether to use a convolutional inter-color model method may be entropy-encoded/decoded as a flag in a block unit.

Information on whether to use an inter-color linear model method including a single model-based inter-color linear model method and a multi-model-based inter-color linear model method may be entropy-encoded/decoded. When an inter-color linear model method is used, information on whether to use a convolutional inter-color model method may be entropy-encoded/decoded.

### A gradient linear model method

A gradient linear model method is a method for predicting a chroma block by using a model that expresses a relationship between a chroma sample and a gradient of luma samples corresponding thereto. The gradient may refer to a slope.

A gradient linear model method may predict a chroma sample in a chroma block as in [Equation 18] by using the gradient of luma samples and two parameters.${pred}_{C} \left(i, j\right) = α * G \left(i, j\right) + β$

In addition, a gradient linear model method may predict a chroma sample in a chroma block as in [Equation 9] by using the gradient of luma samples, a luma sample and three parameters. 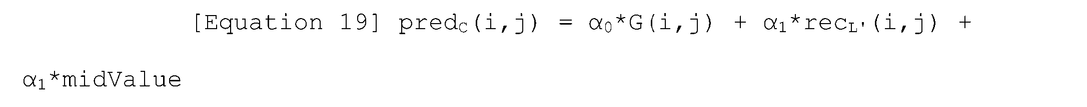 predC(i,j) = α0*G(i,j) + α1*recL'(i,j) + α1*midValue

In [Equation 18] and [Equation 19], pred_{C}(i,j) is the prediction sample of a chroma block to be predicted, G(i,j) is the gradient of luma samples, rec_{L'}(i,j) is a luma sample corresponding to a chroma block and midValue may refer to 512 when a bit depth is 10 bits. In this case, a luma sample may be a downsampled luma sample.

In [Equation 18] and [Equation 19], at least one of the model parameters α₀, α₁ and α₂ may be derived by using six sample lines on the left of a current block and six sample lines on the top of a current block as a reference region, similar to a convolutional inter-color model method. In addition, a reference region may include a top-right region by the horizontal size of a current block and a bottom-left region by the vertical size of a current block. The model parameter may be derived by using LDL decomposition by using samples within the reference region.

In performing a gradient linear model method, at least one of the embodiments of the convolutional inter-color model method may be performed.

Instead of 6 above, it may be N. Here, N may be a positive integer.

When the top boundary of a current block is the top boundary of a coding tree unit (CTU), the reference region may use only six sample lines on the left of a current block without using six sample lines on the top of a current block.

In addition, when the top boundary of a current block is the top boundary of a CTU, the reference region may use only L sample lines on the left of a current block without using M sample lines on the top of a current block. Here, L may be a positive integer, and for example, may be 6. In addition, M may be a positive integer, and may be a value less than or equal to L.

A sample used to derive a model parameter in the reference region may be a sample existing at a sub-sampled position at a certain interval. The certain interval may be K samples, where K may be a positive integer. In other words, only samples that exist at a position skipped by K samples within a reference region may be used to derive a model parameter.

In addition, a sample used for deriving a model parameter in the reference region may be a sample existing at a position where a x-coordinate and a y-coordinate are odd or even.

The reference region may have the same size regardless of at least one of the horizontal size and the vertical size of a current block.

In addition, the reference region may have a variable size according to at least one of the horizontal size and the vertical size of a current block.

In addition, when there is an unavailable sample in the reference region, the value of the unavailable sample may be replaced with the value of an available sample adjacent to the unavailable sample.

When the horizontal size of a current block is W and the vertical size of a current block is H, L1, the horizontal size of a reference region, and L2, the vertical size of a reference region, may have the following value.

At least one of W, H, L1 and L2 above may be 0 or a positive integer.

For example, at least one of L1 and L2 above may be a fixed value regardless of at least one of W and H.

As another example, at least one of L1 and L2 above may be a variable value according to at least one of W and H.

A reconstructed sample around a current block corresponding to the reference region may be different according to at least one of a top-left position within a current block and the size of a current block. In other words, at least one of the reconstructed samples around a current block may be used according to at least one of the horizontal size and the vertical size of a current block. In this case, at least one of the reconstructed samples around a current block in at least one direction of the left, the right, the top and the bottom based on a top-left position in a current block may be used to derive a linear model parameter.

For example, at least one of the samples included in a region at least 1 times the horizontal size or the vertical size of a current block among the reconstructed samples around the top and left of a current block in right and bottom directions based on a top-left position in a current block may be included in a reference region.

As another example, at least one of the samples included in a region at least 1 time the vertical size of a current block among the reconstructed samples around the left of a current block in a bottom direction based on a top-left position in a current block may be included in a reference region.

As another example, at least one of the samples included in a region at least 1 time the horizontal size of a current block among the reconstructed samples around the top of a current block in a right direction based on a top-left position in a current block may be included in a reference region.

For example, at least one of the samples included in a region at least 3 times the horizontal size or the vertical size of a current block among the reconstructed samples around the top and left of a current block in right and bottom directions based on a top-left position in a current block may be included in a reference region.

As another example, at least one of the samples included in a region at least 3 times the vertical size of a current block among the reconstructed samples around the left of a current block in a bottom direction based on a top-left position in a current block may be included in a reference region.

As another example, at least one of the samples included in a region at least 3 times the horizontal size of a current block among the reconstructed samples around the top of a current block in a right direction based on a top-left position in a current block may be included in a reference region.

For example, at least one of the samples included in a region at least 1 time the horizontal size or the vertical size of a current block among the reconstructed samples around the top and left of a current block in at least one of left, right, top and bottom directions based on a top-left position in a current block may be included in a reference region.

In other words, a reconstructed sample around the top may include at least one of the reconstructed samples on the left of the top as well as the right of the top based on a top-left position in a current block. In addition, a reconstructed sample around the left may include at least one of the reconstructed samples on the top of the left as well as the bottom of the left based on a top-left position in a current block.

As another example, at least one of the samples included in a region at least 1 time the vertical size of a current block among the reconstructed samples around the left of a current block in at least one of top and bottom directions based on a top-left position in a current block may be included in a reference region.

In other words, a reconstructed sample around the left may include at least one of the reconstructed samples on the top of the left as well as the bottom of the left based on a top-left position in a current block.

As another example, at least one of the samples included in a region at least 1 time the horizontal size of a current block among the reconstructed samples around the top of a current block in at least one of left and right directions based on a top-left position in a current block may be included in a reference region.

In other words, a reconstructed sample around the top may include at least one of the reconstructed samples on the left of the top as well as the right of the top based on a top-left position in a current block.

FIG. 90 shows four gradient patterns.

As in the example of [FIG. 90], the gradient G of a luma sample may be calculated by using four Sobel filter-based gradient patterns.

Information for whether a gradient linear model method is used for both a Cb block and a Cr block which are a chroma block may be entropy-encoded/decoded. In addition, when a gradient linear model method is used, information on whether a two-parameter based gradient linear model method is used or whether a three-parameter based gradient linear model method is used may be entropy-encoded/decoded. In addition, information for indicating a gradient pattern may be entropy-encoded/decoded.

Information on whether to use an inter-color linear model method including a single model-based inter-color linear model method and a multi-model-based inter-color linear model method may be entropy-encoded/decoded. When an inter-color linear model method is used, information on whether to use a gradient linear model method may be entropy-encoded/decoded.

### A method for deriving a template-based intra prediction mode

A method for deriving a template-based intra prediction mode may derive multiple intra prediction modes by calculating a cost between prediction samples generated by performing intra prediction on a template region adjacent to a current block and reconstructed samples in a template region adjacent to a current block for each intra prediction mode in a MPM list.

After mapping an intra prediction mode in the MPM list to a total of 131 intra prediction modes, cost calculation may be performed not only for a mapped intra prediction mode, but also for an adjacent intra prediction mode.

Instead of the 131, the total number of intra prediction modes * N may be used. Here, N may be a positive integer.

When intra prediction is performed on a template region adjacent to the current block, Position Dependent Intra Prediction Combination (PDPC) may be applied to a generated intra prediction block.

Sum of Absolute Transformed Difference (SATD) may be used for the cost calculation.

Sum of Absolute Difference (SAD) may be used for the cost calculation.

The first two intra prediction modes with the minimum cost may be derived as two intra prediction modes in a method for deriving a template-based intra prediction mode.

Instead of 2 above, it may be N. Here, N may be a positive integer.

As in [Equation 20], costMode1 and costMode2 that are two SATD costs for the two derived intra prediction modes may be compared and a cost factor F may be applied. For example, a cost factor F may be 2.$costMode 2 < F ⋅ costMode 1$

Instead of 2 above, it may be N. Here, N may be a positive integer.

When the result of [Equation 20] above is true, the weighted sum for multiple intra prediction blocks may be performed as follows. When the result of [Equation 20] above is false, the weighted sum for multiple intra prediction blocks may not be performed and an intra prediction block generated by using an intra prediction mode with the minimum cost may be used as an intra prediction block of a current block.

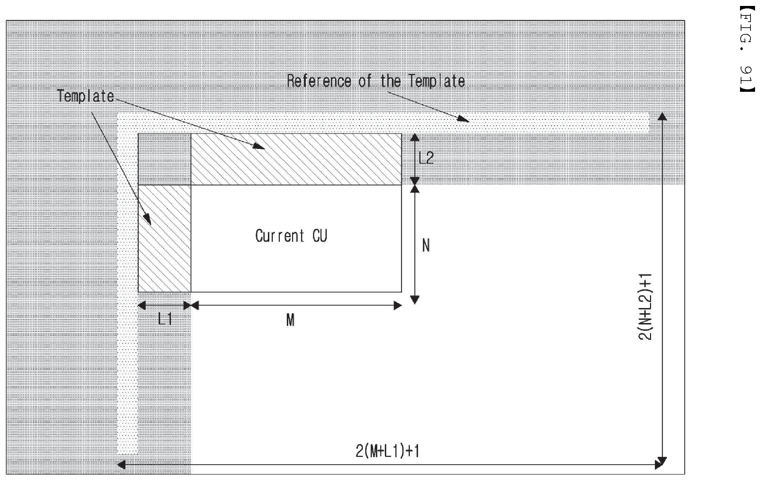

FIG. 91 shows a template region of a method for deriving a template-based intra prediction mode.

As in the example of [FIG. 91], the template region may include at least one of the reconstructed samples around a current block. The template region may refer to the reference region of a current block.

In addition, when the top boundary of a current block is the top boundary of a coding tree unit (CTU), the reference region may use only a sample line on the left of a current block without using a sample line on the top of a current block.

In addition, when the top boundary of a current block is the top boundary of a CTU, the reference region may use only L sample lines on the left of a current block without using M sample lines on the top of a current block. Here, L may be a positive integer, and for example, may be 2 or 4. In addition, M may be a positive integer, and may be a value less than or equal to L.

A sample used for cost calculation in the reference region may be a sample existing at a sub-sampled position at a certain interval. The certain interval may be K samples, where K may be a positive integer. In other words, only samples that exist at a position skipped by K samples within a reference region may be used for cost calculation.

In addition, a sample used for cost calculation in the reference region may be a sample that exists at a position where a x-coordinate and a y-coordinate are odd or even.

The reference region may have the same size regardless of at least one of the horizontal size and the vertical size of a current block.

In addition, the reference region may have a variable size according to at least one of the horizontal size and the vertical size of a current block.

In addition, when there is an unavailable sample in the reference region, the value of the unavailable sample may be replaced with the value of an available sample adjacent to the unavailable sample.

In [FIG. 91], M may refer to the horizontal size of a current block, N may refer to the vertical size of a current block, L1 may refer to the horizontal size of a template region and L2 may refer to the vertical size of a template region.

At least one of the M, N, L1 and L2 may be 0 or a positive integer.

For example, at least one of the L1 and L2 may be a fixed value regardless of at least one of M and N.

As another example, at least one of the L1 and L2 may be a variable value according to at least one of M and N.

A reconstructed sample around a current block corresponding to the reference region may be different according to at least one of a top-left position within a current block and the size of a current block. In other words, at least one of the reconstructed samples around a current block may be used according to at least one of the horizontal size and the vertical size of a current block. In this case, at least one of the reconstructed samples around a current block in at least one direction of the left, the right, the top and the bottom based on a top-left position in a current block may be used to derive a linear model parameter.

For example, at least one of the samples included in a region at least 1 times the horizontal size or the vertical size of a current block among the reconstructed samples around the top and left of a current block in right and bottom directions based on a top-left position in a current block may be included in a reference region.

As another example, at least one of the samples included in a region at least 1 time the vertical size of a current block among the reconstructed samples around the left of a current block in a bottom direction based on a top-left position in a current block may be included in a reference region.

As another example, at least one of the samples included in a region at least 1 time the horizontal size of a current block among the reconstructed samples around the top of a current block in a right direction based on a top-left position in a current block may be included in a reference region.

For example, at least one of the samples included in a region at least 3 times the horizontal size or the vertical size of a current block among the reconstructed samples around the top and left of a current block in right and bottom directions based on a top-left position in a current block may be included in a reference region.

As another example, at least one of the samples included in a region at least 3 times the vertical size of a current block among the reconstructed samples around the left of a current block in a bottom direction based on a top-left position in a current block may be included in a reference region.

As another example, at least one of the samples included in a region at least 3 times the horizontal size of a current block among the reconstructed samples around the top of a current block in a right direction based on a top-left position in a current block may be included in a reference region.

For example, at least one of the samples included in a region at least 1 time the horizontal size or the vertical size of a current block among the reconstructed samples around the top and left of a current block in at least one of left, right, top and bottom directions based on a top-left position in a current block may be included in a reference region.

In other words, a reconstructed sample around the top may include at least one of the reconstructed samples on the left of the top as well as the right of the top based on a top-left position in a current block. In addition, a reconstructed sample around the left may include at least one of the reconstructed samples on the top of the left as well as the bottom of the left based on a top-left position in a current block.

As another example, at least one of the samples included in a region at least 1 time the vertical size of a current block among the reconstructed samples around the left of a current block in at least one of top and bottom directions based on a top-left position in a current block may be included in a reference region.

In other words, a reconstructed sample around the left may include at least one of the reconstructed samples on the top of the left as well as the bottom of the left based on a top-left position in a current block.

As another example, at least one of the samples included in a region at least 1 time the horizontal size of a current block among the reconstructed samples around the top of a current block in at least one of left and right directions based on a top-left position in a current block may be included in a reference region.

In other words, a reconstructed sample around the top may include at least one of the reconstructed samples on the left of the top as well as the right of the top based on a top-left position in a current block.

And, multiple intra prediction blocks may be generated based on multiple derived intra prediction modes, and a weighted intra prediction block may be used as the intra prediction block of a current block through the weighted sum of multiple generated intra prediction blocks.

Two intra prediction blocks may be generated by using the two derived intra prediction modes. In this case, a position dependent intra rediction combination may be applied to a generated intra prediction block.

Instead of 2 above, it may be N. Here, N may be a positive integer.

Two generated intra prediction blocks and a weight which will be applied to each intra prediction block may be used to calculate the weighted sum of intra prediction blocks. The result of the weighted sum may be used as the intra prediction block of a current block.

Instead of 2 above, it may be N. Here, N may be a positive integer.

As in [Equation 21] and [Equation 22], when two derived intra prediction modes are used, a weight which will be applied to each intra prediction block above may be calculated. 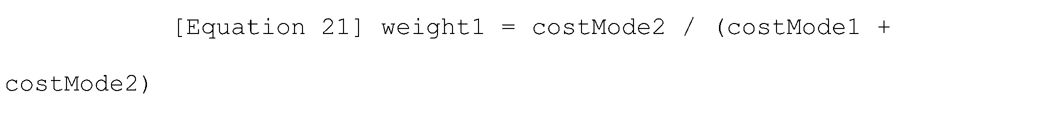 [Equation 21] weight1 = costMode2 / (costMode1 + costMode2)$weight 2 = 1 - weight 1$

When the weighted sum of the multiple intra prediction blocks is performed, the weighted sum may be performed together on at least one of the basic intra prediction blocks that are not derived by a method for deriving a template-based intra prediction mode. The basic intra prediction block may be at least one of all intra prediction modes available to a current block excluding at least one of the multiple derived intra prediction modes.

For example, the weighted sum may be performed on at least one of the multiple intra prediction blocks generated based on multiple derived intra prediction modes and an intra prediction block generated by a planar mode or a DC mode without directionality.

As another example, the weighted sum may be performed on at least one of the multiple intra prediction blocks generated based on multiple derived intra prediction modes, an intra prediction block generated by a planar mode and an intra prediction block generated by a DC mode.

As another example, the weighted sum may be performed on at least one of the multiple intra prediction blocks generated based on multiple derived intra prediction modes and an intra prediction block generated by a vertical mode or a horizontal mode with directionality.

At least one of the multiple derived intra prediction modes may be used in at least one of intra prediction mode derivation, transform/inverse transform, quantization/dequantization, entropy encoding/decoding and in-loop filtering processes including configuring the MPM list of a current block. In addition, at least one of the multiple derived intra prediction modes may be used in at least one of intra prediction mode derivation, intra prediction, inter prediction, transform/inverse transform, quantization/dequantization, entropy encoding/decoding and in-loop filtering processes including configuring the MPM list of a block encoded/decoded after a current block.

Information on whether to use a method for deriving a template-based intra prediction mode may be entropy-encoded/decoded as a flag in a block unit.

At least one of the intra prediction modes derived by using a method for deriving a template-based intra prediction mode in a luma block may be used in at least one of the corresponding chroma blocks.

### A method for deriving a decoder-side intra prediction mode

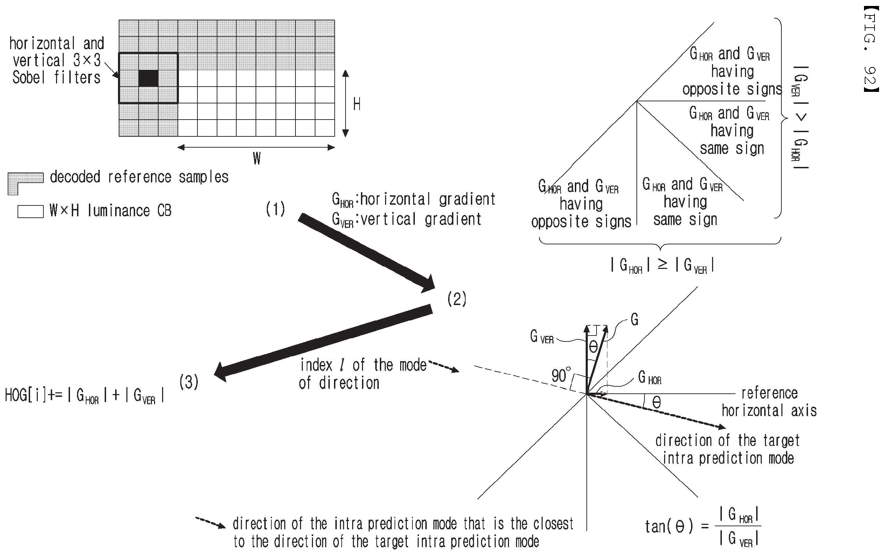

FIG. 92 shows a process of deriving an intra prediction mode in a method for deriving a decoder-side intra prediction mode.

As in the example of [FIG. 92], a method for deriving a decoder-side intra prediction mode may calculate a gradient from a reconstructed reference region around a current block and derive multiple intra prediction modes based on a calculated gradient.

The gradient may refer to a horizontal gradient (G_{Hor}) and a vertical gradient (G_{Ver}).

The gradient may be calculated based on a Sobel filter as in [Equation 23]. ${G}_{Hor} = \left[\begin{matrix}- 1 & 0 & 1 \\ - 2 & 0 & 2 \\ - 1 & 0 & 1\end{matrix}\right] , {G}_{Ver} = \left[\begin{matrix}- 1 & - 2 & - 1 \\ 0 & 0 & 0 \\ 1 & 2 & 1\end{matrix}\right]$

An angle angle = arctan(G_{Ver}/ G_{Hor}) may be calculated by using the horizontal gradient and vertical gradient.

A value based on a gradient may be added to an intra prediction mode that is most similar to an angle calculated based on the derived gradient. A value I based on the gradient may be the sum of absolute values of a horizontal gradient and a vertical gradient, respectively. In other words, it may be I = | G_{Hor} |+| G_{Ver} |.

Accordingly, a histogram to which a value based on the gradient is added may be generated for each intra prediction mode. The histogram may be histogram of gradient.

Five intra prediction modes with the largest value in the histogram may be derived as intra prediction modes in a method for deriving a decoder-side intra prediction mode.

Instead of 5 above, it may be N. Here, N may be a positive integer.

The reference region may include at least one of the reconstructed samples around a current block.

In addition, when the top boundary of a current block is the top boundary of a coding tree unit (CTU), the reference region may use only a sample line on the left of a current block without using a sample line on the top of a current block.

In addition, when the top boundary of a current block is the top boundary of a CTU, the reference region may use only L sample lines on the left of a current block without using M sample lines on the top of a current block. Here, L may be a positive integer, and for example, may be 3. In addition, M may be a positive integer, and may be a value less than or equal to L.

A sample used to calculate a gradient in the reference region may be a sample existing at a sub-sampled position at a certain interval. The certain interval may be K samples, where K may be a positive integer. In other words, only samples that exist at a position skipped by K samples within a reference region may be used to calculate a gradient.

In addition, a sample used to calculate a gradient in the reference region may be a sample that exists at a position where a x-coordinate and a y-coordinate are even or odd.

The reference region may have the same size regardless of at least one of the horizontal size and the vertical size of a current block.

In addition, the reference region may have a variable size according to at least one of the horizontal size and the vertical size of a current block.

In addition, when there is an unavailable sample in the reference region, the value of the unavailable sample may be replaced with the value of an available sample adjacent to the unavailable sample.

When the horizontal size of a current block is W and the vertical size of a current block is H, L1, the horizontal size of a reference region, and L2, the vertical size of a reference region, may have the following value.

At least one of W, H, L1 and L2 above may be 0 or a positive integer.

For example, at least one of L1 and L2 above may be a fixed value regardless of at least one of W and H.

As another example, at least one of L1 and L2 above may be a variable value according to at least one of W and H.

A reconstructed sample around a current block corresponding to the reference region may be different according to at least one of a top-left position within a current block and the size of a current block. In other words, at least one of the reconstructed samples around a current block may be used according to at least one of the horizontal size and the vertical size of a current block. In this case, at least one of the reconstructed samples around a current block in at least one direction of the left, the right, the top and the bottom based on a top-left position in a current block may be used to derive a linear model parameter.

For example, at least one of the samples included in a region at least 1 times the horizontal size or the vertical size of a current block among the reconstructed samples around the top and left of a current block in right and bottom directions based on a top-left position in a current block may be included in a reference region.

As another example, at least one of the samples included in a region at least 1 time the vertical size of a current block among the reconstructed samples around the left of a current block in a bottom direction based on a top-left position in a current block may be included in a reference region.

As another example, at least one of the samples included in a region at least 1 time the horizontal size of a current block among the reconstructed samples around the top of a current block in a right direction based on a top-left position in a current block may be included in a reference region.

For example, at least one of the samples included in a region at least 3 times the horizontal size or the vertical size of a current block among the reconstructed samples around the top and left of a current block in right and bottom directions based on a top-left position in a current block may be included in a reference region.

As another example, at least one of the samples included in a region at least 3 times the vertical size of a current block among the reconstructed samples around the left of a current block in a bottom direction based on a top-left position in a current block may be included in a reference region.

As another example, at least one of the samples included in a region at least 3 times the horizontal size of a current block among the reconstructed samples around the top of a current block in a right direction based on a top-left position in a current block may be included in a reference region.

For example, at least one of the samples included in a region at least 1 time the horizontal size or the vertical size of a current block among the reconstructed samples around the top and left of a current block in at least one of left, right, top and bottom directions based on a top-left position in a current block may be included in a reference region.

In other words, a reconstructed sample around the top may include at least one of the reconstructed samples on the left of the top as well as the right of the top based on a top-left position in a current block. In addition, a reconstructed sample around the left may include at least one of the reconstructed samples on the top of the left as well as the bottom of the left based on a top-left position in a current block.

As another example, at least one of the samples included in a region at least 1 time the vertical size of a current block among the reconstructed samples around the left of a current block in at least one of top and bottom directions based on a top-left position in a current block may be included in a reference region.

In other words, a reconstructed sample around the left may include at least one of the reconstructed samples on the top of the left as well as the bottom of the left based on a top-left position in a current block.

As another example, at least one of the samples included in a region at least 1 time the horizontal size of a current block among the reconstructed samples around the top of a current block in at least one of left and right directions based on a top-left position in a current block may be included in a reference region.

In other words, a reconstructed sample around the top may include at least one of the reconstructed samples on the left of the top as well as the right of the top based on a top-left position in a current block.

And, multiple intra prediction blocks may be generated based on multiple derived intra prediction modes, and a weighted intra prediction block may be used as the intra prediction block of a current block through the weighted sum of multiple generated intra prediction blocks.

The weighted sum of intra prediction blocks may be calculated by using a weight which will be applied to five generated intra prediction blocks, an intra prediction block generated by a planar mode and each intra prediction block. The result of the weighted sum may be used as the intra prediction block of a current block.

Instead of 5 above, it may be N. Here, N may be a positive integer.

A weight which will be applied to each intra prediction block above may be calculated based on the histogram of a gradient.

A weight which will be applied to each intra prediction block above may have a different value according to a position in a block.

The weight may have the same value in a row unit or in a column unit in a block.

The weight may have a different value for each row in a block or may have a different value for each column in a block.

When the weighted sum of the multiple intra prediction blocks is performed, the weighted sum may be performed together on at least one of the basic intra prediction blocks that are not derived by a method for deriving a decoder-side intra prediction mode. The basic intra prediction block may be at least one of all intra prediction modes available to a current block excluding at least one of the multiple derived intra prediction modes.

For example, the weighted sum may be performed on at least one of the multiple intra prediction blocks generated based on multiple derived intra prediction modes and an intra prediction block generated by a planar mode or a DC mode without directionality.

As another example, the weighted sum may be performed on at least one of the multiple intra prediction blocks generated based on multiple derived intra prediction modes, an intra prediction block generated by a planar mode and an intra prediction block generated by a DC mode.

As another example, the weighted sum may be performed on at least one of the multiple intra prediction blocks generated based on multiple derived intra prediction modes and an intra prediction block generated by a vertical mode or a horizontal mode with directionality.

At least one of the multiple derived intra prediction modes may be used in at least one of intra prediction mode derivation, transform/inverse transform, quantization/dequantization, entropy encoding/decoding and in-loop filtering processes including configuring the MPM list of a current block. In addition, at least one of the multiple derived intra prediction modes may be used in at least one of intra prediction mode derivation, intra prediction, inter prediction, transform/inverse transform, quantization/dequantization, entropy encoding/decoding and in-loop filtering processes including configuring the MPM list of a block encoded/decoded after a current block.

A method for deriving a decoder-side intra prediction mode may be performed when deriving the intra prediction mode of a current block, when performing the intra prediction of a current block and before configuring the MPM list of a current block.

Information on whether to use a method for deriving a decoder-side intra prediction mode may be entropy-encoded/decoded as a flag in a block unit.

At least one of the intra prediction modes derived by using a method for deriving a decoder-side intra prediction mode in a luma block may be used in at least one of the corresponding chroma blocks.

### A method for deriving a decoder-side chroma intra prediction mode

Instead of entropy-encoding/decoding a chroma intra prediction mode, a method for deriving a decoder-side chroma intra prediction mode may derivate the chroma intra prediction mode of a current block by using samples in a reconstructed reference region around a chroma block and samples in a reconstructed reference region around a luma block corresponding to a chroma block.

The reference region may include at least one of the reconstructed samples around a current block.

In addition, when the top boundary of a current block is the top boundary of a coding tree unit (CTU), the reference region may use only a sample line on the left of a current block without using a sample line on the top of a current block.

In addition, when the top boundary of a current block is the top boundary of a CTU, the reference region may use only L sample lines on the left of a current block without using M sample lines on the top of a current block. Here, L may be a positive integer, and for example, may be 3. In addition, M may be a positive integer, and may be a value less than or equal to L.

A sample used to calculate a gradient in the reference region may be a sample existing at a sub-sampled position at a certain interval. The certain interval may be K samples, where K may be a positive integer. In other words, only samples that exist at a position skipped by K samples within a reference region may be used to calculate a gradient.

In addition, a sample used to calculate a gradient in the reference region may be a sample that exists at a position where a x-coordinate and a y-coordinate are even or odd.

The reference region may have the same size regardless of at least one of the horizontal size and the vertical size of a current block.

In addition, the reference region may have a variable size according to at least one of the horizontal size and the vertical size of a current block.

In addition, when there is an unavailable sample in the reference region, the value of the unavailable sample may be replaced with the value of an available sample adjacent to the unavailable sample.

When the horizontal size of a current block is W and the vertical size of a current block is H, L1, the horizontal size of a reference region, and L2, the vertical size of a reference region, may have the following value.

At least one of W, H, L1 and L2 above may be 0 or a positive integer.

For example, at least one of L1 and L2 above may be a fixed value regardless of at least one of W and H.

As another example, at least one of L1 and L2 above may be a variable value according to at least one of W and H.

A reconstructed sample around a current block corresponding to the reference region may be different according to at least one of a top-left position within a current block and the size of a current block. In other words, at least one of the reconstructed samples around a current block may be used according to at least one of the horizontal size and the vertical size of a current block. In this case, at least one of the reconstructed samples around a current block in at least one direction of the left, the right, the top and the bottom based on a top-left position in a current block may be used to derive a linear model parameter.

For example, at least one of the samples included in a region at least 1 times the horizontal size or the vertical size of a current block among the reconstructed samples around the top and left of a current block in right and bottom directions based on a top-left position in a current block may be included in a reference region.

As another example, at least one of the samples included in a region at least 1 time the vertical size of a current block among the reconstructed samples around the left of a current block in a bottom direction based on a top-left position in a current block may be included in a reference region.

As another example, at least one of the samples included in a region at least 1 time the horizontal size of a current block among the reconstructed samples around the top of a current block in a right direction based on a top-left position in a current block may be included in a reference region.

For example, at least one of the samples included in a region at least 3 times the horizontal size or the vertical size of a current block among the reconstructed samples around the top and left of a current block in right and bottom directions based on a top-left position in a current block may be included in a reference region.

As another example, at least one of the samples included in a region at least 3 times the vertical size of a current block among the reconstructed samples around the left of a current block in a bottom direction based on a top-left position in a current block may be included in a reference region.

As another example, at least one of the samples included in a region at least 3 times the horizontal size of a current block among the reconstructed samples around the top of a current block in a right direction based on a top-left position in a current block may be included in a reference region.

For example, at least one of the samples included in a region at least 1 time the horizontal size or the vertical size of a current block among the reconstructed samples around the top and left of a current block in at least one of left, right, top and bottom directions based on a top-left position in a current block may be included in a reference region.

In other words, a reconstructed sample around the top may include at least one of the reconstructed samples on the left of the top as well as the right of the top based on a top-left position in a current block. In addition, a reconstructed sample around the left may include at least one of the reconstructed samples on the top of the left as well as the bottom of the left based on a top-left position in a current block.

As another example, at least one of the samples included in a region at least 1 time the vertical size of a current block among the reconstructed samples around the left of a current block in at least one of top and bottom directions based on a top-left position in a current block may be included in a reference region.

In other words, a reconstructed sample around the left may include at least one of the reconstructed samples on the top of the left as well as the bottom of the left based on a top-left position in a current block.

As another example, at least one of the samples included in a region at least 1 time the horizontal size of a current block among the reconstructed samples around the top of a current block in at least one of left and right directions based on a top-left position in a current block may be included in a reference region.

In other words, a reconstructed sample around the top may include at least one of the reconstructed samples on the left of the top as well as the right of the top based on a top-left position in a current block.

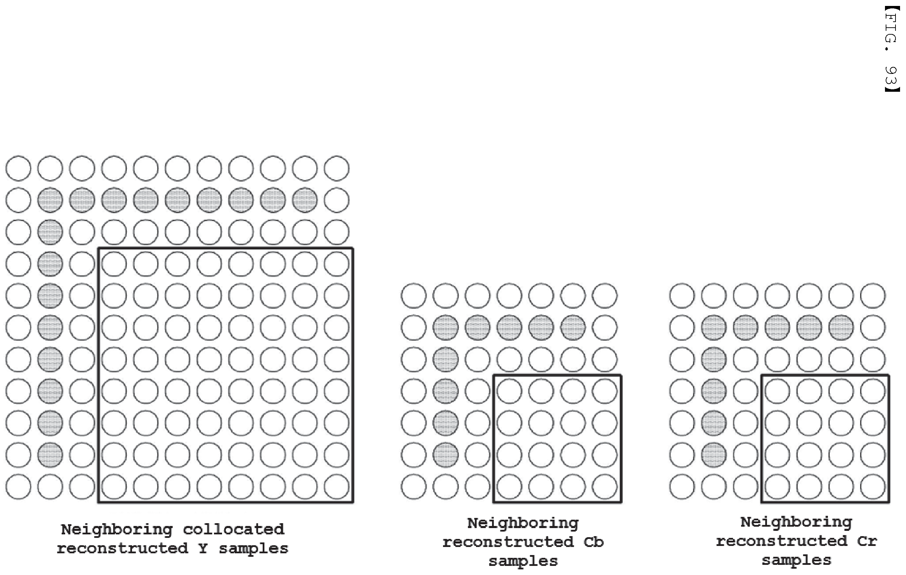

FIG. 93 shows an example of neighboring reconstructed samples.

As in the example of [FIG. 93], a gradient may be calculated for reconstructed samples around a chroma block and reconstructed samples around a luma block corresponding to a chroma block and chroma intra prediction modes may be derived based on a calculated gradient.

The gradient may refer to a horizontal gradient (G_{Hor}) and a vertical gradient (G_{Ver}).

The gradient may be calculated based on a Sobel filter as in [Equation 23].

An angle angle = arctan( G_{Ver} / G_{Hor} ) may be calculated by using the horizontal gradient and vertical gradients.

A value based on a gradient may be added to an intra prediction mode that is most similar to an angle calculated based on the derived gradient. A value I based on the gradient may be the sum of absolute values of a horizontal gradient and a vertical gradient, respectively. In other words, it may be I = | G_{Hor} |+| G_{Ver} |.

Accordingly, a histogram to which a value based on the gradient is added may be generated for each intra prediction mode. The histogram may be the histogram of a gradient.

An intra prediction mode having the largest value in the histogram may be derived as a chroma intra prediction mode in a method for deriving a decoder-side chroma intra prediction mode.

When a chroma intra prediction mode derived from a method for deriving a decoder-side chroma intra prediction mode is the same as an intra prediction mode derived from a DM mode, an intra prediction mode having the second largest value in the histogram may be used as a chroma intra prediction mode in a method for deriving a decoder-side chroma intra prediction mode.

Multiple intra prediction modes having the largest values in the histogram may be derived as intra prediction modes in a method for deriving a decoder-side chroma intra prediction mode.

Here, the multiple may refer to N and N may be a positive integer.

And, multiple intra prediction blocks may be generated based on multiple derived intra prediction modes and a weighted intra prediction block may be used as the chroma intra prediction block of a current block through the weighted sum of multiple generated intra prediction blocks.

The weighted sum of intra prediction blocks may be calculated by using at least one of the multiple generated intra prediction blocks. The result of the weighted sum may be used as the chroma intra prediction block of a current block.

A weight which will be applied to each intra prediction block above may be calculated based on the histogram of a gradient.

A weight which will be applied to each intra prediction block above may have a different value according to a position in a block.

The weight may have the same value in a row unit or in a column unit in a block.

The weight may have a different value for each row in a block or may have a different value for each column in a block.

When the weighted sum of the multiple intra prediction blocks is performed, the weighted sum may be performed together on at least one of the basic intra prediction blocks that are not derived by a method for deriving a decoder-side chroma intra prediction mode. The basic intra prediction block may be at least one of all intra prediction modes available to a current block excluding at least one of the multiple derived intra prediction modes.

For example, the weighted sum may be performed on at least one of the multiple intra prediction blocks generated based on multiple derived intra prediction modes and an intra prediction block generated by a planar mode or a DC mode without directionality.

As another example, the weighted sum may be performed on at least one of the multiple intra prediction blocks generated based on multiple derived intra prediction modes, an intra prediction block generated by a planar mode and an intra prediction block generated by a DC mode.

As another example, the weighted sum may be performed on at least one of the multiple intra prediction blocks generated based on multiple derived intra prediction modes and an intra prediction block generated by a vertical mode or a horizontal mode with directionality.

At least one of the multiple derived intra prediction modes may be used in at least one of intra prediction mode derivation, transform/inverse transform, quantization/dequantization, entropy encoding/decoding and in-loop filtering processes including configuring the MPM list of a current block. In addition, at least one of the multiple derived intra prediction modes may be used in at least one of intra prediction mode derivation, intra prediction, inter prediction, transform/inverse transform, quantization/dequantization, entropy encoding/decoding and in-loop filtering processes including configuring the MPM list of a block encoded/decoded after a current block.

Information on whether to use a method for deriving a decoder-side chroma intra prediction mode may be entropy-encoded/decoded as a flag in a block unit.

### Spatial Geometric Partition Mode

A spatial geometric partition mode may perform the weighted sum based on a different weight for each prediction sample within two intra prediction blocks after generating two intra prediction blocks to imitate the partition of a block in a geometric partition form.

Instead of 2 above, it may be N. Here, N may be a positive integer.

Each intra prediction block above may be derived by the weighted sum of at least two intra prediction blocks.

Each intra prediction block above may be an intra prediction block generated by using at least one of a method for deriving a template-based intra prediction mode and a method for deriving a decoder-side intra prediction mode.

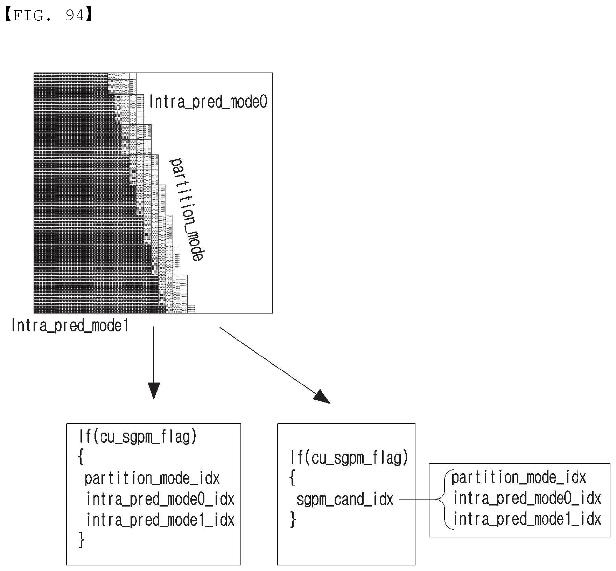

FIG. 94 shows an example of a candidate for a spatial geometric partition mode.

As in the example of [FIG. 94], the candidate list of a spatial geometric partition mode may be configured by using a candidate including one division partition and two intra prediction modes.

26 partition modes may be used as the division partition.

Instead of 26 above, it may be N. Here, N may be a positive integer.

A combination of at least one of the three intra prediction modes may be used as the two intra prediction modes.

Instead of 2, it may be M. Here, M may be a positive integer.

Instead of 3 above, it may be N. Here, N may be a positive integer.

Here, M may be less than or equal to N.

The size of the candidate list may be configured as 16.

Instead of 16 above, it may be N. Here, N may be a positive integer.

A candidate index selected from the candidate list may be entropy-encoded/decoded.

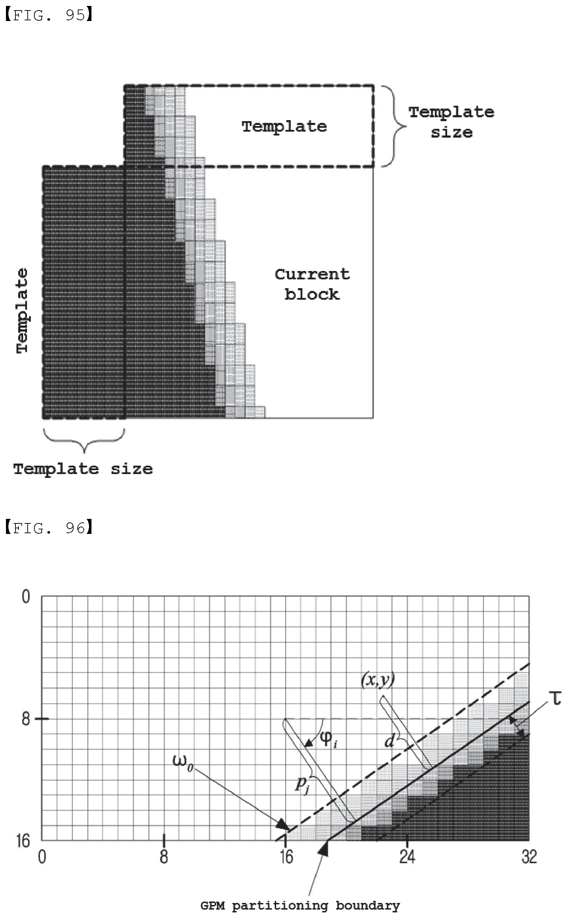

FIG. 95 shows an example of a template region of a spatial geometric partition mode.

As in the example of [FIG. 95], a candidate list may be rearranged by using a reconstructed template region around a current block. Here, a cost between prediction samples in a template region and reconstructed samples in a template region may be used for rearrangement. The horizontal size or vertical size of the template region may be 1.

Sum of Absolute Difference (SAD) may be used for the cost calculation.

Sum of Absolute Transformed Difference (SATD) may be used for the cost calculation.

The reference region may include at least one of the reconstructed samples around a current block. The template region may refer to the reference region of a current block.

In addition, when the top boundary of a current block is the top boundary of a coding tree unit (CTU), the reference region may use only a sample line on the left of a current block without using a sample line on the top of a current block.

In addition, when the top boundary of a current block is the top boundary of a CTU, the reference region may use only L sample lines on the left of a current block without using M sample lines on the top of a current block. Here, L may be a positive integer, and for example, may be 1. In addition, M may be a positive integer, and may be a value less than or equal to L.

A sample used for cost calculation in the reference region may be a sample existing at a sub-sampled position at a certain interval. The certain interval may be K samples, where K may be a positive integer. In other words, only samples that exist at a position skipped by K samples within a reference region may be used for cost calculation.

In addition, a sample used for cost calculation in the reference region may be a sample that exists at a position where a x-coordinate and a y-coordinate are odd or even.

The reference region may have the same size regardless of at least one of the horizontal size and the vertical size of a current block.

In addition, the reference region may have a variable size according to at least one of the horizontal size and the vertical size of a current block.

In addition, when there is an unavailable sample in the reference region, the value of the unavailable sample may be replaced with the value of an available sample adjacent to the unavailable sample.

When the horizontal size of a current block is W and the vertical size of a current block is H, L1, the horizontal size of a reference region, and L2, the vertical size of a reference region, may have the following value.

At least one of W, H, L1 and L2 above may be 0 or a positive integer.

For example, at least one of L1 and L2 above may be a fixed value regardless of at least one of W and H.

As another example, at least one of L1 and L2 above may be a variable value according to at least one of W and H.

A reconstructed sample around a current block corresponding to the reference region may be different according to at least one of a top-left position within a current block and the size of a current block. In other words, at least one of the reconstructed samples around a current block may be used according to at least one of the horizontal size and the vertical size of a current block. In this case, at least one of the reconstructed samples around a current block in at least one direction of the left, the right, the top and the bottom based on a top-left position in a current block may be used to derive a linear model parameter.

For example, at least one of the samples included in a region at least 1 times the horizontal size or the vertical size of a current block among the reconstructed samples around the top and left of a current block in right and bottom directions based on a top-left position in a current block may be included in a reference region.

As another example, at least one of the samples included in a region at least 1 time the vertical size of a current block among the reconstructed samples around the left of a current block in a bottom direction based on a top-left position in a current block may be included in a reference region.

As another example, at least one of the samples included in a region at least 1 time the horizontal size of a current block among the reconstructed samples around the top of a current block in a right direction based on a top-left position in a current block may be included in a reference region.

For example, at least one of the samples included in a region at least 3 times the horizontal size or the vertical size of a current block among the reconstructed samples around the top and left of a current block in right and bottom directions based on a top-left position in a current block may be included in a reference region.

As another example, at least one of the samples included in a region at least 3 times the vertical size of a current block among the reconstructed samples around the left of a current block in a bottom direction based on a top-left position in a current block may be included in a reference region.

As another example, at least one of the samples included in a region at least 3 times the horizontal size of a current block among the reconstructed samples around the top of a current block in a right direction based on a top-left position in a current block may be included in a reference region.

For example, at least one of the samples included in a region at least 1 time the horizontal size or the vertical size of a current block among the reconstructed samples around the top and left of a current block in at least one of left, right, top and bottom directions based on a top-left position in a current block may be included in a reference region.

In other words, a reconstructed sample around the top may include at least one of the reconstructed samples on the left of the top as well as the right of the top based on a top-left position in a current block. In addition, a reconstructed sample around the left may include at least one of the reconstructed samples on the top of the left as well as the bottom of the left based on a top-left position in a current block.

As another example, at least one of the samples included in a region at least 1 time the vertical size of a current block among the reconstructed samples around the left of a current block in at least one of top and bottom directions based on a top-left position in a current block may be included in a reference region.

In other words, a reconstructed sample around the left may include at least one of the reconstructed samples on the top of the left as well as the bottom of the left based on a top-left position in a current block.

As another example, at least one of the samples included in a region at least 1 time the horizontal size of a current block among the reconstructed samples around the top of a current block in at least one of left and right directions based on a top-left position in a current block may be included in a reference region.

In other words, a reconstructed sample around the top may include at least one of the reconstructed samples on the left of the top as well as the right of the top based on a top-left position in a current block.

For each partition mode above, an intra partitioning mode list may be derived.

The size of the intra partitioning mode list may be configured as 3.

Instead of 3 above, it may be N. Here, N may be a positive integer.

In the intra partitioning mode list, an intra prediction mode derived by a method for deriving a template-based intra prediction mode may be replaced by two derived intra prediction modes having horizontal and vertical directions.

Whether to apply a spatial geometric partition mode may be different according to at least one of the horizontal size and the vertical size of a current block. A spatial geometric partition mode may be applied when at least one of the following conditions is satisfied.
1) $4 < = Horizontal Size < = 64 ,$
2) $4 < = Vertical Size < = 64 ,$
3) $Horizontal Size < Vertical Size * 8 ,$
4) $Vertical Size < Horizontal Size * 8 ,$
5) $Horizontal Size * Vertical Size > = 32$

In a spatial geometric partition mode, blending for two intra prediction blocks may be performed according to at least one of the horizontal size and the vertical size of a current block.

FIG. 96 shows an example of a blending width in a spatial geometric partition mode.

As in the example of [FIG. 96], blending width τ may be derived as follows.

If min (a horizontal size, a vertical size) is 4, ½ * τ may be selected.

Otherwise, if min (a horizontal size, a vertical size) is 8, τ may be selected.

Otherwise, if min (a horizontal size, a vertical size) is 16, 2 * τ may be selected.

Otherwise, if min (a horizontal size, a vertical size) is 32, 4 * τ may be selected.

Otherwise, 8 * τ may be selected.

The blending width may have a variable value based on the sum of the horizontal size and the vertical size of a current block.

The blending width may have a variable value based on the product of the horizontal size and the vertical size of a current block.

### A second Most Probable Mode (MPM) list

The first MPM list may include 6 intra prediction mode candidates.

Instead of 6 above, it may be N. Here, N may be a positive integer.

The second MPM list may include 16 intra prediction mode candidates.

In order to configure the first MPM list and the second MPM list, a general MPM list having 22 intra prediction mode candidates may be first configured. Next, first 6 intra prediction mode candidates in a general MPM list may be included in the first MPM list. In addition, the remaining intra prediction modes in a general MPM list may be included in the second MPM list.

Instead of 16, it may be M. Here, M may be a positive integer.

Instead of 22 above, it may be K. Here, K may be a positive integer.

In addition, the K may be the same as the sum of M and N. In addition, the K may be greater than the sum of M and N.

The M may be greater than or equal to N.

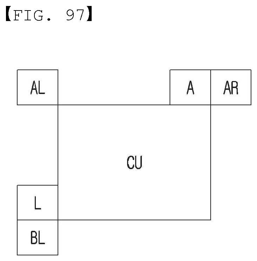

FIG. 97 shows neighboring blocks used in deriving a MPM list.

The first intra prediction mode candidate in the general MPM list may be a planar mode. The remaining intra prediction mode candidates, as in the example of [FIG. 97], may be configured with at least one intra prediction mode among the left(L), above(A), bottom-left(BL), above-right(AR) and above-left(AL) whieh is neighboring blocks adjacent to a current block, intra prediction modes that an offset is added to first two available directional modes among the intra prediction modes of the neighboring blocks and basic modes.

Instead of 2 above, it may be J. Here, J may be a positive integer.

When the vertical size of a current block is larger than a horizontal size, the order of intra prediction modes of a neighboring block included in a general MPM list may be A, L, BL, AR and AL. Otherwise, the order of intra prediction modes of a neighboring block included in a general MPM list may be L, A, BL, AR and AL.

At least one of the general MPM list, the first MPM list and the second MPM list may include at least one of the intra prediction modes derived by using at least one of a method for deriving a template-based intra prediction mode, a method for deriving a decoder-side intra prediction mode and a method for deriving a decoder-side chroma intra prediction mode.

At least one of the general MPM list, the first MPM list and the second MPM list may be shared and used in at least one of luma blocks and chroma blocks.

The first MPM flag may be entropy-encoded/decoded first. When the first MPM flag is the second value, the first MPM index may be entropy-encoded/decoded to determine which intra prediction mode candidate in the first MPM list is selected next. Otherwise (the first MPM flag is the first value), the second MPM flag may be entropy-encoded/decoded to determine whether to entropy-encode/decode the second MPM index or the remaining modes.

The first value may be 0 and the second value may be 1.

An encoder may perform intra prediction by using at least one of the embodiments described above in an intra prediction process. In addition, a decoder may perform intra prediction by using at least one of the embodiments described above in an intra prediction process.

The embodiments of this invention may be applied according to the size of at least one of a block and a unit. A size here may be defined as the minimum size and/or the maximum size to ensure that the embodiments are applied or may be defined as a fixed size to which the embodiments are applied. In addition, for the embodiments, the first embodiment may be applied in the first size and the second embodiment may be applied in the second size. In other words, the embodiments may be applied in a complex manner according to a size. In addition, the embodiments of this invention may be applied only when a size is greater than or equal to the minimum size and is less than or equal to the maximum size. In other words, the embodiments may be applied only when a block size is included in a certain range.

In addition, the embodiments of this invention may be applied only when a size is greater than or equal to the minimum size and is less than or equal to the maximum size, wherein the minimum size and the maximum size may be the size of one of a block and a unit, respectively. In other words, a block that is the target of the minimum size and a block that is the target of the maximum size may be different from each other. For example, the embodiments of this invention may be applied only when a current block size is greater than or equal to the minimum size of a block and is less than or equal to the maximum size of a block.

For example, the embodiments may be applied only when a current block size is greater than or equal to 8x8. For example, the embodiments may be applied only when a current block size is greater than or equal to 16x16. For example, the embodiments may be applied only when a current block size is greater than or equal to 32x32. For example, the embodiments may be applied only when a current block size is greater than or equal to 64x64. For example, the embodiments may be applied only when a current block size is greater than or equal to 128x128. For example, the embodiments may be applied only when a current block size is 4x4. For example, the embodiments may be applied only when a current block size is less than or equal to 8x8. For example, the embodiments may be applied only when a current block size is less than or equal to 16x16. For example, the embodiments may be applied only when a current block size is greater than or equal to 8x8 and is less than or equal to 16x16. For example, the embodiments may be applied only when a current block size is greater than or equal to 16x16 and is less than or equal to 64x64.

The form of a block to which the embodiments of this invention are applied may have a square form or a non-square form.

At least one of the syntax elements for the reduced second transform/inverse transform which is entropy-encoded in an encoder and entropy-decoded in a decoder may use at least one of binarization, debinarization and entropy encoding/decoding methods below.
1) a 0-th order Exp_Golomb binarization/debinarization method with sign (se(v)), 2) a k-th order Exp_Golomb binarization/debinarization method with sign (sek(v)), 3) a 0-th order Exp_Golomb binarization/debinarization method for a positive integer without a sign (ue(v)), 4) a k-th order Exp_Golomb binarization/debinarization method for a positive integer without a sign (uek(v)), 5) a fixed-length binarization/debinarization method (f(n)), 6) a truncated Rice binarization/debinarization method or a truncated unary binarization/debinarization Method (tu(v)), 7) a truncated binary binarization/debinarization Method (tb(v)), 8) a context adaptive arithmetic encoding/decoding Method (ae(v)), 9) a byte unit bit string (b(8)), 10) an integer binarization/debinarization method with a sign (i(n)), 11) a positive integer binarization/debinarization method without a sign (u(n)) (Here, u(n) may refer to a fixed-length binarization/debinarization method), 12) an unary binarization/debinarization method

Only any one of the embodiments is not applied to the encoding/decoding process of a current block, and a specific embodiment or at least one combination of the embodiments may be applied to the encoding/decoding process of a current block.

In the above-described embodiments, it may be construed that, during the application of specific processing to a specific target, assuming that specified conditions may be required and the specific processing is performed under a specific determination, a specific coding parameter may be replaced with an additional coding parameter when a description has been made such that whether the specified conditions are satisfied is determined based on the specific coding parameter, or such that the specific determination is made based on the specific coding parameter. In other words, it may be considered that a coding parameter that influences the specific condition or the specific determination is merely exemplary, and it may be understood that, in addition to the specific coding parameter, a combination of one or more additional coding parameters functions as the specific coding parameter.

In the above-described embodiments, although the methods have been described based on flowcharts as a series of steps or units, the present disclosure is not limited to the sequence of the steps and some steps may be performed in a sequence different from that of the described steps or simultaneously with other steps. Further, those skilled in the art will understand that the steps shown in the flowchart are not exclusive and may further include other steps, or that one or more steps in the flowchart may be deleted without departing from the scope of the disclosure.

The above-described embodiments include examples in various aspects. Although all possible combinations for indicating various aspects cannot be described, those skilled in the art will appreciate that other combinations are possible in addition to explicitly described combinations. Therefore, it should be understood that the present disclosure includes other replacements, changes, and modifications belonging to the scope of the accompanying claims.

The above-described embodiments according to the present disclosure may be implemented as a program that can be executed by various computer means and may be recorded on a computer-readable storage medium. The computer-readable storage medium may include program instructions, data files, and data structures, either solely or in combination. Program instructions recorded on the storage medium may have been specially designed and configured for the present disclosure, or may be known to or available to those who have ordinary knowledge in the field of computer software.

A computer-readable storage medium may include information used in the embodiments of the present disclosure. For example, the computer-readable storage medium may include a bitstream, and the bitstream may contain the information described above in the embodiments of the present disclosure.

The computer-readable storage medium may include a non-transitory computer-readable medium.

Examples of the computer-readable storage medium include all types of hardware devices specially configured to record and execute program instructions, such as magnetic media, such as a hard disk, a floppy disk, and magnetic tape, optical media, such as compact disk (CD)-ROM and a digital versatile disk (DVD), magneto-optical media, such as a floptical disk, ROM, RAM, and flash memory. Examples of the program instructions include machine code, such as code created by a compiler, and high-level language code executable by a computer using an interpreter. The hardware devices may be configured to operate as one or more software modules in order to perform the operation of the present disclosure, and vice versa.

As described above, although the present disclosure has been described based on specific details such as detailed components and a limited number of embodiments and drawings, those are merely provided for easy understanding of the entire disclosure, the present disclosure is not limited to those embodiments, and those skilled in the art will practice various changes and modifications from the above description.

Accordingly, it should be noted that the spirit of the present embodiments is not limited to the above-described embodiments, and the accompanying claims and equivalents and modifications thereof fall within the scope of the present disclosure.

### [Industrial Availability]

The present disclosure may be used industrially in the image encoding/decoding method, device and recording medium fields.

## Claims

1. An image decoding method, the method comprising:
determining an inter-component prediction model of a current block;
generating a chroma prediction signal by using the determined inter-component prediction model.

2. The method of Claim 1, wherein determining the inter-component prediction model includes:
generating a merge candidate list of the current block;
selecting at least one candidate of candidates of the merge candidate list.

3. The method of Claim 2, wherein:
the merge candidate list includes a candidate derived from a neighboring block,
the neighboring block is an adjacent block adjacent to the current block or a non-adjacent block not adjacent to the current block.

4. The method of Claim 3, wherein:
a portion of model parameters of the candidate derived from the neighboring block is derived from an inter-component prediction mode of the neighboring block, and remaining model parameters are derived by using information of the current block.

5. The method of Claim 2, wherein:
the merge candidate list includes a candidate generated by modifying a portion or all of model parameters of a candidate included in the merge candidate list based on a reference region of the current block.

6. The method of Claim 5, wherein:
the reference region is an adjacent reference region adjacent to the current block or a non-adjacent reference region not adjacent to the current block.

7. The method of Claim 2, wherein:
the merge candidate list includes a new candidate generated through a weighted sum of a model parameter of candidates included in the merge candidate list.

8. The method of Claim 7, wherein:
a weight of the weighted sum is determined based on an index value of the merge candidate list.

9. The method of Claim 2, wherein:
the merge candidate list includes a candidate derived based on an inter-component prediction model of a block at a position indicated by a block vector of a neighboring block of the current block.

10. The method of Claim 1, wherein:
the inter-component prediction model is plural.

11. The method of Claim 10, wherein:
a reference region used to derive the plurality of inter-component prediction models is determined based on a sample average value of a plurality of groups for dividing all pixel values.

12. The method of Claim 10, wherein:
the plurality of inter-component prediction models are derived from a different neighboring pre-decoded block.

13. The method of Claim 1, wherein:
the inter-component prediction model of the current block is derived by using an adjacent or non-adjacent reference region of the current block.

14. An image encoding method, the method comprising:
determining an inter-component prediction model of a current block;
generating a chroma prediction signal by using the determined inter-component prediction model.

15. A computer readable recording medium storing a bitstream generated by an image encoding method, wherein the image encoding method includes:
determining an inter-component prediction model of a current block;
generating a chroma prediction signal by using the determined inter-component prediction model.
